(19) Europäisches Patentamt
European Patent Office
Office européen des brevets

(11) EP 2 668 975 B1

(12) # EUROPEAN PATENT SPECIFICATION

(45) Date of publication and mention of the grant of the patent:
**19.07.2017 Bulletin 2017/29**

(51) Int Cl.:
***A63B 37/00*** *(2006.01)* ***C08K 5/00*** *(2006.01)*
***C08K 5/09*** *(2006.01)* *C08L 21/00* *(2006.01)*

(21) Application number: **13164408.0**

(22) Date of filing: **19.04.2013**

(54) **Golf ball**

Golfball

Balle de golf

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.05.2012 JP 2012122531**
**29.05.2012 JP 2012122543**
**30.05.2012 JP 2012122578**
**30.05.2012 JP 2012122961**

(43) Date of publication of application:
**04.12.2013 Bulletin 2013/49**

(73) Proprietor: **Dunlop Sports Co., Ltd.**
**Hyogo 651-0072 (JP)**

(72) Inventors:
- **Tachibana, Kosuke**
**Kobe-shi, Hyogo 651-0072 (JP)**
- **Isogawa, Kazuhiko**
**Kobe-shi, Hyogo 651-0072 (JP)**

(74) Representative: **Manitz Finsterwald Patentanwälte PartmbB**
**Martin-Greif-Strasse 1**
**80336 München (DE)**

(56) References cited:
**EP-A2- 1 068 883** **US-A1- 2010 069 175**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

BACKGROUND OF THE INVENTION

Field of the Invention

The present invention relates to golf balls. Specifically, the present invention relates to golf balls that include a core, a mid layer, and a cover.

Description of the Related Art

Golf players' foremost requirement for golf balls is flight performance. In particular, golf players place importance on flight performance upon a shot with a driver. Flight performance correlates with the resilience performance of a golf ball. When a golf ball having excellent resilience performance is hit, the golf ball flies at a high speed, thereby achieving a large flight distance. Golf balls that include a core having excellent resilience performance are disclosed in JP61-37178, JP2008-212681 (US2008/0214324), JP2008-523952 (US2006/0135287 and US2007/0173607), and JP2009-119256 (US2009/0124757).

The core disclosed in JP61-37178 is obtained from a rubber composition that includes a co-crosslinking agent and a crosslinking activator. This publication discloses palmitic acid, stearic acid, and myristic acid as the crosslinking activator.

The core disclosed in JP2008-212681 is obtained from a rubber composition that includes an organic peroxide, a metal salt of an $\alpha,\beta$-unsaturated carboxylic acid, and a copper salt of a fatty acid.

The core disclosed in JP2008-523952 is obtained from a rubber composition that includes a metal salt of an unsaturated monocarboxylic acid, a free radical initiator, and a non-conjugated diene monomer.

The core disclosed in JP2009-119256 is obtained from a rubber composition that includes a polybutadiene whose vinyl content is equal to or less than 2%, whose cis 1,4-blond content is equal to or greater than 80%, and which has an active end modified with an alkoxysilane compound.

An appropriate trajectory height is required in order to achieve a large flight distance. A trajectory height depends on a spin rate and a launch angle. In a golf ball that achieves a high trajectory by a high spin rate, a flight distance is insufficient. In a golf ball that achieves a high trajectory by a high launch angle, a large flight distance is obtained. Use of an outer-hard/inner-soft structure in a golf ball can achieve a low spin rate and a high launch angle. Modifications regarding a hardness distribution of a core are disclosed in JP6-154357 (USP5,403,010), JP2008-194471 (USP7,344,455, US2008/0194358, US2008/0194359, and US2008/0214325), JP2008-194473 (US2008/0194357 and US2008/0312008), and JP2010-253268 (US2010/0273575).

In the core disclosed in JP6-154357, a JIS-C hardness H1 at the central point of the core is 58 to 73, a JIS-C hardness H2 in a region that extends over a distance range from equal to or greater than 5 mm to equal to or less than 10 mm from the central point is equal to or greater than 65 but equal to or less than 75, a JIS-C hardness H3 at a point located at a distance of 15 mm from the central point is equal to or greater than 74 but equal to or less than 82, and a JIS-C hardness H4 at the surface of the core is equal to or greater than 76 but equal to or less than 84. The hardness H2 is greater than the hardness H1, the hardness H3 is greater than the hardness H2, and the hardness H4 is equal to or greater than the hardness H3.

In the core disclosed in JP2008-194471, a Shore D hardness at the central point of the core is equal to or greater than 30 but equal to or less than 48, a Shore D hardness at a point located at a distance of 4 mm from the central point is equal to or greater than 34 but equal to or less than 52, a Shore D hardness at a point located at a distance of 8 mm from the central point is equal to or greater than 40 but equal to or less than 58, a Shore D hardness at a point located at a distance of 12 mm from the central point is equal to or greater than 43 but equal to or less than 61, a Shore D hardness in a region that extends over a distance range from equal to or greater than 2 mm to equal to or less than 3 mm from the surface of the core is equal to or greater than 36 but equal to or less than 54, and a Shore D hardness at the surface is equal to or greater than 41 but equal to or less than 59.

In the core disclosed in JP2008-194473, a Shore D hardness at the central point of the core is equal to or greater than 25 but equal to or less than 45, a Shore D hardness in a region that extends over a distance range from equal to or greater than 5 mm to equal to or less than 10 mm from the central point is equal to or greater than 39 but equal to or less than 58, a Shore D hardness at a point located at a distance of 15 mm from the central point is equal to or greater than 36 but equal to or less than 55, and a Shore D hardness at the surface of the core is equal to or greater than 55 but equal to or less than 75.

JP2010-253268 discloses a golf ball that includes a core, an envelope layer, a mid layer, and a cover. In the core, the hardness gradually increases from the central point of the core to the surface of the core. The difference between a JIS-C hardness at the surface and a JIS-C hardness at the central point is equal to or greater than 15. The

hardness of the cover is greater than the hardness of the mid layer, and the hardness of the mid layer is greater than the hardness of the envelope layer.

Golf players also place importance on spin performance of golf balls. When a backspin rate is high, the run is short. It is easy for golf players to cause a golf ball, to which backspin is easily provided, to stop at a target point. When a sidespin rate is high, the golf ball tends to curve. It is easy for golf players to intentionally cause a golf ball, to which sidespin is easily provided, to curve. A golf ball to which spin is easily provided has excellent controllability. In particular, advanced golf players place importance on controllability upon a shot with a short iron.

Golf players are also interested in durability of golf balls. When being hit with a driver or the like, a golf ball receives great shock and deforms. When a local load is applied to a part of the ball due to the deformation, the golf ball is broken. A golf ball that is resistant to deformation caused by hitting can be continuously used over a long period of time.

Skilled golf players further desire appropriate feel at impact when hitting a golf ball. A hard cover deteriorates feel at impact. Golf players prefer soft feel at impact.

As described above, when a golf ball having a high launch angle and a low spin rate is hit with a driver, a large flight distance is obtained. However, a golf ball having a low spin rate has inferior controllability. Golf players desire achievement of both a desired flight distance and desired controllability. An object of the present invention is to provide a golf ball having excellent flight performance upon a shot with a driver and excellent controllability upon a shot with a short iron.

Golf players' requirements for flight distance have been escalated more than ever. Golf players further desire golf balls that have excellent durability against hitting and can be continuously used. Another object of the present invention is to provide a golf ball that has desired flight performance upon a shot with a driver and desired controllability upon a shot with a short iron and has excellent durability.

Golf players further desire favorable feel at impact upon a shot. Still another object of the present invention is to provide a golf ball that has desired flight performance upon a shot with a driver, excellent controllability upon an approach shot, and excellent durability and provides satisfactory feel at impact.

## SUMMARY OF THE INVENTION

A golf ball according to the present invention includes a core, a mid layer positioned outside the core, an inner cover positioned outside the mid layer, and an outer cover positioned outside the inner cover. The core includes a center and an envelope layer positioned outside the center. The envelope layer is formed by a rubber composition being crosslinked. The rubber composition includes:

(a) a base rubber;
(b) a co-crosslinking agent;
(c) a crosslinking initiator; and
(d) an acid and/or a salt, wherein the acid and/or salt excludes the co-crosslinking agent (b). The co-crosslinking agent (b) is:

(b1) an $\alpha,\beta$-unsaturated carboxylic acid having 3 to 8 carbon atoms; and/or
(b2) a metal salt of an $\alpha,\beta$-unsaturated carboxylic acid having 3 to 8 carbon atoms.

A Shore D hardness Hc1 of the inner cover is greater than a Shore D hardness Hc2 of the outer cover. A thickness T1 of the inner cover is equal to or greater than 0.1 mm but equal to or less than 0.8 mm. In the golf ball according to the present invention, a hardness distribution is appropriate. In the golf ball, the energy loss is low when the golf ball is hit. When the golf ball is hit with a driver, the spin rate is low. The low spin rate achieves a large flight distance. When the golf ball is hit with a short iron, the spin rate is high. The golf ball has excellent controllability.

According to another aspect, a golf ball according to the present invention includes a core, a mid layer positioned outside the core, an inner cover positioned outside the mid layer, and an outer cover positioned outside the inner cover. The core includes a center and an envelope layer positioned outside the center. The envelope layer is formed by a rubber composition being crosslinked. The rubber composition includes:

(a) a base rubber;
(b) a co-crosslinking agent;
(c) a crosslinking initiator; and
(d) an acid and/or a salt, wherein the acid and/or salt excludes the co-crosslinking agent (b). The co-crosslinking agent (b) is:

(b1) an $\alpha,\beta$-unsaturated carboxylic acid having 3 to 8 carbon atoms; and/or

(b2) a metal salt of an $\alpha,\beta$-unsaturated carboxylic acid having 3 to 8 carbon atoms.

A Shore D hardness Hm of the mid layer is greater than a Shore D hardness Hc1 of the inner cover. The Shore D hardness Hc1 of the inner cover is less than a Shore D hardness Hc2 of the outer cover. In the golf ball according to the present invention, a hardness distribution is appropriate. In the golf ball, the energy loss is low when the golf ball is hit. When the golf ball is hit with a driver, the spin rate is low. The low spin rate achieves a large flight distance. When the golf ball is hit with a short iron, the spin rate is high. The golf ball has excellent controllability. In addition, the golf ball also has excellent durability.

According to still another aspect, a golf ball according to the present invention includes a spherical core, an inner mid layer positioned outside the core, an outer mid layer positioned outside the inner mid layer, and a cover positioned outside the outer mid layer. The core includes a center and an envelope layer positioned outside the center. When distances (%) from a boundary between the center and the envelope layer to nine points and JIS-C hardnesses at the nine points, which nine points are obtained by dividing a distance from the boundary between the center and the envelope layer to a surface of the core at intervals of 12.5% of the distance, are plotted in a graph, $R^2$ of a linear approximation curve obtained by a least-square method is equal to or greater than 0.95. A Shore D hardness Hm1 of the inner mid layer is less than a Shore D hardness Hm2 of the outer mid layer. The hardness Hm2 is greater than a Shore D hardness Hc of the cover. In the golf ball according to the present invention, a hardness distribution of the core is appropriate. In the golf ball, the energy loss is low when the golf ball is hit. When the golf ball is hit with a driver, the spin rate is low. The low spin rate achieves a large flight distance. In the golf ball, a hardness distribution of the entire ball is also appropriate. When the golf ball is hit with a short iron, the spin rate is high. The golf ball has excellent controllability. When the golf ball is hit, the local load applied to the golf ball is low. The golf ball has excellent durability.

According to still another aspect, a golf ball according to the present invention includes a spherical core, an inner mid layer positioned outside the core, an outer mid layer positioned outside the inner mid layer, and a cover positioned outside the outer mid layer. The core includes a center and an envelope layer positioned outside the center. When distances (%) from a boundary between the center and the envelope layer to nine points and JIS-C hardnesses at the nine points, which nine points are obtained by dividing a distance from the boundary between the center and the envelope layer to a surface of the core at intervals of 12.5% of the distance, are plotted in a graph, $R^2$ of a linear approximation curve obtained by a least-square method is equal to or greater than 0.95. A Shore D hardness Hm1 of the inner mid layer is greater than a Shore D hardness Hm2 of the outer mid layer. The hardness Hm1 is greater than a Shore D hardness Hc of the cover. A thickness Tm2 of the outer mid layer is equal to or greater than 0.5 mm but equal to or less than 1. 5 mm. In the golf ball according to the present invention, a hardness distribution of the core is appropriate. When the golf ball is hit with a driver, the spin rate is low. The low spin rate achieves a large flight distance. In the golf ball, a hardness distribution of the entire ball is also appropriate. When the golf ball is hit with a short iron, the spin rate is high. The golf ball has excellent controllability. When the golf ball is hit, the local load applied to the golf ball is low. The golf ball has excellent durability. In addition, with the golf ball, soft feel at impact is obtained.

## BRIEF DESCRIPTION OF THE DRAWINGS

FIG. 1 is a partially cutaway cross-sectional view of a golf ball according to a first embodiment of the present invention;
FIG. 2 is a line graph showing a hardness distribution of a core of the golf ball in FIG. 1;
FIG. 3 is a partially cutaway cross-sectional view of a golf ball according to a second embodiment of the present invention;
FIG. 4 is a line graph showing a hardness distribution of a core of the golf ball in FIG. 3;
FIG. 5 is a partially cutaway cross-sectional view of a golf ball according to a third embodiment of the present invention;
FIG. 6 is a line graph showing a hardness distribution of an envelope layer of the golf ball in FIG. 5;
FIG. 7 is a partially cutaway cross-sectional view of a golf ball according to a fourth embodiment of the present invention; and
FIG. 8 is a line graph showing a hardness distribution of an envelope layer of the golf ball in FIG. 7.

## DESCRIPTION OF THE PREFERRED EMBODIMENTS

The following will describe in detail the present invention, based on preferred embodiments with reference to the accompanying drawings.

[First Embodiment]

A golf ball 2 shown in FIG. 1 includes a spherical core 4, a mid layer 6 positioned outside the core 4, a reinforcing layer 8 positioned outside the mid layer 6, an inner cover 10 positioned outside the reinforcing layer 8, and an outer cover 12 positioned outside the inner cover 10. On the surface of the outer cover 12, a large number of dimples 14 are formed. Of the surface of the golf ball 2, a part other than the dimples 14 is a land 16. The golf ball 2 includes a paint layer and a mark layer on the external side of the outer cover 12, but these layers are not shown in the drawing.

The golf ball 2 has a diameter of 40 mm or greater but 45 mm or less. From the standpoint of conformity to the rules established by the United States Golf Association (USGA), the diameter is preferably equal to or greater than 42.67 mm. In light of suppression of air resistance, the diameter is preferably equal to or less than 44 mm and more preferably equal to or less than 42.80 mm. The golf ball 2 has a weight of 40 g or greater but 50 g or less. In light of attainment of great inertia, the weight is preferably equal to or greater than 44 g and more preferably equal to or greater than 45.00 g. From the standpoint of conformity to the rules established by the USGA, the weight is preferably equal to or less than 45.93 g.

In the golf ball 2, the core 4 includes a spherical center 18 and an envelope layer 20. The envelope layer 20 is positioned outside the center 18.

In the golf ball 2, the center 18 is more flexible than the envelope layer 20. The center 18 can suppress spin. The center 18 preferably has a diameter of 10 mm or greater but 20 mm or less. In the golf ball 2 that includes the center 18 having a diameter of 10 mm or greater, spin can be suppressed. In this respect, the diameter is more preferably equal to or greater than 12 mm and particularly preferably equal to or greater than 14 mm. The golf ball 2 that includes the center 18 having a diameter of 20 mm or less has excellent resilience performance. In this respect, the diameter is more preferably equal to or less than 18 mm and particularly preferably equal to or less than 16 mm.

The envelope layer 20 is harder than the center 18. When the golf ball 2 is hit with a driver, the energy loss is low in the envelope layer 20. The envelope layer 20 can contribute to the resilience performance of the golf ball 2. When the golf ball 2 is hit with a driver, the flight distance is large. When the golf ball 2 is hit with a golf club, stress concentration does not occur. Thus, the golf ball 2 has excellent durability.

In the golf ball 2, the ratio of the radius of the center 18 to the radius of the core 4 is preferably less than 40%. Thus, the envelope layer 20 can effectively contribute to the resilience performance of the golf ball 2. In this respect, the ratio is more preferably equal to or less than 39%. The ratio is preferably equal to or greater than 20%. Thus, the center 18 can effectively contribute to suppression of spin. In this respect, the ratio is more preferably equal to or greater than 25%. When the golf ball 2 is hit with a driver, the flight distance is large.

In the present invention, JIS-C hardnesses are measured at nine measuring points obtained by dividing a region from the central point of the core 4 to the surface of the core 4 into eight sections. The ratio of the distance from the central point of the core 4 to each of these measuring points to the radius of the core 4 is as follows. In the golf ball 2, the first to third points are included in the center 18. The fourth to ninth points are included in the envelope layer 20.

First point: 0.0% (central point)
Second point: 12.5%
Third point: 25.0%
Fourth point: 40.0%
Fifth point: 50.0%
Sixth point: 62.5%
Seventh point: 75.0%
Eighth point: 87.5%
Ninth point: 100.0% (surface)

Hardnesses at the first to eighth points are measured by pressing a JIS-C type hardness scale against a cut plane of the core 4 that has been cut into two halves. A hardness at the ninth point is measured by pressing the JIS-C type hardness scale against the surface of the spherical core 4. For the measurement, an automated rubber hardness measurement machine (trade name "P1", manufactured by Kobunshi Keiki Co., Ltd.), to which this hardness scale is mounted, is used.

FIG. 2 is a line graph showing a hardness distribution of the envelope layer 20 of the golf ball 2 in FIG. 1. The horizontal axis of the graph indicates the ratio (%) of a distance from the central point of the core 4 to the radius of the core 4. The vertical axis of the graph indicates a JIS-C hardness. In the graph, among the first to ninth points, points included in the envelope layer 20 are plotted. In the present embodiment, six points including the fourth to ninth points are plotted in the graph.

FIG. 2 also shows a linear approximation curve obtained by a least-square method on the basis of the ratios and the hardnesses of the six measuring points. The linear approximation curve is indicated by a dotted line. In FIG. 2,

the broken line does not greatly deviate from the linear approximation curve. In other words, the broken line has a shape close to the linear approximation curve. In the envelope layer 20, the hardness linearly increases from its inside toward its outside. When the golf ball 2 is hit with a driver, the energy loss is low in the envelope layer 20. The golf ball 2 has excellent resilience performance. When the golf ball 2 is hit with a driver, the flight distance is large. When the golf ball 2 is hit with a golf club, stress concentration does not occur. Thus, the golf ball 2 has excellent durability.

$R^2$ of the linear approximation curve for the envelope layer 20 which is obtained by the least-square method is preferably equal to or greater than 0.95. $R^2$ is an index indicating the linearity of the broken line. For the envelope layer 20 for which $R^2$ is equal to or greater than 0. 95, the shape of the broken line of the hardness distribution is close to a straight line. The golf ball 2 that includes the envelope layer 20 for which $R^2$ is equal to or greater than 0.95 has excellent resilience performance. $R^2$ is more preferably equal to or greater than 0.96 and particularly preferably equal to or greater than 0.97. $R^2$ is calculated by squaring a correlation coefficient R. The correlation coefficient R is calculated by dividing the covariance of the distance (%) from the central point and the hardness (JIS-C) by the standard deviation of the distance (%) from the central point and the standard deviation of the hardness (JIS-C).

In the present invention, a JIS-C hardness at a measuring point whose ratio of the distance from the central point of the core 4 to the radius of the core 4 is x% is represented by H (x) . The hardness at the central point of the core 4 is represented by H(0), and the surface hardness of the core 4 is represented by H(100). The difference (H(100)-H(0)) between the surface hardnessH(100) and the central hardness H(0) is preferably equal to or greater than 15. The core 4 in which the difference (H(100)-H(0)) is equal to or greater than 15 has an outer-hard/inner-soft structure. When the golf ball 2 is hit with a driver, the recoil (torsional return) in the core 4 is great, and thus spin is suppressed. The core 4 contributes to the flight performance of the golf ball 2. In light of flight performance, the difference (H(100)-H(0)) is more preferably equal to or greater than 23 and particularly preferably equal to or greater than 24. From the standpoint that the core 4 can easily be formed, the difference (H(100)-H(0)) is preferably equal to or less than 50. In the core 4, the hardness gradually increases from its central point toward its surface.

The center 18 is formed by crosslinking a rubber composition. Examples of base rubbers for use in the rubber composition include polybutadienes, polyisoprenes, styrene-butadiene copolymers, ethylene-propylene-diene copolymers, and natural rubbers. Two or more rubbers may be used in combination. In light of resilience performance, polybutadienes are preferred, and high-cis polybutadienes are particularly preferred.

Preferably, the rubber composition of the center 18 includes a co-crosslinking agent. Examples of preferable co-crosslinking agents in light of resilience performance include zinc acrylate, magnesium acrylate, zinc methacrylate, and magnesium methacrylate. Preferably, the rubber composition includes an organic peroxide together with a co-crosslinking agent. Examples of preferable organic peroxides include dicumyl peroxide, 1,1-bis(t-butylperoxy)-3,3,5-trimethylcyclohexane, 2,5-dimethyl-2,5-di(t-butylperoxy)hexane, and di-t-butyl peroxide. Preferably, the rubber composition includes a sulfur compound.

According to need, various additives such as a filler, sulfur, a vulcanization accelerator, an anti-aging agent, a coloring agent, a plasticizer, a dispersant, and the like are included in the rubber composition of the center 18 in an adequate amount. Synthetic resin powder or crosslinked rubber powder may also be included in the rubber composition.

The envelope layer 20 is formed by crosslinking a rubber composition. The rubber composition includes:

(a) a base rubber;
(b) a co-crosslinking agent;
(c) a crosslinking initiator; and
(d) an acid and/or a salt, wherein the acid and/or salt excludes the co-crosslinking agent (b). Examples of the base rubber (a) include polybutadienes, polyisoprenes, styrene-butadiene copolymers, ethylene-propylene-diene copolymers, and natural rubbers. In light of resilience performance, polybutadienes are preferred. When a polybutadiene and another rubber are used in combination, it is preferred that the polybutadiene is included as a principal component. Specifically, the proportion of the polybutadiene to the entire base rubber is preferably equal to or greater than 50% by weight and more preferably equal to or greater than 80% by weight. The proportion of cis-1, 4 bonds in the polybutadiene is preferably equal to or greater than 40% by weight and more preferably equal to or greater than 80% by weight.

A polybutadiene in which the proportion of 1, 2-vinyl bonds is equal to or less than 2.0% by weight is preferred. The polybutadiene can contribute to the resilience performance of the golf ball 2. In this respect, the proportion of 1,2-vinyl bonds is preferably equal to or less than 1.7% by weight and particularly preferably equal to or less than 1.5% by weight.

From the standpoint that a polybutadiene having a low proportion of 1,2-vinyl bonds and excellent polymerization activity is obtained, a rare-earth-element-containing catalyst is preferably used for synthesis of a polybutadiene. In particular, a polybutadiene synthesized with a catalyst containing neodymium, which is a lanthanum-series rare earth element compound, is preferred.

The polybutadiene has a Mooney viscosity ($ML_{1+4}$ (100°C)) of preferably 30 or greater, more preferably 32 or greater, and particularly preferably 35 or greater. The Mooney viscosity ($ML_{1+4}$(100°C)) is preferably equal to or less than 140, more preferably equal to or less than 120, even more preferably equal to or less than 100, and particularly preferably equal to or less than 80. The Mooney viscosity ($ML_{1+4}$(100°C)) is measured according to the standards of "JIS K6300". The measurement conditions are as follows.

Rotor: L rotor
Preheating time: 1 minute
Rotating time of rotor: 4 minutes
Temperature: 100°C

In light of workability, the polybutadiene has a molecular weight distribution (Mw/Mn) of preferably 2.0 or greater, more preferably 2.2 or greater, even more preferably 2.4 or greater, and particularly preferably 2.6 or greater. In light of resilience performance, the molecular weight distribution (Mw/Mn) is preferably equal to or less than 6.0, more preferably equal to or less than 5.0, even more preferably equal to or less than 4.0, and particularly preferably equal to or less than 3.4. The molecular weight distribution (Mw/Mn) is calculated by dividing the weight average molecular weight Mw by the number average molecular weight Mn.

The molecular weight distribution is measured by gel permeation chromatography ("HLC-8120GPC" manufactured by Tosoh Corporation). The measurement conditions are as follows.

Detector: differential refractometer
Column: GMHHXL (manufactured by Tosoh Corporation)
Column temperature: 40°C
Mobile phase: tetrahydrofuran

The molecular weight distribution is calculated as a value obtained by conversion using polystyrene standard.

The co-crosslinking agent (b) is:

(b1) an $\alpha,\beta$-unsaturated carboxylic acid having 3 to 8 carbon atoms; and
(b2) a metal salt of an $\alpha,\beta$-unsaturated carboxylic acid having 3 to 8 carbon atoms.

The rubber composition may include only the $\alpha,\beta$-unsaturated carboxylic acid (b1) or only the metal salt (b2) of the $\alpha,\beta$-unsaturated carboxylic acid as the co-crosslinking agent (b). The rubber composition may include both the $\alpha,\beta$-unsaturated carboxylic acid (b1) and the metal salt (b2) of the $\alpha,\beta$-unsaturated carboxylic acid as the co-crosslinking agent (b).

The metal salt (b2) of the $\alpha,\beta$-unsaturated carboxylic acid graft-polymerizes with the molecular chain of the base rubber, thereby crosslinking the rubber molecules. When the rubber composition includes the $\alpha,\beta$-unsaturated carboxylic acid (b1), the rubber composition preferably further includes a metal compound (f). The metal compound (f) reacts with the $\alpha,\beta$-unsaturated carboxylic acid (b1) in the rubber composition. A salt obtained by this reaction graft-polymerizes with the molecular chain of the base rubber.

Examples of the metal compound (f) include metal hydroxides such as magnesium hydroxide, zinc hydroxide, calcium hydroxide, sodium hydroxide, lithium hydroxide, potassium hydroxide, and copper hydroxide; metal oxides such as magnesium oxide, calcium oxide, zinc oxide, and copper oxide; and metal carbonates such as magnesium carbonate, zinc carbonate, calcium carbonate, sodium carbonate, lithium carbonate, and potassium carbonate. A compound that includes a bivalent metal is preferred. The compound that includes the bivalent metal reacts with the co-crosslinking agent (b) to form metal crosslinks. The metal compound (f) is particularly preferably a zinc compound. Two or more metal compounds may be used in combination.

Examples of the $\alpha,\beta$-unsaturated carboxylic acids include acrylic acid, methacrylic acid, fumaric acid, maleic acid, and crotonic acid. Examples of the metal component in the metal salt (b2) of the $\alpha,\beta$-unsaturated carboxylic acid include sodium ion, potassium ion, lithium ion, magnesium ion, calcium ion, zinc ion, barium ion, cadmium ion, aluminum ion, tin ion, and zirconium ion. The metal salt (b2) of the $\alpha,\beta$-unsaturated carboxylic acid may include two or more types of ions. From the standpoint that metal crosslinks are likely to occur between the rubber molecules, bivalent metal ions such as magnesium ion, calcium ion, zinc ion, barium ion, and cadmium ion are preferred. The metal salt (b2) of the $\alpha,\beta$-unsaturated carboxylic acid is particularly preferably zinc acrylate.

In light of resilience performance of the golf ball 2, the amount of the co-crosslinking agent (b) is preferably equal to or greater than 15 parts by weight and particularly preferably equal to or greater than 20 parts by weight, per 100 parts by weight of the base rubber. In light of feel at impact, the amount is preferably equal to or less than 50 parts by weight, more preferably equal to or less than 45 parts by weight, and particularly preferably equal to or less than 40

parts by weight, per 100 parts by weight of the base rubber.

The crosslinking initiator (c) is preferably an organic peroxide. The organic peroxide contributes to the resilience performance of the golf ball 2. Examples of preferable organic peroxides include dicumyl peroxide, 1,1-bis(t-butylperoxy)-3,3,5-trimethylcyclohexane, 2,5-dimethyl-2,5-di(t-butylperoxy)hexane, and di-t-butyl peroxide. In light of versatility, dicumyl peroxide is preferred.

In light of resilience performance of the golf ball 2, the amount of the crosslinking initiator (c) is preferably equal to or greater than 0.2 parts by weight and particularly preferably equal to or greater than 0.5 parts by weight, per 100 parts by weight of the base rubber. In light of feel at impact and durability of the golf ball 2, the amount is preferably equal to or less than 5.0 parts by weight and particularly preferably equal to or less than 2.5 parts by weight, per 100 parts by weight of the base rubber.

In the present invention, the co-crosslinking agent (b) is not included in the concept of the acid and/or the salt (d). It is inferred that as described later, during heating and forming of the core 4, the acid and/or the salt (d) breaks the metal crosslinks by the co-crosslinking agent (b) in the envelope layer 20, which is a part of the core 4.

Examples of the acid and/or the salt (d) include oxo acids, such as carboxylic acids, sulfonic acids, and phosphoric acid, and salts thereof; and hydroacids, such as hydrochloric acid and hydrofluoric acid, and salts thereof. Oxo acids and salts thereof are preferred. A carboxylic acid and/or a salt thereof (d1) is preferred. Carboxylates are particularly preferred.

The carboxylic acid component in the carboxylic acid and/or the salt thereof (d1) has a carboxyl group. The carboxylic acid component reacts with the co-crosslinking agent (b). It is inferred that by this reaction, metal crosslinks are broken.

The carbon number of the carboxylic acid component of the carboxylic acid and/or the salt thereof (d1) is preferably equal to or greater than 1 but equal to or less than 30, more preferably equal to or greater than 3 but equal to or less than 30, and even more preferably equal to or greater than 5 but equal to or less than 28. Examples of the carboxylic acid include aliphatic carboxylic acids (fatty acids) and aromatic carboxylic acids. As the carboxylic acid and/or the salt thereof (d1), a fatty acid and/or a salt thereof is preferred. The carbon number of the fatty acid component in the fatty acid and/or the salt thereof is preferably equal to or greater than 1 but equal to or less than 30.

The rubber composition may include a saturated fatty acid and/or a salt thereof, or may include an unsaturated fatty acid and/or a salt thereof. The saturated fatty acid and/or the salt thereof is preferred.

Examples of fatty acids include butyric acid (C4), valeric acid (C5), caproic acid (C6), enanthic acid (C7), caprylic acid (octanoic acid) (C8), pelargonic acid (C9), capric acid (decanoic acid) (C10), lauric acid (C12), myristic acid (C14), myristoleic acid (C14), pentadecylic acid (C15), palmitic acid (C16), palmitoleic acid (C16), margaric acid (C17), stearic acid (C18), elaidic acid (C18), vaccenic acid (C18), oleic acid (C18), linolic acid (C18), linolenic acid (C18), 12-hydroxystearic acid (C18), arachidic acid (C20), gadoleic acid (C20), arachidonic acid (C20), eicosenoic acid (C20), behenic acid (C22), erucic acid (C22), lignoceric acid (C24), nervonic acid (C24), cerotic acid (C26), montanic acid (C28), and melissic acid (C30). Two or more fatty acids may be used in combination. Octanoic acid, lauric acid, myristic acid, palmitic acid, stearic acid, oleic acid, and behenic acid are preferred.

An aromatic carboxylic acid has an aromatic ring and a carboxyl group. Examples of aromatic carboxylic acids include benzoic acid, phthalic acid, isophthalic acid, terephthalic acid, hemimellitic acid (benzene-1,2,3-tricarboxylic acid), trimellitic acid (benzene-1,2,4-tricarboxylic acid), trimesic acid (benzene-1,3,5-tricarboxylic acid), mellophanic acid (benzene-1,2,3,4-tetracarboxylic acid), prehnitic acid (benzene-1,2,3,5-tetracarboxylic acid), pyromellitic acid (benzene-1,2,4,5-tetracarboxylic acid), mellitic acid (benzene hexacarboxylic acid), diphenic acid (biphenyl-2,2'-dicarboxylic acid), toluic acid (methylbenzoic acid), xylic acid, prehnitylic acid (2,3,4-trimethylbenzoic acid), γ-isodurylic acid (2,3,5-trimethylbenzoic acid), durylic acid (2,4,5-trimethylbenzoic acid), β-isodurylic acid (2,4,6-trimethylbenzoic acid), α-isodurylic acid (3,4,5-trimethylbenzoic acid), cuminic acid (4-isopropylbenzoic acid), uvitic acid (5-methylisophthalic acid), α-toluic acid (phenylacetic acid), hydratropic acid (2-phenylpropanoic acid), and hydrocinnamic acid (3-phenylpropanoic acid).

The rubber composition may include an aromatic carboxylate substituted with a hydroxyl group, an alkoxy group, or an oxo group. Examples of this carboxylic acid can include salicylic acid (2-hydroxybenzoic acid), anisic acid (methoxybenzoic acid), cresotinic acid (hydroxy(methyl) benzoic acid), o-homosalicylic acid (2-hydroxy-3-methylbenzoic acid), m-homosalicylic acid (2-hydroxy-4-methylbenzoic acid), p-homosalicylic acid (2-hydroxy-5-methylbenzoic acid), o-pyrocatechuic acid (2,3-dihydroxybenzoic acid), β-resorcylic acid (2,4-dihydroxybenzoic acid), γ-resorcylic acid (2,6-dihydroxybenzoic acid), protocatechuic acid (3,4-dihydroxybenzoic acid), α-resorcylic acid (3,5-dihydroxybenzoic acid), vanillic acid (4-hydroxy-3-methoxybenzoic acid), isovanillic acid (3-hydroxy-4-methoxybenzoic acid), veratric acid (3,4-dimethoxybenzoic acid), o-veratric acid (2,3-dimethoxybenzoic acid), orsellinic acid (2,4-dihydroxy-6-methylbenzoic acid), m-hemipinic acid (4,5-dimethoxyphthalic acid), gallic acid (3,4,5-trihydroxybenzoic acid), syringic acid (4-hydroxy-3,5-dimethoxybenzoic acid), asaronic acid (2,4,5-trimethoxybenzoic acid), mandelic acid (hydroxy(phenyl)acetic acid), vanillylmandelic acid (hydroxy(4-hydroxy-3-methoxyphenyl)acetic acid), homoanisic acid ((4-methoxyphenyl)acetic acid), homogentisic acid ((2,5-dihydroxyphenyl)acetic acid), homoprotocatechuic acid ((3,4-dihydroxyphenyl)acetic acid), homovanillic acid ((4-hydroxy-3-methoxyphenyl)acetic acid), homoisovanillic acid ((3-hydroxy-4-methoxyphenyl)acetic

acid), homoveratric acid ((3,4-dimethoxyphenyl)acetic acid), o-homoveratric acid ((2,3-dimethoxyphenyl)acetic acid), homophthalic acid (2-(carboxymethyl)benzoic acid), homoisophthalic acid (3-(carboxymethyl)benzoic acid), homoterephthalic acid (4-(carboxymethyl)benzoic acid), phthalonic acid (2-(carboxycarbonyl)benzoic acid), isophthalonic acid (3-(carboxycarbonyl)benzoic acid), terephthalonic acid (4-(carboxycarbonyl)benzoic acid), benzilic acid (hydroxydiphenylacetic acid), atrolactic acid (2-hydroxy-2-phenylpropanoic acid), tropic acid (3-hydroxy-2-phenylpropanoic acid), melilotic acid (3-(2-hydroxyphenyl)propanoic acid), phloretic acid (3-(4-hydroxyphenyl)propanoic acid), hydrocaffeic acid (3-(3,4-dihydroxyphenyl)propanoic acid), hydroferulic acid (3-(4-hydroxy-3-methoxyphenyl)propanoic acid), hydroisoferulic acid (3-(3-hydroxy-4-methoxyphenyl)propanoic acid), p-coumaric acid (3-(4-hydroxyphenyl)acrylic acid), umbellic acid (3-(2,4-dihydroxyphenyl)acrylic acid), caffeic acid (3-(3,4-dihydroxyphenyl)acrylic acid), ferulic acid (3-(4-hydroxy-3-methoxyphenyl)acrylic acid), isoferulic acid (3- (3-hydroxy-4-methoxyphenyl) acrylic acid), and sinapic acid (3-(4-hydroxy-3,5-dimethoxyphenyl)acrylic acid).

The cationic component of the carboxylate is a metal ion or an organic cation. Examples of the metal ion include sodium ion, potassium ion, lithium ion, silver ion, magnesium ion, calciumion, zinc ion, barium ion, cadmiumion, copper ion, cobalt ion, nickel ion, manganese ion, aluminum ion, iron ion, tin ion, zirconium ion, and titanium ion. Two or more types of ions may be used in combination.

The organic cation is a cation having a carbon chain. Examples of the organic cation include organic ammonium ions. Examples of organic ammonium ions include primary ammonium ions such as stearylammonium ion, hexylammonium ion, octylammonium ion, and 2-ethylhexylammoniumion; secondary ammonium ions such as dodecyl (lauryl) ammoniumion, and octadecyl (stearyl) ammonium ion; tertiary ammonium ions such as trioctylammonium ion; and quaternary ammonium ions such as dioctyldimethylammonium ion, and distearyldimethylammonium ion. Two or more types of organic cations may be used in combination.

Examples of preferable carboxylates include a potassium salt, a magnesium salt, an aluminum salt, a zinc salt, an iron salt, a copper salt, a nickel salt, or a cobalt salt of octanoic acid, lauric acid, myristic acid, palmitic acid, stearic acid, or oleic acid. Zinc salts of carboxylic acids are particularly preferred. Examples of preferable zinc salts of carboxylic acids include zinc octoate, zinc laurate, zinc myristate, and zinc stearate. A particularly preferable zinc salt of a carboxylic acid is zinc octoate.

In light of linearity of the hardness distribution of the envelope layer 20, the amount of the acid and/or the salt (d) is preferably equal to or greater than 0.5 parts by weight, more preferably equal to or greater than 1.0 parts by weight, and particularly preferably equal to or greater than 2.0 parts by weight, per 100 parts by weight of the base rubber. In light of resilience performance, the amount is preferably equal to or less than 45 parts by weight, more preferably equal to or less than 40 parts by weight, and particularly preferably equal to or less than 30 parts by weight, per 100 parts by weight of the base rubber.

The weight ratio of the co-crosslinking agent (b) and the acid and/or the salt (d) in the rubber composition is preferably equal to or greater than 3/7 but equal to or less than 9/1. From the rubber composition in which this weight ratio is within the above range, the envelope layer 20 whose hardness linearly increases from its inside toward its outside can be obtained.

As the co-crosslinking agent (b), zinc acrylate is preferably used. Zinc acrylate whose surface is coated with stearic acid or zinc stearate for the purpose of improving dispersibility to rubber is present. In the present invention, when the rubber composition includes this zinc acrylate, this coating material is not included in the concept of the acid and/or the salt (d).

Preferably, the rubber composition further includes an organic sulfur compound (e). The organic sulfur compound (e) increases the linearity of the hardness distribution of the envelope layer 20. In addition, the organic sulfur compound (e) increases the degree of the outer-hard/inner-soft structure.

An example of the organic sulfur compound (e) is an organic compound having a thiol group or a polysulfide linkage having 2 to 4 sulfur atoms. A metal salt of this organic compound is also included in the organic sulfur compound (e). Examples of the organic sulfur compound (e) include aliphatic compounds such as aliphatic thiols, aliphatic thiocarboxylic acids, aliphatic dithiocarboxylic acids, and aliphatic polysulfides; heterocyclic compounds; alicyclic compounds such as alicyclic thiols, alicyclic thiocarboxylic acids, alicyclic dithiocarboxylic acids, and alicyclic polysulfides; and aromatic compounds. Specific examples of the organic sulfur compound (e) include thiophenols, thionaphthols, polysulfides, thiocarboxylic acids, dithiocarboxylic acids, sulfenamides, thiurams, dithiocarbamates, and thiazoles. Preferable organic sulfur compounds (e) are thiophenols, diphenyl disulfides, thionaphthols, thiuram disulfides, and metal salts thereof.

Specific examples of the organic sulfur compound (e) are represented by the following chemical formulas (1) to (4).

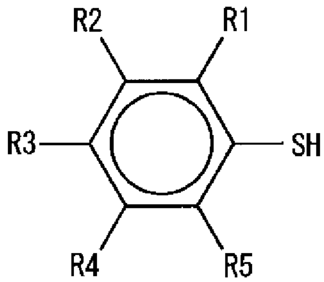

(1)

In the chemical formula (1), R1 to R5 each represent H or a substituent.

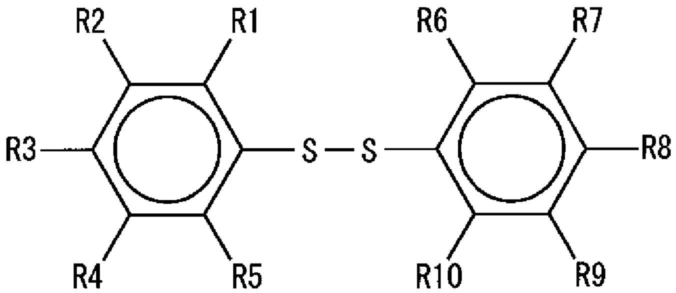

(2)

In the chemical formula (2), R1 to R10 each represent H or a substituent.

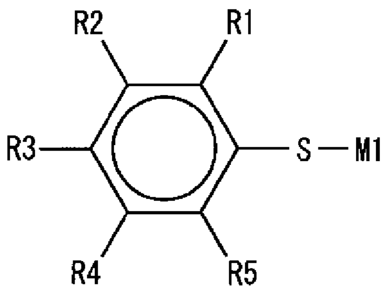

(3)

In the chemical formula (3), R1 to R5 each represent H or a substituent, and M1 represents a monovalent metal atom.

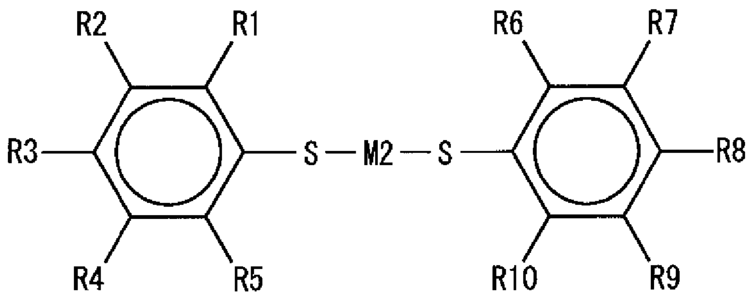

(4)

In the chemical formula (4), R1 to R10 each represent H or a substituent, and M2 represents a bivalent metal atom.

In the formulas (1) to (4), each substituent is at least one group selected from the group consisting of a halogen group (F, Cl, Br, I), an alkyl group, a carboxyl group (-COOH), an ester (-COOR)of a carboxyl group, a formyl group (-CHO), an acyl group (-COR), a carbonyl halide group (-COX), a sulfo group ($-SO_3H$), an ester($-SO_3R$) of a sulfo group, a sulfonyl halide group ($-SO_2X$), a sulfino group ($-SO_2H$), an alkylsulfinyl group (-SOR), a carbamoyl group ($-CONH_2$), an alkyl halide group, a cyano group (-CN), and an alkoxy group (-OR).

Examples of the organic sulfur compound represented by the chemical formula (1) include thiophenol; thiophenols substituted with halogen groups, such as 4-fluorothiophenol, 2,5-difluorothiophenol, 2,4,5-trifluorothiophenol, 2,4,5,6-tetrafluorothiophenol, pentafluorothiophenol, 2-chlorothiophenol, 4-chlorothiophenol, 2,4-dichlorothiophenol, 2,5-dichlorothiophenol, 2,6-dichlorothiophenol, 2,4,5-trichlorothiophenol, 2,4,5,6-tetrachlorothiophenol, pentachlorothiophenol, 4-bromothiophenol, 2,5-dibromothiophenol, 2,4,5-tribromothiophenol, 2,4,5,6-tetrabromothiophenol, pentabromothiophenol, 4-iodothiophenol, 2,5-diiodothiophenol, 2,4,5-triiodothiophenol, 2,4,5,6-tetraiodothiophenol, and pentaiodothiophenol; thiophenols substituted with alkyl groups, such as 4-methylthiophenol, 2,4,5-trimethylthiophenol, pentamethylthiophenol, 4-t-butylthiophenol, 2,4,5-tri-t-butylthiophenol, and penta-t-butylthiophenol; thiophenols substituted with carboxyl groups, such as 4-carboxythiophenol, 2,4,6-tricarboxythiophenol, and pentacarboxythiophenol; thiophenols substituted with alkoxycarbonyl groups, such as 4-methoxycarbonylthiophenol, 2,4,6-trimethoxycarbonylthiophenol, and pentamethoxycarbonylthiophenol; thiophenols substituted with formyl groups, such as 4-formylthiophenol, 2,4,6-triformylthiophenol, and pentaformylthiophenol; thiophenols substituted with acyl groups, such as 4-acetylthiophenol, 2,4,6-triacetylthiophenol, and pentaacetylthiophenol; thiophenols substituted with carbonyl halide groups, such as 4-chlorocarbonylthiophenol, 2,4,6-tri(chlorocarbonyl)thiophenol, and penta(chlorocarbonyl)thiophenol;thiophenolssubstituted with sulfo groups, such as 4-sulfothiophenol, 2,4,6-trisulfothiophenol, and pentasulfothiophenol; thiophenols substituted with alkoxysulfonyl groups, such as 4-methoxysulfonylthiophenol, 2,4,6-trimethoxysulfonylthiophenol, and pentamethoxysulfonylthiophenol; thiophenols substituted with sulfonyl halide groups, such as 4-chlorosulfonylthiophenol, 2,4,6-tri(chlorosulfonyl)thiophenol, and penta (chlorosulfonyl) thiophenol; thiophenols substituted with sulfino groups, such as 4-sulfinothiophenol, 2,4,6-trisulfinothiophenol, and pentasulfinothiophenol; thiophenols substituted with alkylsulfinyl groups, such as 4-methylsulfinylthiophenol, 2,4,6-tri(methylsulfinyl)thiophenol, and penta (methylsulfinyl) thiophenol; thiophenols substituted with carbamoyl groups, such as 4-carbamoylthiophenol, 2,4,6-tricarbamoylthiophenol, and pentacarbamoylthiophenol; thiophenols substituted with alkyl halide groups, such as 4-trichloromethylthiophenol, 2,4,6-tri(trichloromethyl)thiophenol, and penta(trichloromethyl)thiophenol; thiophenols substituted with cyano groups, such as 4-cyanothiophenol, 2,4,6-tricyanothiophenol, and pentacyanothiophenol; and thiophenols substituted with alkoxy groups, such as 4-methoxythiophenol, 2,4,6-trimethoxythiophenol, and pentamethoxythiophenol. Each of these thiophenols is substituted with one type of substituent.

Another example of the organic sulfur compound represented by the chemical formula (1) is a compound substituted with at least one type of the above substituents and another substituent. Examples of the other substituent include a nitro group ($-NO_2$), an amino group ($-NH_2$), a hydroxyl group (-OH), and a phenylthio group (-SPh). Specific examples of the compound include 4-chloro-2-nitrothiophenol, 4-chloro-2-aminothiophenol, 4-chloro-2-hydroxythiophenol, 4-chloro-2-phenylthiothiophenol, 4-methyl-2-nitrothiophenol, 4-methyl-2-aminothiophenol, 4-methyl-2-hydroxythiophenol, 4-methyl-2-phenylthiothiophenol, 4-carboxy-2-nitrothiophenol, 4-carboxy-2-aminothiophenol, 4-carboxy-2-hydroxythiophenol, 4-carboxy-2-phenylthiothiophenol, 4-methoxycarbonyl-2-nitrothiophenol, 4-methoxycarbonyl-2-aminothiophenol, 4-methoxycarbonyl-2-hydroxythiophenol, 4-methoxycarbonyl-2-phenylthiothiophenol, 4-formyl-2-nitrothiophenol, 4-formyl-2-aminothiophenol, 4-formyl-2-hydroxythiophenol, 4-formyl-2-phenylthiothiophenol, 4-acetyl-2-nitrothiophenol, 4-acetyl-2-aminothiophenol, 4-acetyl-2-hydroxythiophenol, 4-acetyl-2-phenylthiothiophenol, 4-chlorocarbonyl-2-nitrothiophenol, 4-chlorocarbonyl-2-aminothiophenol, 4-chlorocarbonyl-2-hydroxythiophenol, 4-chlorocarbonyl-2-phenylthiothiophenol, 4-sulfo-2-nitrothiophenol, 4-sulfo-2-aminothiophenol, 4-sulfo-2-hydroxythiophenol, 4-sulfo-2-phenylthiothiophenol, 4-methoxysulfonyl-2-nitrothiophenol, 4-methoxysulfonyl-2-aminothiophenol, 4-methoxysulfonyl-2-hydroxythiophenol, 4-methoxysulfonyl-2-phenylthiothiophenol, 4-chlorosulfonyl-2-nitrothiophenol, 4-chlorosulfonyl-2-aminothiophenol, 4-chlorosulfonyl-2-hydroxythiophenol, 4-chlorosulfonyl-2-phenylthiothiophenol, 4-sulfino-2-nitrothiophenol, 4-sulfino-2-aminothiophenol, 4-sulfino-2-hydroxythiophenol, 4-sulfino-2-phenylthiothiophenol, 4-methylsulfinyl-2-nitrothiophenol, 4-methylsulfinyl-2-aminothiophenol, 4-methylsulfinyl-2-hydroxythiophenol, 4-methylsulfinyl-2-phenylthiothiophenol, 4-carbamoyl-2-nitrothiophenol, 4-carbamoyl-2-aminothiophenol, 4-carbamoyl-2-hydroxythiophenol, 4-carbamoyl-2-phenylthiothiophenol, 4-trichloromethyl-2-nitrothiophenol, 4-trichloromethyl-2-aminothiophenol, 4-trichloromethyl-2-hydroxythiophenol, 4-trichloromethyl-2-phenylthiothiophenol, 4-cyano-2-nitrothiophenol, 4-cyano-2-aminothiophenol, 4-cyano-2-hydroxythiophenol, 4-cyano-2-phenylthiothiophenol, 4-methoxy-2-nitrothiophenol, 4-methoxy-2-aminothiophenol, 4-methoxy-2-hydroxythiophenol, and 4-methoxy-2-phenylthiothiophenol.

Still another example of the organic sulfur compound represented by the chemical formula (1) is a compound substituted with two or more types of substituents. Specific examples of the compound include 4-acetyl-2-chlorothiophenol, 4-acetyl-2-methylthiophenol, 4-acetyl-2-carboxythiophenol, 4-acetyl-2-methoxycarbonylthiophenol, 4-acetyl-2-formylthiophenol, 4-acetyl-2-chlorocarbonylthiophenol, 4-acetyl-2-sulfothiophenol, 4-acetyl-2-methoxysulfonylthiophenol, 4-acetyl-2-chlorosulfonylthiophenol, 4-acetyl-2-sulfinothiophenol, 4-acetyl-2-methylsulfinylthiophenol, 4-acetyl-2-carbamoylthiophenol, 4-acetyl-2-trichloromethylthiophenol, 4-acetyl-2-cyanothiophenol, and 4-acetyl-2-methoxythiophenol.

Examples of the organic sulfur compound represented by the chemical formula (2) include diphenyl disulfide; diphenyl disulfides substituted with halogen groups, such as bis(4-fluorophenyl)disulfide, bis(2,5-difluorophenyl)disulfide, bis(2,4,5-trifluorophenyl)disulfide, bis(2,4,5,6-tetrafluorophenyl)disulfide, bis(pentafluorophenyl)disulfide, bis(4-chlorophenyl)disulfide, bis(2,5-dichlorophenyl)disulfide, bis(2,4,5-trichlorophenyl)disulfide, bis(2,4,5,6-tetrachlorophenyl)disulfide, bis(pentachlorophenyl)disulfide, bis(4-bromophenyl)disulfide, bis(2,5-dibromophenyl)disulfide, bis(2,4,5-tribromophenyl)disulfide, bis(2,4,5,6-tetrabromophenyl)disulfide, bis(pentabromophenyl)disulfide, bis(4-iodophenyl)disulfide, bis(2,5-diiodophenyl)disulfide, bis(2,4,5-triiodophenyl)disulfide, bis(2,4,5,6-tetraiodophenyl)disulfide, and bis(pentaiodophenyl)disulfide; diphenyl disulfides substituted with alkyl groups, such as bis(4-methylphenyl)disulfide, bis(2,4,5-trimethylphenyl)disulfide, bis(pentamethylphenyl)disulfide, bis(4-t-butylphenyl)disulfide, bis(2,4,5-tri-t-butylphenyl)disulfide, and bis(penta-t-butylphenyl)disulfide; diphenyl disulfides substituted with carboxyl groups, such as bis(4-carboxyphenyl)disulfide, bis(2,4,6-tricarboxyphenyl)disulfide, and bis(pentacarboxyphenyl)disulfide; diphenyl disulfides substituted with alkoxycarbonyl groups, such as bis(4-methoxycarbonylphenyl)disulfide, bis(2,4,6-trimethoxycarbonylphenyl)disulfide, and bis(pentamethoxycarbonylphenyl)disulfide; diphenyl disulfides substituted with formyl groups, such as bis(4-formylphenyl)disulfide, bis(2,4,6-triformylphenyl)disulfide, and bis(pentaformylphenyl)disulfide; diphenyl disulfides substituted with acyl groups, such as bis(4-acetylphenyl)disulfide, bis(2,4,6-triacetylphenyl)disulfide, and bis(pentaacetylphenyl)disulfide; diphenyl disulfides substituted with carbonyl halide groups, such as bis(4-chlorocarbonylphenyl)disulfide, bis(2,4,6-tri(chlorocarbonyl)phenyl)disulfide, and bis(penta(chlorocarbonyl)phenyl)disulfide; diphenyl disulfides substituted with sulfo groups, such as bis(4-sulfophenyl)disulfide, bis(2,4,6-trisulfophenyl)disulfide, and bis(pentasulfophenyl)disulfide; diphenyl disulfides substituted with alkoxysulfonyl groups, such as bis(4-methoxysulfonylphenyl)disulfide, bis(2,4,6-trimethoxysulfonylphenyl)disulfide, and bis(pentamethoxysulfonylphenyl)disulfide; diphenyl disulfides substituted with sulfonyl halide groups, such as bis(4-chlorosulfonylphenyl)disulfide, bis(2,4,6-tri(chlorosulfonyl)phenyl)disulfide, and bis(penta(chlorosulfonyl)phenyl)disulfide; diphenyl disulfides substituted with sulfino groups, such as bis(4-sulfinophenyl)disulfide, bis(2,4,6-trisulfinophenyl)disulfide, and bis(pentasulfinophenyl)disulfide; diphenyl disulfides substituted with alkylsulfinyl groups, such as bis(4-methylsulfinylphenyl)disulfide, bis(2,4,6-tri(methylsulfinyl)phenyl)disulfide, and bis(penta(methylsulfinyl)phenyl)disulfide; diphenyl disulfides substituted with carbamoyl groups, such as bis(4-carbamoylphenyl)disulfide, bis(2,4,6-tricarbamoylphenyl)disulfide, and bis(pentacarbamoylphenyl)disulfide; diphenyl disulfides substituted with alkyl halide groups, such as bis(4-trichloromethylphenyl)disulfide, bis(2,4,6-tri(trichloromethyl)phenyl)disulfide, and bis(penta(trichloromethyl)phenyl)disulfide; diphenyl disulfides substituted with cyano groups, such as bis(4-cyanophenyl)disulfide, bis(2,4,6-tricyanophenyl)disulfide, and bis(pentacyanophenyl)disulfide; and diphenyl disulfides substituted with alkoxy groups, such as bis(4-methoxyphenyl)disulfide, bis(2,4,6-trimethoxyphenyl)disulfide, and bis(pentamethoxyphenyl)disulfide. Each of these diphenyl disulfides is substituted with one type of substituent.

Another example of the organic sulfur compound represented by the chemical formula (2) is a compound substituted with at least one type of the above substituents and another substituent. Examples of the other substituent include a nitro group ($-NO_2$), an amino group ($-NH_2$), a hydroxyl group (-OH), and a phenylthio group (-SPh). Specific examples of the compound include bis(4-chloro-2-nitrophenyl)disulfide, bis(4-chloro-2-aminophenyl)disulfide, bis(4-chloro-2-hydroxyphenyl)disulfide, bis(4-chloro-2-phenylthiophenyl)disulfide, bis(4-methyl-2-nitrophenyl)disulfide, bis(4-methyl-2-aminophenyl)disulfide, bis(4-methyl-2-hydroxyphenyl)disulfide, bis(4-methyl-2-phenylthiophenyl)disulfide, bis(4-carboxy-2-nitrophenyl)disulfide, bis(4-carboxy-2-aminophenyl)disulfide, bis(4-carboxy-2-hydroxyphenyl)disulfide, bis(4-carboxy-2-phenylthiophenyl)disulfide, bis(4-methoxycarbonyl-2-nitrophenyl)disulfide, bis(4-methoxycarbonyl-2-aminophenyl)disulfide, bis(4-methoxycarbonyl-2-hydroxyphenyl)disulfide, bis(4-methoxycarbonyl-2-phenylthiophenyl)disulfide, bis(4-formyl-2-nitrophenyl)disulfide, bis(4-formyl-2-aminophenyl)disulfide, bis(4-formyl-2-hydroxyphenyl)disulfide, bis(4-formyl-2-phenylthiophenyl)disulfide, bis(4-acetyl-2-nitrophenyl)disulfide, bis(4-acetyl-2-aminophenyl)disulfide, bis(4-acetyl-2-hydroxyphenyl)disulfide, bis(4-acetyl-2-phenylthiophenyl)disulfide, bis(4-chlorocarbonyl-2-nitrophenyl)disulfide, bis(4-chlorocarbonyl-2-aminophenyl)disulfide, bis(4-chlorocarbonyl-2-hydroxyphenyl)disulfide, bis(4-chlorocarbonyl-2-phenylthiophenyl)disulfide, bis(4-sulfo-2-nitrophenyl)disulfide, bis(4-sulfo-2-aminophenyl)disulfide, bis(4-sulfo-2-hydroxyphenyl)disulfide, bis(4-sulfo-2-phenylthiophenyl)disulfide, bis(4-methoxysulfonyl-2-nitrophenyl)disulfide, bis(4-methoxysulfonyl-2-aminophenyl)disulfide, bis(4-methoxysulfonyl-2-hydroxyphenyl)disulfide, bis(4-methoxysulfonyl-2-phenylthiophenyl)disulfide, bis(4-chlorosulfonyl-2-nitrophenyl)disulfide, bis(4-chlorosulfonyl-2-aminophenyl)disulfide, bis(4-chlorosulfonyl-2-hydroxyphenyl)disulfide, bis(4-chlorosulfonyl-2-phenylthiophenyl)disulfide, bis(4-sulfino-2-nitrophenyl)disulfide, bis(4-sulfino-2-aminophenyl)disulfide, bis(4-sulfino-2-hydroxyphenyl)disulfide, bis(4-sulfino-2-phenylthiophenyl)disulfide, bis(4-methylsulfinyl-2-nitrophenyl)disulfide, bis(4-methylsulfinyl-2-aminophenyl)disulfide, bis(4-methylsulfinyl-2-hydroxyphenyl)disulfide, bis(4-methylsulfinyl-2-phenylthiophenyl)disulfide, bis(4-carbamoyl-2-nitrophenyl)disulfide, bis(4-carbamoyl-2-aminophenyl)disulfide, bis(4-carbamoyl-2-hydroxyphenyl)disulfide, bis(4-carbamoyl-2-phenylthiophenyl)disulfide, bis(4-trichloromethyl-2-nitrophenyl)disulfide, bis(4-trichloromethyl-2-aminophenyl)disulfide, bis(4-trichloromethyl-2-hydroxyphenyl)disulfide, bis(4-trichloromethyl-2-phenylthiophenyl)disulfide, bis(4-cyano-2-nitrophenyl)disulfide, bis(4-cyano-2-aminophenyl)disulfide, bis(4-cyano-2-hydroxyphenyl)disulfide, bis(4-cyano-2-phenylthiophenyl)disulfide, bis(4-methoxy-2-nitrophenyl)disulfide, bis(4-methoxy-2-aminophenyl)disulfide, bis(4-methoxy-2-hydroxyphenyl)disulfide, and bis(4-methoxy-2-phenylthiophenyl)disulfide.

Still another example of the organic sulfur compound represented by the chemical formula (2) is a compound substituted with two or more types of substituents. Specific examples of the compound include bis(4-acetyl-2-chlorophenyl)disulfide, bis(4-acetyl-2-methylphenyl)disulfide, bis(4-acetyl-2-carboxyphenyl)disulfide, bis(4-acetyl-2-methoxycarbonylphenyl)disulfide, bis(4-acetyl-2-formylphenyl)disulfide, bis(4-acetyl-2-chlorocarbonylphenyl)disulfide, bis(4-acetyl-2-sulfophenyl)disulfide, bis(4-acetyl-2-methoxysulfonylphenyl)disulfide, bis(4-acetyl-2-chlorosulfonylphenyl)disulfide, bis(4-acetyl-2-sulfinophenyl)disulfide, bis(4-acetyl-2-methylsulfinylphenyl)disulfide, bis(4-acetyl-2-carbamoylphenyl)disulfide, bis(4-acetyl-2-trichloromethylphenyl)disulfide, bis(4-acetyl-2-cyanophenyl)disulfide, and bis(4-acetyl-2-methoxyphenyl)disulfide.

Examples of the organic sulfur compound represented by the chemical formula (3) include thiophenol sodium salt; thiophenol sodium salts substituted with halogen groups, such as 4-fluorothiophenol sodium salt, 2,5-difluorothiophenol sodium salt, 2,4,5-trifluorothiophenol sodium salt, 2,4,5,6-tetrafluorothiophenol sodium salt, pentafluorothiophenol sodium salt, 4-chlorothiophenol sodium salt, 2,5-dichlorothiophenol sodium salt, 2,4,5-trichlorothiophenol sodium salt, 2,4,5,6-tetrachlorothiophenol sodium salt, pentachlorothiophenol sodium salt, 4-bromothiophenol sodium salt, 2,5-dibromothiophenol sodium salt, 2,4,5-tribromothiophenol sodium salt, 2,4,5,6-tetrabromothiophenol sodium salt, pentabromothiophenol sodium salt, 4-iodothiophenol sodium salt, 2,5-diiodothiophenol sodium salt, 2,4,5-triiodothiophenol sodium salt, 2,4,5,6-tetraiodothiophenol sodium salt, and pentaiodothiophenol sodium salt; thiophenol sodium salts substituted with alkyl groups, such as 4-methylthiophenol sodium salt, 2,4,5-trimethylthiophenol sodium salt, pentamethylthiophenol sodium salt, 4-t-butylthiophenol sodium salt, 2,4,5-tri-t-butylthiophenol sodium salt, and penta(t-butyl)thiophenol sodium salt; thiophenol sodium salts substituted with carboxyl groups, such as 4-carboxythiophenol sodium salt, 2,4,6-tricarboxythiophenol sodium salt, and pentacarboxythiophenol sodium salt; thiophenol sodium salts substituted with alkoxycarbonyl groups, such as 4-methoxycarbonylthiophenol sodium salt, 2,4,6-trimethoxycarbonylthiophenol sodium salt, and pentamethoxycarbonylthiophenol sodium salt; thiophenol sodium salts substituted with formyl groups, such as 4-formylthiophenol sodium salt, 2,4,6-triformylthiophenol sodium salt, and pentaformylthiophenol sodium salt; thiophenol sodium salts substituted with acyl groups, such as 4-acetylthiophenol sodium salt, 2,4,6-triacetylthiophenol sodium salt, and pentaacetylthiophenol sodium salt; thiophenol sodium salts substituted with carbonyl halide groups, such as 4-chlorocarbonylthiophenol sodium salt, 2,4,6-tri(chlorocarbonyl)thiophenol sodium salt, and penta(chlorocarbonyl)thiophenol sodium salt; thiophenol sodium salts substituted with sulfo groups, such as 4-sulfothiophenol sodium salt, 2,4,6-trisulfothiophenol sodium salt, and pentasulfothiophenol sodium salt; thiophenol sodium salts substituted with alkoxysulfonyl groups, such as 4-methoxysulfonylthiophenol sodium salt, 2,4,6-trimethoxysulfonylthiophenol sodium salt, and pentamethoxysulfonylthiophenol sodium salt; thiophenol sodium salts substituted with sulfonyl halide groups, such as 4-chlorosulfonylthiophenol sodium salt, 2,4,6-tri(chlorosulfonyl)thiophenol sodium salt, and penta(chlorosulfonyl)thiophenolsodiumsalt; thiophenolsodium salts substituted with sulfino groups, such as 4-sulfinothiophenol sodium salt, 2,4,6-trisulfinothiophenol sodium salt, and pentasulfinothiophenol sodium salt; thiophenol sodium salts substituted with alkylsulfinyl groups, such as 4-methylsulfinylthiophenol sodium salt, 2,4,6-tri(methylsulfinyl)thiophenol sodium salt, and penta(methylsulfinyl)thiophenolsodiumsalt; thiophenolsodium salts substituted with carbamoyl groups, such as 4-carbamoylthiophenol sodium salt, 2,4,6-tricarbamoylthiophenol sodium salt, and pentacarbamoylthiophenol sodium salt; thiophenol sodium salts substituted with alkyl halide groups, such as 4-trichloromethylthiophenol sodium salt, 2,4,6-tri(trichloromethyl)thiophenol sodium salt, and penta(trichloromethyl)thiophenol sodium salt; thiophenol sodium salts substituted with cyano groups, such as 4-cyanothiophenolsodiumsalt, 2,4,6-tricyanothiophenolsodium salt, and pentacyanothiophenol sodium salt; and thiophenol sodium salts substituted with alkoxy groups, such as 4-methoxythiophenol sodium salt, 2,4,6-trimethoxythiophenol sodium salt, and pentamethoxythiophenol sodium salt. Each of these thiophenol sodium salts is substituted with one type of substituent.

Another example of the organic sulfur compound represented by the chemical formula (3) is a compound substituted with at least one type of the above substituents and another substituent. Examples of the other substituent include a nitro group ($-NO_2$), an amino group ($-NH_2$), a hydroxyl group (-OH), and a phenylthio group (-SPh). Specific examples of the compound include 4-chloro-2-nitrothiophenol sodium salt, 4-chloro-2-aminothiophenol sodium salt, 4-chloro-2-hydroxythiophenol sodium salt, 4-chloro-2-phenylthiothiophenol sodium salt, 4-methyl-2-nitrothiophenol sodium salt, 4-methyl-2-aminothiophenol sodium salt, 4-methyl-2-hydroxythiophenol sodium salt, 4-methyl-2-phenylthiothiophenol sodium salt, 4-carboxy-2-nitrothiophenol sodium salt, 4-carboxy-2-aminothiophenol sodium salt, 4-carboxy-2-hydroxythiophenol sodium salt, 4-carboxy-2-phenylthiothiophenol sodium salt, 4-methoxycarbonyl-2-nitrothiophenol sodium salt, 4-methoxycarbonyl-2-aminothiophenol sodium salt, 4-methoxycarbonyl-2-hydroxythiophenol sodium salt, 4-methoxycarbonyl-2-phenylthiothiophenol sodium salt, 4-formyl-2-nitrothiophenol sodium salt, 4-formyl-2-aminothiophenol sodium salt, 4-formyl-2-hydroxythiophenol sodium salt, 4-formyl-2-phenylthiothiophenol sodium salt, 4-acetyl-2-nitrothiophenol sodium salt, 4-acetyl-2-aminothiophenol sodium salt, 4-acetyl-2-hydroxythiophenol sodium salt, 4-acetyl-2-phenylthiothiophenol sodium salt, 4-chlorocarbonyl-2-nitrothiophenol sodium salt, 4-chlorocarbonyl-2-aminothiophenol sodium salt, 4-chlorocarbonyl-2-hydroxythiophenol sodium salt, 4-chlorocarbonyl-2-phenylthiothiophenol sodium salt, 4-sulfo-2-nitrothiophenol sodium salt, 4-sulfo-2-aminothiophenol sodium salt, 4-sulfo-2-hydroxythiophenol sodium salt, 4-sulfo-2-phenylthiothiophenol sodium salt, 4-methoxysulfonyl-2-nitrothiophenol sodium salt, 4-methoxysulfonyl-2-aminothiophenol sodium salt, 4-methoxysulfonyl-2-hydroxythiophenol sodium salt, 4-methoxysulfonyl-2-phenylthiothiophenol sodium salt, 4-chlorosulfonyl-2-nitrothiophenol sodium salt, 4-chlorosulfonyl-2-aminothiophenol sodium salt, 4-chlorosulfonyl-2-hydroxythiophenol sodium salt, 4-chlorosulfonyl-2-phenylthiothiophenol sodium salt, 4-sulfino-2-nitrothiophenol sodium salt, 4-sulfino-2-aminothiophenol sodium salt, 4-sulfino-2-hydroxythiophenol sodium salt, 4-sulfino-2-phenylthiothiophenol sodium salt, 4-methylsulfinyl-2-nitrothiophenol sodium salt, 4-methylsulfinyl-2-aminothiophenol sodium salt, 4-methylsulfinyl-2-hydroxythiophenol sodium salt, 4-methylsulfinyl-2-phenylthiothiophenol sodium salt, 4-carbamoyl-2-nitrothiophenol sodium salt, 4-carbamoyl-2-aminothiophenol sodium salt, 4-carbamoyl-2-hydroxythiophenol sodium salt, 4-carbamoyl-2-phenylthiothiophenol sodium salt, 4-trichloromethyl-2-nitrothiophenol sodium salt, 4-trichloromethyl-2-aminothiophenol sodium salt, 4-trichloromethyl-2-hydroxythiophenol sodium salt, 4-trichloromethyl-2-phenylthiothiophenol sodium salt, 4-cyano-2-nitrothiophenol sodium salt, 4-cyano-2-aminothiophenol sodium salt, 4-cyano-2-hydroxythiophenol sodium salt, 4-cyano-2-phenylthiothiophenol sodium salt, 4-methoxy-2-nitrothiophenol sodium salt, 4-methoxy-2-aminothiophenol sodium salt, 4-methoxy-2-hydroxythiophenol sodium salt, and 4-methoxy-2-phenylthiothiophenol sodium salt.

Still another example of the organic sulfur compound represented by the chemical formula (3) is a compound substituted with two or more types of substituents. Specific examples of the compound include 4-acetyl-2-chlorothiophenol sodium salt, 4-acetyl-2-methylthiophenol sodium salt, 4-acetyl-2-carboxythiophenol sodium salt, 4-acetyl-2-methoxycarbonylthiophenol sodium salt, 4-acetyl-2-formylthiophenol sodium salt, 4-acetyl-2-chlorocarbonylthiophenol sodium salt, 4-acetyl-2-sulfothiophenol sodium salt, 4-acetyl-2-methoxysulfonylthiophenol sodium salt, 4-acetyl-2-chlorosulfonylthiophenol sodium salt, 4-acetyl-2-sulfinothiophenol sodium salt, 4-acetyl-2-methylsulfinylthiophenol sodium salt, 4-acetyl-2-carbamoylthiophenol sodium salt, 4-acetyl-2-trichloromethylthiophenol sodium salt, 4-acetyl-2-cyanothiophenol sodium salt, and 4-acetyl-2-methoxythiophenol sodium salt. Examples of the monovalent metal represented by M1 in the chemical formula (3) include sodium, lithium, potassium, copper (I), and silver (I).

Examples of the organic sulfur compound represented by the chemical formula (4) include thiophenol zinc salt; thiophenol zinc salts substituted with halogen groups, such as 4-fluorothiophenol zinc salt, 2,5-difluorothiophenol zinc salt, 2,4,5-trifluorothiophenol zinc salt, 2,4,5,6-tetrafluorothiophenol zinc salt, pentafluorothiophenolzinc salt, 4-chlorothiophenolzinc salt, 2,5-dichlorothiophenol zinc salt, 2,4,5-trichlorothiophenol zinc salt, 2,4,5,6-tetrachlorothiophenol zinc salt, pentachlorothiophenol zinc salt, 4-bromothiophenol zinc salt, 2,5-dibromothiophenolzincsalt, 2,4,5-tribromothiophenolzinc salt, 2,4,5,6-tetrabromothiophenol zinc salt, pentabromothiophenol zinc salt, 4-iodothiophenol zinc salt, 2,5-diiodothiophenol zinc salt, 2,4,5-triiodothiophenol zinc salt, 2,4,5,6-tetraiodothiophenol zinc salt, and pentaiodothiophenol zinc salt; thiophenol zinc salts substituted with alkyl groups, such as 4-methylthiophenol zinc salt, 2,4,5-trimethylthiophenol zinc salt, pentamethylthiophenol zinc salt, 4-t-butylthiophenol zinc salt, 2,4,5-tri-t-butylthiophenol zinc salt, and penta-t-butylthiophenol zinc salt; thiophenol zinc salts substituted with carboxyl groups, such as 4-carboxythiophenol zinc salt, 2,4,6-tricarboxythiophenol zinc salt, and pentacarboxythiophenol zinc salt; thiophenol zinc salts substituted with alkoxycarbonyl groups, such as 4-methoxycarbonylthiophenol zinc salt, 2,4,6-trimethoxycarbonylthiophenol zinc salt, and pentamethoxycarbonylthiophenol zinc salt; thiophenol zinc salts substituted with formyl groups, such as 4-formylthiophenol zinc salt, 2,4,6-triformylthiophenol zinc salt, and pentaformylthiophenol zinc salt; thiophenol zinc salts substituted with acyl groups, such as 4-acetylthiophenol zinc salt, 2,4,6-triacetylthiophenol zinc salt, and pentaacetylthiophenol zinc salt; thiophenol zinc salts substituted with carbonyl halide groups, such as 4-chlorocarbonylthiophenol zinc salt, 2,4,6-tri(chlorocarbonyl)thiophenol zinc salt, and penta(chlorocarbonyl)thiophenol zinc salt; thiophenol zinc salts substituted with sulfo groups, such as 4-sulfothiophenol zinc salt, 2,4,6-trisulfothiophenol zinc salt, and pentasulfothiophenol zinc salt; thiophenol zinc salts substituted with alkoxysulfonyl groups, such as 4-methoxysulfonylthiophenol zinc salt, 2,4,6-trimethoxysulfonylthiophenol zinc salt, and pentamethoxysulfonylthiophenol zinc salt; thiophenol zinc salts substituted with sulfonyl halide groups, such as 4-chlorosulfonylthiophenol zinc salt, 2,4,6-tri(chlorosulfonyl)thiophenol zinc salt, and penta(chlorosulfonyl)thiophenol zinc salt; thiophenol zinc salts substituted with sulfino groups, such as 4-sulfinothiophenolzinc salt, 2,4,6-trisulfinothiophenolzinc salt, and pentasulfinothiophenol zinc salt; thiophenol zinc salts substituted with alkylsulfinyl groups, such as 4-methylsulfinylthiophenol zinc salt, 2,4,6-tri(methylsulfinyl)thiophenol zinc salt, and penta(methylsulfinyl)thiophenol zinc salt; thiophenol zinc salts substituted with carbamoyl groups, such as 4-carbamoylthiophenol zinc salt, 2,4,6-tricarbamoylthiophenol zinc salt, and pentacarbamoylthiophenol zinc salt; thiophenol zinc salts substituted with alkyl halide groups, such as 4-trichloromethylthiophenol zinc salt, 2,4,6-tri(trichloromethyl)thiophenol zinc salt, and penta(trichloromethyl)thiophenol zinc salt; thiophenol zinc salts substituted with cyano groups, such as 4-cyanothiophenol zinc salt, 2,4,6-tricyanothiophenol zinc salt, and pentacyanothiophenol zinc salt; and thiophenol zinc salts substituted with alkoxy groups, such as 4-methoxythiophenol zinc salt, 2,4,6-trimethoxythiophenol zinc salt, and pentamethoxythiophenol zinc salt. Each of these thiophenol zinc salts is substituted with one type of substituent.

Another example of the organic sulfur compound represented by the chemical formula (4) is a compound substituted with at least one type of the above substituents and another substituent. Examples of the other substituent include a nitro group ($-NO_2$), an amino group ($-NH_2$), a hydroxyl group (-OH), and a phenylthio group (-SPh). Specific examples of the compound include 4-chloro-2-nitrothiophenol zinc salt, 4-chloro-2-aminothiophenol zinc salt, 4-chloro-2-hydroxythiophenol zinc salt, 4-chloro-2-phenylthiothiophenol zinc salt, 4-methyl-2-nitrothiophenol zinc salt, 4-methyl-2-aminothiophenol zinc salt, 4-methyl-2-hydroxythiophenol zinc salt, 4-methyl-2-phenylthiothiophenol zinc salt, 4-carboxy-2-nitrothiophenol zinc salt, 4-carboxy-2-aminothiophenol zinc salt, 4-carboxy-2-hydroxythiophenol zinc salt, 4-carboxy-2-phenylthiothiophenol zinc salt, 4-methoxycarbonyl-2-nitrothiophenol zinc salt, 4-methoxycarbonyl-2-aminothiophenol zinc salt, 4-methoxycarbonyl-2-hydroxythiophenol zinc salt, 4-methoxycarbonyl-2-phenylthiothiophenol zinc salt, 4-formyl-2-nitrothiophenol zinc salt, 4-formyl-2-aminothiophenol zinc salt, 4-formyl-2-hydroxythiophenol zinc salt, 4-formyl-2-phenylthiothiophenol zinc salt, 4-acetyl-2-nitrothiophenol zinc salt, 4-acetyl-2-aminothiophenol zinc salt, 4-acetyl-2-hydroxythiophenol zinc salt, 4-acetyl-2-phenylthiothiophenol zinc salt, 4-chlorocarbonyl-2-nitrothiophenol zinc salt, 4-chlorocarbonyl-2-aminothiophenol zinc salt, 4-chlorocarbonyl-2-hydroxythiophenol zinc salt, 4-chlorocarbonyl-2-phenylthiothiophenol zinc salt, 4-sulfo-2-nitrothiophenol zinc salt, 4-sulfo-2-aminothiophenol zinc salt, 4-sulfo-2-hydroxythiophenol zinc salt, 4-sulfo-2-phenylthiothiophenol zinc salt, 4-methoxysulfonyl-2-nitrothiophenol zinc salt, 4-methoxysulfonyl-2-aminothiophenol zinc salt, 4-methoxysulfonyl-2-hydroxythiophenol zinc salt, 4-methoxysulfonyl-2-phenylthiothiophenol zinc salt, 4-chlorosulfonyl-2-nitrothiophenol zinc salt, 4-chlorosulfonyl-2-aminothiophenol zinc salt, 4-chlorosulfonyl-2-hydroxythiophenol zinc salt, 4-chlorosulfonyl-2-phenylthiothiophenol zinc salt, 4-sulfino-2-nitrothiophenol zinc salt, 4-sulfino-2-aminothiophenol zinc salt, 4-sulfino-2-hydroxythiophenol zinc salt, 4-sulfino-2-phenylthiothiophenol zinc salt, 4-methylsulfinyl-2-nitrothiophenol zinc salt, 4-methylsulfinyl-2-aminothiophenol zinc salt, 4-methylsulfinyl-2-hydroxythiophenol zinc salt, 4-methylsulfinyl-2-phenylthiothiophenol zinc salt, 4-carbamoyl-2-nitrothiophenol zinc salt, 4-carbamoyl-2-aminothiophenol zinc salt, 4-carbamoyl-2-hydroxythiophenol zinc salt, 4-carbamoyl-2-phenylthiothiophenol zinc salt, 4-trichloromethyl-2-nitrothiophenol zinc salt, 4-trichloromethyl-2-aminothiophenol zinc salt, 4-trichloromethyl-2-hydroxythiophenol zinc salt, 4-trichloromethyl-2-phenylthiothiophenol zinc salt, 4-cyano-2-nitrothiophenol zinc salt, 4-cyano-2-aminothiophenol zinc salt, 4-cyano-2-hydroxythiophenol zinc salt, 4-cyano-2-phenylthiothiophenol zinc salt, 4-methoxy-2-nitrothiophenol zinc salt, 4-methoxy-2-aminothiophenol zinc salt, 4-methoxy-2-hydroxythiophenol zinc salt, and 4-methoxy-2-phenylthiothiophenol zinc salt.

Still another example of the organic sulfur compound represented by the chemical formula (4) is a compound substituted with two or more types of substituents. Specific examples of the compound include 4-acetyl-2-chlorothiophenol zinc salt, 4-acetyl-2-methylthiophenol zinc salt, 4-acetyl-2-carboxythiophenol zinc salt, 4-acetyl-2-methoxycarbonylthiophenol zinc salt, 4-acetyl-2-formylthiophenol zinc salt, 4-acetyl-2-chlorocarbonylthiophenol zinc salt, 4-acetyl-2-sulfothiophenol zinc salt, 4-acetyl-2-methoxysulfonylthiophenol zinc salt, 4-acetyl-2-chlorosulfonylthiophenol zinc salt, 4-acetyl-2-sulfinothiophenol zinc salt, 4-acetyl-2-methylsulfinylthiophenol zinc salt, 4-acetyl-2-carbamoylthiophenol zinc salt, 4-acetyl-2-trichloromethylthiophenol zinc salt, 4-acetyl-2-cyanothiophenol zinc salt, and 4-acetyl-2-methoxythiophenol zinc salt. Examples of the bivalent metal represented by M2 in the chemical formula (4) include zinc, magnesium, calcium, strontium, barium, titanium (II), manganese (II), iron (II), cobalt (II), nickel (II), zirconium (II), and tin (II).

Examples of thionaphthols include 2-thionaphthol, 1-thionaphthol, 2-chloro-1-thionaphthol, 2-bromo-1-thionaphthol, 2-fluoro-1-thionaphthol, 2-cyano-1-thionaphthol, 2-acetyl-1-thionaphthol, 1-chloro-2-thionaphthol, 1-bromo-2-thionaphthol, 1-fluoro-2-thionaphthol, 1-cyano-2-thionaphthol, 1-acetyl-2-thionaphthol, and metal salts thereof. 1-thionaphthol, 2-thionaphthol, and zinc salts thereof are preferred.

Examples of sulfenamide type organic sulfur compounds include N-cyclohexyl-2-benzothiazole sulfenamide, N-oxydiethylene-2-benzothiazole sulfenamide, and N-t-butyl-2-benzothiazole sulfenamide. Examples of thiuram type organic sulfur compounds include tetramethylthiuram monosulfide, tetramethylthiuram disulfide, tetraethylthiuram disulfide, tetrabutylthiuram disulfide, and dipentamethylenethiuram tetrasulfide. Examples of dithiocarbamates include zinc dimethyldithiocarbamate, zinc diethyldithiocarbamate, zinc dibutyldithiocarbamate, zinc ethylphenyldithiocarbamate, sodium dimethyldithiocarbamate, sodium diethyldithiocarbamate, copper (II) dimethyldithiocarbamate, iron (III) dimethyldithiocarbamate, selenium diethyldithiocarbamate, and tellurium diethyldithiocarbamate. Examples of thiazole type organic sulfur compounds include 2-mercaptobenzothiazole (MBT); dibenzothiazyl disulfide (MBTS); a sodium salt, a zinc salt, a copper salt, or a cyclohexylamine salt of 2-mercaptobenzothiazole; 2-(2,4-dinitrophenyl)mercaptobenzothiazole; and 2-(2,6-diethyl-4-morpholinothio)benzothiazole.

From the standpoint that an outer-hard/inner-soft structure is easily obtained, particularly preferable organic sulfur compounds (e) are 2-thionaphthol, bis(pentabromophenyl)disulfide, and 2,6-dichlorothiophenol.

From the standpoint that an outer-hard/inner-soft structure is easily obtained, the amount of the organic sulfur compound (e) is preferably equal to or greater than 0.05 parts by weight, more preferably equal to or greater than 0.1 parts by weight, and particularly preferably equal to or greater than 0.2 parts by weight, per 100 parts by weight of the base rubber. In light of resilience performance, the amount is preferably equal to or less than 5.0 parts by weight, more preferably equal to or less than 3.0 parts by weight, and particularly preferably equal to or less than 1.0 parts by weight, per 100 parts by weight of the base rubber.

For the purpose of adjusting specific gravity and the like, a filler may be included in the envelope layer 20. Examples of suitable fillers include zinc oxide, barium sulfate, calcium carbonate, and magnesium carbonate. The amount of the filler is determined as appropriate so that the intended specific gravity of the core 4 is accomplished. A particularly preferable filler is zinc oxide. Zinc oxide serves not only as a specific gravity adjuster but also as a crosslinking activator.

According to need, an anti-aging agent, a coloring agent, a plasticizer, a dispersant, sulfur, a vulcanization accelerator, and the like are added to the rubber composition of the envelope layer 20. Crosslinked rubber powder or synthetic resin powder may also be dispersed in the rubber composition.

During heating and forming of the core 4, the base rubber (a) is crosslinked by the co-crosslinking agent (b).

The heat of the crosslinking reaction of the base rubber remains near the central point of the core 4. Thus, during heating and forming of the core 4, the temperature at the central portion is high. The temperature gradually decreases from the central point toward the surface. In the rubber composition, the acid reacts with the metal salt of the co-crosslinking agent (b) to bond to cation. In the rubber composition, the salt reacts with the metal salt of the co-crosslinking agent (b) to exchange cation. By the bonding and the exchange, metal crosslinks are broken. The bonding and the exchange are likely to occur near the innermost portion of the envelope layer 20 where the temperature is high, and are unlikely to occur near the surface of the envelope layer 20. In other words, breaking of metal crosslinks is likely to occur near the innermost portion of the envelope layer 20 and is unlikely to occur near the surface of the envelope layer 20. As a result, the crosslinking density of the envelope layer 20 increases from its inside toward its outside. In the envelope layer 20, the hardness linearly increases from its inside toward its outside. Further, since the rubber composition includes the organic sulfur compound (e) together with the acid and/or the salt (d), the gradient of the hardness distribution can be controlled, and the degree of the outer-hard/inner-soft structure of the core 4 can be increased. When the golf ball 2 that includes the core 4 is hit with a driver, the spin rate is low. In the golf ball 2, excellent flight performance is achieved upon a shot with a driver.

The hardness H(0) at the central point of the core 4 is preferably equal to or greater than 40 but equal to or less than 70. The golf ball 2 having a hardness H(0) of 40 or greater has excellent resilience performance. In this respect, the hardness H(0) is more preferably equal to or greater than 45 and particularly preferably equal to or greater than 47. The core 4 having a hardness H(0) of 70 or less can achieve an outer-hard/inner-soft structure. In the golf ball 2 that includes the core 4, spin can be suppressed. In this respect, the hardness H(0) is more preferably equal to or less than 68 and particularly preferably equal to or less than 65.

The hardness H(100) at the surface of the core 4 is preferably equal to or greater than 78 but equal to or less than 96. The core 4 having a hardness H(100) of 78 or greater can achieve an outer-hard/inner-soft structure. In the golf ball 2 that includes the core 4, spin can be suppressed. In this respect, the hardness H(100) is more preferably equal to or greater than 80 and particularly preferably equal to or greater than 82. The golf ball 2 having a hardness H(100) of 96 or less has excellent durability. In this respect, the hardness H(100) is more preferably equal to or less than 94 and particularly preferably equal to or less than 92.

The core 4 preferably has a diameter of 38.0 mm or greater but 42.0 mm or less. The core 4 having a diameter of 38.0 mm or greater can achieve excellent resilience performance of the golf ball 2. In this respect, the diameter is more preferably equal to or greater than 39.0 mm and particularly preferably equal to or greater than 39.5 mm. In the golf ball 2 that includes the core 4 having a diameter of 42.0 mm or less, the mid layer 6, the inner cover 10, and the outer cover 12 can have sufficient thicknesses. The golf ball 2 that includes the mid layer 6, the inner cover 10, and the outer cover 12 which have large thicknesses has excellent durability. In this respect, the diameter is more preferably equal to or less than 41 mm and particularly preferably equal to or less than 40 mm.

For the mid layer 6, a resin composition is suitably used. Examples of the base polymer of the resin composition include ionomer resins, polystyrenes, polyesters, polyamides, and polyolefins.

Particularly preferable base polymers are ionomer resins. The golf ball 2 that includes the mid layer 6 including an ionomer resin has excellent resilience performance. An ionomer resin and another resin may be used in combination for the mid layer 6. In this case, the principal component of the base polymer is preferably the ionomer resin. Specifically, the proportion of the ionomer resin to the entire base polymer is preferably equal to or greater than 50% by weight, more preferably equal to or greater than 60% by weight, and particularly preferably equal to or greater than 70% by weight.

Examples of preferable ionomer resins include binary copolymers formed with an $\alpha$-olefin and an $\alpha,\beta$-unsaturated carboxylic acid having 3 to 8 carbon atoms. A preferable binary copolymer includes 80% by weight or greater but 90% by weight or less of an $\alpha$-olefin, and 10% by weight or greater but 20% by weight or less of an $\alpha,\beta$-unsaturated carboxylic acid. The binary copolymer has excellent resilience performance. Examples of other preferable ionomer resins include ternary copolymers formed with: an $\alpha$-olefin; an $\alpha,\beta$-unsaturated carboxylic acid having 3 to 8 carbon atoms; and an $\alpha,\beta$-unsaturated carboxylate ester having 2 to 22 carbon atoms. A preferable ternary copolymer includes 70% by weight or greater but 85% by weight or less of an $\alpha$-olefin, 5% by weight or greater but 30% by weight or less of an $\alpha, \beta$-unsaturated carboxylic acid, and 1% by weight or greater but 25% by weight or less of an $\alpha,\beta$-unsaturated carboxylate ester. The ternary copolymer has excellent resilience performance. For the binary copolymers and the ternary copolymers, preferable $\alpha$-olefins are ethylene and propylene, while preferable $\alpha,\beta$-unsaturated carboxylic acids are acrylic acid and methacrylic acid. A particularly preferable ionomer resin is a copolymer formed with ethylene and acrylic acid or methacrylic acid.

In the binary copolymers and the ternary copolymers, some of the carboxyl groups are neutralized with metal ions. Examples of metal ions for use in neutralization include sodium ion, potassium ion, lithium ion, zinc ion, calcium ion, magnesium ion, aluminum ion, and neodymium ion. The neutralization may be carried out with two or more types of metal ions. Particularly suitable metal ions in light of resilience performance and durability of the golf ball 2 are sodium ion, zinc ion, lithium ion, and magnesium ion.

Specific examples of ionomer resins include trade names "Himilan 1555", "Himilan1557", "Himilan1605",

"Himilan1706", "Himilan 1707", "Himilan 1856", "Himilan 1855", "Himilan AM7311", "Himilan AM7315", "Himilan AM7317", "Himilan AM7318", "Himilan AM7329", "Himilan MK7320", and "Himilan MK7329", manufactured by Du Pont-MITSUI POLYCHEMICALS Co., Ltd. ; trade names "Surlyn 6120", "Surlyn 6910", "Surlyn 7930", "Surlyn 7940", "Surlyn 8140", "Surlyn 8150", "Surlyn 8940", "Surlyn 8945", "Surlyn 9120", "Surlyn 9150", "Surlyn 9910", "Surlyn 9945", "Surlyn AD8546", "HPF1000", and"HPF2000", manufactured by E.I. du Pont de Nemours and Company; and trade names "IOTEK 7010", "IOTEK 7030", "IOTEK 7510", "IOTEK 7520", "IOTEK 8000", and "IOTEK 8030", manufactured by ExxonMobil Chemical Company.

Two or more ionomer resins may be used in combination for the mid layer 6. An ionomer resin neutralized with a monovalent metal ion, and an ionomer resin neutralized with a bivalent metal ion may be used in combination.

A preferable resin that can be used in combination with an ionomer resin is a styrene block-containing thermoplastic elastomer. The styrene block-containing thermoplastic elastomer has excellent compatibility with ionomer resins. A resin composition including the styrene block-containing thermoplastic elastomer has excellent fluidity.

The styrene block-containing thermoplastic elastomer includes a polystyrene block as a hard segment, and a soft segment. A typical soft segment is a diene block. Examples of compounds for the diene block include butadiene, isoprene, 1,3-pentadiene, and 2,3-dimethyl-1,3-butadiene. Butadiene and isoprene are preferred. Two or more compounds may be used in combination.

Examples of styrene block-containing thermoplastic elastomers include styrene-butadiene-styrene block copolymers (SBS), styrene-isoprene-styrene block copolymers (SIS), styrene-isoprene-butadiene-styrene block copolymers (SIBS), hydrogenated SBS, hydrogenated SIS, and hydrogenated SIBS. Examples of hydrogenated SBS include styrene-ethylene-butylene-styrene block copolymers (SEBS). Examples of hydrogenated SIS include styrene-ethylene-propylene-styrene block copolymers (SEPS). Examples of hydrogenated SIBS include styrene-ethylene-ethylene-propylene-styrene block copolymers (SEEPS).

In light of resilience performance of the golf ball 2, the content of the styrene component in the styrene block-containing thermoplastic elastomer is preferably equal to or greater than 10% by weight, more preferably equal to or greater than 12% by weight, and particularly preferably equal to or greater than 15% by weight. In light of feel at impact of the golf ball 2, the content is preferably equal to or less than 50% by weight, more preferably equal to or less than 47% by weight, and particularly preferably equal to or less than 45% by weight.

In the present invention, styrene block-containing thermoplastic elastomers include an alloy of an olefin and one or more members selected from the group consisting of SBS, SIS, SIBS, and hydrogenated products thereof. The olefin component in the alloy is presumed to contribute to improvement of compatibility with ionomer resins. Use of this alloy improves the resilience performance of the golf ball 2. An olefin having 2 to 10 carbon atoms is preferably used. Examples of suitable olefins include ethylene, propylene, butene, and pentene. Ethylene and propylene are particularly preferred.

Specific examples of polymer alloys include trade names "Rabalon T3221C", "Rabalon T3339C", "Rabalon SJ4400N", "Rabalon SJ5400N", "Rabalon SJ6400N", "Rabalon SJ7400N", "Rabalon SJ8400N", "Rabalon SJ9400N", and "Rabalon SR04", manufactured by Mitsubishi Chemical Corporation. Other specific examples of styrene block-containing thermoplastic elastomers include trade name "Epofriend A1010" manufactured by Daicel Chemical Industries, Ltd., and trade name "Septon HG-252" manufactured by Kuraray Co., Ltd.

The mid layer 6 may include a highly elastic resin as the base polymer. The highly elastic resin contributes to high rigidity of the mid layer 6. Specific examples of the highly elastic resin include polyamides.

According to need, a coloring agent such as titanium dioxide, a filler such as barium sulfate, a dispersant, an antioxidant, an ultraviolet absorber, a light stabilizer, a fluorescent material, a fluorescent brightener, and the like are included in the resin composition of the mid layer 6 in an adequate amount.

From the standpoint that an outer-hard/inner-soft structure can be achieved in the sphere consisting of the core 4 and the mid layer 6, the mid layer 6 has a hardness Hm of preferably 45 or greater and particularly preferably 55 or greater. In light of feel at impact of the golf ball 2, the hardness Hm is preferably equal to or less than 72 and particularly preferably equal to or less than 70. The hardness Hm is measured according to the standards of "ASTM-D 2240-68" with a Shore D type hardness scale mounted to an automated rubber hardness measurement machine (trade name "P1", manufactured by Kobunshi Keiki Co., Ltd.). For the measurement, a slab that is formed by hot press and that has a thickness of about 2 mm is used. A slab kept at 23°C for two weeks is used for the measurement. At the measurement, three slabs are stacked. A slab formed from the same resin composition as the resin composition of the mid layer 6 is used.

The mid layer 6 preferably has a thickness Tm of 0.5 mm or greater but 1.6 mm or less. In the sphere that includes the mid layer 6 having a thickness Tm of 0.5 mm or greater, the spin suppression effect provided by the outer-hard/inner-soft structure is great. In this respect, the thickness Tm is particularly preferably equal to or greater than 0.7 mm. The golf ball 2 that includes the mid layer 6 having a thickness Tm of 1.6 mm or less can include a large core 4. The large core 4 can contribute to the resilience performance of the golf ball 2. In this respect, the thickness Tm is particularly preferably equal to or less than 1.2 mm.

For forming the mid layer 6, known methods such as injection molding, compression molding, and the like can

be used.

For the inner cover 10, a resin composition is suitably used. A preferable base polymer of the resin composition is a polyurethane. The polyurethane is flexible. When the golf ball 2 that includes the inner cover 10 formed from the resin composition that includes the polyurethane is hit with a short iron, the spin rate is high. The inner cover 10 formed from this resin composition contributes to controllability upon a shot with a short iron. Furthermore, the polyurethane can also contribute to excellent feel at impact when the golf ball 2 is hit with a putter or a short iron.

In light of ease of forming the inner cover 10, a preferable base polymer is a thermoplastic polyurethane elastomer. The thermoplastic polyurethane elastomer includes a polyurethane component as a hard segment, and a polyester component or a polyether component as a soft segment. Examples of isocyanates for the polyurethane component include alicyclic diisocyanates, aromatic diisocyanates, and aliphatic diisocyanates. Two or more diisocyanates may be used in combination.

Examples of alicyclic diisocyanates include 4,4'-dicyclohexylmethane diisocyanate ($H_{12}MDI$), 1,3-bis(isocyanatomethyl)cyclohexane ($H_6XDI$), isophorone diisocyanate (IPDI), and trans-1,4-cyclohexane diisocyanate (CHDI). In light of versatility and processability, $H_{12}MDI$ is preferred.

Examples of aromatic diisocyanates include 4,4'-diphenylmethane diisocyanate (MDI) and toluene diisocyanate (TDI). Examples of aliphatic diisocyanates include hexamethylene diisocyanate (HDI).

Specific examples of thermoplastic polyurethane elastomers include trade names "Elastollan NY80A", "Elastollan NY82A", "Elastollan NY84A", "Elastollan NY85A", "Elastollan NY88A", "Elastollan NY90A", "Elastollan NY97A", "Elastollan NY585", and "Elastollan XKP016N", manufactured by BASF Japan Ltd. ; and trade names "RESAMINE P4585LS" and "RESAMINE PS62490", manufactured by Dainichiseika Color & Chemicals Mfg. Co., Ltd.

A thermoplastic polyurethane elastomer and another resin may be used in combination. Examples of the resin that can be used in combination include thermoplastic polyester elastomers, thermoplastic polyamide elastomers, thermoplastic polyolefin elastomers,styrene block-containing thermoplastic elastomers, and ionomer resins. When a thermoplastic polyurethane elastomer and another resin are used in combination, the thermoplastic polyurethane elastomer is included as the principal component of the base polymer, in light of spin performance. The proportion of the thermoplastic polyurethane elastomer to the entire base polymer is preferably equal to or greater than 50% by weight, more preferably equal to or greater than 70% by weight, and particularly preferably equal to or greater than 85% by weight.

Accordingto need, a coloring agent such as titaniumdioxide and a fluorescent pigment, a filler such as barium sulfate, a dispersant, an antioxidant, an ultraviolet absorber, a light stabilizer, a fluorescent material, a fluorescent brightener, and the like are included in the inner cover 10 in an adequate amount.

The inner cover 10 preferably has a Shore D hardness Hc1 of 60 or less. The golf ball 2 that includes the inner cover 10 having a hardness Hc1 of 60 or less has excellent controllability. In this respect, the hardness Hc1 is more preferably equal to or less than 55 and particularly preferably equal to or less than 50. In light of flight distance upon a shot with a driver, the hardness Hc1 is preferably equal to or greater than 40. The hardness Hc1 is measured by the same measurement method as that for the hardness Hm.

The inner cover 10 has a thickness T1 of 0.1 mm or greater but 0.8 mm or less. The golf ball 2 having a thickness T1 of 0.1 mm or greater has excellent controllability. In this respect, the thickness T1 is more preferably equal to or greater than 0.2 mm and particularly preferably equal to or greater than 0.3 mm. The golf ball 2 having a thickness T1 of 0.8 mm or less has excellent resilience performance. In this respect, the thickness T1 is more preferably equal to or less than 0.6 mm and particularly preferably equal to or less than 0.5 mm.

For forming the inner cover 10, known methods such as injection molding, compression molding, and the like can be used.

For the outer cover 12, a resin composition is suitably used. A preferable base polymer of the resin composition is a polyurethane. The polyurethane is flexible. When the golf ball 2 that includes the outer cover 12 formed from the resin composition that includes the polyurethane is hit with a short iron, the spin rate is high. The outer cover 12 formed from this resin composition contributes to controllability upon a shot with a short iron. The polyurethane also contributes to the scuff resistance of the outer cover 12. Furthermore, the polyurethane can contribute to excellent feel at impact when the golf ball 2 is hit with a putter or a short iron.

In light of ease of forming the outer cover 12, a preferable base polymer is a thermoplastic polyurethane elastomer. The thermoplastic polyurethane elastomer described above for the inner cover 10 can be used for the outer cover 12. Particularly, an elastomer including a polyurethane component obtained by a reaction of a polyol and an alicyclic diisocyanate is preferred. Since the alicyclic diisocyanate does not have any double bond in the main chain, the alicyclic diisocyanate suppresses yellowing of the outer cover 12. In addition, since the alicyclic diisocyanate has excellent strength, the alicyclic diisocyanate suppresses a scuff on the outer cover 12.

From the standpoint that a low hardness of the outer cover 12 can be achieved, particularly preferable thermoplastic polyurethane elastomers are "Elastollan NY80A", "Elastollan NY82A", "Elastollan NY84A", "Elastollan NY85A", and "Elastollan NY90A".

A thermoplastic polyurethane elastomer and another resin may be used in combination. The outer cover 12

can include the resin described above for the inner cover 10. When a thermoplastic polyurethane elastomer and another resin are used in combination, the thermoplastic polyurethane elastomer is included as the principal component of the base polymer, in light of spin performance and scuff resistance. The proportion of the thermoplastic polyurethane elastomer to the entire base polymer is preferably equal to or greater than 50% by weight, more preferably equal to or greater than 70% by weight, and particularly preferably equal to or greater than 85% by weight.

Accordingto need, a coloring agent such as titaniumdioxide and a fluorescent pigment, a filler such as barium sulfate, a dispersant, an antioxidant, an ultraviolet absorber, a light stabilizer, a fluorescent material, a fluorescent brightener, and the like are included in the outer cover 12 in an adequate amount.

The outer cover 12 preferably has a Shore D hardness Hc2 of 48 or less. The golf ball 2 that includes the outer cover 12 having a hardness Hc2 of 48 or less has excellent controllability. In this respect, the hardness Hc2 is more preferably equal to or less than 40 and particularly preferably equal to or less than 32. In light of flight distance upon a shot with a driver, the hardness Hc2 is preferably equal to or greater than 10. The hardness Hc2 is measured by the same measurement method as that for the hardness Hm.

The outer cover 12 preferably has a thickness T2 of 0.1 mm or greater but 0.8 mm or less. The golf ball 2 having a thickness T2 of 0.1 mm or greater has excellent controllability. In this respect, the thickness T2 is more preferably equal to or greater than 0.2 mm and particularly preferably equal to or greater than 0.3 mm. The golf ball 2 having a thickness T2 of 0.8 mm or less has excellent resilience performance. In this respect, the thickness T2 is more preferably equal to or less than 0.6 mm and particularly preferably equal to or less than 0.5 mm.

For forming the outer cover 12, known methods such as injection molding, compression molding, and the like can be used. When forming the outer cover 12, the dimples 14 are formed by pimples formed on the cavity face of a mold.

Preferably, the hardness Hm of the mid layer 6, the hardness Hc1 of the inner cover 10, and the hardness Hc2 of the outer cover 12 meet the relationships of the following mathematical formulas.

$$Hm > Hc1$$

$$Hm > Hc2$$

When the golf ball 2 is hit with a driver, the sphere consisting of the core 4 and the mid layer 6 becomes significantly distorted since the head speed is high. Since this sphere has an outer-hard/inner-soft structure, the spin rate is suppressed. The hardness of the core 4 linearly changes. Thus, the golf ball 2 is launched at a high speed due to deformation and restoration of the core 4. The suppression of the spin rate and the high launch speed achieve a large flight distance. When the golf ball 2 is hit with a short iron, this sphere becomes less distorted since the head speed is low. When the golf ball 2 is hit with a short iron, the behavior of the golf ball 2 mainly depends on the inner cover 10 and the outer cover 12. Since the inner cover 10 and the outer cover 12 are flexible, a slip between the golf ball 2 and a clubface is suppressed. Due to the suppression of the slip, a high spin rate is obtained. The high spin rate achieves excellent controllability. In the golf ball 2, both desired flight performance upon a shot with a driver and desired controllability upon a shot with a short iron are achieved.

When the golf ball 2 is hit, the inner cover 10 and the outer cover 12 absorb the shock. This absorption achieves soft feel at impact. Particularly, when the golf ball 2 is hit with a short iron or a putter, the inner cover 10 and the outer cover 12 achieve excellent feel at impact.

In light of achievement of both desired flight performance and desired controllability, the difference (Hm-Hc1) between the hardness Hm and the hardness Hc1 is preferably equal to or greater than 15 and more preferably equal to or greater than 18. The difference (Hm-Hc1) is preferably equal to or less than 40.

In light of achievement of both desired flight performance and desired controllability, the difference (Hm-Hc2) between the hardness Hm and the hardness Hc2 is preferably equal to or greater than 20 and more preferably equal to or greater than 36. The difference (Hm-Hc2) is preferably equal to or less than 60.

In the golf ball 2, the hardness Hc1 and the hardness Hc2 meet the relationship of the following mathematical formula.

$$Hc1 > Hc2$$

In the golf ball 2, the hardness is lower in order of the mid layer 6, the inner cover 10, and the outer cover 12. The golf ball 2 has excellent feel at impact.

In light of feel at impact, the difference (Hc1-Hc2) between the hardness Hc1 and the hardness Hc2 is preferably

equal to or greater than 5 and particularly preferably equal to or greater than 10. The difference (Hc1-Hc2) is preferably equal to or less than 30.

The difference (T1-T2) between the thickness T1 of the inner cover 10 and the thickness T2 of the outer cover 12 is preferably equal to or greater than -0.4 mm but equal to or less than 0.4 mm. In the golf ball 2 in which the difference (T1-T2) is within the above range, the inner cover 10 and the outer cover 12 are easily formed. In this respect, the difference (T1-T2) is more preferably equal to or greater than -0.3 mm but equal to or less than 0.3 mm, and is particularly preferably equal to or greater than -0.2 mm but equal to or less than 0.2 mm.

In light of flight performance, the sum (T1+T2) of the thickness T1 of the inner cover 10 and the thickness T2 of the outer cover 12 is preferably equal to or less than 1.0 mm and particularly preferably equal to or less than 0.8 mm. In light of controllability, the sum (T1+T2) is preferably equal to or greater than 0.2 mm and particularly preferably equal to or greater than 0.4 mm.

The reinforcing layer 8 is positioned between the mid layer 6 and the inner cover 10. The reinforcing layer 8 firmly adheres to the mid layer 6 and also to the inner cover 10. The reinforcing layer 8 suppresses separation of the inner cover 10 from the mid layer 6. In the golf ball 2, when the mid layer 6 is formed from a resin composition and the inner cover 10 is formed from a resin composition whose base resin is different from the base resin of the mid layer 6, the reinforcing layer 8 effectively suppresses separation of the inner cover 10 from the mid layer 6.

As the base polymer of the reinforcing layer 8, a two-component curing type thermosetting resin is suitably used. Specific examples of two-component curing type thermosetting resins include epoxy resins, urethane resins, acrylic resins, polyester resins, and cellulose resins. In light of strength and durability of the reinforcing layer 8, two-component curing type epoxy resins and two-component curing type urethane resins are preferred.

A two-component curing type epoxy resin is obtained by curing an epoxy resin with a polyamide type curing agent. Examples of epoxy resins used in two-component curing type epoxy resins include bisphenol A type epoxy resins, bisphenol F type epoxy resins, and bisphenol AD type epoxy resins. A bisphenol A type epoxy resin is obtained by a reaction of bisphenol A and an epoxy group-containing compound such as epichlorohydrin or the like. A bisphenol F type epoxy resin is obtained by a reaction of bisphenol F and an epoxy group-containing compound. A bisphenol AD type epoxy resin is obtained by a reaction of bisphenol AD and an epoxy group-containing compound. In light of balance among flexibility, chemical resistance, heat resistance, and toughness, bisphenol A type epoxy resins are preferred.

The polyamide type curing agent has a plurality of amino groups and one or more amide groups. The amino groups can react with epoxy groups. Specific examples of the polyamide type curing agent include polyamide amine curing agents and modified products thereof. A polyamide amine curing agent is obtained by a condensation reaction of a polymerized fatty acid and a polyamine. A typical polymerized fatty acid is obtained by heating and combining natural fatty acids including a large amount of unsaturated fatty acids, such as linoleic acid, linolenic acid, and the like, in the presence of a catalyst. Specific examples of unsaturated fatty acids include tall oil, soybean oil, linseed oil, and fish oil. A hydrogenated polymerized fatty acid having a dimer content of 90% by weight or greater and a trimer content of 10% by weight or less is preferred. Examples of preferable polyamines include polyethylene diamines, polyoxyalkylene diamines, and derivatives thereof.

In a mixture of an epoxy resin and a polyamide type curing agent, the ratio of the epoxy equivalent of the epoxy resin to the amine active hydrogen equivalent of the polyamide type curing agent is preferably equal to or greater than 1.0/1.4 but equal to or less than 1.0/1.0.

A two-component curing type urethane resin is obtained by a reaction of a base material and a curing agent. A two-component curing type urethane resin obtained by a reaction of a base material containing a polyol component and a curing agent containing a polyisocyanate or a derivative thereof, and a two-component curing type urethane resin obtained by a reaction of a base material containing an isocyanate group-terminated urethane prepolymer and a curing agent having active hydrogen, can be used. Particularly, a two-component curing type urethane resin obtained by a reaction of a base material containing a polyol component and a curing agent containing a polyisocyanate or a derivative thereof, is preferred.

As the polyol component of the base material, a urethane polyol is preferably used. The urethane polyol has urethane bonds and at least two or more hydroxyl groups. Preferably, the urethane polyol has hydroxyl groups at its ends. The urethane polyol can be obtained by causing a reaction of a polyol and a polyisocyanate at such a ratio that the hydroxyl groups of the polyol component are excessive in mole ratio with respect to the isocyanate groups of the polyisocyanate.

The polyol used for producing the urethane polyol has a plurality of hydroxyl groups. Polyols having a weight average molecular weight of 50 or greater but 2000 or less are preferred, and polyols having a weight average molecular weight of 100 or greater but 1000 or less are particularly preferred. Examples of low-molecular-weight polyols include diols and triols. Specific examples of diols include ethylene glycol, diethylene glycol, triethylene glycol, 1,3-butanediol, 1,4-butanediol, neopentyl glycol, and 1,6-hexanediol. Specific examples of triols include trimethylol propane and hexanetriol. Examples of high-molecular-weight polyols include polyether polyols such as polyoxyethylene glycol (PEG), polyoxypropylene glycol (PPG), and polyoxytetramethylene glycol (PTMG); condensed polyester polyols such as polyethylene adipate (PEA), polybutylene adipate (PBA), and polyhexamethylene adipate (PHMA) ; lactone polyester polyols such as poly-ε-caprolactone (PCL); polycarbonate polyols such as polyhexamethylene carbonate; and acrylic polyols. Two or more polyols may be used in combination.

The polyisocyanate used for producing the urethane polyol has a plurality of isocyanate groups. Specific examples of the polyisocyanate include aromatic polyisocyanates such as 2,4-toluene diisocyanate, 2,6-toluene diisocyanate, a mixture (TDI) of 2, 4-toluene diisocyanate and 2, 6-toluene diisocyanate, 4,4'-diphenylmethane diisocyanate (MDI), 1,5-naphthylene diisocyanate (MDI), 3,3'-bitolylene-4,4'-diisocyanate (TODI), xylylene diisocyanate (XDI), tetramethylxylylene diisocyanate (TMXDI), and paraphenylene diisocyanate (PPDI); alicyclic polyisocyanates such as 4,4'-dicyclohexylmethane diisocyanate ($H_{12}$MDI), hydrogenated xylylene diisocyanate ($H_6$XDI), and isophorone diisocyanate (IPDI); and aliphatic polyisocyanates such as hexamethylene diisocyanate (HDI). Two or more of these polyisocyanates may be used in combination. In light of weather resistance, TMXDI, XDI, HDI, $H_6$XDI, IPDI, and $H_{12}$MDI are preferred.

In the reaction of the polyol and the polyisocyanate for producing the urethane polyol, a known catalyst can be used. A typical catalyst is dibutyl tin dilaurate.

In light of strength of the reinforcing layer 8, the proportion of the urethane bonds included in the urethane polyol is preferably equal to or greater than 0.1 mmol/g. In light of followability of the reinforcing layer 8 to the inner cover 10, the proportion of the urethane bonds included in the urethane polyol is preferably equal to or less than 5 mmol/g. The proportion of the urethane bonds can be adjusted by adjusting the molecular weight of the polyol, which is the material for the urethane polyol, and adjusting the blending ratio of the polyol and the polyisocyanate.

From the standpoint that the time taken for the reaction of the base material and the curing agent is short, the weight average molecular weight of the urethane polyol is preferably equal to or greater than 4000 and particularly preferably equal to or greater than 4500. In light of adhesion of the reinforcing layer 8, the weight average molecular weight of the urethane polyol is preferably equal to or less than 10000 and particularly preferably equal to or less than 9000.

In light of adhesion of the reinforcing layer 8, the hydroxyl value (mg KOH/g) of the urethane polyol is preferably equal to or greater than 15 and particularly preferably equal to or greater than 73. From the standpoint that the time taken for the reaction of the base material and the curing agent is short, the hydroxyl value of the urethane polyol is preferably equal to or less than 130 and particularly preferably equal to or less than 120.

The base material may contain, together with a urethane polyol, a polyol that does not have any urethane bond. The aforementioned polyol that is the material for the urethane polyol can be used in the base material. Polyols compatible with the urethane polyol are preferred. From the standpoint that the time taken for the reaction of the base material and the curing agent is short, the proportion of the urethane polyol in the base material on the solid content basis is preferably equal to or greater than 50% by weight and particularly preferably equal to or greater than 80% by weight. Ideally, the proportion is 100% by weight.

The curing agent contains a polyisocyanate or a derivative thereof. The aforementioned polyisocyanate that is the material for the urethane polyol can be used in the curing agent.

The reinforcing layer 8 may include additives such as a coloring agent (typically, titanium dioxide), a phosphate-based stabilizer, an antioxidant, a light stabilizer, a fluorescent brightener, an ultraviolet absorber, an anti-blocking agent, and the like. The additives may be added to the base material of the two-component curing type thermosetting resin, or may be added to the curing agent of the two-component curing type thermosetting resin.

The reinforcing layer 8 is obtained by applying, to the surface of the mid layer 6, a liquid that is prepared by dissolving or dispersing the base material and the curing agent in a solvent. In light of workability, application with a spray gun is preferred. After the application, the solvent is volatilized to permit a reaction of the base material with the curing agent, thereby forming the reinforcing layer 8. Examples of preferable solvents include toluene, isopropyl alcohol, xylene, methyl ethylketone, methyl isobutylketone, ethylene glycol monomethyl ether, ethylbenzene, propylene glycol monomethyl ether, isobutyl alcohol, and ethyl acetate.

In light of feel at impact, the golf ball 2 has an amount of compressive deformation (comp'n) of preferably 2.3 mm or greater and more preferably 2.5 mm or greater. In light of resilience performance, the amount of compressive deformation is preferably equal to or less than 3.5 mm, more preferably equal to or less than 3.3 mm, and particularly preferably equal to or less than 3.1 mm.

For measurement of the amount of compressive deformation, a YAMADA type compression tester is used. In the tester, the golf ball 2 is placed on a hard plate made of metal. Next, a cylinder made of metal gradually descends toward the golf ball 2. The golf ball 2, squeezed between the bottom face of the cylinder and the hard plate, becomes deformed. A migration distance of the cylinder, starting from the state in which an initial load of 98 N is applied to the golf ball 2 up to the state in which a final load of 1274 N is applied thereto, is measured.

[Second Embodiment]

A golf ball 102 shown in FIG. 3 includes a spherical core 104, amid layer 106 positioned outside the core 104,

a reinforcing layer 108 positioned outside the mid layer 106, an inner cover 110 positioned outside the reinforcing layer 108, and an outer cover 112 positioned outside the inner cover 110. On the surface of the outer cover 112, a large number of dimples 114 are formed. Of the surface of the golf ball 102, a part other than the dimples 114 is a land 116. The golf ball 102 includes a paint layer and a mark layer on the external side of the outer cover 112, but these layers are not shown in the drawing.

The golf ball 102 has a diameter of 40 mm or greater but 45 mm or less. From the standpoint of conformity to the rules established by the United States Golf Association (USGA), the diameter is preferably equal to or greater than 42.67 mm. In light of suppression of air resistance, the diameter is preferably equal to or less than 44 mm and more preferably equal to or less than 42.80 mm. The golf ball 102 has a weight of 40 g or greater but 50 g or less. In light of attainment of great inertia, the weight is preferably equal to or greater than 44 g and more preferably equal to or greater than 45.00 g. From the standpoint of conformity to the rules established by the USGA, the weight is preferably equal to or less than 45.93 g.

In the golf ball 102, the core 104 includes a spherical center 118 and an envelope layer 120. The envelope layer 120 is positioned outside the center 118.

In the golf ball 102, the center 118 is more flexible than the envelope layer 120. The center 118 can suppress spin. The center 118 preferably has a diameter of 10 mm or greater but 20 mm or less. In the golf ball 102 that includes the center 118 having a diameter of 10 mm or greater, spin can be suppressed. In this respect, the diameter is more preferably equal to or greater than 12 mm and particularly preferably equal to or greater than 14 mm. The golf ball 102 that includes the center 118 having a diameter of 20 mm or less has excellent resilience performance. In this respect, the diameter is more preferably equal to or less than 18 mm and particularly preferably equal to or less than 16 mm.

The envelope layer 120 is harder than the center 118. When the golf ball 102 is hit with a driver, the energy loss is low in the envelope layer 120. The envelope layer 120 can contribute to the resilience performance of the golf ball 102. When the golf ball 102 is hit with a driver, the flight distance is large. When the golf ball 102 is hit with a golf club, stress concentration does not occur. Thus, the golf ball 102 has excellent durability.

In the golf ball 102, the ratio of the radius of the center 118 to the radius of the core 104 is preferably less than 40%. Thus, the envelope layer 120 can effectively contribute to the resilience performance of the golf ball 102. In this respect, the ratio is more preferably equal to or less than 39%. The ratio is preferably equal to or greater than 20%. Thus, the center 118 can effectively contribute to suppression of spin. In this respect, the ratio is more preferably equal to or greater than 25%. When the golf ball 102 is hit with a driver, the flight distance is large.

In the present invention, JIS-C hardnesses are measured at nine measuring points obtained by dividing a region from the central point of the core 104 to the surface of the core 104 into eight sections. The ratio of the distance from the central point of the core 104 to each of these measuring points to the radius of the core 104 is as follows. In the golf ball 102, the first to third points are included in the center 118. The fourth to ninth points are included in the envelope layer 120.

First point: 0.0% (central point)
Second point: 12.5%
Third point: 25.0%
Fourth point: 40.0%
Fifth point: 50.0%
Sixth point: 62.5%
Seventh point: 75.0%
Eighth point: 87.5%
Ninth point: 100.0% (surface)

Hardnesses at the first to eighth points are measured by pressing a JIS-C type hardness scale against a cut plane of the core 104 that has been cut into two halves. A hardness at the ninth point is measured by pressing the JIS-C type hardness scale against the surface of the spherical core 104. For the measurement, an automated rubber hardness measurement machine (trade name "P1", manufactured by Kobunshi Keiki Co., Ltd.), to which this hardness scale is mounted, is used.

FIG. 4 is a line graph showing a hardness distribution of the envelope layer 120 of the golf ball 102 in FIG. 3. The horizontal axis of the graph indicates the ratio (%) of a distance from the central point of the core 104 to the radius of the core 104. The vertical axis of the graph indicates a JIS-C hardness. In the graph, among the first to ninth points, points included in the envelope layer 120 are plotted. In the present embodiment, six points including the fourth to ninth points are plotted in the graph.

FIG. 4 also shows a linear approximation curve obtained by a least-square method on the basis of the ratios and the hardnesses of the six measuring points. The linear approximation curve is indicated by a dotted line. In FIG. 4, the broken line does not greatly deviate from the linear approximation curve. In other words, the broken line has a shape

close to the linear approximation curve. In the envelope layer 120, the hardness linearly increases from its inside toward its outside. When the golf ball 102 is hit with a driver, the energy loss is low in the envelope layer 120. The golf ball 102 has excellent resilience performance. When the golf ball 102 is hit with a driver, the flight distance is large. When the golf ball 102 is hit with a golf club, stress concentration does not occur. Thus, the golf ball 102 has excellent durability.

$R^2$ of the linear approximation curve for the envelope layer 120 which is obtained by the least-square method is preferably equal to or greater than 0.95. $R^2$ is an index indicating the linearity of the broken line. For the envelope layer 120 for which $R^2$ is equal to or greater than 0. 95, the shape of the broken line of the hardness distribution is close to a straight line. The golf ball 102 that includes the envelope layer 120 for which $R^2$ is equal to or greater than 0.95 has excellent resilience performance. $R^2$ is more preferably equal to or greater than 0.96 and particularly preferably equal to or greater than 0.97. $R^2$ is calculated by squaring a correlation coefficient R. The correlation coefficient R is calculated by dividing the covariance of the distance (%) from the central point and the hardness (JIS-C) by the standard deviation of the distance (%) from the central point and the standard deviation of the hardness (JIS-C).

In light of suppression of spin, the gradient $\alpha$ of the linear approximation curve is preferably equal to or greater than 0.30, more preferably equal to or greater than 0.33, and particularly preferably equal to or greater than 0.35.

In the present invention, a JIS-C hardness at a measuring point whose ratio of the distance from the central point of the core 104 to the radius of the core 104 is x% is represented by H(x). The hardness at the central point of the core 104 is represented by H(0), and the surface hardness of the core 104 is represented by H (100). The difference (H (100) -H (0)) between the surface hardness H(100) and the central hardness H(0) is preferably equal to or greater than 15. The core 104 in which the difference (H(100)-H(0)) is equal to or greater than 15 has an outer-hard/inner-soft structure. When the golf ball 102 is hit with a driver, the recoil (torsional return) in the core 104 is great, and thus spin is suppressed. The core 104 contributes to the flight performance of the golf ball 102. In light of flight performance, the difference (H(100)-H(0)) is more preferably equal to or greater than 23 and particularly preferably equal to or greater than 24. From the standpoint that the core 104 can easily be formed, the difference (H(100)-H(0)) is preferably equal to or less than 50. In the core 104, the hardness gradually increases from its central point toward its surface.

The center 118 is formed by crosslinking a rubber composition. Examples of base rubbers for use in the rubber composition include polybutadienes, polyisoprenes, styrene-butadiene copolymers, ethylene-propylene-diene copolymers, and natural rubbers. Two or more rubbers may be used in combination. In light of resilience performance, polybutadienes are preferred, and high-cis polybutadienes are particularly preferred.

Preferably, the rubber composition of the center 118 includes a co-crosslinking agent. Examples of preferable co-crosslinking agents in light of resilience performance include zinc acrylate, magnesium acrylate, zinc methacrylate, and magnesium methacrylate. Preferably, the rubber composition includes an organic peroxide together with a co-crosslinking agent. Examples of preferable organic peroxides include dicumyl peroxide, 1,1-bis(t-butylperoxy)-3,3,5-trimethylcyclohexane, 2,5-dimethyl-2,5-di(t-butylperoxy)hexane, and di-t-butyl peroxide. Preferably, the rubber composition includes a sulfur compound.

According to need, various additives such as a filler, sulfur, a vulcanization accelerator, an anti-aging agent, a coloring agent, a plasticizer, a dispersant, and the like are included in the rubber composition of the center 118 in an adequate amount. Synthetic resin powder or crosslinked rubber powder may also be included in the rubber composition.

The envelope layer 120 is formed by crosslinking a rubber composition. The rubber composition includes:

(a) a base rubber;
(b) a co-crosslinking agent;
(c) a crosslinking initiator; and
(d) an acid and/or a salt, wherein the acid and/or salt excludes the co-crosslinking agent (b).

The rubber composition of the envelope layer 120 can include the base rubber (a) described above for the envelope layer 20 of the first embodiment.

The co-crosslinking agent (b) is:

(b1) an $\alpha$,$\beta$-unsaturated carboxylic acid having 3 to 8 carbon atoms; and
(b2) a metal salt of an $\alpha$,$\beta$-unsaturated carboxylic acid having 3 to 8 carbon atoms.

The rubber composition of the envelope layer 120 can include the co-crosslinking agent (b) described above for the envelope layer 20 of the first embodiment.

When the rubber composition of the envelope layer 120 includes the the $\alpha$,$\beta$-unsaturated carboxylic acid (b1), the rubber composition preferably further includes a metal compound (f). The rubber composition of the envelope layer 120 can include the metal compound (f) described above for the envelope layer 20 of the first embodiment.

In light of resilience performance of the golf ball 102, the amount of the co-crosslinking agent (b) is preferably equal to or greater than 15 parts by weight and particularly preferably equal to or greater than 20 parts by weight, per

100 parts by weight of the base rubber. In light of feel at impact, the amount is preferably equal to or less than 50 parts by weight, more preferably equal to or less than 45 parts by weight, and particularly preferably equal to or less than 40 parts by weight, per 100 parts by weight of the base rubber.

The rubber composition of the envelope layer 120 can include the crosslinking initiator (c) described above for the envelope layer 20 of the first embodiment. In light of resilience performance of the golf ball 102, the amount of the crosslinking initiator (c) is preferably equal to or greater than 0.2 parts by weight and particularly preferably equal to or greater than 0.5 parts by weight, per 100 parts by weight of the base rubber. In light of feel at impact and durability of the golf ball 102, the amount is preferably equal to or less than 5. 0 parts by weight and particularly preferably equal to or less than 2.5 parts by weight, per 100 parts by weight of the base rubber.

The rubber composition of the envelope layer 120 can include the acid and/or the salt (d) described above for the envelope layer 20 of the first embodiment. It is inferred that as described later, during heating and forming of the core 104, the acid and/or the salt (d) breaks the metal crosslinks by the co-crosslinking agent (b) in the envelope layer 120, which is a part of the core 104. In the present invention, the co-crosslinking agent (b) is not included in the concept of the acid and/or the salt (d).

In light of linearity of the hardness distribution of the envelope layer 120, the amount of the acid and/or the salt (d) is preferably equal to or greater than 0.5 parts by weight, more preferably equal to or greater than 1.0 parts by weight, and particularly preferably equal to or greater than 2.0 parts by weight, per 100 parts by weight of the base rubber. In light of resilience performance, the amount is preferably equal to or less than 45 parts by weight, more preferably equal to or less than 40 parts by weight, and particularly preferably equal to or less than 30 parts by weight, per 100 parts by weight of the base rubber.

The weight ratio of the co-crosslinking agent (b) and the acid and/or the salt (d) in the rubber composition is preferably equal to or greater than 3/7 but equal to or less than 9/1. From the rubber composition in which this weight ratio is within the above range, the envelope layer 120 whose hardness linearly increases from its inside toward its outside can be obtained.

As the co-crosslinking agent (b), zinc acrylate is preferably used. Zinc acrylate whose surface is coated with stearic acid or zinc stearate for the purpose of improving dispersibility to rubber is present. In the present invention, when the rubber composition includes this zinc acrylate, this coating material is not included in the concept of the acid and/or the salt (d).

Preferably, the rubber composition of the envelope layer 120 further includes the organic sulfur compound (e) described above for the envelope layer 20 of the first embodiment. The organic sulfur compound (e) increases the linearity of the hardness distribution of the envelope layer 120. In addition, the organic sulfur compound (e) increases the degree of the outer-hard/inner-soft structure.

From the standpoint that an outer-hard/inner-soft structure is easily obtained, particularly preferable organic sulfur compounds (e) are 2-thionaphthol, bis(pentabromophenyl)disulfide, and 2,6-dichlorothiophenol.

From the standpoint that an outer-hard/inner-soft structure is easily obtained, the amount of the organic sulfur compound (e) is preferably equal to or greater than 0.05 parts by weight, more preferably equal to or greater than 0.1 parts by weight, and particularly preferably equal to or greater than 0.2 parts by weight, per 100 parts by weight of the base rubber. In light of resilience performance, the amount is preferably equal to or less than 5.0 parts by weight, more preferably equal to or less than 3.0 parts by weight, and particularly preferably equal to or less than 1.0 parts by weight, per 100 parts by weight of the base rubber.

For the purpose of adjusting specific gravity and the like, a filler may be included in the envelope layer 120. Examples of suitable fillers include zinc oxide, barium sulfate, calcium carbonate, and magnesium carbonate. The amount of the filler is determined as appropriate so that the intended specific gravity of the core 104 is accomplished. A particularly preferable filler is zinc oxide. Zinc oxide serves not only as a specific gravity adjuster but also as a crosslinking activator.

According to need, an anti-aging agent, a coloring agent, a plasticizer, a dispersant, sulfur, a vulcanization accelerator, and the like are added to the rubber composition of the envelope layer 120. Crosslinked rubber powder or synthetic resin powder may also be dispersed in the rubber composition.

During heating and forming of the core 104, the base rubber (a) is crosslinked by the co-crosslinking agent (b). The heat of the crosslinking reaction of the base rubber remains near the central point of the core 104. Thus, during heating and forming of the core 104, the temperature at the central portion is high. The temperature gradually decreases from the central point toward the surface. In the rubber composition, the acid reacts with the metal salt of the co-crosslinking agent (b) to bond to cation. In the rubber composition, the salt reacts with the metal salt of the co-crosslinking agent (b) to exchange cation. By the bonding and the exchange, metal crosslinks are broken. The bonding and the exchange are likely to occur near the innermost portion of the envelope layer 120 where the temperature is high, and are unlikely to occur near the surface of the envelope layer 120. In other words, breaking of metal crosslinks is likely to occur near the innermost portion of the envelope layer 120 and is unlikely to occur near the surface of the envelope layer 120. As a result, the crosslinking density of the envelope layer 120 increases from its inside toward its outside. In the envelope layer 120, the hardness linearly increases from its inside toward its outside. Further, since the rubber

composition includes the organic sulfur compound (e) together with the acid and/or the salt (d), the gradient of the hardness distribution can be controlled, and the degree of the outer-hard/inner-soft structure of the core 104 can be increased. When the golf ball 102 that includes the core 104 is hit with a driver, the spin rate is low. In the golf ball 102, excellent flight performance is achieved upon a shot with a driver.

The hardness H(0) at the central point of the core 104 is preferably equal to or greater than 40 but equal to or less than 70. The golf ball 102 having a hardness H(0) of 40 or greater has excellent resilience performance. In this respect, the hardness H(0) is more preferably equal to or greater than 45 and particularly preferably equal to or greater than 47. The core 104 having a hardness H(0) of 70 or less can achieve an outer-hard/inner-soft structure. In the golf ball 102 that includes the core 104, spin can be suppressed. In this respect, the hardness H(0) is more preferably equal to or less than 68 and particularly preferably equal to or less than 65.

The hardness H(100) at the surface of the core 104 is preferably equal to or greater than 78 but equal to or less than 96. The core 104 having a hardness H(100) of 78 or greater can achieve an outer-hard/inner-soft structure. In the golf ball 102 that includes the core 104, spin can be suppressed. In this respect, the hardness H(100) is more preferably equal to or greater than 80 and particularly preferably equal to or greater than 82. The golf ball 102 having a hardness H(100) of 96 or less has excellent durability. In this respect, the hardness H(100) is more preferably equal to or less than 94 and particularly preferably equal to or less than 92.

The core 104 preferably has a diameter of 38.0 mm or greater but 42.0 mm or less. The core 104 having a diameter of 38.0 mm or greater can achieve excellent resilience performance of the golf ball 102. In this respect, the diameter is more preferably equal to or greater than 39.0 mm and particularly preferably equal to or greater than 39.5 mm. In the golf ball 102 that includes the core 104 having a diameter of 42.0 mm or less, the mid layer 106, the inner cover 110, and the outer cover 112 can have sufficient thicknesses. The golf ball 102 that includes the mid layer 106, the inner cover 110, and the outer cover 112 which have large thicknesses has excellent durability. In this respect, the diameter is more preferably equal to or less than 41 mm and particularly preferably equal to or less than 40 mm.

For the mid layer 106, a resin composition is suitably used. Examples of the base polymer of the resin composition include ionomer resins, polystyrenes, polyesters, polyamides, and polyolefins.

Particularly preferable base polymers are ionomer resins. The golf ball 102 that includes the mid layer 106 including an ionomer resin has excellent resilience performance. An ionomer resin and another resin may be used in combination for the mid layer 106. In this case, the principal component of the base polymer is preferably the ionomer resin. Specifically, the proportion of the ionomer resin to the entire base polymer is preferably equal to or greater than 50% by weight, more preferably equal to or greater than 60% by weight, and particularly preferably equal to or greater than 70% by weight.

The mid layer 106 can include the ionomer resin described above for the golf ball 2 of the first embodiment. The mid layer 106 can include the styrene block-containing thermoplastic elastomer described above for the golf ball 2 of the first embodiment.

The mid layer 106 may include a highly elastic resin as the base polymer. The highly elastic resin contributes to high rigidity of the mid layer 106. Specific examples of the highly elastic resin include polyamides.

According to need, a coloring agent such as titanium dioxide, a filler such as barium sulfate, a dispersant, an antioxidant, an ultraviolet absorber, a light stabilizer, a fluorescent material, a fluorescent brightener, and the like are included in the resin composition of the mid layer 106 in an adequate amount.

From the standpoint that an outer-hard/inner-soft structure can be achieved in the sphere consisting of the core 104 and the mid layer 106, the mid layer 106 has a hardness Hm of preferably 50 or greater, more preferably 55 or greater, and particularly preferably 58 or greater. In light of feel at impact of the golf ball 102, the hardness Hm is preferably equal to or less than 75, more preferably equal to or less than 72, and particularly preferably equal to or less than 70. The hardness Hm is measured by the method described above for the golf ball 2 of the first embodiment.

The mid layer 106 preferably has a thickness Tm of 0.5 mm or greater but 1.6 mm or less. In the sphere that includes the mid layer 106 having a thickness Tm of 0.5 mm or greater, the spin suppression effect provided by the outer-hard/inner-soft structure is great. In this respect, the thickness Tm is particularly preferably equal to or greater than 0.7 mm. The golf ball 102 that includes the mid layer 106 having a thickness Tm of 1.6 mm or less can include a large core 104. The large core 104 can contribute to the resilience performance of the golf ball 102. In this respect, the thickness Tm is particularly preferably equal to or less than 1.2 mm.

For forming the mid layer 106, known methods such as injection molding, compression molding, and the like can be used.

For the inner cover 110, a resin composition is suitably used. A preferable base polymer of the resin composition is a polyurethane. The polyurethane is flexible. When the golf ball 102 that includes the inner cover 110 formed from the resin composition that includes the polyurethane is hit with a short iron, the spin rate is high. The inner cover 110 formed from this resin composition contributes to controllability upon a shot with a short iron. Furthermore, the polyurethane can also contribute to excellent feel at impact when the golf ball 102 is hit with a putter or a short iron.

In light of ease of forming the inner cover 110, a preferable base polymer is a thermoplastic polyurethane

elastomer. The inner cover 110 can include the thermoplastic polyurethane elastomer described above for the golf ball 2 of the first embodiment.

A thermoplastic polyurethane elastomer and another resin may be used in combination. Examples of the resin that can be used in combination include thermoplastic polyester elastomers, thermoplastic polyamide elastomers, thermoplastic polyolefin elastomers, styreneblock-containing thermoplastic elastomers, and ionomer resins. When a thermoplastic polyurethane elastomer and another resin are used in combination, the thermoplastic polyurethane elastomer is included as the principal component of the base polymer, in light of spin performance. The proportion of the thermoplastic polyurethane elastomer to the entire base polymer is preferably equal to or greater than 50% by weight, more preferably equal to or greater than 70% by weight, and particularly preferably equal to or greater than 85% by weight.

According to need, a coloring agent such as titanium dioxide and a fluorescent pigment, a filler such as barium sulfate, a dispersant, an antioxidant, an ultraviolet absorber, a light stabilizer, a fluorescent material, a fluorescent brightener, and the like are included in the inner cover 110 in an adequate amount.

The inner cover 110 preferably has a Shore D hardness Hc1 of 48 or less. The golf ball 102 that includes the inner cover 110 having a hardness Hc1 of 48 or less has excellent controllability. In this respect, the hardness Hc1 is more preferably equal to or less than 40 and particularly preferably equal to or less than 32. In light of flight distance upon a shot with a driver, the hardness Hc1 is preferably equal to or greater than 10. The hardness Hc1 is measured by the same measurement method as that for the hardness Hm.

The inner cover 110 has a thickness T1 of 0.1 mm or greater but 0.8 mm or less. The golf ball 102 having a thickness T1 of 0.1 mm or greater has excellent controllability. In this respect, the thickness T1 is more preferably equal to or greater than 0.2 mm and particularly preferably equal to or greater than 0.3 mm. The golf ball 102 having a thickness T1 of 0.8 mm or less has excellent resilience performance. In this respect, the thickness T1 is more preferably equal to or less than 0.6 mm and particularly preferably equal to or less than 0.5 mm.

For forming the inner cover 110, known methods such as injection molding, compression molding, and the like can be used.

For the outer cover 112, a resin composition is suitably used. A preferable base polymer of the resin composition is a polyurethane. The polyurethane is flexible. When the golf ball 102 that includes the outer cover 112 formed from the resin composition that includes the polyurethane is hit with a short iron, the spin rate is high. The outer cover 112 formed from this resin composition contributes to controllability upon a shot with a short iron. The polyurethane also contributes to the scuff resistance of the outer cover 112. Furthermore, the polyurethane can contribute to excellent feel at impact when the golf ball 102 is hit with a putter or a short iron.

In light of ease of forming the outer cover 112, a preferable base polymer is a thermoplastic polyurethane elastomer. The thermoplastic polyurethane elastomer described above for the inner cover 110 can be used for the outer cover 112. Particularly, an elastomer including a polyurethane component obtained by a reaction of a polyol and an alicyclic diisocyanate is preferred. Since the alicyclic diisocyanate does not have any double bond in the main chain, the alicyclic diisocyanate suppresses yellowing of the outer cover 112. In addition, since the alicyclic diisocyanate has excellent strength, the alicyclic diisocyanate suppresses a scuff on the outer cover 112.

A thermoplastic polyurethane elastomer and another resin may be used in combination. The outer cover 112 can include the resin described above for the inner cover 110. When a thermoplastic polyurethane elastomer and another resin are used in combination, the thermoplastic polyurethane elastomer is included as the principal component of the base polymer, in light of spin performance and scuff resistance. The proportion of the thermoplastic polyurethane elastomer to the entire base polymer is preferably equal to or greater than 50% by weight, more preferably equal to or greater than 70% by weight, and particularly preferably equal to or greater than 85% by weight.

Accordingto need, a coloring agent such as titaniumdioxide and a fluorescent pigment, a filler such as barium sulfate, a dispersant, an antioxidant, an ultraviolet absorber, a light stabilizer, a fluorescent material, a fluorescent brightener, and the like are included in the outer cover 112 in an adequate amount.

The outer cover 112 preferably has a Shore D hardness Hc2 of 60 or less. The golf ball 102 that includes the outer cover 112 having a hardness Hc2 of 60 or less has excellent controllability. In this respect, the hardness Hc2 is more preferably equal to or less than 55 and particularly preferably equal to or less than 50. In light of flight distance upon a shot with a driver, the hardness Hc2 is preferably equal to or greater than 40. The hardness Hc2 is measured by the same measurement method as that for the hardness Hm.

The outer cover 112 preferably has a thickness T2 of 0.1 mm or greater but 0.8 mm or less. The golf ball 102 having a thickness T2 of 0.1 mm or greater has excellent controllability. In this respect, the thickness T2 is more preferably equal to or greater than 0.2 mm and particularly preferably equal to or greater than 0.3 mm. The golf ball 102 having a thickness T2 of 0.8 mm or less has excellent resilience performance. In this respect, the thickness T2 is more preferably equal to or less than 0.6 mm and particularly preferably equal to or less than 0.5 mm.

For forming the outer cover 112, known methods such as injection molding, compression molding, and the like can be used. When forming the outer cover 112, the dimples 114 are formed by pimples formed on the cavity face of a mold.

In the golf ball 102, the hardness Hm of the mid layer 106 and the hardness Hc1 of the inner cover 110 meet

the relationship of the following mathematical formula.

$$Hm > Hc1$$

When the golf ball 102 is hit with a driver, the sphere consisting of the core 104 and the mid layer 106 becomes significantly distorted since the head speed is high. Since this sphere has an outer-hard/inner-soft structure, the spin rate is suppressed. The hardness of the core 104 linearly changes. Thus, the golf ball 102 is launched at a high speed due to deformation and restoration of the core 104. The suppression of the spin rate and the high launch speed achieve a large flight distance. When the golf ball 102 is hit with a short iron, this sphere becomes less distorted since the head speed is low. When the golf ball 102 is hit with a short iron, the behavior of the golf ball 102 depends on the inner cover 110. Since the inner cover 110 is flexible, a slip between the golf ball 102 and a clubface is suppressed. Due to the suppression of the slip, a high spin rate is obtained. The high spin rate achieves excellent controllability. In the golf ball 102, both desired flight performance upon a shot with a driver and desired controllability upon a shot with a short iron are achieved.

When the golf ball 102 is hit, the inner cover 110 absorbs the shock. This absorption achieves soft feel at impact. Particularly, when the golf ball 102 is hit with a short iron or a putter, the inner cover 110 achieves excellent feel at impact.

In light of achievement of both desired flight performance and desired controllability, the difference (Hm-Hc1) between the hardness Hm and the hardness Hc1 is preferably equal to or greater than 20 and more preferably equal to or greater than 36. The difference (Hm-Hc1) is preferably equal to or less than 60.

Preferably, the hardness Hm of the mid layer 106 and the hardness Hc2 of the outer cover 112 meet the relationship of the following mathematical formula.

$$Hm > Hc2$$

When the golf ball 102 is hit with a driver, the sphere consisting of the core 104 and the mid layer 106 becomes significantly distorted since the head speed is high. Since this sphere has an outer-hard/inner-soft structure, the spin rate is suppressed. The hardness of the core 104 linearly changes. Thus, the golf ball 102 is launched at a high speed due to deformation and restoration of the core 104. The suppression of the spin rate and the high launch speed achieve a large flight distance. When the golf ball 102 is hit with a short iron, this sphere becomes less distorted since the head speed is low. When the golf ball 102 is hit with a short iron, the behavior of the golf ball 102 depends also on the outer cover 112 in addition to the aforementioned inner cover 110. Since the inner cover 110 and the outer cover 112 are flexible, a slip between the golf ball 102 and a clubface is effectively suppressed. Due to the suppression of the slip, a high spin rate is obtained. The high spin rate achieves excellent controllability. In the golf ball 102, both desired flight performance upon a shot with a driver and desired controllability upon a shot with a short iron are achieved.

When the golf ball 102 is hit, the inner cover 110 and the outer cover 112 absorb the shock. This absorption achieves soft feel at impact. Particularly, when the golf ball 102 is hit with a short iron or a putter, the inner cover 110 and the outer cover 112 achieve excellent feel at impact.

In light of achievement of both desired flight performance and desired controllability, the difference (Hm-Hc2) between the hardness Hm and the hardness Hc2 is preferably equal to or greater than 15 and more preferably equal to or greater than 18. The difference (Hm-Hc2) is preferably equal to or less than 40.

In the golf ball 102, the hardness Hc1 of the inner cover 110 and the hardness Hc2 of the outer cover 112 meet the relationship of the following mathematical formula.

$$Hc1 < Hc2$$

In the golf ball 102, the outer cover 112 can contribute to suppression of spin. In the golf ball 102, further improvement of flight performance upon a shot with driver is achieved without impairing controllability upon a shot with a short iron.

In light of flight performance, the difference (Hc2-Hc1) between the hardness Hc2 and the hardness Hc1 is preferably equal to or greater than 5 and more preferably equal to or greater than 10. In light of controllability, the difference (Hc2-Hc1) is preferably equal to or less than 20.

The difference (T1-T2) between the thickness T1 of the inner cover 110 and the thickness T2 of the outer cover 112 is preferably equal to or greater than -0.4 mm but equal to or less than 0.4 mm. In the golf ball 102 in which the difference (T1-T2) is within the above range, the inner cover 110 and the outer cover 112 are easily formed. In this respect, the difference (T1-T2) is more preferably equal to or greater than -0.3 mm but equal to or less than 0.3 mm,

and is particularly preferably equal to or greater than -0.2 mm but equal to or less than 0.2 mm.

In light of flight performance, the sum (T1+T2) of the thickness T1 of the inner cover 110 and the thickness T2 of the outer cover 112 is preferably equal to or less than 1.0 mm and particularly preferably equal to or less than 0.8 mm. In light of controllability, the sum (T1+T2) is preferably equal to or greater than 0.2 mm and particularly preferably equal to or greater than 0.4 mm.

The reinforcing layer 108 is positioned between the mid layer 106 and the inner cover 110. The reinforcing layer 108 firmly adheres to the mid layer 106 and also to the inner cover 110. The reinforcing layer 108 suppresses separation of the inner cover 110 from the mid layer 106. In the golf ball 102, when the mid layer 106 is formed from a resin composition and the inner cover 110 is formed from a resin composition whose base resin is different from the base resin of the mid layer 106, the reinforcing layer 108 effectively suppresses separation of the inner cover 110 from the mid layer 106.

As the base polymer of the reinforcing layer 108, a two-component curing type thermosetting resin is suitably used. Specific examples of two-component curing type thermosetting resins include epoxy resins, urethane resins, acrylic resins, polyester resins, and cellulose resins. In light of strength and durability of the reinforcing layer 108, two-component curing type epoxy resins and two-component curing type urethane resins are preferred.

The reinforcing layer 108 can include the two-component curing type epoxy resin described above for the golf ball 2 of the first embodiment. The reinforcing layer 108 can include the two-component curing type urethane resin described above for the golf ball 2 of the first embodiment.

The reinforcing layer 108 may include additives such as a coloring agent (typically, titanium dioxide), a phosphate-based stabilizer, an antioxidant, a light stabilizer, a fluorescent brightener, an ultraviolet absorber, an anti-blocking agent, and the like. The additives may be added to the base material of the two-component curing type thermosetting resin, or may be added to the curing agent of the two-component curing type thermosetting resin.

In light of feel at impact, the golf ball 102 has an amount of compressive deformation (comp'n) of preferably 2.3 mm or greater, more preferably 2.5 mm or greater, and particularly preferably 2.7 mm or greater. In light of resilience performance, the amount of compressive deformation is preferably equal to or less than 3.5 mm, more preferably equal to or less than 3.3 mm, and particularly preferably equal to or less than 3.1 mm. The amount of compressive deformation is measured by the method described above for the golf ball 2 of the first embodiment.

[Third Embodiment]

A golf ball 202 shown in FIG. 5 includes a spherical core 204, an inner mid layer 206 positioned outside the core 204, an outer mid layer 208 positioned outside the inner mid layer 206, a reinforcing layer 210 positioned outside the outer mid layer 208, and a cover 212 positioned outside the reinforcing layer 210. The core 204 includes a spherical center 214 and an envelope layer 216 positioned outside the center 214. On the surface of the cover 212, a large number of dimples 217 are formed. Of the surface of the golf ball 202, a part other than the dimples 217 is a land 218. The golf ball 202 includes a paint layer and a mark layer on the external side of the cover 212, but these layers are not shown in the drawing.

The golf ball 202 has a diameter of 40 mm or greater but 45 mm or less. From the standpoint of conformity to the rules established by the United States Golf Association (USGA), the diameter is preferably equal to or greater than 42.67 mm. In light of suppression of air resistance, the diameter is preferably equal to or less than 44 mm and more preferably equal to or less than 42.80 mm. The golf ball 202 has a weight of 40 g or greater but 50 g or less. In light of attainment of great inertia, the weight is preferably equal to or greater than 44 g and more preferably equal to or greater than 45.00 g. From the standpoint of conformity to the rules established by the USGA, the weight is preferably equal to or less than 45.93 g.

The center 214 is formed by crosslinking a rubber composition. Examples of base rubbers for use in the rubber composition include polybutadienes, polyisoprenes, styrene-butadiene copolymers, ethylene-propylene-diene copolymers, and natural rubbers. Two or more rubbers may be used in combination. In light of resilience performance, polybutadienes are preferred, and high-cis polybutadienes are particularly preferred.

Preferably, the rubber composition of the center 214 includes a co-crosslinking agent. Examples of preferable co-crosslinking agents in light of resilience performance include acrylic acid, methacrylic acid, zinc acrylate, magnesium acrylate, zinc methacrylate, and magnesium methacrylate. Preferably, the rubber composition further include a metal compound. Examples of the metal compound include magnesium oxide and zinc oxide. Preferably, the rubber composition includes an organic peroxide with a co-crosslinking agent. Examples of preferable organic peroxides include dicumyl peroxide, 1,1-bis(t-butylperoxy)-3,3,5-trimethylcyclohexane, 2,5-dimethyl-2,5-di(t-butylperoxy)hexane, and di-t-butyl peroxide. Preferably, the rubber composition includes a sulfur compound. The rubber composition may include a carboxylic acid or a salt thereof.

According to need, various additives such as a filler, sulfur, a vulcanization accelerator, an anti-aging agent, a coloring agent, a plasticizer, a dispersant, and the like are included in the rubber composition of the center 214 in an

adequate amount. Synthetic resin powder or crosslinked rubber powder may also be included in the rubber composition.

In the present embodiment, the center 214 is preferably more flexible than the envelope layer 216. In light of resilience performance, the JIS-C hardness at the central point of the center 214 is preferably equal to or greater than 40.0, more preferably equal to or greater than 45.0, and particularly preferably equal to or greater than 50.0. In light of suppression of spin, the JIS-C hardness at the central point of the center 214 is preferably equal to or less than 70.0, more preferably equal to or less than 65.0, and particularly preferably equal to or less than 60.0.

In light of achievement of an outer-hard/inner-soft structure of the center 214, the JIS-C hardness at the surface of the center 214 is preferably equal to or greater than 50.0 and more preferably equal to or greater than 60.0. In light of durability and feel at impact, the JIS-C hardness is preferably equal to or less than 70.0. In the center 214, the hardness continuously increases from the central point to the surface of the center 214.

The JIS-C hardness at the central point of the center 214 is measured by pressing a JIS-C type hardness scale against a cut plane of the spherical center 214 that has been cut into two halves. The hardness at the surface of the center 214 is measured by pressing the JIS-C type hardness scale against the surface of the center 214. For the measurement, an automated rubber hardness measurement machine (trade name "P1", manufactured by Kobunshi Keiki Co., Ltd.), to which this hardness scale is mounted, is used.

The center 214 preferably has a diameter of 10 mm or greater but 25 mm or less. In the golf ball 202 that includes the center 214 having a diameter of 10 mm or greater, spin can be suppressed. In this respect, the diameter is more preferably equal to or greater than 12 mm and particularly preferably equal to or greater than 14 mm. The golf ball 202 that includes the center 214 having a diameter of 25 mm or less has excellent resilience performance, even though the center 214 is flexible. In this respect, the diameter is more preferably equal to or less than 22 mm and particularly preferably equal to or less than 19 mm.

FIG. 6 is a line graph showing a hardness distribution of the envelope layer 216 of the golf ball 202 in FIG. 5. In the present invention, JIS-C hardnesses are measured at nine points obtained by dividing the distance from the boundary between the center 214 and the envelope layer 216 to the surface of the core 204 (the thickness of the envelope layer 216) at intervals of 12.5 % of the distance. The horizontal axis of the graph indicates a distance from the boundary between the center 214 and the envelope layer 216 as a ratio (%) to the thickness of the envelope layer 216. The vertical axis of the graph indicates the JIS-C hardness at each measuring point. The ratio (%) of the distance from the boundary between the center 214 and the envelope layer 216 to each of these measuring points to the thickness of the envelope layer 216 is as follows.

First point: 0.0% (the boundary between the center 214 and the envelope layer 216)
Second point: 12.5%
Third point: 25.0%
Fourth point: 37.5%
Fifth point: 50.0%
Sixth point: 62.5%
Seventh point: 75.0%
Eighth point: 87.5%
Ninth point: 100.0% (the surface of the core 204)

Hardnesses at the first to eighth points are measured by pressing a JIS-C type hardness scale against a cut plane of the core 204, consisting of the center 214 and the envelope layer 216, which has been cut into two halves. A hardness at the ninth point is measured by pressing the JIS-C type hardness scale against the surface of the spherical core 204. For the measurement, an automated rubber hardness measurement machine (trade name "P1", manufactured by Kobunshi Keiki Co., Ltd.), to which this hardness scale is mounted, is used.

FIG. 6 also shows a linear approximation curve obtained by a least-square method on the basis of the hardness at each measuring point and the distance (%) from the boundary between the center 214 and the envelope layer 216 to each measuring point. The linear approximation curve is indicated by a dotted line. In FIG. 6, the broken line does not greatly deviate from the linear approximation curve. In other words, the broken line has a shape close to the linear approximation curve. In the envelope layer 216, the hardness linearly increases from its inside toward its outside. When the golf ball 202 is hit with a driver, the energy loss is low in the envelope layer 216. In the envelope layer 216, the hardness continuously increases from the boundary with the center 214 toward its surface. In the envelope layer 216, there is no discontinuous point caused by a multilayer structure. When the golf ball 202 that includes the envelope layer 216 deforms by being hit, no local load is applied thereto. The golf ball 202 has resistance to breakage caused by deformation of the envelope layer 216.

$R^2$ of the linear approximation curve for the envelope layer 216 which is obtained by the least-square method is preferably equal to or greater than 0.95. $R^2$ is an index indicating the linearity of the broken line. For the envelope layer 216 for which $R^2$ is equal to or greater than 0. 95, the shape of the broken line of the hardness distribution is close

to a straight line. The golf ball 202 that includes the envelope layer 216 for which $R^2$ is equal to or greater than 0.95 has excellent resilience performance. $R^2$ is more preferably equal to or greater than 0.97 and particularly preferably equal to or greater than 0.99. $R^2$ is calculated by squaring a correlation coefficient R. The correlation coefficient R is calculated by dividing the covariance of the distance (%) from the boundary between the center 214 and the envelope layer 216 and the hardness (JIS-C) by the standard deviation of the distance (%) from the boundary between the center 214 and the envelope layer 216 and the standard deviation of the hardness (JIS-C).

In light of suppression of spin, the gradient $\alpha$ of the linear approximation curve is preferably equal to or greater than 0.20, more preferably equal to or greater than 0.23, and particularly preferably equal to or greater than 0.26.

In the present invention, a JIS-C hardness at a measuring point whose distance from the boundary between the center 214 and the envelope layer 216 is x (%) is represented by H(x). The hardness at the boundary between the center 214 and the envelope layer 216 is represented by H (0.0). In the present invention, the JIS-C hardness at the surface of the core 204 is represented by Hs. The difference (Hs-H(0.0)) between the hardness Hs and the hardness H(0.0) is preferably equal to or greater than 22. The envelope layer 216 in which the difference (Hs-H(0.0)) is equal to or greater than 22 contributes to suppression of spin. In this respect, the difference (Hs-H(0.0)) is more preferably equal to or greater than 26 and particularly preferably equal to or greater than 30. From the standpoint that the core 204 can easily be formed, the difference (Hs-H(0.0)) is preferably equal to or less than 50.

The envelope layer 216 is formed by crosslinking a rubber composition. The rubber composition includes:

(a) a base rubber;
(b) a co-crosslinking agent;
(c) a crosslinking initiator; and
(d) an acid and/or a salt, wherein the acid and/or salt excludes the co-crosslinking agent (b).

The rubber composition of the envelope layer 216 can include the base rubber (a) described above for the envelope layer 20 of the first embodiment.

Examples of preferable co-crosslinking agents (b) include:

(b1) an $\alpha$,$\beta$-unsaturated carboxylic acid having 3 to 8 carbon atoms; and
(b2) a metal salt of an $\alpha$,$\beta$-unsaturated carboxylic acid having 3 to 8 carbon atoms.

The rubber composition of the envelope layer 216 can include the co-crosslinking agent (b) described above for the envelope layer 20 of the first embodiment.

When the rubber composition of the envelope layer 216 includes the the $\alpha$,$\beta$-unsaturated carboxylic acid (b1), the rubber composition preferably further includes a metal compound (f). The rubber composition of the envelope layer 216 can include the metal compound (f) described above for the envelope layer 20 of the first embodiment.

In light of resilience performance of the golf ball 202, the amount of the co-crosslinking agent (b) is preferably equal to or greater than 15 parts by weight and particularly preferably equal to or greater than 20 parts by weight, per 100 parts by weight of the base rubber. In light of feel at impact, the amount is preferably equal to or less than 50 parts by weight per 100 parts by weight of the base rubber.

The rubber composition of the envelope layer 216 can include the crosslinking initiator (c) described above for the envelope layer 20 of the first embodiment. The crosslinking initiator (c) is preferably an organic peroxide. The organic peroxide contributes to the resilience performance of the golf ball 202.

In light of resilience performance of the golf ball 202, the amount of the crosslinking initiator (c) is preferably equal to or greater than 0.2 parts by weight and particularly preferably equal to or greater than 0.5 parts by weight, per 100 parts by weight of the base rubber. In light of feel at impact and durability of the golf ball 202, the amount is preferably equal to or less than 5 parts by weight and particularly preferably equal to or less than 2.5 parts by weight, per 100 parts by weight of the base rubber.

The rubber composition of the envelope layer 216 can include the acid and/or the salt (d) described above for the envelope layer 20 of the first embodiment. The acid component included in the acid and/or the salt (d) has reactivity with a cationic component. During heating and forming of the envelope layer 216, the acid dissociates and reacts with the cationic component of the co-crosslinking agent (b). It is thought that the acid inhibits formation of the metal crosslinks by the co-crosslinking agent (b) within the envelope layer 216. The acid component included in the salt exchanges the cationic component with the co-crosslinking agent (b). It is inferred that during heating and forming of the envelope layer 216, the salt breaks the metal crosslinks by the co-crosslinking agent (b). In the present invention, the co-crosslinking agent (b) is not included in the concept of the acid and/or the salt (d).

In light of linearity of the hardness distribution of the envelope layer 216, the amount of the acid and/or the salt (d) is preferably equal to or greater than 1.0 parts by weight, more preferably equal to or greater than 2.0 parts by weight, and particularly preferably equal to or greater than 3.0 parts by weight, per 100 parts by weight of the base rubber. In

light of resilience performance, the amount is preferably equal to or less than 40 parts by weight, more preferably equal to or less than 30 parts by weight, and particularly preferably equal to or less than 20 parts by weight, per 100 parts by weight of the base rubber.

The weight ratio of the co-crosslinking agent (b) and the acid and/or the salt (d) in the rubber composition is preferably equal to or greater than 3/7 but equal to or less than 9/1, and is particularly preferably equal to or greater than 4/6 but equal to or less than 8/2. From the rubber composition in which this weight ratio is within the above range, the envelope layer 216 having an appropriate hardness distribution can be obtained.

As the co-crosslinking agent (b), zinc acrylate is preferably used. Zinc acrylate whose surface is coated with stearic acid or zinc stearate for the purpose of improving dispersibility to rubber is present. In the present invention, when the rubber composition includes this zinc acrylate, the stearic acid or zinc stearate coating the zinc acrylate is not included in the concept of the acid and/or the salt (d).

Preferably, the rubber composition of the envelope layer 216 further includes the organic sulfur compound (e) described above for the envelope layer 20 of the first embodiment. The organic sulfur compound (e) can contribute to control of: the linearity of the hardness distribution of the envelope layer 216; and the degree of an outer-hard/inner-soft structure.

From the standpoint that an outer-hard/inner-soft structure is easily obtained, more preferable organic sulfur compounds (e) are 2-thionaphthol, bis(pentabromophenyl)disulfide, and 2,6-dichlorothiophenol. A particularly preferable organic sulfur compound (e) is 2-thionaphthol.

From the standpoint that an outer-hard/inner-soft structure is easily obtained, the amount of the organic sulfur compound (e) is preferably equal to or greater than 0.05 parts by weight, more preferably equal to or greater than 0.1 parts by weight, and particularly preferably equal to or greater than 0.2 parts by weight, per 100 parts by weight of the base rubber. In light of resilience performance, the amount is preferably equal to or less than 5.0 parts by weight, more preferably equal to or less than 3.0 parts by weight, and particularly preferably equal to or less than 1.0 parts by weight, per 100 parts by weight of the base rubber.

For the purpose of adjusting specific gravity and the like, a filler may be included in the envelope layer 216. Examples of suitable fillers include zinc oxide, barium sulfate, calcium carbonate, and magnesium carbonate. The amount of the filler is determined as appropriate so that the intended specific gravity of the core 204 is accomplished. A particularly preferable filler is zinc oxide. Zinc oxide serves not only as a specific gravity adjuster but also as a crosslinking activator.

According to need, an anti-aging agent, a coloring agent, a plasticizer, a dispersant, sulfur, a vulcanization accelerator, and the like are added to the rubber composition of the envelope layer 216. Crosslinked rubber powder or synthetic resin powder may also be dispersed in the rubber composition.

During heating of the envelope layer 216, the heat of a crosslinking reaction of the base rubber (a) remains within the envelope layer 216. Thus, during heating of the envelope layer 216, the internal temperature of the envelope layer 216 is high as compared to the surface temperature of the envelope layer 216. The temperature gradually decreases from the boundary between the center 214 and the envelope layer 216 toward the surface of the envelope layer 216. The acid and/or the salt (d) reacts with the metal salt of the co-crosslinking agent (b) to inhibit formation of or break metal crosslinks. This reaction is accelerated in a region where the temperature is high. In other words, breaking of metal crosslinks is likely to occur near the innermost portion of the envelope layer 216 where the temperature is high, and is unlikely to occur near the surface of the envelope layer 216. As a result, the crosslinking density of the envelope layer 216 continuously increases from its inside toward its outside. In the envelope layer 216, the hardness linearly increases from its inside toward its outside. Furthermore, since the rubber composition includes the organic sulfur compound (e) together with the acid and/or the salt (d), the gradient of the hardness distribution can be controlled, and the degree of the outer-hard/inner-soft structure of the envelope layer 216 can be increased.

The envelope layer 216 preferably has a thickness Te of 5 mm or greater but 16 mm or less. The golf ball 202 that includes the envelope layer 216 having a thickness Te of 5 mm or greater has excellent resilience performance. In this respect, the thickness Te is more preferably equal to or greater than 6 mm and particularly preferably equal to or greater than 7 mm. In the golf ball 202 that includes the envelope layer 216 having a thickness Te of 16 mm or less, spin is suppressed upon a shot with a driver. In this respect, the thickness Te is more preferably equal to or less than 15 mm and particularly preferably equal to or less than 14 mm.

In light of the resilience performance, the hardness H (0.0) at the innermost portion of the envelope layer 216 is preferably equal to or greater than 60.0 and more preferably equal to or greater than 63.0. In light of appropriate hardness distribution, the hardness H (0.0) is preferably equal to or less than 70.0 and more preferably equal to or less than 65.0. In light of durability, the difference between the hardness H (0.0) and the surface hardness of the center 214 is preferably less than 10. When the golf ball 202 that includes the center 214 and the envelope layer 216 deforms by being hit, the local load is low even though the golf ball 202 has a multilayer structure.

The JIS-C hardness Hs at the surface of the core 204 is preferably equal to or greater than 80.0 but equal to or less than 96.0. When the golf ball 202 that includes the core 204 having a hardness Hs of 80.0 or greater is hit with a driver, the spin is small. The flight distance of the golf ball 202 is large. In this respect, the hardness Hs is more

preferably equal to or greater than 82.0 and particularly preferably equal to or greater than 84.0. The golf ball 202 having a hardness Hs of 96.0 or less has excellent durability. In this respect, the hardness Hs is more preferably equal to or less than 94.0 and particularly preferably equal to or less than 92.0.

The JIS-C hardness Ho at the central point of the core 204 is equal to the JIS-C hardness at the central point of the center 214. As described above, in light of resilience performance, the hardness Ho is preferably equal to or greater than 40.0 but equal to or less than 70.0. The hardness Hs is preferably greater than the hardness Ho. The difference (Hs-Ho) between the hardness Hs and the hardness Ho is preferably equal to or greater than 30 and more preferably equal to or greater than 34. In the golf ball 202 that includes the core 204, spin is suppressed upon a shot with a driver. In light of ease of producing the core 204, the difference (Hs-Ho) is preferably equal to or less than 50.

The core 204 preferably has a diameter of 36.0 mm or greater. The core 204 having a diameter of 36.0 mm or greater can achieve excellent resilience performance of the golf ball 202. In light of durability, the diameter of the core 204 is preferably equal to or less than 39.0 mm and more preferably equal to or less than 38.0 mm.

In light of feel at impact, the core 204 has an amount of compressive deformation Dc of preferably 3.5 mm or greater and particularly preferably 3.8 mm or greater. In light of resilience performance of the core 204, the amount of compressive deformation Dc is preferably equal to or less than 4.5 mm and particularly preferably equal to or less than 4.0 mm.

For the inner mid layer 206, a resin composition is suitably used. Examples of the base resin of the resin composition include ionomer resins, polystyrenes, polyesters, polyamides, and polyolefins.

Particularly preferable base resins are ionomer resins. The golf ball 202 that includes the inner mid layer 206 including an ionomer resin has excellent resilience performance. An ionomer resin and another resin may be used in combination for the inner mid layer 206. In this case, the principal component of the base resin is preferably the ionomer resin. Specifically, the proportion of the ionomer resin to the entire base resin is preferably equal to or greater than 45% by weight and more preferably equal to or greater than 60% by weight.

The inner mid layer 206 can include the ionomer resin described above for the golf ball 2 of the first embodiment. The inner mid layer 206 can include the styrene block-containing thermoplastic elastomer described above for the golf ball 2 of the first embodiment.

According to need, a coloring agent such as titanium dioxide, a filler such as barium sulfate, a dispersant, an antioxidant, an ultraviolet absorber, a light stabilizer, a fluorescent material, a fluorescent brightener, and the like are included in the resin composition of the inner mid layer 206 in an adequate amount.

From the standpoint that an outer-hard/inner-soft structure can be achieved in the sphere consisting of the core 204 and the inner mid layer 206, the inner mid layer 206 has a Shore D hardness Hm1 of preferably 30 or greater and more preferably 40 or greater. In the golf ball 202 that includes the inner mid layer 206 having a hardness Hm1 in this range, a spin rate is sufficiently suppressed upon a shot with a driver. The flight distance of the golf ball 202 is large. In light of controllability of the golf ball 202, the hardness Hm1 is preferably equal to or less than 60 and particularly preferably equal to or less than 54. When the golf ball 202 is hit with a short iron, the spin rate is high. The golf ball 202 has excellent controllability. The hardness Hm1 is measured by the method described above for the golf ball 2 of the first embodiment.

The inner mid layer 206 preferably has a thickness Tm1 of 0.5 mm or greater but 1.6 mm or less. In light of durability, the thickness Tm1 is more preferably equal to or greater than 0.7 mm. In light of resilience performance, the thickness Tm1 is more preferably equal to or less than 1.2 mm.

For the outer mid layer 208, a resin composition is suitably used. Examples of the base resin of the resin composition include ionomer resins, polystyrenes, polyesters, polyamides, and polyolefins.

Particularly preferable base resins are ionomer resins. The golf ball 202 that includes the outer mid layer 208 including an ionomer resin has excellent resilience performance. An ionomer resin and another resin may be used in combination for the outer mid layer 208. In this case, the principal component of the base resin is preferably the ionomer resin. Specifically, the proportion of the ionomer resin to the entire base resin is preferably equal to or greater than 80% by weight and more preferably equal to or greater than 90% by weight. The ionomer resin described above for the inner mid layer 206 can also be used for the outer mid layer 208. The styrene block-containing thermoplastic elastomer described above for the inner mid layer 206 may be used in combination for the outer mid layer 208.

The outer mid layer 208 may include a highly elastic resin. Specific examples of the highly elastic resin include polyamides.

According to need, a coloring agent such as titanium dioxide, a filler such as barium sulfate, a dispersant, an antioxidant, an ultraviolet absorber, a light stabilizer, a fluorescent material, a fluorescent brightener, and the like are included in the resin composition of the outer mid layer 208 in an adequate amount.

In light of a spin suppression effect upon a shot with a driver, the outer mid layer 208 has a Shore D hardness Hm2 of preferably 55 or greater and more preferably 60 or greater. The flight distance of the golf ball 202 is large. In light of controllability of the golf ball 202, the hardness Hm2 is preferably equal to or less than 70 and more preferably equal to or less than 68. When the golf ball 202 is hit with a short iron, the spin rate is high. The hardness Hm2 is measured by the same method as that for the hardness Hm1.

In light of achievement of an outer-hard/inner-soft structure, the hardness Hm1 of the inner mid layer 206 is preferably less than the hardness Hm2 of the outer mid layer 208. When the golf ball 202 is hit with a driver, the spin rate is low. The flight distance of the golf ball 202 is large.

In light of resilience performance and controllability, the difference (Hm2-Hm1) between the hardness Hm2 of the outer mid layer 208 and the hardness Hm1 of the inner mid layer 206 is preferably equal to or greater than 8 and particularly preferably equal to or greater than 14. In light of feel at impact, the difference (Hm2-Hm1) is preferably equal to or less than 30. When the golf ball 202 that includes the outer mid layer 208 having a hardness Hm2 in this range is hit with a driver, the spin rate is low. When the golf ball 202 is hit with a short iron, the spin rate is high.

The outer mid layer 208 preferably has a thickness Tm2 of 0.5 mm or greater. In the golf ball 202 that includes the outer mid layer 208 having a thickness Tm2 of 0.5 mm or greater, the shock by a hit is alleviated. Thus, the golf ball 202 has excellent durability. In this respect, the thickness Tm2 is more preferably equal to or greater than 0.7 mm. The thickness Tm2 is preferably equal to or less than 1.6 mm. The golf ball 202 that includes the outer mid layer 208 having a thickness Tm2 of 1.6 mm or less includes a relatively large core 204. The golf ball 202 has sufficient resilience performance. In this respect, the thickness Tm2 is particularly preferably equal to or less than 1.2 mm.

The sum (Tm1+Tm2) of the thickness Tm1 and the thickness Tm2 is preferably equal to or greater than 1.0 mm. In the golf ball 202, the shock by a hit is alleviated. Thus, the golf ball 202 has excellent durability. In this respect, the sum (Tm1+Tm2) is more preferably equal to or greater than 1.3 mm. The sum (Tm1+Tm2) is preferably equal to or less than 3.0 mm. The golf ball 202 includes a relatively large core 204. The golf ball 202 has sufficient resilience performance. In this respect, the sum (Tm1+Tm2) is more preferably equal to or less than 2.0 mm.

For forming the outer mid layer 208, known methods such as injection molding, compression molding, and the like can be used.

For the cover 212, a resin composition is suitably used. A preferable base resin of the resin composition is a urethane resin or a urea resin. The principal component of the urethane resin is a polyurethane. The polyurethane is flexible. When the golf ball 202 that includes the cover 212 formed from the resin composition that includes the polyurethane is hit with a short iron, the spin rate is high. The cover 212 formed from this resin composition contributes to controllability upon a shot with a short iron. The polyurethane also contributes to the scuff resistance of the cover 212. Furthermore, the polyurethane can also contribute to excellent feel at impact when the golf ball 202 is hit with a putter or a short iron.

In light of ease of forming the cover 212, a preferable base resin is a thermoplastic polyurethane elastomer. The cover 212 can include the thermoplastic polyurethane elastomer described above for the golf ball 2 of the first embodiment.

A thermoplastic polyurethane elastomer and another resin may be used in combination. Examples of the resin that can be used in combination include thermoplastic polyester elastomers, thermoplastic polyamide elastomers, thermoplastic polyolefin elastomers, styrene block-containing thermoplastic elastomers, and ionomer resins. When a thermoplastic polyurethane elastomer and another resin are used in combination, the thermoplastic polyurethane elastomer is included as the principal component of the base polymer, in light of spin performance and scuff resistance. The proportion of the thermoplastic polyurethane elastomer to the entire base polymer is preferably equal to or greater than 50% by weight, more preferably equal to or greater than 70% by weight, and particularly preferably equal to or greater than 85% by weight.

According to need, a coloring agent such as titanium dioxide, a filler such as barium sulfate, a dispersant, an antioxidant, an ultraviolet absorber, a light stabilizer, a fluorescent material, a fluorescent brightener, and the like are included in the cover 212 in an adequate amount.

The cover 212 preferably has a Shore D hardness Hc of 48 or less. The golf ball 202 that includes the cover 212 having a hardness Hc of 48 or less has excellent controllability. In this respect, the hardness Hc is more preferably equal to or less than 40 and particularly preferably equal to or less than 32. In light of flight distance upon a shot with a driver, the hardness Hc is preferably equal to or greater than 10 and more preferably equal to or greater than 15. The hardness Hc is measured by the same measurement method as that for the hardness Hm1 and the hardness Hm2.

The hardness Hm2 of the outer mid layer 208 is greater than the hardness Hc of the cover 212. When the golf ball 202 is hit with a driver, the sphere consisting of the core 204, the inner mid layer 206, and the outer mid layer 208 becomes significantly distorted since the head speed is high. Since this sphere has an outer-hard/inner-soft structure, the spin rate is suppressed. The hardness of the core 204 linearly changes. Thus, the golf ball 202 is launched at a high speed due to deformation and restoration of the core 204. The suppression of the spin rate and the high launch speed achieve a large flight distance. When the golf ball 202 is hit with a short iron, this sphere becomes less distorted since the head speed is low. When the golf ball 202 is hit with a short iron, the behavior of the golf ball 202 mainly depends on the cover 212. Since the cover 212 is flexible, a slip between the golf ball 202 and a clubface is suppressed. Due to the suppression of the slip, a high spin rate is obtained. The high spin rate achieves excellent controllability. In the golf ball 202, both desired flight performance upon a shot with a driver and desired controllability upon a shot with a short iron are achieved. In this respect, the hardness Hc is more preferably less than the hardness Hm1 of the inner mid layer

206.

When the golf ball 202 is hit, the cover 212 including the polyurethane absorbs the shock. This absorption achieves soft feel at impact. Particularly, when the golf ball 202 is hit with a short iron or a putter, the flexible cover 212 achieves excellent feel at impact.

In light of achievement of both desired flight performance and desired controllability, the difference (Hm2-Hc) between the hardness Hm2 of the outer mid layer 208 and the hardness Hc of the cover 212 is preferably equal to or greater than 30 and more preferably equal to or greater than 34. In the golf ball 202 in which the hardness of the outer mid layer 208 and the hardness of the cover 212 meet this condition, a backspin rate is suppressed upon a shot with a driver. In the golf ball 202, a backspin rate upon an approach shot is increased. In light of durability, the difference (Hm2-Hc) is preferably equal to or less than 45 and more preferably equal to or less than 40.

In light of achievement of both desired flight performance and desired controllability, the difference (Hm1-Hc) between the hardness Hm1 of the inner mid layer 206 and the hardness Hc of the cover 212 is preferably equal to or greater than 13 but equal to or less than 28.

In light of flight performance upon a shot with a driver, the cover 212 has a thickness Tc of preferably 0.8 mm or less, more preferably 0.6 mm or less, and particularly preferably 0.5 mm or less. In light of durability and controllability, the thickness Tc is preferably equal to or greater than 0.3 mm and more preferably equal to or greater than 0.4 mm.

For forming the cover 212, known methods such as injection molding, compression molding, and the like can be used. When forming the cover 212, the dimples 217 are formed by pimples formed on the cavity face of a mold.

In light of achievement of both desired flight performance and desired controllability, the principal component of the base resin of the resin composition of the cover 212 is preferably a urethane resin or a urea resin, and the principal component of the base resin of the resin composition of the outer mid layer 208 is preferably an ionomer resin. In other words, the principal component of the base resin of the outer mid layer 208 is different from the principal component of the base resin of the cover 212.

In light of durability, the golf ball 202 that further includes the reinforcing layer 210 between the outer mid layer 208 and the cover 212 is preferred. The reinforcing layer 210 is positioned between the outer mid layer 208 and the cover 212. The reinforcing layer 210 firmly adheres to the outer mid layer 208 and also to the cover 212. The reinforcing layer 210 suppresses separation of the cover 212 from the outer mid layer 208. As described above, the cover 212 of the golf ball 202 is thin. When the golf ball 202 is hit by the edge of a clubface, a wrinkle is likely to occur. The reinforcing layer 210 suppresses occurrence of a wrinkle to improve the durability of the golf ball 202.

As the base polymer of the reinforcing layer 210, a two-component curing type thermosetting resin is suitably used. Specific examples of two-component curing type thermosetting resins include epoxy resins, urethane resins, acrylic resins, polyester resins, and cellulose resins. In light of strength and durability of the reinforcing layer 210, two-component curing type epoxy resins and two-component curing type urethane resins are preferred.

The reinforcing layer 210 can include the two-component curing type epoxy resin described above for the golf ball 2 of the first embodiment. The reinforcing layer 210 can include the two-component curing type urethane resin described above for the golf ball 2 of the first embodiment.

The reinforcing layer 210 may include additives such as a coloring agent (typically, titanium dioxide), a phosphate-based stabilizer, an antioxidant, a light stabilizer, a fluorescent brightener, an ultraviolet absorber, an anti-blocking agent, and the like. The additives may be added to the base material of the two-component curing type thermosetting resin, or may be added to the curing agent of the two-component curing type thermosetting resin.

In light of feel at impact, the golf ball 202 has an amount of compressive deformation Db of preferably 2.1 mm or greater, more preferably 2.2 mm or greater, and particularly preferably 2.3 mm or greater. In light of resilience performance, the amount of compressive deformation Db is preferably equal to or less than 3.2 mm, more preferably equal to or less than 3.0 mm, and particularly preferably equal to or less than 2. 8 mm. The amount of compressive deformation is measured by the method described above for the golf ball 2 of the first embodiment.

[Fourth Embodiment]

A golf ball 302 shown in FIG. 7 includes a spherical core 304, an inner mid layer 306 positioned outside the core 304, an outer mid layer 308 positioned outside the inner mid layer 306, a reinforcing layer 310 positioned outside the outer mid layer 308, and a cover 312 positioned outside the reinforcing layer 310. The core 304 includes a spherical center 314 and an envelope layer 316 positioned outside the center 314. On the surface of the cover 312, a large number of dimples 317 are formed. Of the surface of the golf ball 302, a part other than the dimples 317 is a land 318. The golf ball 302 includes a paint layer and a mark layer on the external side of the cover 312, but these layers are not shown in the drawing.

The golf ball 302 has a diameter of 40 mm or greater but 45 mm or less. From the standpoint of conformity to the rules established by the United States Golf Association (USGA), the diameter is preferably equal to or greater than 42.67 mm. In light of suppression of air resistance, the diameter is preferably equal to or less than 44 mm and more

preferably equal to or less than 42.80 mm. The golf ball 302 has a weight of 40 g or greater but 50 g or less. In light of attainment of great inertia, the weight is preferably equal to or greater than 44 g and more preferably equal to or greater than 45 g. From the standpoint of conformity to the rules established by the USGA, the weight is preferably equal to or less than 45.93 g.

The center 314 is formed by crosslinking a rubber composition. Examples of base rubbers for use in the rubber composition include polybutadienes, polyisoprenes, styrene-butadiene copolymers, ethylene-propylene-diene copolymers, and natural rubbers. Two or more rubbers may be used in combination. In light of resilience performance, polybutadienes are preferred, and high-cis polybutadienes are particularly preferred.

Preferably, the rubber composition of the center 314 includes a co-crosslinking agent. Examples of preferable co-crosslinking agents in light of resilience performance include acrylic acid, methacrylic acid, zinc acrylate, magnesium acrylate, zinc methacrylate, and magnesium methacrylate. Preferably, the rubber composition further include a metal compound. Examples of the metal compound include magnesium oxide and zinc oxide. Preferably, the rubber composition includes an organic peroxide with a co-crosslinking agent. Examples of preferable organic peroxides include dicumyl peroxide, 1,1-bis(t-butylperoxy)-3,3,5-trimethylcyclohexane, 2,5-dimethyl-2,5-di(t-butylperoxy)hexane, and di-t-butyl peroxide. Preferably, the rubber composition includes a sulfur compound. The rubber composition may include a carboxylic acid and/or a salt thereof.

According to need, various additives such as a filler, sulfur, a vulcanization accelerator, an anti-aging agent, a coloring agent, a plasticizer, a dispersant, and the like are included in the rubber composition of the center 314 in an adequate amount. Synthetic resin powder or crosslinked rubber powder may also be included in the rubber composition.

In the present embodiment, the center 314 is preferably more flexible than the envelope layer 316. In light of resilience performance, the JIS-C hardness at the central point of the center 314 is preferably equal to or greater than 40, more preferably equal to or greater than 45, and particularly preferably equal to or greater than 50. In light of suppression of spin, the JIS-C hardness at the central point of the center 314 is preferably equal to or less than 70, more preferably equal to or less than 65, and particularly preferably equal to or less than 60.

In light of achievement of an outer-hard/inner-soft structure of the center 314, the JIS-C hardness at the surface of the center 314 is preferably equal to or greater than 50 and more preferably equal to or greater than 60. In light of durability and feel at impact, the JIS-C hardness is preferably equal to or less than 75. In the center 314, the hardness continuously increases from the central point to the surface of the center 314.

The JIS-C hardness at the central point of the center 314 is measured by pressing a JIS-C type hardness scale against a cut plane of the spherical center 314 that has been cut into two halves. The hardness at the surface of the center 314 is measured by pressing the JIS-C type hardness scale against the surface of the center 314. For the measurement, an automated rubber hardness measurement machine (trade name "P1", manufactured by Kobunshi Keiki Co., Ltd.), to which this hardness scale is mounted, is used.

The center 314 preferably has a diameter of 10 mm or greater but 25 mm or less. In the golf ball 302 that includes the center 314 having a diameter of 10 mm or greater, spin can be suppressed. In this respect, the diameter is more preferably equal to or greater than 12 mm and particularly preferably equal to or greater than 14 mm. The golf ball 302 that includes the center 314 having a diameter of 25 mm or less has excellent resilience performance, even though the center 314 is flexible. In this respect, the diameter is more preferably equal to or less than 22 mm and particularly preferably equal to or less than 19 mm.

FIG. 8 is a line graph showing a hardness distribution of the envelope layer 316 of the golf ball 302 in FIG. 7. In the present invention, JIS-C hardnesses are measured at nine points obtained by dividing the distance from the boundary between the center 314 and the envelope layer 316 to the surface of the core 304 (the thickness of the envelope layer 316) at intervals of 12.5 % of the distance. The horizontal axis of the graph indicates a distance from the boundary between the center 314 and the envelope layer 316 as a ratio (%) to the thickness of the envelope layer 316. The vertical axis of the graph indicates the JIS-C hardness at each measuring point. The ratio (%) of the distance from the boundary between the center 314 and the envelope layer 316 to each of these measuring points to the thickness of the envelope layer 316 is as follows.

First point: 0.0% (the boundary between the center 314 and the envelope layer 316)
Second point: 12.5%
Third point: 25.0%
Fourth point: 37.5%
Fifth point: 50.0%
Sixth point: 62.5%
Seventh point: 75.0%
Eighth point: 87.5%
Ninth point: 100.0% (the surface of the core 304)

Hardnesses at the first to eighth points are measured by pressing a JIS-C type hardness scale against a cut plane of the core 304, consisting of the center 314 and the envelope layer 316, which has been cut into two halves. A hardness at the ninth point is measured by pressing the JIS-C type hardness scale against the surface of the spherical core 304. For the measurement, an automated rubber hardness measurement machine (trade name "P1", manufactured by Kobunshi Keiki Co., Ltd.), to which this hardness scale is mounted, is used.
FIG. 8 also shows a linear approximation curve obtained by a least-square method on the basis of the hardness at each measuring point and the distance (%) from the boundary between the center 314 and the envelope layer 316 to each measuring point. The linear approximation curve is indicated by a dotted line. In FIG. 8, the broken line does not greatly deviate from the linear approximation curve. In other words, the broken line has a shape close to the linear approximation curve. In the envelope layer 316, the hardness linearly increases from its inside toward its outside. When the golf ball 302 is hit with a driver, the energy loss is low in the envelope layer 316. In the envelope layer 316, the hardness continuously increases from the boundary with the center 314 toward its surface. In the envelope layer 316, there is no discontinuous point caused by a multilayer structure. When the golf ball 302 that includes the envelope layer 316 deforms by being hit, no local load is applied thereto. The golf ball 302 has resistance to breakage caused by deformation of the envelope layer 316.
$R^2$ of the linear approximation curve for the envelope layer 316 which is obtained by the least-square method is preferably equal to or greater than 0.95. $R^2$ is an index indicating the linearity of the broken line. For the envelope layer 316 for which $R^2$ is equal to or greater than 0. 95, the shape of the broken line of the hardness distribution is close to a straight line. The golf ball 302 that includes the envelope layer 316 for which $R^2$ is equal to or greater than 0.95 has excellent resilience performance. $R^2$ is more preferably equal to or greater than 0.97 and particularly preferably equal to or greater than 0.99. $R^2$ is calculated by squaring a correlation coefficient R. The correlation coefficient R is calculated by dividing the covariance of the distance (%) from the boundary between the center 314 and the envelope layer 316 and the hardness (JIS-C) by the standard deviation of the distance (%) from the boundary between the center 314 and the envelope layer 316 and the standard deviation of the hardness (JIS-C).
In light of suppression of spin, the gradient $\alpha$ of the linear approximation curve is preferably equal to or greater than 0.20, more preferably equal to or greater than 0.23, and particularly preferably equal to or greater than 0.26.
In the present invention, a JIS-C hardness at a measuring point whose distance from the boundary between the center 314 and the envelope layer 316 is x (%) is represented by H (x) . The hardness at the boundary between the center 314 and the envelope layer 316 is represented by H (0.0). In the present invention, the JIS-C hardness at the surface of the core 304 is represented by Hs. The difference (Hs-H(0.0)) between the hardness Hs and the hardness H(0.0) is preferably equal to or greater than 22. The envelope layer 316 in which the difference (Hs-H(0.0)) is equal to or greater than 22 contributes to suppression of spin. In this respect, the difference (Hs-H(0.0)) is more preferably equal to or greater than 26 and particularly preferably equal to or greater than 30. From the standpoint that the core 304 can easily be formed, the difference (Hs-H(0.0)) is preferably equal to or less than 50.
The envelope layer 316 is formed by crosslinking a rubber composition. The rubber composition includes:

(a) a base rubber;
(b) a co-crosslinking agent;
(c) a crosslinking initiator; and
(d) an acid and/or a salt, wherein the acid and/or salt excludes the co-crosslinking agent (b).

The rubber composition of the envelope layer 316 can include the base rubber (a) described above for the envelope layer 20 of the first embodiment.
Examples of preferable co-crosslinking agents (b) include:

(b1) an $\alpha$, $\beta$-unsaturated carboxylic acid having 3 to 8 carbon atoms; and
(b2) a metal salt of an $\alpha$, $\beta$-unsaturated carboxylic acid having 3 to 8 carbon atoms.

The rubber composition of the envelope layer 316 can include the co-crosslinking agent (b) described above for the envelope layer 20 of the first embodiment.
When the rubber composition of the envelope layer 316 includes the the $\alpha$, $\beta$-unsaturated carboxylic acid (b1) , the rubber composition preferably further includes a metal compound (f) . The rubber composition of the envelope layer 316 can include the metal compound (f) described above for the envelope layer 20 of the first embodiment.
In light of resilience performance of the golf ball 302, the amount of the co-crosslinking agent (b) is preferably equal to or greater than 15 parts by weight and particularly preferably equal to or greater than 20 parts by weight, per 100 parts by weight of the base rubber. In light of feel at impact, the amount is preferably equal to or less than 50 parts by weight per 100 parts by weight of the base rubber.
The rubber composition of the envelope layer 316 can include the crosslinking initiator (c) described above for

the envelope layer 20 of the first embodiment. The crosslinking initiator (c) is preferably an organic peroxide. The organic peroxide contributes to the resilience performance of the golf ball 302.

In light of resilience performance of the golf ball 302, the amount of the crosslinking initiator (c) is preferably equal to or greater than 0.2 parts by weight and particularly preferably equal to or greater than 0.5 parts by weight, per 100 parts by weight of the base rubber. In light of feel at impact and durability of the golf ball 302, the amount is preferably equal to or less than 5 parts by weight and particularly preferably equal to or less than 2.5 parts by weight, per 100 parts by weight of the base rubber.

The rubber composition of the envelope layer 316 can include the acid and/or the salt (d) described above for the envelope layer 20 of the first embodiment. The acid component included in the acid and/or the salt (d) has reactivity with a cationic component. During heating and forming of the envelope layer 316, the acid dissociates and reacts with the cationic component of the co-crosslinking agent (b). It is thought that the acid inhibits formation of the metal crosslinks by the co-crosslinking agent (b) within the envelope layer 316. The acid component included in the salt exchanges the cationic component with the co-crosslinking agent (b). It is inferred that during heating and forming of the envelope layer 316, the salt breaks the metal crosslinks by the co-crosslinking agent (b). In the present invention, the co-crosslinking agent (b) is not included in the concept of the acid and/or the salt (d).

In light of linearity of the hardness distribution of the envelope layer 316, the amount of the acid and/or the salt (d) is preferably equal to or greater than 1.0 parts by weight, more preferably equal to or greater than 2.0 parts by weight, and particularly preferably equal to or greater than 3.0 parts by weight, per 100 parts by weight of the base rubber. In light of resilience performance, the amount is preferably equal to or less than 40 parts by weight, more preferably equal to or less than 30 parts by weight, and particularly preferably equal to or less than 20 parts by weight, per 100 parts by weight of the base rubber.

The weight ratio of the co-crosslinking agent (b) and the acid and/or the salt (d) in the rubber composition is preferably equal to or greater than 3/7 but equal to or less than 9/1, and is particularly preferably equal to or greater than 4/6 but equal to or less than 8/2. From the rubber composition in which this weight ratio is within the above range, the envelope layer 316 having an appropriate hardness distribution can be obtained.

As the co-crosslinking agent (b), zinc acrylate is preferably used. Zinc acrylate whose surface is coated with stearic acid or zinc stearate for the purpose of improving dispersibility to rubber is present. In the present invention, when the rubber composition includes this zinc acrylate, the stearic acid or zinc stearate coating the zinc acrylate is not included in the concept of the acid and/or the salt (d).

Preferably, the rubber composition of the envelope layer 316 further includes the organic sulfur compound (e) described above for the envelope layer 20 of the first embodiment. The organic sulfur compound (e) can contribute to control of: the linearity of the hardness distribution of the envelope layer 316; and the degree of an outer-hard/inner-soft structure.

From the standpoint that an outer-hard/inner-soft structure is easily obtained, more preferable organic sulfur compounds (e) are 2-thionaphthol, bis(pentabromophenyl)disulfide, and 2,6-dichlorothiophenol. A particularly preferable organic sulfur compound (e) is 2-thionaphthol.

From the standpoint that an outer-hard/inner-soft structure is easily obtained, the amount of the organic sulfur compound (e) is preferably equal to or greater than 0.05 parts by weight, more preferably equal to or greater than 0.1 parts by weight, and particularly preferably equal to or greater than 0.2 parts by weight, per 100 parts by weight of the base rubber. In light of resilience performance, the amount is preferably equal to or less than 5.0 parts by weight, more preferably equal to or less than 3.0 parts by weight, and particularly preferably equal to or less than 1.0 parts by weight, per 100 parts by weight of the base rubber.

For the purpose of adjusting specific gravity and the like, a filler may be included in the envelope layer 316. Examples of suitable fillers include zinc oxide, barium sulfate, calcium carbonate, and magnesium carbonate. The amount of the filler is determined as appropriate so that the intended specific gravity of the core 304 is accomplished. A particularly preferable filler is zinc oxide. Zinc oxide serves not only as a specific gravity adjuster but also as a crosslinking activator.

According to need, an anti-aging agent, a coloring agent, a plasticizer, a dispersant, sulfur, a vulcanization accelerator, and the like are added to the rubber composition of the envelope layer 316. Crosslinked rubber powder or synthetic resin powder may also be dispersed in the rubber composition.

During heating of the envelope layer 316, the heat of a crosslinking reaction of the base rubber (a) remains within the envelope layer 316. Thus, during heating of the envelope layer 316, the internal temperature of the envelope layer 316 is high as compared to the surface temperature of the envelope layer 316. The temperature gradually decreases from the boundary between the center 314 and the envelope layer 316 toward the surface of the envelope layer 316. The acid and/or the salt (d) reacts with the metal salt of the co-crosslinking agent (b) to inhibit formation of or break metal crosslinks. This reaction is accelerated in a region where the temperature is high. In other words, breaking of metal crosslinks is likely to occur near the innermost portion of the envelope layer 316 where the temperature is high, and is unlikely to occur near the surface of the envelope layer 316. As a result, the crosslinking density of the envelope layer 316 continuously increases from its inside toward its outside. In the envelope layer 316, the hardness linearly

increases from its inside toward its outside. Furthermore, since the rubber composition includes the organic sulfur compound (e) together with the acid and/or the salt (d), the gradient of the hardness distribution can be controlled, and the degree of the outer-hard/inner-soft structure of the envelope layer 316 can be increased.

The envelope layer 316 preferably has a thickness Te of 5 mm or greater but 16 mm or less. The golf ball 302 that includes the envelope layer 316 having a thickness Te of 5 mm or greater has excellent resilience performance. In this respect, the thickness Te is more preferably equal to or greater than 6 mm and particularly preferably equal to or greater than 7 mm. In the golf ball 302 that includes the envelope layer 316 having a thickness Te of 16 mm or less, spin is suppressed upon a shot with a driver. In this respect, the thickness Te is more preferably equal to or less than 15 mm and particularly preferably equal to or less than 14 mm.

In light of the resilience performance, the hardness H (0.0) at the innermost portion of the envelope layer 316 is preferably equal to or greater than 60 and more preferably equal to or greater than 63. In light of appropriate hardness distribution, the hardness H (0.0) is preferably equal to or less than 70 and more preferably equal to or less than 65. In light of durability, the difference between the hardness H(0.0) and the surface hardness of the center 314 is preferably less than 10. When the golf ball 302 that includes the center 314 and the envelope layer 316 deforms by being hit, the local load is low even though the golf ball 302 has a multilayer structure.

The JIS-C hardness Hs at the surface of the core 304 is preferably equal to or greater than 80 but equal to or less than 96. When the golf ball 302 that includes the core 304 having a hardness Hs of 80 or greater is hit with a driver, the spin is small. The flight distance of the golf ball 302 is large. In this respect, the hardness Hs is more preferably equal to or greater than 82 and particularly preferably equal to or greater than 84. The golf ball 302 having a hardness Hs of 96 or less has excellent durability. In this respect, the hardness Hs is more preferably equal to or less than 94 and particularly preferably equal to or less than 92.

The JIS-C hardness Ho at the central point of the core 304 is equal to the JIS-C hardness at the central point of the center 314. As described above, in light of resilience performance, the hardness Ho is preferably equal to or greater than 40 but equal to or less than 70. The hardness Hs is preferably greater than the hardness Ho. The difference (Hs-Ho) between the hardness Hs and the hardness Ho is preferably equal to or greater than 20 and more preferably equal to or greater than 25. In the golf ball 302 that includes the core 304, spin is suppressed upon a shot with a driver. In light of ease of producing the core 304, the difference (Hs-Ho) is preferably equal to or less than 50.

The core 304 preferably has a diameter of 36.0 mm or greater. The core 304 having a diameter of 36.0 mm or greater can achieve excellent resilience performance of the golf ball 302. In light of durability, the diameter of the core 304 is preferably equal to or less than 39.0 mm and more preferably equal to or less than 38.0 mm.

In light of feel at impact, the core 304 has an amount of compressive deformation Dc of preferably 3.0 mm or greater and particularly preferably 3.5 mm or greater. In light of resilience performance of the core 304, the amount of compressive deformation Dc is preferably equal to or less than 4.5 mm and particularly preferably equal to or less than 4.0 mm.

For the inner mid layer 306, a resin composition is suitably used. Examples of the base resin of the resin composition include ionomer resins, polystyrenes, polyesters, polyamides, and polyolefins.

Particularly preferable base resins are ionomer resins. The golf ball 302 that includes the inner mid layer 306 including an ionomer resin has excellent resilience performance. An ionomer resin and another resin may be used in combination for the inner mid layer 306. In this case, the principal component of the base resin is preferably the ionomer resin. Specifically, the proportion of the ionomer resin to the entire base resin is preferably equal to or greater than 80% by weight and more preferably equal to or greater than 90% by weight.

The inner mid layer 306 can include the ionomer resin described above for the golf ball 2 of the first embodiment. Two or more ionomer resins may be used in combination for the inner mid layer 306. An ionomer resin neutralized with a monovalent metal ion and an ionomer resin neutralized with a bivalent metal ion may be used in combination.

The inner mid layer 306 may include a highly elastic resin. Specific examples of the highly elastic resin include polyamides.

According to need, a coloring agent such as titanium dioxide, a filler such as barium sulfate, a dispersant, an antioxidant, an ultraviolet absorber, a light stabilizer, a fluorescent material, a fluorescent brightener, and the like are included in the resin composition of the inner mid layer 306 in an adequate amount.

From the standpoint that an outer-hard/inner-soft structure can be achieved in the sphere consisting of the core 304 and the inner mid layer 306, the inner mid layer 306 has a Shore D hardness Hm1 of preferably 55 or greater and more preferably 60 or greater. In the golf ball 302 that includes the inner mid layer 306 having a hardness Hm1 in this range, a spin rate is sufficiently suppressed upon a shot with a driver. The flight distance of the golf ball 302 is large. In light of controllability of the golf ball 302, the hardness Hm1 is preferably equal to or less than 70 and particularly preferably equal to or less than 68. When the golf ball 302 is hit with a short iron, the spin rate is high. The golf ball 302 has excellent controllability. The hardness Hm1 is measured by the method described above for the golf ball 2 of the first embodiment.

The inner mid layer 306 preferably has a thickness Tm1 of 0.5 mm or greater but 1.5 mm or less. In light of durability, the thickness Tm1 is more preferably equal to or greater than 0.7 mm. In light of resilience performance, the

thickness Tm1 is more preferably equal to or less than 1.2 mm.

For the outer mid layer 308, a resin composition is suitably used. Examples of the base resin of the resin composition include ionomer resins, polystyrenes, polyesters, polyamides, and polyolefins.

Particularly preferable base resins are ionomer resins. The ionomer resin described above for the inner mid layer 306 can also be used for the outer mid layer 308. The golf ball 302 that includes the outer mid layer 308 including an ionomer resin has excellent resilience performance. An ionomer resin and another resin may be used in combination for the outer mid layer 308. In this case, the principal component of the base resin is preferably the ionomer resin. Specifically, the proportion of the ionomer resin to the entire base resin is preferably equal to or greater than 45% by weight and more preferably equal to or greater than 60% by weight.

A preferable resin that can be used in combination with an ionomer resin is a styrene block-containing thermoplastic elastomer. The styrene block-containing thermoplastic elastomer has excellent compatibility with ionomer resins. A resin composition including the styrene block-containing thermoplastic elastomer has excellent fluidity. The outer mid layer 308 can include the styrene block-containing thermoplastic elastomer described above for the golf ball 2 of the first embodiment.

According to need, a coloring agent such as titanium dioxide, a filler such as barium sulfate, a dispersant, an antioxidant, an ultraviolet absorber, a light stabilizer, a fluorescent material, a fluorescent brightener, and the like are included in the resin composition of the outer mid layer 308 in an adequate amount.

In light of a spin suppression effect upon a shot with a driver, the outer mid layer 308 has a Shore D hardness Hm2 of preferably 30 or greater and more preferably 40 or greater. The flight distance of the golf ball 302 is large. In light of controllability of the golf ball 302, the hardness Hm2 is preferably equal to or less than 60 and more preferably equal to or less than 54. When the golf ball 302 is hit with a short iron, the spin rate is high. The hardness Hm2 is measured by the same method as that for the hardness Hm1.

In light of durability and feel at impact, the hardness Hm1 of the inner mid layer 306 is preferably greater than the hardness Hm2 of the outer mid layer 308. When the golf ball 302 in which the hardness Hm1 is greater than the hardness Hm2 is hit with a driver, the shock provided to the golf ball 302 by the driver is alleviated. The golf ball 302 has excellent durability. The golf ball 302 has soft feel at impact.

In light of achievement of both desired resilience performance and desired controllability, the difference (Hm1-Hm2) between the hardness Hm2 of the outer mid layer 308 and the hardness Hm1 of the inner mid layer 306 is preferably equal to or greater than 8 and particularly preferably equal to or greater than 14. In light of durability, the difference (Hm1-Hm2) is preferably equal to or less than 35.

The outer mid layer 308 preferably has a thickness Tm2 of 0.5 mm or greater. In the golf ball 302 that includes the outer mid layer 308 having a thickness Tm2 of 0.5 mm or greater, the shock by a hit is alleviated. Thus, the golf ball 302 has excellent durability. In this respect, the thickness Tm2 is more preferably equal to or greater than 0.7 mm. The thickness Tm2 is preferably equal to or less than 1.5 mm. The golf ball 302 that includes the outer mid layer 308 having a thickness Tm2 of 1.5 mm or less includes a relatively large core 304. The golf ball 302 has sufficient resilience performance. The golf ball 302 has soft feel at impact. In this respect, the thickness Tm2 is particularly preferably equal to or less than 1.2 mm.

The sum (Tm1+Tm2) of the thickness Tm1 and the thickness Tm2 is preferably equal to or greater than 1.0 mm. In the golf ball 302, the shock by a hit is alleviated. Thus, the golf ball 302 has excellent durability. In this respect, the sum (Tm1+Tm2) is more preferably equal to or greater than 1.3 mm. The sum (Tml+Tm2) is preferably equal to or less than 3.0 mm. The golf ball 302 includes a relatively large core 304. The golf ball 302 has sufficient resilience performance. In this respect, the sum (Tm1+Tm2) is more preferably equal to or less than 2.0 mm.

For forming the outer mid layer 308, known methods such as injection molding, compression molding, and the like can be used.

For the cover 312, a resin composition is suitably used. A preferable base resin of the resin composition is a urethane resin or a urea resin. The principal component of the urethane resin is a polyurethane. The polyurethane is flexible. When the golf ball 302 that includes the cover 312 formed from the resin composition that includes the polyurethane is hit with a short iron, the spin rate is high. The cover 312 formed from this resin composition contributes to controllability upon a shot with a short iron. The polyurethane also contributes to the scuff resistance of the cover 312. Furthermore, the polyurethane can also contribute to excellent feel at impact when the golf ball 302 is hit with a putter or a short iron.

In light of ease of forming the cover 312, a preferable base resin is a thermoplastic polyurethane elastomer. The cover 312 can include the thermoplastic polyurethane elastomer described above for the golf ball 2 of the first embodiment.

According to need, a coloring agent such as titanium dioxide, a filler such as barium sulfate, a dispersant, an antioxidant, an ultraviolet absorber, a light stabilizer, a fluorescent material, a fluorescent brightener, and the like are included in the cover 312 in an adequate amount.

The cover 312 preferably has a Shore D hardness Hc of 48 or less. The golf ball 302 that includes the cover

312 having a hardness Hc of 48 or less has excellent controllability. In this respect, the hardness Hc is more preferably equal to or less than 40 and particularly preferably equal to or less than 32. In light of flight distance upon a shot with a driver, the hardness Hc is preferably equal to or greater than 10 and more preferably equal to or greater than 15. The hardness Hc is measured by the same measurement method as that for the hardness Hm1 and the hardness Hm2.

The hardness Hm1 of the inner mid layer 306 is greater than the hardness Hc of the cover 312. When the golf ball 302 is hit with a driver, the sphere consisting of the core 304, the inner mid layer 306, and the outer mid layer 308 becomes significantly distorted since the head speed is high. The hardness of the envelope layer 316 included in the core 304 linearly changes. Thus, the golf ball 302 is launched at a high speed due to deformation and restoration of the envelope layer 316. The high launch speed achieves a large flight distance. When the golf ball 302 is hit with a short iron, this sphere becomes less distorted since the head speed is low. When the golf ball 302 is hit with a short iron, the behavior of the golf ball 302 mainly depends on the cover 312. Since the cover 312 is flexible, a slip between the golf ball 302 and a clubface is suppressed. Due to the suppression of the slip, a high spin rate is obtained. The high spin rate achieves excellent controllability. In the golf ball 302, both desired flight performance upon a shot with a driver and desired controllability upon a shot with a short iron are achieved. In this respect, the hardness Hc is more preferably less than the hardness Hm2 of the outer mid layer 308.

When the golf ball 302 is hit, the cover 312 including the polyurethane absorbs the shock. This absorption achieves soft feel at impact. Particularly, when the golf ball 302 is hit with a short iron or a putter, the cover 312 achieves excellent feel at impact.

In light of achievement of both desired flight performance and desired controllability, the difference (Hm1-Hc) between the hardness Hm1 of the inner mid layer 306 and the hardness Hc of the cover 312 is preferably equal to or greater than 30 and more preferably equal to or greater than 34. In the golf ball 302 in which the hardness of the inner mid layer 306 and the hardness of the cover 312 meet this condition, a backspin rate is suppressed upon a shot with a driver. In the golf ball 302, a backspin rate upon an approach shot is increased. In light of durability, the difference (Hm1-Hc) is preferably equal to or less than 45 and more preferably equal to or less than 38.

In light of achievement of both desired flight performance and desired controllability, the difference (Hm2-Hc) between the hardness Hm2 of the outer mid layer 308 and the hardness Hc of the cover 312 is preferably equal to or greater than 13 but equal to or less than 30.

In light of flight performance upon a shot with a driver, the cover 312 has a thickness Tc of preferably 0.8 mm or less, more preferably 0.6 mm or less, and particularly preferably 0.5 mm or less. In light of durability and controllability, the thickness Tc is preferably equal to or greater than 0.3 mm and more preferably equal to or greater than 0.5 mm.

For forming the cover 312, known methods such as injection molding, compression molding, and the like can be used. When forming the cover 312, the dimples 317 are formed by pimples formed on the cavity face of a mold.

In light of achievement of both desired flight performance and desired controllability, the principal component of the base resin of the resin composition of the cover 312 is preferably a urethane resin or a urea resin, and the principal component of the base resin of the resin composition of the outer mid layer 308 is preferably an ionomer resin. In other words, the principal component of the base resin of the outer mid layer 308 is different from the principal component of the base resin of the cover 312.

In light of durability, the golf ball 302 that further includes the reinforcing layer 310 between the outer mid layer 308 and the cover 312 is preferred. The reinforcing layer 310 is positioned between the outer mid layer 308 and the cover 312. The reinforcing layer 310 firmly adheres to the outer mid layer 308 and also to the cover 312. The reinforcing layer 310 suppresses separation of the cover 312 from the outer mid layer 308. As described above, the cover 312 of the golf ball 302 is thin. When the golf ball 302 is hit by the edge of a clubface, a wrinkle is likely to occur. The reinforcing layer 310 suppresses occurrence of a wrinkle to improve the durability of the golf ball 302.

As the base polymer of the reinforcing layer 310, a two-component curing type thermosetting resin is suitably used. Specific examples of two-component curing type thermosetting resins include epoxy resins, urethane resins, acrylic resins, polyester resins, and cellulose resins. In light of strength and durability of the reinforcing layer 310, two-component curing type epoxy resins and two-component curing type urethane resins are preferred.

The reinforcing layer 310 can include the two-component curing type epoxy resin described above for the golf ball 2 of the first embodiment. The reinforcing layer 310 can include the two-component curing type urethane resin described above for the golf ball 2 of the first embodiment.

The reinforcing layer 310 may include additives such as a coloring agent (typically, titanium dioxide), a phosphate-based stabilizer, an antioxidant, a light stabilizer, a fluorescent brightener, an ultraviolet absorber, an anti-blocking agent, and the like. The additives may be added to the base material of the two-component curing type thermosetting resin, or may be added to the curing agent of the two-component curing type thermosetting resin.

In light of feel at impact, the golf ball 302 has an amount of compressive deformation Db of preferably 2.0 mm or greater, more preferably 2.2 mm or greater, and particularly preferably 2.3 mm or greater. In light of resilience performance, the amount of compressive deformation Db is preferably equal to or less than 3.2 mm, more preferably equal to or less than 3.0 mm, and particularly preferably equal to or less than 2.8 mm. The amount of compressive deformation

is measured by the method described above for the golf ball 2 of the first embodiment.

Preferred embodiments of the invention are specified in the following paragraphs:

1. A golf ball comprising a core, a mid layer positioned outside the core, an inner cover positioned outside the mid layer, and an outer cover positioned outside the inner cover, wherein
the core comprises a center and an envelope layer positioned outside the center,
the envelope layer is formed by a rubber composition being crosslinked,
the rubber composition includes:

(a) a base rubber;
(b) a co-crosslinking agent;
(c) a crosslinking initiator; and
(d) an acid and/or a salt, wherein the acid and/or salt excludes the co-crosslinking agent (b), the co-crosslinking agent (b) is:

(b1) an α, β-unsaturated carboxylic acid having 3 to 8 carbon atoms; and/or
(b2) a metal salt of an α, β-unsaturated carboxylic acid having 3 to 8 carbon atoms,

a Shore D hardness Hc1 of the inner cover is greater than a Shore D hardness Hc2 of the outer cover, and
a thickness T1 of the inner cover is equal to or greater than 0.1 mm but equal to or less than 0.8 mm.

2. The golf ball according to paragraph 1, wherein an amount of the acid and/or the salt (d) is equal to or greater than 0.5 parts by weight but equal to or less than 45 parts by weight, per 100 parts by weight of the base rubber (a).

3. The golf ball according to paragraph 1, wherein the acid and/or the salt (d) is a carboxylic acid and/or a salt thereof (d1).

4. The golf ball according to paragraph 3, wherein a carbon number of a carboxylic acid component of the carboxylic acid and/or the salt thereof (d1) is equal to or greater than 1 but equal to or less than 30.

5. The golf ball according to paragraph 3, wherein the carboxylic acid and/or the salt thereof (d1) is a fatty acid and/or a salt thereof.

6. The golf ball according to paragraph 1, wherein
a JIS-C hardness H(0) at a central point of the core is equal to or greater than 40 but equal to or less than 70, and
a JIS-C hardness H(100) at a surface of the core is equal to or greater than 78 but equal to or less than 96.

7. The golf ball according to paragraph 6, wherein a difference (H(100)-H(0)) between the hardness H(100) and the hardness H(0) is equal to or greater than 15.

8. The golf ball according to paragraph 1, wherein a Shore D hardness Hm of the mid layer is greater than the hardness Hc1.

9. The golf ball according to paragraph 8, wherein a difference (Hm-Hc1) between the hardness Hm and the hardness Hc1 is equal to or greater than 15.

10. The golf ball according to paragraph 1, wherein a Shore D hardness Hm of the mid layer is greater than the hardness Hc2.

11. The golf ball according to paragraph 10, wherein a difference (Hm-Hc2) between the hardness Hm and the hardness Hc2 is equal to or greater than 20.

12. The golf ball according to paragraph 1, wherein a difference (Hc1-Hc2) between the hardness Hc1 and the hardness Hc2 is equal to or greater than 5.

13. The golf ball according to paragraph 1, wherein a thickness Tm of the mid layer is equal to or greater than 0.5 mm but equal to or less than 1.6 mm.

14. The golf ball according to paragraph 1, wherein a thickness T2 of the outer cover is equal to or greater than 0.1 mm but equal to or less than 0.8 mm.

15. The golf ball according to paragraph 1, wherein a difference (T1-T2) between the thickness T1 and a thickness T2 of the outer cover is equal to or greater than -0.4 mm but equal to or less than 0.4 mm.

16. The golf ball according to paragraph 1, wherein a sum (T1+T2) of the thickness T1 and a thickness T2 of the outer cover is equal to or less than 1.0 mm.

17. The golf ball according to paragraph 1, wherein the rubber composition further includes an organic sulfur compound (e) .

18. The golf ball according to paragraph 17, wherein the organic sulfur compound (e) is at least one member selected from the group consisting of thiophenols, diphenyl disulfides, thionaphthols, thiuram disulfides, and metal salts thereof.

19. The golf ball according to paragraph 17, wherein the rubber composition includes 0.05 parts by weight or greater but 5.0 parts by weight or less of the organic sulfur compound (e) per 100 parts by weight of the base rubber (a).

20. The golf ball according to paragraph 1, wherein
the rubber composition includes the α, β-unsaturated carboxylic acid (b1), and
the rubber composition further includes a metal compound (f).
21. The golf ball according to paragraph 1, wherein
the mid layer is formed from a resin composition,
the inner cover is formed from a resin composition whose base resin is different from a base resin of the mid layer, and
the golf ball further comprises a reinforcing layer between the mid layer and the inner cover.
22. The golf ball according to paragraph 1, wherein a diameter of the center is equal to or greater than 10 mm but equal to or less than 20 mm.
23. The golf ball according to paragraph 1, wherein the acid and/or the salt (d) is a zinc salt of a carboxylic acid.
24. The golf ball according to paragraph 23, wherein the zinc salt of the carboxylic acid is one or more members selected from the group consisting of zinc octoate, zinc laurate, zinc myristate, and zinc stearate.
25. A golf ball comprising a core, a mid layer positioned outside the core, an inner cover positioned outside the mid layer, and an outer cover positioned outside the inner cover, wherein
the core comprises a center and an envelope layer positioned outside the center,
the envelope layer is formed by a rubber composition being crosslinked,
the rubber composition includes:

(a) a base rubber;
(b) a co-crosslinking agent;
(c) a crosslinking initiator; and
(d) an acid and/or a salt, wherein the acid and/or salt excludes the co-crosslinking agent (b), the co-crosslinking agent (b) is:

(b1) an α,β-unsaturated carboxylic acid having 3 to 8 carbon atoms; and/or
(b2) a metal salt of an α, β-unsaturated carboxylic acid having 3 to 8 carbon atoms,

a Shore D hardness Hm of the mid layer is greater than a Shore D hardness Hc1 of the inner cover, and
the Shore D hardness Hc1 of the inner cover is less than a Shore D hardness Hc2 of the outer cover.

26. The golf ball according to paragraph 25, wherein an amount of the acid and/or the salt (d) is equal to or greater than 0.5 parts by weight but equal to or less than 45 parts by weight, per 100 parts by weight of the base rubber (a).
27. The golf ball according to paragraph 25, wherein the acid and/or the salt (d) is a carboxylic acid and/or a salt thereof (d1).
28. The golf ball according to paragraph 27, wherein a carbon number of a carboxylic acid component of the carboxylic acid and/or the salt thereof (d1) is equal to or greater than 1 but equal to or less than 30.
29. The golf ball according to paragraph 27, wherein the carboxylic acid and/or the salt thereof (d1) is a fatty acid and/or a salt thereof.
30. The golf ball according to paragraph 25, wherein
a JIS-C hardness H(0) at a central point of the core is equal to or greater than 40 but equal to or less than 70, and
a JIS-C hardness H(100) at a surface of the core is equal to or greater than 78 but equal to or less than 96.
31. The golf ball according to paragraph 30, wherein a difference (H(100)-H(0)) between the hardness H(100) and the hardness H(0) is equal to or greater than 15.
32. The golf ball according to paragraph 25, wherein a difference (Hm-Hc1) between the Shore D hardness Hm of the mid layer and the hardness Hc1 of the inner cover is equal to or greater than 20.
33. The golf ball according to paragraph 25, wherein a difference (Hc2-Hc1) between the hardness Hc2 of the outer cover and the hardness Hc1 of the inner cover is equal to or greater than 5.
34. The golf ball according to paragraph 25, wherein the hardness Hm is greater than the hardness Hc2.
35. The golf ball according to paragraph 34, wherein a difference (Hm-Hc2) between the hardness Hm and the hardness Hc2 is equal to or greater than 15.
36. The golf ball according to paragraph 25, wherein a thickness Tm of the mid layer is equal to or greater than 0.5 mm but equal to or less than 1.6 mm.
37. The golf ball according to paragraph 25, wherein a thickness T1 of the inner cover is equal to or greater than 0.1 mm but equal to or less than 0.8 mm.
38. The golf ball according to paragraph 25, wherein a thickness T2 of the outer cover is equal to or greater than 0.1 mm but equal to or less than 0.8 mm.
39. The golf ball according to paragraph 25, wherein a difference (T1-T2) between a thickness T1 of the inner cover and a thickness T2 of the outer cover is equal to or greater than -0.4 mm but equal to or less than 0.4 mm.

40. The golf ball according to paragraph 25, wherein a sum (T1+T2) of a thickness T1 of the inner cover and a thickness T2 of the outer cover is equal to or less than 1.0 mm.

41. The golf ball according to paragraph 25, wherein the rubber composition further includes an organic sulfur compound (e).

42. The golf ball according to paragraph 41, wherein the organic sulfur compound (e) is at least one member selected from the group consisting of thiophenols, diphenyl disulfides, thionaphthols, thiuram disulfides, and metal salts thereof.

43. The golf ball according to paragraph 41, wherein the rubber composition includes 0.05 parts by weight or greater but 5.0 parts by weight or less of the organic sulfur compound (e) per 100 parts by weight of the base rubber (a).

44. The golf ball according to paragraph 25, wherein
the rubber composition includes the $\alpha$, $\beta$-unsaturated carboxylic acid (b1), and
the rubber composition further includes a metal compound (f).

45. The golf ball according to paragraph 25, wherein
the mid layer is formed from a resin composition,
the inner cover is formed from a resin composition whose base resin is different from a base resin of the mid layer, and
the golf ball further comprises a reinforcing layer between the mid layer and the inner cover.

46. The golf ball according to paragraph 25, wherein a diameter of the center is equal to or greater than 10 mm but equal to or less than 20 mm.

47. The golf ball according to paragraph 25, wherein the rubber composition includes 15 parts by weight or greater but 50 parts by weight or less of the co-crosslinking agent (b) per 100 parts by weight of the base rubber (a).

48. The golf ball according to paragraph 25, wherein the rubber composition includes 0.2 parts by weight or greater but 5.0 parts by weight or less of the crosslinking initiator (c) per 100 parts by weight of the base rubber (a).

49. The golf ball according to paragraph 25, wherein the acid and/or the salt (d) is a zinc salt of a carboxylic acid.

50. The golf ball according to paragraph 49, wherein the zinc salt of the carboxylic acid is one or more members selected from the group consisting of zinc octoate, zinc laurate, zinc myristate, and zinc stearate.

51. A golf ball comprising a spherical core, an inner mid layer positioned outside the core, an outer mid layer positioned outside the inner mid layer, and a cover positioned outside the outer mid layer, wherein
the core comprises a center and an envelope layer positioned outside the center,
when distances (%) from a boundary between the center and the envelope layer to nine points and JIS-C hardnesses at the nine points, which nine points are obtained by dividing a distance from the boundary between the center and the envelope layer to a surface of the core at intervals of 12.5% of the distance, are plotted in a graph, $R^2$ of a linear approximation curve obtained by a least-square method is equal to or greater than 0.95,
a Shore D hardness Hm1 of the inner mid layer is less than a Shore D hardness Hm2 of the outer mid layer, and
the hardness Hm2 is greater than a Shore D hardness Hc of the cover.

52. The golf ball according to paragraph 51, wherein
a JIS-C hardness Ho at a central point of the core is equal to or greater than 40 but equal to or less than 70, and
a JIS-C hardness Hs at the surface of the core is equal to or greater than 80 but equal to or less than 96.

53. The golf ball according to paragraph 51, wherein
a JIS-C hardness Hs at the surface of the core is greater than a JIS-C hardness Ho at a central point of the core, and
a difference (Hs-Ho) between the hardness Hs and the hardness Ho is equal to or greater than 20.

54. The golf ball according to paragraph 51, wherein
a difference (Hm2-Hm1) between the hardness Hm2 and the hardness Hm1 is equal to or greater than 8, and
a difference (Hm2-Hc) between the hardness Hm2 and the hardness Hc is equal to or greater than 30.

55. The golf ball according to paragraph 51, wherein
a sum (Tm1+Tm2) of a thickness Tm1 of the inner mid layer and a thickness Tm2 of the outer mid layer is equal to or greater than 1.0 mm but equal to or less than 3.0 mm, and
a thickness Tc of the cover is equal to or less than 0.8 mm.

56. The golf ball according to paragraph 51, wherein a diameter of the center is equal to or greater than 10 mm but equal to or less than 25 mm.

57. The golf ball according to paragraph 51, wherein
the envelope layer is obtained by a rubber composition being crosslinked,
the rubber composition includes:

(a) a base rubber;
(b) a co-crosslinking agent;
(c) a crosslinking initiator; and
(d) an acid and/or a salt, wherein the acid and/or salt excludes the co-crosslinking agent (b), and

the co-crosslinking agent (b) is:

(b1) an α, β-unsaturated carboxylic acid having 3 to 8 carbon atoms; and/or
(b2) a metal salt of an α, β-unsaturated carboxylic acid having 3 to 8 carbon atoms.

58. The golf ball according to paragraph 57, wherein the acid and/or the salt (d) is a carboxylic acid and/or a salt thereof (d1).
59. The golf ball according to paragraph 58, wherein a carbon number of a carboxylic acid component of the carboxylic acid and/or the salt thereof (d1) is equal to or greater than 1 but equal to or less than 30.
60. The golf ball according to paragraph 58, wherein the carboxylic acid and/or the salt thereof (d1) is a fatty acid and/or a salt thereof.
61. The golf ball according to paragraph 58, wherein the carboxylic acid and/or the salt thereof (d1) is a zinc salt of a carboxylic acid.
62. The golf ball according to paragraph 58, wherein the carboxylicacidand/orthesaltthereof (d1) is one or more members selected from the group consisting of zinc octoate, zinc laurate, zinc myristate, and zinc stearate.
63. The golf ball according to paragraph 57, wherein the rubber composition includes 100 parts by weight of the base rubber (a) and 1.0 parts by weight or greater but less than 40 parts by weight of the acid and/or the salt (d).
64. The golf ball according to paragraph 57, wherein
the rubber composition includes the α, β-unsaturated carboxylic acid (b1), and
the rubber composition further includes a metal compound (f).
65. The golf ball according to paragraph 57, wherein the rubber composition includes 100 parts by weight of the base rubber (a) and 15 parts by weight or greater but 50 parts by weight or less of the co-crosslinking agent (b).
66. The golf ball according to paragraph 57, wherein the rubber composition includes 100 parts by weight of the base rubber (a) and 0.2 parts by weight or greater but 5 parts by weight or less of the crosslinking initiator (c).
67. The golf ball according to paragraph 57, wherein the rubber composition includes the metal salt (b2) of the α, β-unsaturated carboxylic acid.
68. The golf ball according to paragraph 51, wherein
the outer mid layer is formed from a resin composition,
the cover is formed from another resin composition,
a principal component of a base resin of the resin composition of the outer mid layer is different from a principal component of a base resin of the resin composition of the cover, and
the golf ball further comprises a reinforcing layer between the outer mid layer and the cover.
69. The golf ball according to paragraph 57, wherein the rubber composition further includes an organic sulfur compound (e).
70. The golf ball according to paragraph 69, wherein the organic sulfur compound (e) is at least one member selected from the group consisting of thiophenols, diphenyl disulfides, thionaphthols, thiuram disulfides, and metal salts thereof.
71. The golf ball according to paragraph 69, wherein the organic sulfur compound (e) is 2-thionaphthol.
72. The golf ball according to paragraph 69, wherein the rubber composition includes 100 parts by weight of the base rubber (a) and 0.05 parts by weight or greater but 5.0 parts by weight or less of the organic sulfur compound (e).
73. A golf ball comprising a spherical core, an inner mid layer positioned outside the core, an outer mid layer positioned outside the inner mid layer, and a cover positioned outside the outer mid layer, wherein
the core comprises a center and an envelope layer positioned outside the center,
when distances (%) from a boundary between the center and the envelope layer to nine points and JIS-C hardnesses at the nine points, which nine points are obtained by dividing a distance from the boundary between the center and the envelope layer to a surface of the core at intervals of 12.5% of the distance, are plotted in a graph, $R^2$ of a linear approximation curve obtained by a least-square method is equal to or greater than 0.95,
a Shore D hardness Hm1 of the inner mid layer is greater than a Shore D hardness Hm2 of the outer mid layer,
the hardness Hm1 is greater than a Shore D hardness Hc of the cover, and
a thickness Tm2 of the outer mid layer is equal to or greater than 0.5 mm but equal to or less than 1.5 mm.
74. The golf ball according to paragraph 73, wherein
a JIS-C hardness Ho at a central point of the core is equal to or greater than 40 but equal to or less than 70, and
a JIS-C hardness Hs at the surface of the core is equal to or greater than 80 but equal to or less than 96.
75. The golf ball according to paragraph 73, wherein
a JIS-C hardness Hs at the surface of the core is greater than a JIS-C hardness Ho at a central point of the core, and
a difference (Hs-Ho) between the hardness Hs and the hardness Ho is equal to or greater than 20.
76. The golf ball according to paragraph 73, wherein
a difference (Hm1-Hm2) between the hardness Hm1 and the hardness Hm2 is equal to or greater than 8, and

a difference (Hm1-Hc) between the hardness Hm1 and the hardness Hc is equal to or greater than 30.

77. The golf ball according to paragraph 73, wherein a sum (Tm1+Tm2) of a thickness Tm1 of the inner mid layer and the thickness Tm2 is equal to or greater than 1.0 mm but equal to or less than 3.0 mm, and
a thickness Tc of the cover is equal to or less than 0.8 mm.

78. The golf ball according to paragraph 73, wherein a diameter of the center is equal to or greater than 10 mm but equal to or less than 25 mm.

79. The golf ball according to paragraph 73, wherein
the envelope layer is obtained by a rubber composition being crosslinked,
the rubber composition includes:

(a) a base rubber;
(b) a co-crosslinking agent;
(c) a crosslinking initiator; and
(d) an acid and/or a salt, wherein the acid and/or salt excludes the co-crosslinking agent (b), and

the co-crosslinking agent (b) is:

(b1) an α,β-unsaturated carboxylic acid having 3 to 8 carbon atoms; and/or
(b2) a metal salt of an α,β-unsaturated carboxylic acid having 3 to 8 carbon atoms.

80. The golf ball according to paragraph 79, wherein the acid and/or the salt (d) is a carboxylic acid and/or a salt thereof (d1).

81. The golf ball according to paragraph 80, wherein a carbon number of a carboxylic acid component of the carboxylic acid and/or the salt thereof (d1) is equal to or greater than 1 but equal to or less than 30.

82. The golf ball according to paragraph 80, wherein the carboxylic acid and/or the salt thereof (d1) is a fatty acid and/or a salt thereof.

83. The golf ball according to paragraph 80, wherein the carboxylic acid and/or the salt thereof (d1) is a zinc salt of a carboxylic acid.

84. The golf ball according to paragraph 80, wherein the carboxylic acid and/or the salt thereof (d1) is one or more members selected from the group consisting of zinc octoate, zinc laurate, zinc myristate, and zinc stearate.

85. The golf ball according to paragraph 79, wherein the rubber composition includes 100 parts by weight of the base rubber (a) and 1.0 parts by weight or greater but 40 parts by weight or less of the acid and/or the salt (d).

86. The golf ball according to paragraph 79, wherein
the rubber composition includes the α,β-unsaturated carboxylic acid (b1), and
the rubber composition further includes a metal compound (f).

87. The golf ball according to paragraph 79, wherein the rubber composition includes 100 parts by weight of the base rubber (a) and 15 parts by weight or greater but 50 parts by weight or less of the co-crosslinking agent (b).

88. The golf ball according to paragraph 79, wherein the rubber composition includes 100 parts by weight of the base rubber (a) and 0.2 parts by weight or greater but 5 parts by weight or less of the crosslinking initiator (c).

89. The golf ball according to paragraph 79, wherein the rubber composition includes the metal salt (b2) of the α,β-unsaturated carboxylic acid.

90. The golf ball according to paragraph 73, wherein
the outer mid layer is formed from a resin composition,
the cover is formed from another resin composition,
a principal component of a base resin of the resin composition of the outer mid layer is different from a principal component of a base resin of the resin composition of the cover, and
the golf ball further comprises a reinforcing layer between the outer mid layer and the cover.

91. The golf ball according to paragraph 79, wherein the rubber composition further includes an organic sulfur compound (e).

92. The golf ball according to paragraph 91, wherein the organic sulfur compound (e) is at least one member selected from the group consisting of thiophenols, diphenyl disulfides, thionaphthols, thiuram disulfides, and metal salts thereof.

93. The golf ball according to paragraph 91, wherein the organic sulfur compound (e) is 2-thionaphthol.

94. The golf ball according to paragraph 91, wherein the rubber composition includes 100 parts by weight of the base rubber (a) and 0.05 parts by weight or greater but 5.0 parts by weight or less of the organic sulfur compound (e).

EXAMPLES

[Experiment 1]

[Example I-1]

A rubber composition was obtained by kneading 100 parts by weight of a high-cis polybutadiene (trade name "BR-730", manufactured by JSR Corporation), 23 parts by weight of zinc diacrylate (trade name "Sanceler SR", manufactured by SANSHIN CHEMICAL INDUSTRY CO., LTD.), 5 parts by weight of zinc oxide, an appropriate amount of barium sulfate, 0.3 parts by weight of bis(pentabromophenyl)disulfide, and 0.8 parts by weight of dicumyl peroxide. This rubber composition was placed into a mold including upper and lower mold halves each having a hemispherical cavity, and heated at 170°C for 25 minutes to obtain a center with a diameter of 15 mm.

A rubber composition was obtained by kneading 100 parts by weight of a high-cis polybutadiene (the aforementioned "BR-730"), 35 parts by weight of zinc diacrylate (the aforementioned "Sanceler SR"), 5 parts by weight of zinc oxide, an appropriate amount of barium sulfate, 0.2 parts by weight of 2-thionaphthol, 0.8 parts by weight of dicumyl peroxide, and 5.0 parts by weight of zinc octoate. Half shells were formed from this rubber composition. The center was covered with two of these half shells. The center and the half shells were placed into a mold including upper and lower mold halves each having a hemispherical cavity, and heated at 150°C for 20 minutes to obtain a core with a diameter of 39.5 mm. An envelope layer was formed from the rubber composition. The amount of barium sulfate was adjusted such that the specific gravity of the envelope layer coincides with the specific gravity of the center and the weight of a golf ball is 45.4 g.

A resin composition was obtained by kneading 55 parts by weight of an ionomer resin (the aforementioned "Surlyn 8945"), 45 parts by weight of another ionomer resin (the aforementioned "Himilan AM7329"), and 3 parts by weight of titanium dioxide with a twin-screw kneading extruder. The core was placed into a mold. The resin composition was injected around the core by injection molding to form a mid layer with a thickness of 1.0 mm.

A paint composition (trade name "POLIN 750LE", manufactured by SHINTO PAINT CO., LTD.) including a two-component curing type epoxy resin as a base polymer was prepared. The base material liquid of this paint composition includes 30 parts by weight of a bisphenol A type solid epoxy resin and 70 parts by weight of a solvent. The curing agent liquid of this paint composition includes 40 parts by weight of a modified polyamide amine, 55 parts by weight of a solvent, and 5 parts by weight of titanium dioxide. The weight ratio of the base material liquid to the curing agent liquid is 1/1. This paint composition was applied to the surface of the mid layer with a spray gun, and kept at 23°C for 12 hours to obtain a reinforcing layer with a thickness of 10 $\mu$m.

A resin composition was obtained by kneading 100 parts by weight of a thermoplastic polyurethane elastomer (the aforementioned "Elastollan NY97A"), 0.2 parts by weight of a hindered amine light stabilizer (trade name "TINUVIN 770", manufactured by Ciba Japan K.K.), 4 parts by weight of titanium dioxide, and 0.04 parts by weight of ultramarine blue with a twin-screw kneading extruder. Half shells were formed from this resin composition by compression molding. The sphere consisting of the core, the mid layer, and the reinforcing layer was covered with two of these half shells. The sphere and the half shells were placed into a mold including upper and lower mold halves each having a hemispherical cavity. An inner cover was obtained from the half shells by compression molding. The thickness of the inner cover was 0.3 mm.

A resin composition was obtained by kneading 100 parts by weight of a thermoplastic polyurethane elastomer (the aforementioned "Elastollan NY82A"), 0.2 parts by weight of a hindered amine light stabilizer (trade name "TINUVIN 770", manufactured by Ciba Japan K.K.), 4 parts by weight of titanium dioxide, and 0.04 parts by weight of ultramarine blue with a twin-screw kneading extruder. Half shells were formed from this resin composition by compression molding. The sphere consisting of the core, the mid layer, the reinforcing layer, and the inner cover was covered with two of these half shells. The sphere and the half shells were placed into a final mold that includes upper and lower mold halves each having a hemispherical cavity and that has a large number of pimples on its cavity face. An outer cover was obtained from the half shells by compression molding. The thickness of the outer cover was 0.3 mm. Dimples having a shape that is the inverted shape of the pimples were formed on the outer cover. A clear paint including a two-component curing type polyurethane as a base material was applied to this outer cover to obtain a golf ball of Example I-1 with a diameter of 42.7 mm.

[Examples I-2 to I-23 and Comparative Examples I-1 to 1-5]

Golf balls of Examples I-2 to I-23 and Comparative Examples I-1 to I-5 were obtained in the same manner as Example I-1, except the specifications of the core, the mid layer, the inner cover, and the outer cover were as shown in Tables I-13 to I-18 below. The composition of the core is shown in detail in Tables I-1 to I-4 below. A hardness distribution of the core is shown in Tables I-7 to I-12 below. The composition of the mid layer is shown in detail in Table I-5 below.

The compositions of the inner cover and the outer cover are shown in detail in Table I-6 below.

[Hit with Driver (W#1)]

A driver with a titanium head (trade name "XXIO", manufactured by DUNLOP SPORTS CO. LTD., shaft hardness: S, loft angle: 10.0°) was attached to a swing machine manufactured by True Temper Co. A golf ball was hit under the condition of a head speed of 45 m/sec. The spin rate was measured immediately after the hit. Furthermore, the distance from the launch point to the stop point was measured. The average value of data obtained by 10 measurements is shown in Tables I-13 to I-18 below.

[Hit with Sand Wedge (SW)]

A sand wedge (SW) was attached to the above swing machine. A golf ball was hit under the condition of a head speed of 21 m/sec. The backspin rate was measured immediately after the hit. The average value of data obtained by 10 measurements is shown in Tables I-13 to I-18 below.

[Durability]

A golf ball was kept at 23°C for 12 hours. The above driver was attached to the above swing machine. The golf ball was repeatedly hit under the condition of a head speed of 45 m/sec. The number of hits required to break the golf ball was counted. The average value of numbers of hits obtained by 12 measurements is shown as an index in Tables I-13 to I-18 below.

Table I-1 Compositions of Center and Envelope Layer (parts by weight)

| | A | B | C | D |
|---|---|---|---|---|
| BR-730 | 100 | 100 | 100 | 100 |
| Sanceler SR | 23.0 | 35.0 | 32.0 | 33.0 |
| ZN-DA90S | - | - | - | - |
| Zinc oxide | 5 | 5 | 5 | 5 |
| Barium sulfate | * | * | * | * |
| 2-thionaphthol | - | 0.2 | 0.2 | 0.2 |
| Bis(pentabromophen yl)disulfide | 0.3 | - | - | - |
| 2,6-dichlorothiophenol | - | - | - | - |
| Dicumyl peroxide | 0.8 | 0.8 | 0.8 | 0.8 |
| Zinc octoate | - | 5.0 | - | 0.5 |
| Zinc stearate | - | - | - | - |
| Acid and/or salt | 0.0 | 5.0 | 0.0 | 0.5 |
| * Appropriate amount | | | | |

Table I-2 Compositions of Center and Envelope Layer (parts by weight)

| | E | F | G | H |
|---|---|---|---|---|
| BR-730 | 100 | 100 | 100 | 100 |
| Sanceler SR | 34.0 | 37.0 | 40.0 | 34.0 |
| ZN-DA90S | - | - | - | - |
| Zinc oxide | 5 | 5 | 5 | 5 |
| Barium sulfate | * | * | * | * |
| 2-thionaphthol | 0.2 | 0.2 | 0.2 | 0.2 |

(continued)

| | E | F | G | H |
|---|---|---|---|---|
| Bis(pentabromophen yl)disulfide | - | - | - | - |
| 2,6-dichlorothioph enol | - | - | - | - |
| Dicumyl peroxide | 0.8 | 0.8 | 0.8 | 0.8 |
| Zinc octoate | 2.0 | 12.0 | 45.0 | - |
| Zinc stearate | - | - | - | 5 |
| Acid and/or salt | 2.0 | 12.0 | 45.0 | 5.0 |
| * Appropriate amount | | | | |

Table I-3 Compositions of Center and Envelope Layer (parts by weight)

| | I | J | K | L |
|---|---|---|---|---|
| BR-730 | 100 | 100 | 100 | 100 |
| Sanceler SR | 38.0 | 36.0 | - | 36.0 |
| ZN-DA90S | - | - | 35 | - |
| Zinc oxide | 5 | 5 | 5 | 5 |
| Barium sulfate | * | * | * | * |
| 2-thionaphthol | - | - | 0.2 | 0.2 |
| Bis(pentabromophen yl)disulfide | 0.3 | - | - | - |
| 2,6-dichlorothioph enol | - | 0.1 | - | - |
| Dicumyl peroxide | 0.8 | 0.8 | 0.8 | 0.8 |
| Zinc octoate | 5.0 | 5.0 | 5.0 | 5.0 |
| Zinc stearate | - | - | - | - |
| Acid and/or salt | 5.0 | 5.0 | 5.0 | 5.0 |
| * Appropriate amount | | | | |

Table I-4 Compositions of Center and Envelope Layer (parts by weight)

| | M | N | O |
|---|---|---|---|
| BR-730 | 100 | 100 | 100 |
| Sanceler SR | 34.5 | 35.0 | 36.5 |
| ZN-DA90S | - | - | - |
| Zinc oxide | 5 | 5 | 5 |
| Barium sulfate | * | * | * |
| 2-thionaphthol | 0.2 | 0.2 | 0.2 |
| Bis(pentabromophen yl)disulfide | - | - | - |
| 2,6-dichlorothioph enol | - | - | - |
| Dicumyl peroxide | 0.8 | 0.8 | 0.8 |
| Zinc octoate | 20.0 | 30.0 | 40.0 |
| Zinc stearate | - | - | - |

(continued)

| | M | N | O |
|---|---|---|---|
| Acid and/or salt | 20.0 | 30.0 | 40.0 |
| * Appropriate amount | | | |

The details of the compounds listed in Tables I-1 to I-4 are as follows.

BR-730: a high-cis polybutadiene manufactured by JSR Corporation (cis-1,4-bond content: 96% by weight, 1,2-vinyl bond content: 1.3% by weight, Mooney viscosity ($ML_{1+4}$ (100°C)): 55, molecular weight distribution (Mw/Mn): 3)
Sanceler SR: zinc diacrylate manufactured by SANSHIN CHEMICAL INDUSTRY CO., LTD. (a product coated with 10% by weight of stearic acid)
ZN-DA90S: zinc diacrylate manufactured by Nihon Jyoryu Kogyo Co., Ltd. (a product coated with 10% by weight of zinc stearate)
Zinc oxide: trade name "Ginrei R" manufactured by Toho Zinc Co., Ltd.
Barium sulfate : trade name "Barium Sulfate BD" manufactured by Sakai Chemical Industry Co., Ltd.
2-thionaphthol: a product of Tokyo Chemical Industry Co., Ltd.
Bis(pentabromophenyl)disulfide: a product of Kawaguchi Chemical Industry Co., LTD.
2,6-dichlorothiophenol: a product of Tokyo Chemical Industry Co., Ltd.
Dicumyl peroxide: trade name "Percumyl D" manufactured by NOF Corporation
Zinc octoate: a product of Mitsuwa Chemicals Co., Ltd.
Zinc stearate: a product of Wako Pure Chemical Industries, Ltd.

Table I-5 Composition of Mid Layer (parts by weight)

| | M1 | M2 | M3 |
|---|---|---|---|
| Surlyn 8945 | 55 | 47 | 25 |
| Himilan AM7329 | 45 | 45 | 45 |
| Rabalon T3221C | - | 8 | 30 |
| Titanium dioxide | 3 | 3 | 3 |
| Hardness (Shore D) | 65 | 58 | 47 |

Table I-6 Composition of Cover (parts by weight)

| | C1 | C2 | C3 | C4 | C5 | C6 |
|---|---|---|---|---|---|---|
| Elastollan NY82A | 100 | | | | | 60 |
| Elastollan NY85A | | 50 | | | | 40 |
| Elastollan NY90A | | 50 | | | 5 | |
| Elastollan NY97A | | | 100 | | 95 | |
| Surlyn 8945 | | | | 40 | | |
| Himilan AM7329 | | | | 55 | | |
| Rabalon T3221C | | | | 5 | | |
| TINUVIN 770 | 0.2 | 0.2 | 0.2 | 0.2 | 0.2 | 0.2 |
| Titanium dioxide | 4 | 4 | 4 | 4 | 4 | 4 |
| Ultramarine blue | 0.04 | 0.04 | 0.04 | 0.04 | 0.04 | 0.04 |
| Hardness (Shore D) | 29 | 36 | 47 | 60 | 46 | 30 |

Table I-7 Hardness Distribution of Core

| | Ex. I-1 | Ex. I-2 | Ex. I-3 | Ex. I-4 | Ex. I-5 |
|---|---|---|---|---|---|
| center | A | A | A | A | A |
| envelope layer | B | D | E | F | G |
| H (0) | 62.0 | 62.0 | 62.0 | 62.0 | 62.0 |
| H (12.5) | 63.0 | 63.0 | 63.0 | 63.0 | 63.0 |
| H (25) | 63.5 | 63.5 | 63.5 | 63.5 | 63.5 |
| H (40) | 64.0 | 70.0 | 67.5 | 65.0 | 70.0 |
| H (50) | 68.5 | 71.5 | 70.0 | 68.5 | 72.0 |
| H (62.5) | 71.0 | 73.5 | 73.0 | 72.0 | 74.0 |
| H (75) | 81.0 | 81.5 | 81.5 | 80.5 | 77.5 |
| H (87.5) | 84.5 | 84.0 | 84.0 | 84.0 | 78.5 |
| H (100) | 87.5 | 86.0 | 86.5 | 85.0 | 79.0 |

Table I-8 Hardness Distribution of Core

| | Ex. I-6 | Ex. I-7 | Ex. I-8 | Ex. I-9 | Ex. I-10 |
|---|---|---|---|---|---|
| center | A | A | A | A | A |
| envelope layer | H | I | J | K | L |
| H (0) | 62.0 | 62.0 | 62.0 | 62.0 | 62.0 |
| H (12.5) | 63.0 | 63.0 | 63.0 | 63.0 | 63.0 |
| H (25) | 63.5 | 63.5 | 63.5 | 63.5 | 63.5 |
| H (40) | 64.5 | 65.0 | 64.0 | 63.5 | 64.5 |
| H (50) | 69.0 | 69.0 | 68.5 | 68.0 | 69.0 |
| H (62.5) | 71.0 | 70.0 | 71.0 | 71.0 | 71.5 |
| H (75) | 81.0 | 80.0 | 81.0 | 81.0 | 81.5 |
| H (87.5) | 84.5 | 84.0 | 84.5 | 84.5 | 85.0 |
| H (100) | 87.0 | 87.5 | 87.5 | 87.5 | 88.0 |

Table I-9 Hardness Distribution of Core

| | Ex. I-11 | Ex. I-12 | Ex. I-13 | Ex. I-14 | Ex. I-15 |
|---|---|---|---|---|---|
| center | A | A | A | A | A |
| envelope layer | L | B | B | B | B |
| H (0) | 62.0 | 62.0 | 62.0 | 62.0 | 62.0 |
| H (12.5) | 63.0 | 63.0 | 63.0 | 63.0 | 63.0 |
| H (25) | 63.5 | 63.5 | 63.5 | 63.5 | 63.5 |
| H (40) | 64.5 | 64.0 | 64.0 | 64.0 | 64.0 |
| H (50) | 69.0 | 68.5 | 68.5 | 68.5 | 68.5 |
| H (62.5) | 71.5 | 71.0 | 71.0 | 71.0 | 71.0 |
| H (75) | 81.5 | 81.0 | 81.0 | 81.0 | 81.0 |

(continued)

| | Ex. I-11 | Ex. I-12 | Ex. I-13 | Ex. I-14 | Ex. I-15 |
|---|---|---|---|---|---|
| H (87.5) | 85.0 | 84.5 | 84.5 | 84.5 | 84.5 |
| H (100) | 88.0 | 87.5 | 87.5 | 87.5 | 87.5 |

Table I-10 Hardness Distribution of Core

| | Ex. I-16 | Ex. I-17 | Ex. I-18 | Ex. I-19 | Ex. I-20 |
|---|---|---|---|---|---|
| center | A | A | A | A | A |
| envelope layer | B | B | B | B | B |
| H (0) | 62.0 | 62.0 | 62.0 | 62.0 | 62.0 |
| H (12.5) | 63.0 | 63.0 | 63.0 | 63.0 | 63.0 |
| H (25) | 63.5 | 63.5 | 63.5 | 63.5 | 63.5 |
| H (40) | 64.0 | 64.0 | 64.0 | 64.0 | 64.0 |
| H (50) | 68.5 | 68.5 | 68.5 | 68.5 | 68.5 |
| H (62.5) | 71.0 | 71.0 | 71.0 | 71.0 | 71.0 |
| H (75) | 81.0 | 81.0 | 81.0 | 81.0 | 81.0 |
| H (87.5) | 84.5 | 84.5 | 84.5 | 84.5 | 84.5 |
| H (100) | 87.5 | 87.5 | 87.5 | 87.5 | 87.5 |

Table I-11 Hardness Distribution of Core

| | Ex. I-21 | Ex. I-22 | Ex. I-23 |
|---|---|---|---|
| center | A | A | A |
| envelope layer | M | N | O |
| H (0) | 62.0 | 62.0 | 62.0 |
| H (12.5) | 63.0 | 63.0 | 63.0 |
| H (25) | 63.5 | 63.5 | 63.5 |
| H (40) | 66.0 | 67.0 | 69.0 |
| H (50) | 69.5 | 70.0 | 71.0 |
| H (62.5) | 73.0 | 73.0 | 73.0 |
| H (75) | 79.0 | 77.0 | 76.0 |
| H (87.5) | 82.0 | 80.0 | 79.0 |
| H (100) | 84.0 | 82.0 | 80.5 |

Table I-12 Hardness Distribution of Core

| | Comp. Ex. I-1 | Comp. Ex. I-2 | Comp. Ex. I-3 | Comp. Ex. I-4 | Comp. Ex. I-5 |
|---|---|---|---|---|---|
| center | A | A | A | A | A |
| envelope layer | B | B | B | C | B |
| H (0) | 62.0 | 62.0 | 62.0 | 62.0 | 62.0 |
| H (12.5) | 63.0 | 63.0 | 63.0 | 63.0 | 63.0 |

(continued)

| | Comp. Ex. I-1 | Comp. Ex. I-2 | Comp. Ex. I-3 | Comp. Ex. I-4 | Comp. Ex. I-5 |
|---|---|---|---|---|---|
| H (25) | 63.5 | 63.5 | 63.5 | 63.5 | 63.5 |
| H (40) | 64.0 | 64.0 | 64.0 | 70.5 | 64.0 |
| H (50) | 68.5 | 68.5 | 68.5 | 71.5 | 68.5 |
| H (62.5) | 71.0 | 71.0 | 71.0 | 73.5 | 71.0 |
| H (75) | 81.0 | 81.0 | 81.0 | 82.0 | 81.0 |
| H (87.5) | 84.5 | 84.5 | 84.5 | 84.0 | 84.5 |
| H (100) | 87.5 | 87.5 | 87.5 | 86.0 | 87.5 |

Table I-13 Results of Evaluation

| | | Ex. I-1 | Ex. I-2 | Ex. I-3 | Ex. I-4 | Ex. I-5 |
|---|---|---|---|---|---|---|
| Center | Diameter (mm) | 15.0 | 15.0 | 15.0 | 15.0 | 15.0 |
| Envelop e layer | Acid /salt (phr) | 5.0 | 0.5 | 2.0 | 12.0 | 45.0 |
| | H(100)-H(40) | 23.5 | 16.0 | 19.0 | 20.0 | 9.0 |
| | $R^2$ | 0.97 | 0.95 | 0.96 | 0.96 | 0.95 |
| | Gradient $\alpha$ | 0.41 | 0.30 | 0.34 | 0.36 | 0.16 |
| Core | Diameter (mm) | 39.5 | 39.5 | 39.5 | 39.5 | 39.5 |
| | H(100)-H(0) | 25.5 | 24.0 | 24.5 | 23.0 | 17.0 |
| Mid layer | Composition | M1 | M1 | M1 | M1 | M1 |
| | Hm (Shore D) | 65.0 | 65.0 | 65.0 | 65.0 | 65.0 |
| | Diameter (mm) | 41.5 | 41.5 | 41.5 | 41.5 | 41.5 |
| | Tm (mm) | 1.0 | 1.0 | 1.0 | 1.0 | 1.0 |
| Inner cover | Composition | C3 | C3 | C3 | C3 | C3 |
| | Hc1 (Shore D) | 47.0 | 47.0 | 47.0 | 47.0 | 47.0 |
| | T1 (mm) | 0.3 | 0.3 | 0.3 | 0.3 | 0.3 |
| Outer cover | Composition | C1 | C1 | C1 | C1 | C1 |
| | Hc2 (Shore D) | 29.0 | 29.0 | 29.0 | 29.0 | 29.0 |
| | T2 (mm) | 0.3 | 0.3 | 0.3 | 0.3 | 0.3 |
| Ball | Hm-Hc1 | 18.0 | 18.0 | 18.0 | 18.0 | 18.0 |
| | Hm-Hc2 | 36.0 | 36.0 | 36.0 | 36.0 | 36.0 |
| | Hc1-Hc2 | 18.0 | 18.0 | 18.0 | 18.0 | 18.0 |
| | T1+T2 (mm) | 0.6 | 0.6 | 0.6 | 0.6 | 0.6 |
| | T1-T2 (mm) | 0.0 | 0.0 | 0.0 | 0.0 | 0.0 |
| | Db (mm) | 2.6 | 2.6 | 2.6 | 2.6 | 2.6 |
| W#1 spin (rpm) | | 3000 | 3150 | 3050 | 3050 | 3400 |
| W#1 flight (m) | | 242 | 237 | 241 | 241 | 234 |
| SW spin (rpm) | | 6850 | 6900 | 6850 | 6850 | 6950 |
| Durability | | 112 | 102 | 108 | 107 | 103 |

Table I-14 Results of Evaluation

| | | Ex. I-6 | Ex. I-7 | Ex. I-8 | Ex. I-9 | Ex. I-10 |
|---|---|---|---|---|---|---|
| Center | Diameter (mm) | 15.0 | 15.0 | 15.0 | 15.0 | 15.0 |
| Envelope layer | Acid /salt (phr) | 5.0 | 5.0 | 5.0 | 5.0 | 5.0 |
| | H(100)-H(40) | 22.5 | 22.5 | 23.5 | 24.0 | 23.5 |
| | $R^2$ | 0.96 | 0.96 | 0.97 | 0.97 | 0.97 |
| | Gradient $\alpha$ | 0.40 | 0.39 | 0.41 | 0.42 | 0.41 |
| Core | Diameter (mm) | 39.5 | 39.5 | 39.5 | 39.5 | 39.5 |
| | H(100)-H(0) | 25.0 | 25.5 | 25.5 | 25.5 | 26.0 |
| Mid layer | Composition | M1 | M1 | M1 | M1 | M2 |
| | Hm (Shore D) | 65.0 | 65.0 | 65.0 | 65.0 | 58.0 |
| | Diameter (mm) | 41.5 | 41.5 | 41.5 | 41.5 | 41.5 |
| | Tm (mm) | 1.0 | 1.0 | 1.0 | 1.0 | 1.0 |
| Inner cover | Composition | C3 | C3 | C3 | C3 | C3 |
| | Hc1 (Shore D) | 47.0 | 47.0 | 47.0 | 47.0 | 47.0 |
| | T1 (mm) | 0.3 | 0.3 | 0.3 | 0.3 | 0.3 |
| Outer cover | Composition | C1 | C1 | C1 | C1 | C1 |
| | Hc2 (Shore D) | 29.0 | 29.0 | 29.0 | 29.0 | 29.0 |
| | T2 (mm) | 0.3 | 0.3 | 0.3 | 0.3 | 0.3 |
| Ball | Hm-Hc1 | 18.0 | 18.0 | 18.0 | 18.0 | 11.0 |
| | Hm-Hc2 | 36.0 | 36.0 | 36.0 | 36.0 | 29.0 |
| | Hc1-Hc2 | 18.0 | 18.0 | 18.0 | 18.0 | 18.0 |
| | T1+T2 (mm) | 0.6 | 0.6 | 0.6 | 0.6 | 0.6 |
| | T1-T2 (mm) | 0.0 | 0.0 | 0.0 | 0.0 | 0.0 |
| | Db (mm) | 2.6 | 2.6 | 2.6 | 2.6 | 2.6 |
| W#1 spin(rpm) | | 3050 | 3050 | 3000 | 2950 | 3050 |
| W#1 flight (m) | | 241 | 241 | 242 | 243 | 241 |
| SW spin (rpm) | | 6850 | 6850 | 6850 | 6850 | 7000 |
| Durability | | 111 | 111 | 112 | 114 | 120 |

Table I-15 Results of Evaluation

| | | Ex. I-11 | Ex. I-12 | Ex. I-13 | Ex. I-14 | Ex. I-15 |
|---|---|---|---|---|---|---|
| Center | Diameter (mm) | 15.0 | 15.0 | 15.0 | 15.0 | 15.0 |
| Envelope layer | Acid /salt (phr) | 5.0 | 5.0 | 5.0 | 5.0 | 5.0 |
| | H(100)-H(40) | 23.5 | 23.5 | 23.5 | 23.5 | 23.5 |
| | $R^2$ | 0.97 | 0.97 | 0.97 | 0.97 | 0.97 |
| | Gradient $\alpha$ | 0.41 | 0.41 | 0.41 | 0.41 | 0.41 |
| Core | Diameter (mm) | 39.5 | 39.1 | 39.1 | 39.1 | 39.5 |
| | H(100)-H(0) | 26.0 | 25.5 | 25.5 | 25.5 | 25.5 |

(continued)

| | | Ex. I-11 | Ex. I-12 | Ex. I-13 | Ex. I-14 | Ex. I-15 |
|---|---|---|---|---|---|---|
| Mid layer | Composition | M3 | M1 | M1 | M1 | M1 |
| | Hm (Shore D) | 47.0 | 65.0 | 65.0 | 65.0 | 65.0 |
| | Diameter (mm) | 41.5 | 41.5 | 41.5 | 41.5 | 41.5 |
| | Tm (mm) | 1.0 | 1.0 | 1.0 | 1.0 | 1.0 |
| Inner cover | Composition | C3 | C3 | C3 | C3 | C3 |
| | Hc1 (Shore D) | 47.0 | 47.0 | 47.0 | 47.0 | 47.0 |
| | T1 (mm) | 0.3 | 0.4 | 0.5 | 0.3 | 0.3 |
| Outer cover | Composition | C1 | C1 | C1 | C1 | C5 |
| | Hc2 (Shore D) | 29.0 | 29.0 | 29.0 | 29.0 | 46.0 |
| | T2 (mm) | 0.3 | 0.4 | 0.3 | 0.5 | 0.3 |
| Ball | Hm-Hc1 | 0.0 | 18.0 | 18.0 | 18.0 | 18.0 |
| | Hm-Hc2 | 18.0 | 36.0 | 36.0 | 36.0 | 19.0 |
| | Hc1-Hc2 | 18.0 | 18.0 | 18.0 | 18.0 | 1.0 |
| | T1+T2 (mm) | 0.6 | 0.8 | 0.8 | 0.8 | 0.6 |
| | T1-T2 (mm) | 0.0 | 0.0 | 0.2 | -0.2 | 0.0 |
| | Db (mm) | 2.7 | 2.6 | 2.6 | 2.6 | 2.6 |
| W#1 spin (rpm) | | 3100 | 3100 | 3050 | 3150 | 3000 |
| W#1 flight (m) | | 239 | 240 | 242 | 242 | 242 |
| SW spin (rpm) | | 7050 | 6950 | 6900 | 7000 | 6700 |
| Durability | | 130 | 115 | 112 | 112 | 112 |

Table I-16 Results of Evaluation

| | | Ex. I-16 | Ex. I-17 | Ex. I-18 | Ex. I-19 | Ex. I-20 |
|---|---|---|---|---|---|---|
| Center | Diameter (mm) | 15.0 | 15.0 | 15.0 | 15.0 | 15.0 |
| Envelope layer | Acid /salt (phr) | 5.0 | 5.0 | 5.0 | 5.0 | 5.0 |
| | H(100)-H(40) | 23.5 | 23.5 | 23.5 | 23.5 | 23.5 |
| | $R^2$ | 0.97 | 0.97 | 0.97 | 0.97 | 0.97 |
| | Gradient $\alpha$ | 0.41 | 0.41 | 0.41 | 0.41 | 0.41 |
| Core | Diameter (mm) | 39.5 | 38.3 | 40.3 | 39.1 | 39.1 |
| | H(100)-H(0) | 25.5 | 25.5 | 25.5 | 25.5 | 25.5 |
| Mid layer | Composition | M1 | M1 | M1 | M1 | M1 |
| | Hardness Hm (Shore D) | 65.0 | 65.0 | 65.0 | 65.0 | 65.0 |
| | Diameter (mm) | 41.5 | 40.3 | 42.3 | 41.1 | 41.1 |
| | Tm (mm) | 1.0 | 1.0 | 1.0 | 1.0 | 1.0 |
| Inner cover | Composition | C6 | C3 | C3 | C3 | C3 |
| | Hc1 (Shore D) | 30.0 | 47.0 | 47.0 | 47.0 | 47.0 |
| | T1 (mm) | 0.3 | 0.6 | 0.1 | 0.65 | 0.15 |

(continued)

| | | Ex. I-16 | Ex. I-17 | Ex. I-18 | Ex. I-19 | Ex. I-20 |
|---|---|---|---|---|---|---|
| Outer cover | Composition | C1 | C1 | C1 | C1 | C1 |
| | Hc2 (Shore D) | 29.0 | 29.0 | 29.0 | 29.0 | 29.0 |
| | T2 (mm) | 0.3 | 0.6 | 0.1 | 0.15 | 0.65 |
| Ball | Hm-Hc1 | 35.0 | 18.0 | 18.0 | 18.0 | 18.0 |
| | Hm-Hc2 | 36.0 | 36.0 | 36.0 | 36.0 | 36.0 |
| | Hc1-Hc2 | 1.0 | 18.0 | 18.0 | 18.0 | 18.0 |
| | T1+T2 (mm) | 0.6 | 1.2 | 0.2 | 0.8 | 0.8 |
| | T1-T2 (mm) | 0.0 | 0.0 | 0.0 | 0.5 | -0.5 |
| | Db (mm) | 2.6 | 2.6 | 2.6 | 2.6 | 2.6 |
| W#1 spin (rpm) | | 3200 | 3250 | 2850 | 3100 | 3100 |
| W#1 flight (m) | | 238 | 237 | 244 | 240 | 240 |
| SW spin (rpm) | | 6850 | 7050 | 6550 | 6950 | 6950 |
| Durability | | 112 | 120 | 100 | 115 | 115 |

Table I-17 Results of Evaluation

| | | Ex. I-21 | Ex. I-22 | Ex. I-23 |
|---|---|---|---|---|
| Center | Diameter (mm) | 15.0 | 15.0 | 15.0 |
| Envelope layer | Acid /salt (phr) | 20.0 | 30.0 | 40.0 |
| | H(100)-H(40) | 18.0 | 15.0 | 11.5 |
| | $R^2$ | 0.98 | 0.99 | 0.99 |
| | Gradient $\alpha$ | 0.31 | 0.26 | 0.20 |
| Core | Diameter (mm) | 39.5 | 39.5 | 39.5 |
| | H(100)-H(0) | 22.0 | 20.0 | 18.5 |
| Mid layer | Composition | M1 | M1 | M1 |
| | Hm (Shore D) | 65.0 | 65.0 | 65.0 |
| | Diameter (mm) | 41.5 | 41.5 | 41.5 |
| | Tm (mm) | 1.0 | 1.0 | 1.0 |
| Inner cover | Composition | C3 | C3 | C3 |
| | Hc1 (Shore D) | 47.0 | 47.0 | 47.0 |
| | T1 (mm) | 0.3 | 0.3 | 0.3 |
| Outer cover | Composition | C1 | C1 | C1 |
| | Hc2 (Shore D) | 29.0 | 29.0 | 29.0 |
| | T2 (mm) | 0.3 | 0.3 | 0.3 |

(continued)

| | | Ex. I-21 | Ex. I-22 | Ex. I-23 |
|---|---|---|---|---|
| Ball | Hm-Hc1 | 18.0 | 18.0 | 18.0 |
| | Hm-Hc2 | 36.0 | 36.0 | 36.0 |
| | Hc1-Hc2 | 18.0 | 18.0 | 18.0 |
| | T1+T2 (mm) | 0.6 | 0.6 | 0.6 |
| | T1-T2 (mm) | 0.0 | 0.0 | 0.0 |
| | Db (mm) | 2.6 | 2.6 | 2.6 |
| W#1 spin(rpm) | | 3100 | 3200 | 3350 |
| W#1 flight (m) | | 240 | 238 | 236 |
| SW spin (rpm) | | 6910 | 6920 | 6930 |
| Durability | | 110 | 106 | 105 |

Table I-18 Results of Evaluation

| | | Comp. Ex. I-1 | Comp. Ex. I-2 | Comp. Ex. I-3 | Comp. Ex. I-4 | Comp. Ex. I-5 |
|---|---|---|---|---|---|---|
| Center | Diameter (mm) | 15.0 | 15.0 | 15.0 | 15.0 | 15.0 |
| Envelope layer | Acid /salt (phr) | 5.0 | 5.0 | 5.0 | 0.0 | 5.0 |
| | H(100)-H(40) | 23.5 | 23.5 | 23.5 | 15.5 | 23.5 |
| | $R^2$ | 0.97 | 0.97 | 0.97 | 0.94 | 0.97 |
| | Gradient $\alpha$ | 0.41 | 0.41 | 0.41 | 0.29 | 0.41 |
| Core | Diameter (mm) | 39.5 | 39.5 | 39.5 | 39.5 | 39.5 |
| | H(100)-H(0) | 25.5 | 25.5 | 25.5 | 24.0 | 25.5 |
| Mid layer | Composition | M1 | M1 | M1 | M1 | M1 |
| | Hm (Shore D) | 65.0 | 65.0 | 65.0 | 65.0 | 65.0 |
| | Diameter (mm) | 41.5 | 41.5 | 41.5 | 41.5 | 41.5 |
| | Tm (mm) | 1.0 | 1.0 | 1.0 | 1.0 | 1.0 |
| Inner cover | Composition | C1 | C2 | C3 | C3 | C1 |
| | Hc1 (Shore D) | 29.0 | 36.0 | 47.0 | 47.0 | 29.0 |
| | T1 (mm) | 0.6 | 0.6 | 0.6 | 0.3 | 0.3 |
| Outer cover | Composition | - | - | - | C1 | C3 |
| | Hc2 (Shore D) | - | - | - | 29.0 | 47.0 |
| | T2 (mm) | - | - | - | 0.3 | 0.3 |
| Ball | Hm-Hc1 | - | - | - | 18.0 | 36.0 |
| | Hm-Hc2 | - | - | - | 36.0 | 18.0 |
| | Hc1-Hc2 | - | - | - | 18.0 | -18.0 |
| | T1+T2 (mm) | - | - | - | 0.6 | 0.6 |
| | T1-T2 (mm) | - | - | - | 0.0 | 0.0 |
| | Db (mm) | 2.6 | 2.6 | 2.6 | 2.6 | 2.6 |
| W#1 spin (rpm) | | 3150 | 3050 | 2950 | 3200 | 2950 |

(continued)

| | Comp. Ex. I-1 | Comp. Ex. I-2 | Comp. Ex. I-3 | Comp. Ex. I-4 | Comp. Ex. I-5 |
|---|---|---|---|---|---|
| W#1 flight (m) | 240 | 240 | 243 | 235 | 243 |
| SW spin (rpm) | 6900 | 6750 | 6700 | 6900 | 6650 |
| Durability | 112 | 112 | 112 | 100 | 112 |

As shown in Tables I-13 to I-18, the golf balls according to Examples are excellent in various performance characteristics. From the results of evaluation, advantages of the present invention are clear.

[Experiment 2]

[Example II-1]

A rubber composition was obtained by kneading 100 parts by weight of a high-cis polybutadiene (trade name "BR-730", manufactured by JSR Corporation), 23 parts by weight of zinc diacrylate (trade name "Sanceler SR", manufactured by SANSHIN CHEMICAL INDUSTRY CO., LTD.), 5 parts by weight of zinc oxide, an appropriate amount of barium sulfate, 0.3 parts by weight of bis(pentabromophenyl)disulfide, and 0.8 parts by weight of dicumyl peroxide. This rubber composition was placed into a mold including upper and lower mold halves each having a hemispherical cavity, and heated at 170 °C for 25 minutes to obtain a center with a diameter of 15.0 mm.

A rubber composition was obtained by kneading 100 parts by weight of a high-cis polybutadiene (the aforementioned "BR-730"), 35 parts by weight of zinc diacrylate (the aforementioned "Sanceler SR"), 5 parts by weight of zinc oxide, an appropriate amount of barium sulfate, 0.2 parts by weight of 2-thionaphthol, 0.8 parts by weight of dicumyl peroxide, and 5.0 parts by weight of zinc octoate. Half shells were formed from this rubber composition. The center was covered with two of these half shells. The center and the half shells were placed into a mold including upper and lower mold halves each having a hemispherical cavity, and heated at 150°C for 20 minutes to obtain a core with a diameter of 39.5 mm. An envelope layer was formed from the rubber composition. The amount of barium sulfate was adjusted such that the specific gravity of the envelope layer coincides with the specific gravity of the center and the weight of a golf ball is 45.4 g.

A resin composition was obtained by kneading 55 parts by weight of an ionomer resin (the aforementioned "Surlyn 8945"), 45 parts by weight of another ionomer resin (the aforementioned "Himilan AM7329"), and 3 parts by weight of titanium dioxide with a twin-screw kneading extruder. The core was placed into a mold. The resin composition was injected around the core by injection molding to form a mid layer with a thickness of 1.0 mm.

A paint composition (trade name "POLIN 750LE", manufactured by SHINTO PAINT CO., LTD.) including a two-component curing type epoxy resin as a base polymer was prepared. The base material liquid of this paint composition includes 30 parts by weight of a bisphenol A type solid epoxy resin and 70 parts by weight of a solvent. The curing agent liquid of this paint composition includes 40 parts by weight of a modified polyamide amine, 55 parts by weight of a solvent, and 5 parts by weight of titanium dioxide. The weight ratio of the base material liquid to the curing agent liquid is 1/1. This paint composition was applied to the surface of the mid layer with a spray gun, and kept at 23°C for 12 hours to obtain a reinforcing layer with a thickness of 10 μm.

A resin composition was obtained by kneading 100 parts by weight of a thermoplastic polyurethane elastomer (the aforementioned "Elastollan NY82A"), 0.2 parts by weight of a hindered amine light stabilizer (trade name "TINUVIN 770", manufactured by Ciba Japan K.K.), 4 parts by weight of titanium dioxide, and 0.04 parts by weight of ultramarine blue with a twin-screw kneading extruder. Half shells were formed from this resin composition by compression molding. The sphere consisting of the core, the mid layer, and the reinforcing layer was covered with two of these half shells. The sphere and the half shells were placed into a mold including upper and lower mold halves each having a hemispherical cavity. An inner cover was obtained from the half shells by compression molding. The thickness of the inner cover was 0.3 mm.

A resin composition was obtained by kneading 100 parts by weight of a thermoplastic polyurethane elastomer (the aforementioned "Elastollan NY97A"), 0.2 parts by weight of a hindered amine light stabilizer (trade name "TINUVIN 770", manufactured by Ciba Japan K.K.), 4 parts by weight of titanium dioxide, and 0.04 parts by weight of ultramarine blue with a twin-screw kneading extruder. Half shells were formed from this resin composition by compression molding. The sphere consisting of the core, the mid layer, the reinforcing layer, and the inner cover was covered with two of these half shells. The sphere and the half shells were placed into a final mold that includes upper and lower mold halves each having a hemispherical cavity and that has a large number of pimples on its cavity face. An outer cover was obtained from the half shells by compression molding. The thickness of the outer cover was 0.3 mm. Dimples having a shape

that is the inverted shape of the pimples were formed on the outer cover. A clear paint including a two-component curing type polyurethane as a base material was applied to this outer cover to obtain a golf ball of Example II-1 with a diameter of 42.7 mm.

[Examples II-2 to II-23 and Comparative Examples II-1 to II-8]

Golf balls of Examples II-2 to II-23 and Comparative Examples II-1 to II-8 were obtained in the same manner as Example II-1, except the specifications of the core, the mid layer, the inner cover, and the outer cover were as shown in Tables II-15 to II-22 below. The composition of the core is shown in detail in Tables II-1 to II-4 below. A hardness distribution of the core is shown in Tables II-7 to II-14 below. The composition of the mid layer is shown in detail in Table II-5 below. The compositions of the inner cover and the outer cover are shown in detail in Table II-6 below.

[Hit with Driver (W#1)]

A driver with a titanium head (trade name "XXIO", manufactured by DUNLOP SPORTS CO. LTD., shaft hardness: S, loft angle: 10.0°) was attached to a swing machine manufactured by True Temper Co. A golf ball was hit under the condition of a head speed of 45 m/sec. The spin rate was measured immediately after the hit. Furthermore, the distance from the launch point to the stop point was measured. The average value of data obtained by 10 measurements is shown in Tables II-15 to II-22 below.

[Hit with Sand Wedge (SW)]

A sand wedge (SW) was attached to the above swing machine. A golf ball was hit under the condition of a head speed of 21 m/sec. The backspin rate was measured immediately after the hit. The average value of data obtained by 10 measurements is shown in Tables II-15 to II-22 below.

[Durability]

A golf ball was kept at 23°C for 12 hours. The above driver was attached to the above swing machine. The golf ball was repeatedly hit under the condition of a head speed of 45 m/sec. The number of hits required to break the golf ball was counted. The average value of numbers of hits obtained by 12 measurements is shown as an index in Tables II-15 to II-22 below.

Table II-1 Compositions of Center and Envelope Layer (parts by weight)

| | A | B | C | D |
|---|---|---|---|---|
| BR-730 | 100 | 100 | 100 | 100 |
| Sanceler SR | 23.0 | 35.0 | 32.0 | 33.0 |
| ZN-DA90S | - | - | - | - |
| Zinc oxide | 5 | 5 | 5 | 5 |
| Barium sulfate | * | * | * | * |
| 2-thionaphthol | - | 0.2 | 0.2 | 0.2 |
| Bis(pentabromophen yl)disulfide | 0.3 | - | - | - |
| 2,6-dichlorothioph enol | - | - | - | - |
| Dicumyl peroxide | 0.8 | 0.8 | 0.8 | 0.8 |
| Zinc octoate | - | 5.0 | - | 0.5 |
| Zinc stearate | - | - | - | - |
| Acid and/or salt | 0.0 | 5.0 | 0.0 | 0.5 |
| * Appropriate amount | | | | |

Table II-2 Compositions of Center and Envelope Layer (parts by weight)

| | E | F | G | H |
|---|---|---|---|---|
| BR-730 | 100 | 100 | 100 | 100 |
| Sanceler SR | 34.0 | 37.0 | 40.0 | 34.0 |
| ZN-DA90S | - | - | - | - |
| Zinc oxide | 5 | 5 | 5 | 5 |
| Barium sulfate | * | * | * | * |
| 2-thionaphthol | 0.2 | 0.2 | 0.2 | 0.2 |
| Bis(pentabromophen yl)disulfide | - | - | - | - |
| 2,6-dichlorothioph enol | - | - | - | - |
| Dicumyl peroxide | 0.8 | 0.8 | 0.8 | 0.8 |
| Zinc octoate | 2.0 | 12.0 | 45.0 | - |
| Zinc stearate | - | - | - | 5 |
| Acid and/or salt | 2.0 | 12.0 | 45.0 | 5.0 |
| * Appropriate amount | | | | |

Table II-3 Compositions of Center and Envelope Layer (parts by weight)

| | I | J | K | L |
|---|---|---|---|---|
| BR-730 | 100 | 100 | 100 | 100 |
| Sanceler SR | 38.0 | 36.0 | - | 36.0 |
| ZN-DA90S | - | - | 35 | - |
| Zinc oxide | 5 | 5 | 5 | 5 |
| Barium sulfate | * | * | * | * |
| 2-thionaphthol | - | - | 0.2 | 0.2 |
| Bis(pentabromophen yl)disulfide | 0.3 | - | - | - |
| 2,6-dichlorothioph enol | - | 0.1 | - | - |
| Dicumyl peroxide | 0.8 | 0.8 | 0.8 | 0.8 |
| Zinc octoate | 5.0 | 5.0 | 5.0 | 5.0 |
| Zinc stearate | - | - | - | - |
| Acid and/or salt | 5.0 | 5.0 | 5.0 | 5.0 |
| * Appropriate amount | | | | |

Table II-4 Compositions of Center and Envelope Layer (parts by weight)

| | M | N | O |
|---|---|---|---|
| BR-730 | 100 | 100 | 100 |
| Sanceler SR | 34.5 | 35.0 | 36.5 |
| ZN-DA90S | - | - | - |
| Zinc oxide | 5 | 5 | 5 |
| Barium sulfate | * | * | * |

(continued)

| | M | N | O |
|---|---|---|---|
| 2-thionaphthol | 0.2 | 0.2 | 0.2 |
| Bis(pentabromophen yl)disulfide | - | - | - |
| 2,6-dichlorothioph enol | - | - | - |
| Dicumyl peroxide | 0.8 | 0.8 | 0.8 |
| Zinc octoate | 20.0 | 30.0 | 40.0 |
| Zinc stearate | - | - | - |
| Acid and/or salt | 20.0 | 30.0 | 40.0 |
| * Appropriate amount | | | |

The details of the compounds listed in Tables II-1 to II-4 are as follows.

BR-730: a high-cis polybutadiene manufactured by JSR Corporation (cis-1,4-bond content: 96% by weight, 1,2-vinyl bond content: 1.3% by weight, Mooney viscosity ($ML_{1+4}$(100°C)): 55, molecular weight distribution (Mw/Mn): 3)
Sanceler SR: zinc diacrylate manufactured by SANSHIN CHEMICAL INDUSTRY CO., LTD. (a product coated with 10% by weight of stearic acid)
ZN-DA90S: zinc diacrylate manufactured by Nihon Jyoryu Kogyo Co., Ltd. (a product coated with 10% by weight of zinc stearate)
Zinc oxide: trade name "Ginrei R" manufactured by Toho Zinc Co., Ltd.
Barium sulfate : trade name "Barium Sulfate BD" manufactured by Sakai Chemical Industry Co., Ltd.
2-thionaphthol: a product of Tokyo Chemical Industry Co., Ltd.
Bis(pentabromophenyl)disulfide: a product of Kawaguchi Chemical Industry Co., LTD.
2,6-dichlorothiophenol: a product of Tokyo Chemical Industry Co., Ltd.
Dicumyl peroxide: trade name "Percumyl D" manufactured by NOF Corporation
Zinc octoate: a product of Mitsuwa Chemicals Co., Ltd.
Zinc stearate: a product of Wako Pure Chemical Industries, Ltd.

Table II-5 Composition of Mid Layer (parts by weight)

| | M1 | M2 | M3 | M4 |
|---|---|---|---|---|
| Surlyn 8945 | 55 | 47 | 25 | 15 |
| Himilan AM7329 | 45 | 45 | 45 | 45 |
| Rabalon T3221C | - | 8 | 30 | 40 |
| Titanium dioxide | 3 | 3 | 3 | 3 |
| Hardness (Shore D) | 65 | 58 | 47 | 40 |

Table II-6 Composition of Cover (parts by weight)

| | C1 | C2 | C3 | C4 | C5 | C6 |
|---|---|---|---|---|---|---|
| Elastollan NY82A | 100 | | | | | 60 |
| Elastollan NY85A | | 50 | | | | 40 |
| Elastollan NY90A | | 50 | | | 5 | |
| Elastollan NY97A | | | 100 | | 95 | |
| Surlyn 8945 | | | | 40 | | |
| Himilan AM7329 | | | | 55 | | |

(continued)

| | C1 | C2 | C3 | C4 | C5 | C6 |
|---|---|---|---|---|---|---|
| Rabalon T3221C | | | | 5 | | |
| TINUVIN 770 | 0.2 | 0.2 | 0.2 | 0.2 | 0.2 | 0.2 |
| Titanium dioxide | 4 | 4 | 4 | 4 | 4 | 4 |
| Ultramarine blue | 0.04 | 0.04 | 0.04 | 0.04 | 0.04 | 0.04 |
| Hardness (Shore D) | 29 | 36 | 47 | 60 | 46 | 30 |

Table II-7 Hardness Distribution of Core

| | Ex. II-1 | Comp. Ex. II-1 | Comp. Ex. II-2 | Comp. Ex. II-3 |
|---|---|---|---|---|
| center | A | A | A | A |
| envelope layer | B | B | B | B |
| H (0) | 62.0 | 62.0 | 62.0 | 62.0 |
| H (12.5) | 63.0 | 63.0 | 63.0 | 63.0 |
| H (25) | 63.5 | 63.5 | 63.5 | 63.5 |
| H (40) | 64.0 | 64.0 | 64.0 | 64.0 |
| H (50) | 68.5 | 68.5 | 68.5 | 68.5 |
| H (62.5) | 71.0 | 71.0 | 71.0 | 71.0 |
| H (75) | 81.0 | 81.0 | 81.0 | 81.0 |
| H (87.5) | 84.5 | 84.5 | 84.5 | 84.5 |
| H (100) | 87.5 | 87.5 | 87.5 | 87.5 |

Table II-8 Hardness Distribution of Core

| | Ex. II-2 | Ex. II-3 | Comp. Ex. II-4 | Ex. II-4 |
|---|---|---|---|---|
| center | A | A | A | A |
| envelope layer | B | B | C | D |
| H (0) | 62.0 | 62.0 | 62.0 | 62.0 |
| H (12.5) | 63.0 | 63.0 | 63.0 | 63.0 |
| H (25) | 63.5 | 63.5 | 63.5 | 63.5 |
| H (40) | 64.0 | 64.0 | 70.5 | 70.0 |
| H (50) | 68.5 | 68.5 | 71.5 | 71.5 |
| H (62.5) | 71.0 | 71.0 | 73.5 | 73.5 |
| H (75) | 81.0 | 81.0 | 82.0 | 81.5 |
| H (87.5) | 84.5 | 84.5 | 84.0 | 84.0 |
| H (100) | 87.5 | 87.5 | 86.0 | 86.0 |

Table II-9 Hardness Distribution of Core

| | Comp. Ex. II-5 | Comp. Ex. II-6 | Ex. II-5 | Comp. Ex. II-7 |
|---|---|---|---|---|
| center | A | A | A | A |
| envelope layer | B | B | B | B |
| H (0) | 62.0 | 62.0 | 62.0 | 62.0 |
| H (12.5) | 63.0 | 63.0 | 63.0 | 63.0 |
| H (25) | 63.5 | 63.5 | 63.5 | 63.5 |
| H (40) | 64.0 | 64.0 | 64.0 | 64.0 |
| H (50) | 68.5 | 68.5 | 68.5 | 68.5 |
| H (62.5) | 71.0 | 71.0 | 71.0 | 71.0 |
| H (75) | 81.0 | 81.0 | 81.0 | 81.0 |
| H (87.5) | 84.5 | 84.5 | 84.5 | 84.5 |
| H (100) | 87.5 | 87.5 | 87.5 | 87.5 |

Table II-10 Hardness Distribution of Core

| | Ex. II-6 | Ex. II-7 | Ex. II-8 | Ex. II-9 |
|---|---|---|---|---|
| center | A | A | A | A |
| envelope layer | B | E | F | G |
| H (0) | 62.0 | 62.0 | 62.0 | 62.0 |
| H (12.5) | 63.0 | 63.0 | 63.0 | 63.0 |
| H (25) | 63.5 | 63.5 | 63.5 | 63.5 |
| H (40) | 64.0 | 67.5 | 65.0 | 70.0 |
| H (50) | 68.5 | 70.0 | 68.5 | 72.0 |
| H (62.5) | 71.0 | 73.0 | 72.0 | 74.0 |
| H (75) | 81.0 | 81.5 | 80.5 | 77.5 |
| H (87.5) | 84.5 | 84.0 | 84.0 | 78.5 |
| H (100) | 87.5 | 86.5 | 85.0 | 79.0 |

Table II-11 Hardness Distribution of Core

| | Ex. II-10 | Ex. II-11 | Ex. II-12 | Ex. II-13 |
|---|---|---|---|---|
| center | A | A | A | A |
| envelope layer | H | I | J | K |
| H (0) | 62.0 | 62.0 | 62.0 | 62.0 |
| H (12.5) | 63.0 | 63.0 | 63.0 | 63.0 |
| H (25) | 63.5 | 63.5 | 63.5 | 63.5 |
| H (40) | 64.5 | 65.0 | 64.0 | 63.5 |
| H (50) | 69.0 | 69.0 | 68.5 | 68.0 |

(continued)

| | Ex. II-10 | Ex. II-11 | Ex. II-12 | Ex. II-13 |
|---|---|---|---|---|
| H (62.5) | 71.0 | 70.0 | 71.0 | 71.0 |
| H (75) | 81.0 | 80.0 | 81.0 | 81.0 |
| H (87.5) | 84.5 | 84.0 | 84.5 | 84.5 |
| H (100) | 87.0 | 87.5 | 87.5 | 87.5 |

Table II-12 Hardness Distribution of Core

| | Ex. II-14 | Ex. II-15 | Ex. II-16 | Ex. II-17 |
|---|---|---|---|---|
| center | A | A | A | A |
| envelope layer | L | L | B | B |
| H (0) | 62.0 | 62.0 | 62.0 | 62.0 |
| H (12.5) | 63.0 | 63.0 | 63.0 | 63.0 |
| H (25) | 63.5 | 63.5 | 63.5 | 63.5 |
| H (40) | 64.5 | 64.5 | 64.0 | 64.0 |
| H (50) | 69.0 | 69.0 | 68.5 | 68.5 |
| H (62.5) | 71.5 | 71.5 | 71.0 | 71.0 |
| H (75) | 81.5 | 81.5 | 81.0 | 81.0 |
| H (87.5) | 85.0 | 85.0 | 84.5 | 84.5 |
| H (100) | 88.0 | 88.0 | 87.5 | 87.5 |

Table II-13 Hardness Distribution of Core

| | Ex. II-18 | Ex. II-19 | Ex. II-20 | Comp. Ex. II-8 |
|---|---|---|---|---|
| center | A | A | A | A |
| envelope layer | B | B | B | B |
| H (0) | 62.0 | 62.0 | 62.0 | 62.0 |
| H (12.5) | 63.0 | 63.0 | 63.0 | 63.0 |
| H (25) | 63.5 | 63.5 | 63.5 | 63.5 |
| H (40) | 64.0 | 64.0 | 64.0 | 64.0 |
| H (50) | 68.5 | 68.5 | 68.5 | 68.5 |
| H (62.5) | 71.0 | 71.0 | 71.0 | 71.0 |
| H (75) | 81.0 | 81.0 | 81.0 | 81.0 |
| H (87.5) | 84.5 | 84.5 | 84.5 | 84.5 |
| H (100) | 87.5 | 87.5 | 87.5 | 87.5 |

Table II-14 Hardness Distribution of Core

| | Ex. II-21 | Ex. II-22 | Ex. II-23 |
|---|---|---|---|
| center | A | A | A |
| envelope layer | M | N | O |
| H (0) | 62.0 | 62.0 | 62.0 |
| H (12.5) | 63.0 | 63.0 | 63.0 |
| H (25) | 63.5 | 63.5 | 63.5 |
| H (40) | 66.0 | 67.0 | 69.0 |
| H (50) | 69.5 | 70.0 | 71.0 |
| H (62.5) | 73.0 | 73.0 | 73.0 |
| H (75) | 79.0 | 77.0 | 76.0 |
| H (87.5) | 82.0 | 80.0 | 79.0 |
| H (100) | 84.0 | 82.0 | 80.5 |

Table II-15 Results of Evaluation

| | | Ex. II-1 | Comp. Ex. II-1 | Comp. Ex. II-2 | Comp. Ex. II-3 |
|---|---|---|---|---|---|
| Center | Diameter (mm) | 15.0 | 15.0 | 15.0 | 15.0 |
| Envelope layer | Acid /salt (phr) | 5.0 | 5.0 | 5.0 | 5.0 |
| | H(100)-H(40) | 23.5 | 23.5 | 23.5 | 23.5 |
| | $R^2$ | 0.97 | 0.97 | 0.97 | 0.97 |
| Core | Diameter (mm) | 39.5 | 39.5 | 39.5 | 39.5 |
| | H(100)-H(0) | 25.5 | 25.5 | 25.5 | 25.5 |
| Mid layer | Composition | M1 | M1 | M1 | M1 |
| | Hm (Shore D) | 65.0 | 65.0 | 65.0 | 65.0 |
| | Tm (mm) | 1.0 | 1.0 | 1.0 | 1.0 |
| Inner cover | Composition | C1 | C1 | C2 | C3 |
| | Hc1 (Shore D) | 29.0 | 29.0 | 36.0 | 47.0 |
| | T1 (mm) | 0.30 | 0.30 | 0.30 | 0.30 |
| Outer cover | Composition | C3 | C1 | C2 | C3 |
| | Hc2 (Shore D) | 47.0 | 29.0 | 36.0 | 47.0 |
| | T2 (mm) | 0.30 | 0.30 | 0.30 | 0.30 |
| Ball | Hm-Hc1 | 36.0 | 36.0 | 29.0 | 18.0 |
| | Hm-Hc2 | 18.0 | 36.0 | 29.0 | 18.0 |
| | Hc2-Hc1 | 18.0 | 0.0 | 0.0 | 0.0 |
| | T1+T2 (mm) | 0.60 | 0.60 | 0.60 | 0.60 |
| | T1-T2 (mm) | 0.00 | 0.00 | 0.00 | 0.00 |
| | Db (mm) | 2.6 | 2.6 | 2.6 | 2.6 |
| W#1 spin (rpm) | | 3000 | 3150 | 3050 | 2950 |

(continued)

| | Ex. II-1 | Comp. Ex. II-1 | Comp. Ex. II-2 | Comp. Ex. II-3 |
|---|---|---|---|---|
| W#1 flight (m) | 242 | 240 | 240 | 243 |
| SW spin (rpm) | 6850 | 6900 | 6750 | 6700 |
| Durability | 112 | 112 | 112 | 112 |

Table II-16 Results of Evaluation

| | | Ex. II-2 | Ex. II-3 | Comp. Ex. II-4 | Ex. II-4 |
|---|---|---|---|---|---|
| Center | Diameter (mm) | 15.0 | 15.0 | 15.0 | 15.0 |
| Envelope layer | Acid /salt (phr) | 5.0 | 5.0 | 0.0 | 0.5 |
| | H(100)-H(40) | 23.5 | 23.5 | 15.5 | 16.0 |
| | $R^2$ | 0.97 | 0.97 | 0.94 | 0.95 |
| Core | Diameter (mm) | 39.5 | 39.5 | 39.5 | 39.5 |
| | H(100)-H(0) | 25.5 | 25.5 | 24.0 | 24.0 |
| Mid layer | Composition | M1 | M1 | M1 | M1 |
| | Hm (Shore D) | 65.0 | 65.0 | 65.0 | 65.0 |
| | Tm (mm) | 1.0 | 1.0 | 1.0 | 1.0 |
| Inner cover | Composition | C5 | C1 | C1 | C1 |
| | Hc1 (Shore D) | 46.0 | 29.0 | 29.0 | 29.0 |
| | T1 (mm) | 0.30 | 0.30 | 0.30 | 0.30 |
| Outer cover | Composition | C3 | C6 | C3 | C3 |
| | Hc2 (Shore D) | 47.0 | 30.0 | 47.0 | 47.0 |
| | T2 (mm) | 0.30 | 0.30 | 0.30 | 0.30 |
| Ball | Hm-Hc1 | 19.0 | 36.0 | 36.0 | 36.0 |
| | Hm-Hc2 | 18.0 | 35.0 | 18.0 | 18.0 |
| | Hc2-Hc1 | 1.0 | 1.0 | 18.0 | 18.0 |
| | T1+T2 (mm) | 0.60 | 0.60 | 0.60 | 0.60 |
| | T1-T2 (mm) | 0.00 | 0.00 | 0.00 | 0.00 |
| | Db (mm) | 2.6 | 2.6 | 2.6 | 2.6 |
| W#1 spin (rpm) | | 2950 | 3150 | 3200 | 3100 |
| W#1 flight (m) | | 243 | 240 | 235 | 241 |
| SW spin (rpm) | | 6800 | 7000 | 6900 | 6900 |
| Durability | | 112 | 112 | 100 | 102 |

Table II-17 Results of Evaluation

| | | Comp. Ex. II-5 | Comp. Ex. II-6 | Ex. II-5 | Comp. Ex. II-7 |
|---|---|---|---|---|---|
| Center | Diameter (mm) | 15.0 | 15.0 | 15.0 | 15.0 |

(continued)

| | | Comp. Ex. II-5 | Comp. Ex. II-6 | Ex. II-5 | Comp. Ex. II-7 |
|---|---|---|---|---|---|
| Envelope layer | Acid /salt (phr) | 5.0 | 5.0 | 5.0 | 5.0 |
| | H(100)-H(40) | 23.5 | 23.5 | 23.5 | 23.5 |
| | $R^2$ | 0.97 | 0.97 | 0.97 | 0.97 |
| Core | Diameter (mm) | 39.5 | 38.3 | 38.3 | 40.3 |
| | H(100)-H(0) | 25.5 | 25.5 | 25.5 | 25.5 |
| Mid layer | Composition | M1 | M1 | M1 | M1 |
| | Hm (Shore D) | 65.0 | 65.0 | 65.0 | 65.0 |
| | Tm (mm) | 1.0 | 1.0 | 1.0 | 1.0 |
| Inner cover | Composition | C3 | C3 | C1 | C3 |
| | Hc1 (Shore D) | 47.0 | 47.0 | 29.0 | 47.0 |
| | T1 (mm) | 0.30 | 0.60 | 0.60 | 0.10 |
| Outer cover | Composition | C1 | C3 | C3 | C3 |
| | Hc2 (Shore D) | 29.0 | 47.0 | 47.0 | 47.0 |
| | T2 (mm) | 0.30 | 0.60 | 0.60 | 0.10 |
| Ball | Hm-Hc1 | 18.0 | 18.0 | 36.0 | 18.0 |
| | Hm-Hc2 | 36.0 | 18.0 | 18.0 | 18.0 |
| | Hc2-Hc1 | -18.0 | 0.0 | 18.0 | 0.0 |
| | T1+T2 (mm) | 0.60 | 1.20 | 1.20 | 0.20 |
| | T1-T2 (mm) | 0.00 | 0.00 | 0.00 | 0.00 |
| | Db (mm) | 2.6 | 2.6 | 2.6 | 2.6 |
| W#1 spin (rpm) | | 3200 | 3250 | 3250 | 2800 |
| W#1 flight (m) | | 239 | 237 | 237 | 245 |
| SW spin (rpm) | | 7000 | 6850 | 7050 | 6500 |
| Durability | | 112 | 120 | 120 | 105 |

Table II-18 Results of Evaluation

| | | Ex. II-6 | Ex. II-7 | Ex. II-8 | Ex. II-9 |
|---|---|---|---|---|---|
| Center | Diameter (mm) | 15.0 | 15.0 | 15.0 | 15.0 |
| Envelope layer | Acid /salt (phr) | 5.0 | 2.0 | 12.0 | 45.0 |
| | H(100)-H(40) | 23.5 | 19.0 | 20.0 | 9.0 |
| | $R^2$ | 0.97 | 0.96 | 0.96 | 0.95 |
| Core | Diameter (mm) | 38.3 | 39.5 | 39.5 | 39.5 |
| | H(100)-H(0) | 25.5 | 24.5 | 23.0 | 17.0 |
| Mid layer | Composition | M1 | M1 | M1 | M1 |
| | Hm (Shore D) | 65.0 | 65.0 | 65.0 | 65.0 |
| | Tm (mm) | 1.0 | 1.0 | 1.0 | 1.0 |

(continued)

| | | Ex. II-6 | Ex. II-7 | Ex. II-8 | Ex. II-9 |
|---|---|---|---|---|---|
| Inner cover | Composition | C1 | C1 | C1 | C1 |
| | Hc1 (Shore D) | 29.0 | 29.0 | 29.0 | 29.0 |
| | T1 (mm) | 0.60 | 0.30 | 0.30 | 0.30 |
| Outer cover | Composition | C3 | C3 | C3 | C3 |
| | Hc2 (Shore D) | 47.0 | 47.0 | 47.0 | 47.0 |
| | T2 (mm) | 0.60 | 0.30 | 0.30 | 0.30 |
| Ball | Hm-Hc1 | 36.0 | 36.0 | 36.0 | 36.0 |
| | Hm-Hc2 | 18.0 | 18.0 | 18.0 | 18.0 |
| | Hc2-Hc1 | 18.0 | 18.0 | 18.0 | 18.0 |
| | T1+T2 (mm) | 0.20 | 0.60 | 0.60 | 0.60 |
| | T1-T2 (mm) | 0.00 | 0.00 | 0.00 | 0.00 |
| | Db (mm) | 2.6 | 2.6 | 2.6 | 2.6 |
| W#1 spin (rpm) | | 2850 | 3050 | 3050 | 3100 |
| W#1 flight (m) | | 245 | 241 | 241 | 240 |
| SW spin (rpm) | | 6700 | 6850 | 6850 | 6950 |
| Durability | | 105 | 108 | 107 | 103 |

Table II-19 Results of Evaluation

| | | Ex. II-10 | Ex. II-11 | Ex. II-12 | Ex. II-13 |
|---|---|---|---|---|---|
| Center | Diameter (mm) | 15.0 | 15.0 | 15.0 | 15.0 |
| Envelope layer | Acid /salt (phr) | 5.0 | 5.0 | 5.0 | 5.0 |
| | H(100)-H(40) | 22.5 | 22.5 | 23.5 | 24.0 |
| | $R^2$ | 0.96 | 0.96 | 0.97 | 0.97 |
| Core | Diameter (mm) | 39.5 | 39.5 | 39.5 | 39.5 |
| | H(100)-H(0) | 25.0 | 25.5 | 25.5 | 25.5 |
| Mid layer | Composition | M1 | M1 | M1 | M1 |
| | Hm (Shore D) | 65.0 | 65.0 | 65.0 | 65.0 |
| | Tm (mm) | 1.0 | 1.0 | 1.0 | 1.0 |
| Inner cover | Composition | C1 | C1 | C1 | C1 |
| | Hc1 (Shore D) | 29.0 | 29.0 | 29.0 | 29.0 |
| | T1 (mm) | 0.30 | 0.30 | 0.30 | 0.30 |
| Outer cover | Composition | C3 | C3 | C3 | C3 |
| | Hc2 (Shore D) | 47.0 | 47.0 | 47.0 | 47.0 |
| | T2 (mm) | 0.30 | 0.30 | 0.30 | 0.30 |

(continued)

| | | Ex. II-10 | Ex. II-11 | Ex. II-12 | Ex. II-13 |
|---|---|---|---|---|---|
| Ball | Hm-Hc1 | 36.0 | 36.0 | 36.0 | 36.0 |
| | Hm-Hc2 | 18.0 | 18.0 | 18.0 | 18.0 |
| | Hc2-Hc1 | 18.0 | 18.0 | 18.0 | 18.0 |
| | T1+T2 (mm) | 0.60 | 0.60 | 0.60 | 0.60 |
| | T1-T2 (mm) | 0.00 | 0.00 | 0.00 | 0.00 |
| | Db (mm) | 2.6 | 2.6 | 2.6 | 2.6 |
| W#1 spin (rpm) | | 3050 | 3050 | 3000 | 2950 |
| W#1 flight (m) | | 241 | 241 | 242 | 243 |
| SW spin (rpm) | | 6850 | 6850 | 6850 | 6850 |
| Durability | | 111 | 111 | 112 | 114 |

Table II-20 Results of Evaluation

| | | Ex. II-14 | Ex. II-15 | Ex. II-16 | Ex. II-17 |
|---|---|---|---|---|---|
| Center | Diameter (mm) | 15.0 | 15.0 | 15.0 | 15.0 |
| Envelope layer | Acid /salt (phr) | 5.0 | 5.0 | 5.0 | 5.0 |
| | H(100)-H(40) | 23.5 | 23.5 | 23.5 | 23.5 |
| | $R^2$ | 0.97 | 0.97 | 0.97 | 0.97 |
| Core | Diameter (mm) | 39.5 | 39.5 | 39.1 | 39.1 |
| | H(100)-H(0) | 26.0 | 26.0 | 25.5 | 25.5 |
| Mid layer | Composition | M2 | M3 | M1 | M1 |
| | Hm (Shore D) | 58.0 | 47.0 | 65.0 | 65.0 |
| | Tm (mm) | 1.0 | 1.0 | 1.0 | 1.0 |
| Inner cover | Composition | C1 | C1 | C1 | C1 |
| | Hc1 (Shore D) | 29.0 | 29.0 | 29.0 | 29.0 |
| | T1 (mm) | 0.30 | 0.30 | 0.40 | 0.50 |
| Outer cover | Composition | C3 | C3 | C3 | C3 |
| | Hc2 (Shore D) | 47.0 | 47.0 | 47.0 | 47.0 |
| | T2 (mm) | 0.30 | 0.30 | 0.40 | 0.30 |
| Ball | Hm-Hc1 | 29.0 | 18.0 | 36.0 | 36.0 |
| | Hm-Hc2 | 11.0 | 0.0 | 18.0 | 18.0 |
| | Hc2-Hc1 | 18.0 | 18.0 | 18.0 | 18.0 |
| | T1+T2 (mm) | 0.60 | 0.60 | 0.80 | 0.80 |
| | T1-T2 (mm) | 0.00 | 0.00 | 0.00 | 0.20 |
| | Db (mm) | 2.6 | 2.7 | 2.6 | 2.6 |
| W#1 spin (rpm) | | 3050 | 3100 | 3100 | 3150 |
| W#1 flight (m) | | 241 | 239 | 240 | 239 |

(continued)

| | Ex. II-14 | Ex. II-15 | Ex. II-16 | Ex. II-17 |
|---|---|---|---|---|
| SW spin (rpm) | 7000 | 7050 | 6950 | 7000 |
| Durability | 120 | 130 | 115 | 112 |

Table II-21 Results of Evaluation

| | | Ex. II-18 | Ex. II-19 | Ex. II-20 | Comp. Ex. II-8 |
|---|---|---|---|---|---|
| Center | Diameter (mm) | 15.0 | 15.0 | 15.0 | 15.0 |
| Envelope layer | Acid /salt (phr) | 5.0 | 5.0 | 5.0 | 5.0 |
| | H(100)-H(40) | 23.5 | 23.5 | 23.5 | 23.5 |
| | $R^2$ | 0.97 | 0.97 | 0.97 | 0.97 |
| Core | Diameter (mm) | 39.1 | 39.1 | 39.1 | 39.5 |
| | H(100)-H(0) | 25.5 | 25.5 | 25.5 | 25.5 |
| Mid layer | Composition | M1 | M1 | M1 | M4 |
| | Hm (Shore D) | 65.0 | 65.0 | 65.0 | 40.0 |
| | Tm (mm) | 1.0 | 1.0 | 1.0 | 1.0 |
| Inner cover | Composition | C1 | C1 | C1 | C5 |
| | Hc1 (Shore D) | 29.0 | 29.0 | 29.0 | 46.0 |
| | T1 (mm) | 0.30 | 0.65 | 0.2 | 0.3 |
| Outer cover | Composition | C3 | C3 | C3 | C3 |
| | Hc2 (Shore D) | 47.0 | 47.0 | 47.0 | 47.0 |
| | T2 (mm) | 0.50 | 0.15 | 0.7 | 0.3 |
| Ball | Hm-Hc1 | 36.0 | 36.0 | 36.0 | -6.0 |
| | Hm-Hc2 | 18.0 | 18.0 | 18.0 | -7.0 |
| | Hc2-Hc1 | 18.0 | 18.0 | 18.0 | 1.0 |
| | T1+T2 (mm) | 0.80 | 0.80 | 0.8 | 0.6 |
| | T1-T2 (mm) | 0.20 | 0.50 | -0.5 | 0.0 |
| | Db (mm) | 2.6 | 2.6 | 2.6 | 2.6 |
| W#1 spin (rpm) | | 3050 | 3200 | 3000 | 3200 |
| W#1 flight (m) | | 241 | 238 | 242 | 239 |
| SW spin (rpm) | | 6900 | 7100 | 6800 | 7000 |
| Durability | | 112 | 115 | 115 | 108 |

Table II-22 Results of Evaluation

| | | Ex. II-21 | Ex. II-22 | Ex. II-23 |
|---|---|---|---|---|
| Center | Diameter (mm) | 15.0 | 15.0 | 15.0 |

(continued)

| | | Ex. II-21 | Ex. II-22 | Ex. II-23 |
|---|---|---|---|---|
| Envelope layer | Acid /salt (phr) | 20.0 | 30.0 | 40.0 |
| | H(100)-H(40) | 18.0 | 15.0 | 11.5 |
| | $R^2$ | 0.98 | 0.99 | 0.99 |
| Core | Diameter (mm) | 39.5 | 39.5 | 39.5 |
| | H(100)-H(0) | 22.0 | 20.0 | 18.5 |
| Mid layer | Composition | M1 | M1 | M1 |
| | Hm (Shore D) | 65.0 | 65.0 | 65.0 |
| | Tm (mm) | 1.0 | 1.0 | 1.0 |
| Inner cover | Composition | C1 | C1 | C1 |
| | Hc1 (Shore D) | 29.0 | 29.0 | 29.0 |
| | T1 (mm) | 0.30 | 0.30 | 0.30 |
| Outer cover | Composition | C3 | C3 | C3 |
| | Hc2 (Shore D) | 47.0 | 47.0 | 47.0 |
| | T2 (mm) | 0.30 | 0.30 | 0.30 |
| Ball | Hm-Hc1 | 36.0 | 36.0 | 36.0 |
| | Hm-Hc2 | 18.0 | 18.0 | 18.0 |
| | Hc2-Hc1 | 18.0 | 18.0 | 18.0 |
| | T1+T2 (mm) | 0.60 | 0.60 | 0.60 |
| | T1-T2 (mm) | 0.00 | 0.00 | 0.00 |
| | Db (mm) | 2.6 | 2.6 | 2.6 |
| W#1 spin (rpm) | | 3060 | 3070 | 3090 |
| W#1 flight (m) | | 241 | 240 | 240 |
| SW spin (rpm) | | 6880 | 6900 | 6930 |
| Durability | | 106 | 105 | 103 |

As shown in Tables II-15 to II-22, the golf balls according to Examples are excellent in various performance characteristics. From the results of evaluation, advantages of the present invention are clear.

[Experiment 3]

[Example III-1]

A rubber composition was obtained by kneading 100 parts by weight of a high-cis polybutadiene (trade name "BR-730", manufactured by JSR Corporation), 18 parts by weight of zinc diacrylate (trade name "Sanceler SR", manufactured by SANSHIN CHEMICAL INDUSTRY CO., LTD.), 5 parts by weight of zinc oxide, an appropriate amount of barium sulfate, 0.3 parts by weight of bis(pentabromophenyl)disulfide (a product of Kawaguchi Chemical Industry Co., LTD.), and 0.9 parts by weight of dicumyl peroxide (trade name "Percumyl D", manufactured by NOF Corporation). This rubber composition was placed into a mold including upper and lower mold halves each having a hemispherical cavity, and heated at 170°C for 25 minutes to obtain a spherical center with a diameter of 15.0 mm.

A rubber composition was obtained by kneading 100 parts by weight of a high-cis polybutadiene (the aforementioned "BR-730"), 42 parts by weight of zinc diacrylate (the aforementioned "Sanceler SR"), 5 parts by weight of zinc oxide, an appropriate amount of barium sulfate, 0.2 parts by weight of 2-thionaphthol, 0.9 parts by weight of dicumyl peroxide, and 30 parts by weight of zinc octoate. Half shells were formed from this rubber composition. The center was covered with two of these half shells. The center and the half shells were placed into a mold including upper and lower

mold halves each having a hemispherical cavity, and heated at 170°C for 25 minutes to obtain a core with a diameter of 38.5 mm. An envelope layer was formed from the rubber composition. The amount of barium sulfate was adjusted such that the specific gravity of the envelope layer coincides with the specific gravity of the center and the weight of a golf ball is 45.4 g.

A resin composition was obtained by kneading 25 parts by weight of an ionomer resin (the aforementioned "Surlyn 8945"), 45 parts by weight of another ionomer resin (the aforementioned "Himilan AM7329"), 30 parts by weight of a styrene block-containing thermoplastic elastomer (the aforementioned "Rabalon T3221C"), and 3 parts by weight of titanium dioxide with a twin-screw kneading extruder. The extruding conditions were a screw diameter of 45 mm, a screw rotational speed of 200 rpm, screw L/D of 35, and a die temperature of 160°C to 230°C. The core was placed into a mold. The resin composition was injected around the core by injection molding to form an inner mid layer with a thickness of 0.8 mm.

A resin composition was obtained by kneading 55 parts by weight of an ionomer resin (the aforementioned "Surlyn 8945"), 45 parts by weight of another ionomer resin (the aforementioned "Himilan AM7329"), and 3 parts by weight of titanium dioxide with a twin-screw kneading extruder under the above extruding conditions. The sphere consisting of the core and the inner mid layer was placed into a mold. The resin composition was injected around the sphere by injection molding to form an outer mid layer with a thickness of 0.8 mm.

A paint composition (trade name "POLIN 750LE", manufactured by SHINTO PAINT CO., LTD.) including a two-component curing type epoxy resin as a base polymer was prepared. The base material liquid of this paint composition includes 30 parts by weight of a bisphenol A type solid epoxy resin and 70 parts by weight of a solvent. The curing agent liquid of this paint composition includes 40 parts by weight of a modified polyamide amine, 55 parts by weight of a solvent, and 5 parts by weight of titanium dioxide. The weight ratio of the base material liquid to the curing agent liquid is 1/1. This paint composition was applied to the surface of the outer mid layer with an air gun, and kept at 23°C for 12 hours to obtain a reinforcing layer with a thickness of 10 μm.

A resin composition was obtained by kneading 100 parts by weight of a thermoplastic polyurethane elastomer (the aforementioned "Elastollan NY82A"), 0.2 parts by weight of a hindered amine light stabilizer (trade name "TINUVIN 770", manufactured by Ciba Japan K.K.), 4 parts by weight of titanium dioxide, and 0.04 parts by weight of ultramarine blue with a twin-screw kneading extruder under the above extruding conditions. Half shells were formed from this resin composition by compression molding. The sphere consisting of the core, the inner mid layer, the outer mid layer, and the reinforcing layer was covered with two of these half shells. The sphere and the half shells were placed into a final mold that includes upper and lower mold halves each having a hemispherical cavity and that has a large number of pimples on its cavity face. A cover was obtained by compression molding. The thickness of the cover was 0.5 mm. Dimples having a shape that is the inverted shape of the pimples were formed on the cover. The surface of the cover was polished. A clear paint including a two-component curing type polyurethane as a base material was applied to this cover with an air gun, and was dried and cured to obtain a golf ball of Example III-1 with a diameter of 42.7 mm and a weight of 45.6 g.

[Examples III-2 to III-19 and Comparative Examples III-1 to III-7]

Golf balls of Examples III-2 to III-19 and Comparative Examples III-1 to III-7 were obtained in the same manner as Example III-1, except the specifications of the center and the envelope layer were as shown in Tables III-7 to III-12 below and the specifications of the inner mid layer, the outer mid layer, and the cover were as shown in Tables III-13 to III-18 below. The composition and the vulcanization conditions of the center are shown in Table III-1 below. The composition and the vulcanization conditions of the envelope layer are shown in Tables III-2 to III-4 below. The compositions and the hardnesses of the inner mid layer and the outer mid layer are shown in Table III-5 below. The composition and the hardness of the cover are shown in Table III-6 below.

[Hit with Driver (W#1)]

A driver with a titanium head (trade name "XXIO", manufactured by DUNLOP SPORTS CO. LTD., shaft hardness: S, loft angle: 10.0°) was attached to a swing machine manufactured by True Temper Co. A golf ball was hit under the condition of a head speed of 45 m/sec. The spin rate was measured immediately after the hit. Furthermore, the flight distance from the launch point to the stop point was measured. The average value of data obtained by 10 measurements is shown in Tables III-13 to III-18 below.

[Hit with Sand Wedge (SW)]

A sand wedge (trade name "XXIO", manufactured by DUNLOP SPORTS CO. LTD., shaft hardness: R, loft angle: 56.0°) was attached to a swing machine manufactured by True Temper Co. A golf ball was hit under the condition

of a head speed of 21 m/sec. The backspin rate was measured immediately after the hit. The average value of data obtained by 10 measurements is shown in Tables III-13 to III-18 below.

[Durability]

A driver with a titanium head (trade name "XXIO", manufactured by DUNLOP SPORTS CO. LTD., shaft hardness: S, loft angle: 10.0°) was attached to a swing robot M/C manufactured by True Temper Co. A golf ball having been kept at 23°C for 12 hours was used for the measurement. The golf ball was repeatedly hit under the condition of a head speed of 45 m/sec. The number of hits required to break the golf ball was measured. An index of the average value of data obtained for 12 golf balls is shown in Tables III-13 to III-18 below. The higher the index is, the more excellent the durability of the golf ball is.

Table III-1 Composition and Vulcanization Conditions of Center (parts by weight)

| Type | (1) | (2) | (3) |
|---|---|---|---|
| BR-730 | 100 | 100 | 100 |
| Sanceler SR | 18 | 14 | 20 |
| Zinc oxide | 5 | 5 | 5 |
| Barium sulfate | * | * | * |
| Bis (pentabromophenyl ) disulfide | 0.3 | 0.3 | 0.3 |
| Dicumyl peroxide | 0.9 | 0.9 | 0.9 |
| Vulcanization conditions | | | |
| Temperature (°C) | 170 | 170 | 170 |
| Time (min) | 25 | 25 | 25 |
| * Appropriate amount | | | |

Table III-2 Composition and Vulcanization Conditions of Envelope Layer (parts by weight)

| Type | E1 | E2 | E3 | E4 | E5 |
|---|---|---|---|---|---|
| BR-730 | 100 | 100 | 100 | 100 | 100 |
| Sanceler SR | 36 | 40 | 40 | 40 | 41 |
| ZN-DA90S | - | - | - | - | - |
| Zinc oxide | 5 | 5 | 5 | 5 | 5 |
| Barium sulfate | * | * | * | * | * |
| 2-thionaphthol | 0.2 | 0.2 | 0.2 | 0.2 | 0.2 |
| Bis (pentabromophenyl ) disulfide | - | - | - | - | - |
| Dicumyl peroxide | 0.9 | 0.9 | 0.9 | 0.9 | 0.9 |
| Zinc octoate | - | 0.5 | 2 | 5 | 10 |
| Zinc stearate | - | - | - | - | - |
| Zinc myristate | - | - | - | - | - |
| Amount of acid/salt | 0 | 0.5 | 2 | 5 | 10 |
| Vulcanization conditions | | | | | |
| Temperature (°C) | 170 | 170 | 170 | 170 | 170 |
| Time (min) | 25 | 25 | 25 | 25 | 25 |
| * Appropriate amount | | | | | |

Table III-3 Composition and Vulcanization Conditions of Envelope Layer (parts by weight)

| Type | E6 | E7 | E8 | E9 | E10 |
|---|---|---|---|---|---|
| BR-730 | 100 | 100 | 100 | 100 | 100 |
| Sanceler SR | 42 | 43 | 37 | 38 | 40 |
| ZN-DA90S | - | - | - | - | - |
| Zinc oxide | 5 | 5 | 5 | 5 | 5 |
| Barium sulfate | * | * | * | * | * |
| 2-thionaphthol | 0.2 | 0.2 | 0.2 | 0.2 | 0.2 |
| Bis (pentabromophenyl ) disulfide | | | | | |
| Dicumyl peroxide | 0.9 | 0.9 | 0.9 | 0.9 | 0.9 |
| Zinc octoate | 30 | 45 | - | - | - |
| Zinc stearate | - | - | 10 | 20 | - |
| Zinc myristate | - | - | - | - | 5 |
| Amount of acid/salt | 30 | 45 | 10 | 20 | 5 |
| Vulcanization conditions | | | | | |
| Temperature (°C) | 170 | 170 | 170 | 170 | 170 |
| Time (min) | 25 | 25 | 25 | 25 | 25 |
| * Appropriate amount | | | | | |

Table III-4 Composition and Vulcanization Conditions of Envelope Layer (parts by weight)

| Type | E11 | E12 | E13 | E14 | E15 |
|---|---|---|---|---|---|
| BR-730 | 100 | 100 | 100 | 100 | 100 |
| Sanceler SR | 41 | 42 | - | 41 | 39 |
| ZN-DA90S | - | - | 40 | - | - |
| Zinc oxide | 5 | 5 | 5 | 5 | 5 |
| Barium sulfate | * | * | * | * | * |
| 2-thionaphthol | 0.2 | - | 0.2 | 0.2 | 0.2 |
| Bis (pentabromophenyl ) disulfide | - | 0.3 | - | - | - |
| Dicumyl peroxide | 0.9 | 0.9 | 0.9 | 0.9 | 0.9 |
| Zinc octoate | - | 5 | 5 | 5 | 5 |
| Zinc stearate | - | - | - | - | - |
| Zinc myristate | 10 | - | - | - | - |
| Amount of acid/salt | 10 | 5 | 5 | 5 | 5 |
| Vulcanization conditions | | | | | |
| Temperature (°C) | 170 | 170 | 170 | 170 | 170 |
| Time (min) | 25 | 25 | 25 | 25 | 25 |
| * Appropriate amount | | | | | |

The details of the compounds listed in Tables III-1 to III-4 are as follows.

BR-730: a high-cis polybutadiene manufactured by JSR Corporation (cis-1,4-bond content: 96% by weight, 1,2-vinyl bond content: 1.3% by weight, Mooney viscosity ($ML_{1+4}$ (100°C)): 55, molecular weight distribution (Mw/Mn): 3)
Sanceler SR: zinc diacrylate manufactured by SANSHIN CHEMICAL INDUSTRY CO., LTD. (a product coated with 10% by weight of stearic acid)
ZN-DA90S: zinc diacrylate manufactured by Nihon Jyoryu Kogyo Co., Ltd. (a product coated with 10% by weight of zinc stearate)
Zinc oxide: trade name "Ginrei R" manufactured by Toho Zinc Co., Ltd.
Barium sulfate : trade name "Barium Sulfate BD" manufactured by Sakai Chemical Industry Co., Ltd.
Bis(pentabromophenyl)disulfide: a product of Kawaguchi Chemical Industry Co., LTD.
Dicumyl peroxide: trade name "Percumyl D" manufactured by NOF Corporation
2-thionaphthol: a product of Tokyo Chemical Industry Co., Ltd.
Zinc octoate: a product of Mitsuwa Chemicals Co., Ltd. (purity: 99% or greater)
Zinc stearate: a product of Wako Pure Chemical Industries, Ltd. (purity: 99% or greater)
Zinc myristate: a product of NOF Corporation (purity: 90% or greater)

Table III-5 Compositions and Hardnesses of Inner Mid Layer and Outer Mid Layer (parts by weight)

| Type | a | b | c | D |
|---|---|---|---|---|
| Surlyn 8945 | 55 | 45 | 25 | 20 |
| Himilan AM7329 | 45 | 45 | 45 | 25 |
| Rabalon T3221C | - | 10 | 30 | 55 |
| Titanium dioxide | 3 | 3 | 3 | 3 |
| Hardness (Shore D) | 65 | 56 | 47 | 29 |

Table III-6 Composition and Hardness of Cover (parts by weight)

| Type | A | B | C | D |
|---|---|---|---|---|
| Elastollan NY82A | 100 | - | - | - |
| Elastollan NY85A | - | 50 | - | - |
| Elastollan NY90A | - | 50 | - | - |
| Elastollan NY97A | - | - | 100 | - |
| Surlyn 8945 | - | - | - | 40 |
| Himilan AM7329 | - | - | - | 55 |
| Rabalon T3221C | - | - | - | 5 |
| TINUVIN 770 | 0.2 | 0.2 | 0.2 | 0.2 |
| Titanium dioxide | 4 | 4 | 4 | 4 |
| Ultramarine blue | 0.04 | 0.04 | 0.04 | 0.04 |
| Hardness Hc (Shore D) | 29 | 36 | 47 | 60 |

Table III-7 Physical Properties and Hardness Distribution of Core (JIS-C hardness)

| | Ex. III-1 | Ex. III-2 | Ex. III-3 | Ex. III-4 | Ex. III-5 |
|---|---|---|---|---|---|
| Center | | | | | |
| Composition | (1) | (1) | (1) | (1) | (1) |
| Diameter (mm) | 15 | 15 | 15 | 15 | 15 |
| Ho (JIS-C) | 57 | 57 | 57 | 57 | 57 |

(continued)

| | Ex. III-1 | Ex. III-2 | Ex. III-3 | Ex. III-4 | Ex. III-5 |
|---|---|---|---|---|---|
| Center | | | | | |
| Surface hardness (JIS-C) | 61 | 61 | 61 | 61 | 61 |
| Envelope layer | | | | | |
| Composition | E6 | E5 | E4 | E3 | E8 |
| Te (mm) | 11.75 | 11.75 | 11.75 | 11.75 | 11.75 |
| H (0.0) | 60.5 | 62.5 | 63.5 | 62.0 | 64.5 |
| H (12.5) | 64.5 | 65.0 | 66.0 | 68.0 | 67.0 |
| H (25.0) | 66.5 | 69.0 | 69.5 | 71.0 | 70.5 |
| H (37.5) | 69.0 | 71.0 | 71.0 | 73.5 | 72.0 |
| H (50.0) | 71.0 | 72.5 | 73.0 | 74.5 | 73.5 |
| H (62.5) | 73.0 | 74.5 | 76.5 | 75.0 | 75.0 |
| H (75.0) | 75.5 | 82.0 | 82.5 | 79.5 | 83.0 |
| H (87.5) | 78.0 | 86.0 | 87.0 | 84.5 | 87.0 |
| Hs | 83.0 | 89.0 | 91.0 | 88.5 | 91.0 |
| Hs-H(0.0) | 22.5 | 26.5 | 27.5 | 26.5 | 26.5 |
| $R^2$ | 0.98 | 0.97 | 0.97 | 0.95 | 0.95 |
| Gradient | 0.20 | 0.26 | 0.27 | 0.23 | 0.26 |

Table III-8 Physical Properties and Hardness Distribution of Core (JIS-C hardness)

| | Ex. III-6 | Ex. III-7 | Ex. III-8 | Ex. III-9 | Ex. III-10 |
|---|---|---|---|---|---|
| Center | | | | | |
| Composition | (1) | (1) | (1) | (1) | (1) |
| Diameter (mm) | 15 | 15 | 15 | 15 | 15 |
| Ho (JIS-C) | 57 | 57 | 57 | 57 | 57 |
| Surface hardness (JIS-C) | 61 | 61 | 61 | 61 | 61 |
| Envelope layer | | | | | |
| Composition | E9 | E10 | E11 | E12 | E13 |
| Te (mm) | 11.75 | 11.75 | 11.75 | 11.75 | 11.75 |
| H (0.0) | 63.0 | 64.0 | 63.0 | 63.5 | 63.5 |
| H (12.5) | 65.0 | 66.5 | 65.5 | 65.5 | 66.0 |
| H (25.0) | 67.0 | 70.0 | 69.5 | 70.0 | 69.5 |
| H (37.5) | 69.5 | 72.0 | 71.5 | 71.0 | 71.0 |
| H (50.0) | 72.0 | 73.0 | 72.5 | 73.0 | 74.0 |
| H (62.5) | 73.5 | 74.5 | 74.5 | 76.5 | 76.5 |
| H (75.0) | 82.0 | 82.5 | 82.5 | 82.0 | 82.5 |
| H (87.5) | 84.0 | 87.0 | 86.5 | 87.0 | 87.0 |
| Hs | 88.0 | 91.0 | 89.5 | 91.0 | 91.0 |

(continued)

| | | | | | |
|---|---|---|---|---|---|
| Envelope layer | | | | | |
| Hs-H (0.0) | 25.0 | 27.0 | 26.5 | 27.5 | 27.5 |
| $R^2$ | 0.96 | 0.95 | 0.96 | 0.97 | 0.97 |
| Gradient | 0.25 | 0.26 | 0.26 | 0.27 | 0.27 |

Table III-9 Physical Properties and Hardness Distribution of Core (JIS-C hardness)

| | Ex. III-11 | Ex. III-12 | Ex. III-13 | Ex. III-14 | Ex. III-15 |
|---|---|---|---|---|---|
| Center | | | | | |
| Composition | (1) | (1) | (1) | (1) | (1) |
| Diameter (mm) | 15 | 15 | 15 | 15 | 15 |
| Ho (JIS-C) | 57 | 57 | 57 | 57 | 57 |
| Surface hardness (JIS-C) | 61 | 61 | 61 | 61 | 61 |
| Envelope layer | | | | | |
| Composition | E4 | E4 | E4 | E14 | E4 |
| Te (mm) | 11.75 | 11.75 | 11.75 | 11.75 | 11.35 |
| H (0.0) | 63.5 | 63.5 | 63.5 | 64.0 | 63.5 |
| H (12.5) | 66.0 | 66.0 | 66.0 | 66.0 | 66.0 |
| H (25.0) | 69.5 | 69.5 | 69.5 | 70.0 | 69.5 |
| H (37.5) | 71.0 | 71.0 | 71.0 | 71.5 | 71.0 |
| H (50.0) | 73.0 | 73.0 | 73.0 | 73.5 | 73.0 |
| H (62.5) | 76.5 | 76.5 | 76.5 | 77.0 | 76.5 |
| H (75.0) | 82.5 | 82.5 | 82.5 | 83.0 | 82.5 |
| H (87.5) | 87.0 | 87.0 | 87.0 | 87.5 | 87.0 |
| Hs | 91.0 | 91.0 | 91.0 | 91.5 | 91.0 |
| Hs-H (0.0) | 27.5 | 27.5 | 27.5 | 27.5 | 27.5 |
| $R^2$ | 0.97 | 0.97 | 0.97 | 0.97 | 0.97 |
| Gradient | 0.27 | 0.27 | 0.27 | 0.27 | 0.27 |

Table III-10 Physical Properties and Hardness Distribution of Core (JIS-C hardness)

| | Ex. III-16 | Ex. III-17 | Ex. III-18 | Ex. III-19 |
|---|---|---|---|---|
| Center | | | | |
| Composition | (1) | (2) | (3) | (3) |
| Diameter (mm) | 15 | 9 | 21 | 26 |
| Ho (JIS-C) | 57 | 49 | 62 | 62 |
| Surface hardness (JIS-C) | 61 | 53 | 66 | 66 |
| Envelope layer | | | | |
| Composition | E15 | E4 | E4 | E4 |
| Te (mm) | 10.15 | 14.75 | 8.75 | 6.25 |

(continued)

| | | | | |
|---|---|---|---|---|
| Envelope layer | | | | |
| H (0.0) | 63.0 | 63.0 | 64.0 | 64.0 |
| H (12.5) | 65.0 | 65.5 | 66.5 | 66.5 |
| H (25.0) | 69.0 | 69.5 | 69.5 | 69.5 |
| H (37.5) | 70.5 | 71.0 | 71.0 | 71.0 |
| H (50.0) | 72.5 | 73.0 | 73.0 | 73.0 |
| H (62.5) | 76.0 | 76.5 | 76.5 | 76.5 |
| H (75.0) | 82.0 | 82.5 | 82.5 | 82.0 |
| H (87.5) | 86.5 | 87.0 | 86.5 | 86.5 |
| Hs | 90.5 | 91.0 | 90.0 | 89.0 |
| Hs-H (0.0) | 27.5 | 28.0 | 26.0 | 25.0 |
| $R^2$ | 0.97 | 0.97 | 0.97 | 0.97 |
| Gradient | 0.27 | 0.28 | 0.26 | 0.25 |

Table III-11 Physical Properties and Hardness Distribution of Core (JIS-C hardness)

| | Comp. Ex. III-1 | Comp. Ex. III-2 | Comp. Ex. III-3 | Comp. Ex. III-4 | Comp. Ex. III-5 |
|---|---|---|---|---|---|
| Center | | | | | |
| Composition | (1) | (1) | (1) | (1) | (1) |
| Diameter (mm) | 15 | 15 | 15 | 15 | 15 |
| Ho (JIS-C) | 57 | 57 | 57 | 57 | 57 |
| Surface hardness (JIS-C) | 61 | 61 | 61 | 61 | 61 |
| Envelope layer | | | | | |
| Composition | E1 | E4 | E15 | E15 | E14 |
| Te (mm) | 11.75 | 11.75 | 11.75 | 11.75 | 11.75 |
| H (0.0) | 64.0 | 63.5 | 63.0 | 63.0 | 64.0 |
| H (12.5) | 74.0 | 66.0 | 65.0 | 65.0 | 66.0 |
| H (25.0) | 78.0 | 69.5 | 69.0 | 69.0 | 70.0 |
| H (37.5) | 78.0 | 71.0 | 70.5 | 70.5 | 71.5 |
| H (50.0) | 78.0 | 73.0 | 72.5 | 72.5 | 73.5 |
| H (62.5) | 79.0 | 76.5 | 76.0 | 76.0 | 77.0 |
| H (75.0) | 80.0 | 82.5 | 82.0 | 82.0 | 83.0 |
| H (87.5) | 84.0 | 87.0 | 86.5 | 86.5 | 87.5 |
| Hs | 89.0 | 91.0 | 90.5 | 90.5 | 91.5 |
| Hs-H (0.0) | 25.0 | 27.5 | 27.5 | 27.5 | 27.5 |
| $R^2$ | 0.81 | 0.97 | 0.97 | 0.97 | 0.97 |
| Gradient | 0.18 | 0.27 | 0.27 | 0.27 | 0.27 |

Table III-12 Physical Properties and Hardness Distribution of Core (JIS-C hardness)

| | Comp. Ex. III-6 | Comp. Ex. III-7 |
|---|---|---|
| Center | | |
| Composition | (1) | (1) |
| Diameter (mm) | 15 | 15 |
| Ho (JIS-C) | 57 | 57 |
| Surface hardness (JIS-C) | 61 | 61 |
| Envelope layer | | |
| Composition | E2 | E7 |
| Te (mm) | 11.75 | 11.75 |
| H (0.0) | 62.0 | 71.0 |
| H (12.5) | 71.5 | 74.0 |
| H (25.0) | 75.5 | 74.5 |
| H (37.5) | 76.0 | 75.0 |
| H (50.0) | 76.5 | 75.0 |
| H (62.5) | 77.5 | 75.0 |
| H (75.0) | 78.5 | 75.5 |
| H (87.5) | 83.5 | 78.0 |
| Hs | 88.0 | 79.0 |
| Hs-H(0.0) | 26.0 | 8.0 |
| $R^2$ | 0.86 | 0.84 |
| Gradient | 0.20 | 0.06 |

Table III-13 Results of Evaluation

| | Ex. III-1 | Ex. III-2 | Ex. III-3 | Ex. III-4 | Ex. III-5 |
|---|---|---|---|---|---|
| Core | | | | | |
| Diameter (mm) | 38.5 | 38.5 | 38.5 | 38.5 | 38.5 |
| Hs-Ho | 26.0 | 32.0 | 34.0 | 31.5 | 34.0 |
| Inner mid layer | | | | | |
| Composition | C | C | C | C | C |
| Hm1 (Shore D) | 47 | 47 | 47 | 47 | 47 |
| Diameter (mm) | 40.1 | 40.1 | 40.1 | 40.1 | 40.1 |
| Tm1 (mm) | 0.8 | 0.8 | 0.8 | 0.8 | 0.8 |
| Outer mid layer | | | | | |
| Composition | a | a | a | a | a |
| Hm2 (Shore D) | 65 | 65 | 65 | 65 | 65 |
| Diameter (mm) | 41.7 | 41.7 | 41.7 | 41.7 | 41.7 |
| Tm2 (mm) | 0.8 | 0.8 | 0.8 | 0.8 | 0.8 |

(continued)

| | | | | | |
|---|---|---|---|---|---|
| Cover | | | | | |
| Composition | A | A | A | A | A |
| Hc (Shore D) | 29 | 29 | 29 | 29 | 29 |
| Tc (mm) | 0.5 | 0.5 | 0.5 | 0.5 | 0.5 |
| Tm1+Tm2 (mm) | 1.6 | 1.6 | 1.6 | 1.6 | 1.6 |
| Hm2-Hm1 (Shore D) | 18 | 18 | 18 | 18 | 18 |
| Hm2-Hc (Shore D) | 36 | 36 | 36 | 36 | 36 |
| Db (mm) | 2.4 | 2.4 | 2.4 | 2.4 | 2.4 |
| W#1 spin (rpm) | 3050 | 3000 | 2950 | 3050 | 3050 |
| W#1 flight (m) | 243 | 245 | 246 | 243 | 243 |
| SW spin (rpm) | 6700 | 6700 | 6700 | 6750 | 6750 |
| W#1 durability | 108 | 110 | 112 | 108 | 107 |

Table III-14 Results of Evaluation

| | Ex. III-6 | Ex. III-7 | Ex. III-8 | Ex. III-9 | Ex. III-10 |
|---|---|---|---|---|---|
| Core | | | | | |
| Diameter (mm) | 38.5 | 38.5 | 38.5 | 38.5 | 38.5 |
| Hs-Ho | 31.0 | 34.0 | 32.5 | 34.0 | 34.0 |
| Inner mid layer | | | | | |
| Composition | C | C | C | C | C |
| Hm1 (Shore D) | 47 | 47 | 47 | 47 | 47 |
| Diameter (mm) | 40.1 | 40.1 | 40.1 | 40.1 | 40.1 |
| Tm1 (mm) | 0.8 | 0.8 | 0.8 | 0.8 | 0.8 |
| Outer mid layer | | | | | |
| Composition | a | a | a | a | a |
| Hm2 (Shore D) | 65 | 65 | 65 | 65 | 65 |
| Diameter (mm) | 41.7 | 41.7 | 41.7 | 41.7 | 41.7 |
| Tm2 (mm) | 0.8 | 0.8 | 0.8 | 0.8 | 0.8 |
| Cover | | | | | |
| Composition | A | A | A | A | A |
| Hc (Shore D) | 29 | 29 | 29 | 29 | 29 |
| Tc (mm) | 0.5 | 0.5 | 0.5 | 0.5 | 0.5 |
| Tm1+Tm2 (mm) | 1.6 | 1.6 | 1.6 | 1.6 | 1.6 |
| Hm2-Hm1 (Shore D) | 18 | 18 | 18 | 18 | 18 |
| Hm2-Hc (Shore D) | 36 | 36 | 36 | 36 | 36 |
| Db (mm) | 2.4 | 2.4 | 2.4 | 2.4 | 2.4 |
| W#1 spin (rpm) | 3000 | 3050 | 3000 | 3000 | 2950 |
| W#1 flight (m) | 245 | 242 | 244 | 245 | 246 |

(continued)

| | | | | | |
|---|---|---|---|---|---|
| Cover | | | | | |
| SW spin (rpm) | 6700 | 6750 | 6700 | 6700 | 6700 |
| W#1 durability | 109 | 107 | 109 | 108 | 112 |

Table III-15 Results of Evaluation

| | Ex. III-11 | Ex. III-12 | Ex. III-13 | Ex. III-14 | Ex. III-15 |
|---|---|---|---|---|---|
| Core | | | | | |
| Diameter (mm) | 38.5 | 38.5 | 38.5 | 38.5 | 37.7 |
| Hs-Ho | 34.0 | 34.0 | 34.0 | 34.5 | 34.0 |
| Inner mid layer | | | | | |
| Composition | b | c | c | d | c |
| Hm1 (Shore D) | 56 | 47 | 47 | 29 | 47 |
| Diameter (mm) | 40.1 | 40.1 | 40.1 | 40.1 | 39.3 |
| Tm1 (mm) | 0.8 | 0.8 | 0.8 | 0.8 | 0.8 |
| Outer mid layer | | | | | |
| Composition | a | a | a | a | a |
| Hm2 (Shore D) | 65 | 65 | 65 | 65 | 65 |
| Diameter (mm) | 41.7 | 41.7 | 41.7 | 41.7 | 40.9 |
| Tm2 (mm) | 0.8 | 0.8 | 0.8 | 0.8 | 0.8 |
| Cover | | | | | |
| Composition | A | B | C | A | A |
| Hc (Shore D) | 29 | 36 | 47 | 29 | 29 |
| Tc (mm) | 0.5 | 0.5 | 0.5 | 0.5 | 0.9 |
| Tm1+Tm2 (mm) | 1.6 | 1.6 | 1.6 | 1.6 | 1.6 |
| Hm2-Hm1 (Shore D) | 9 | 18 | 18 | 36 | 18 |
| Hm2-Hc (Shore D) | 36 | 29 | 18 | 36 | 36 |
| Db (mm) | 2.3 | 2.4 | 2.4 | 2.4 | 2.4 |
| W#1 spin (rpm) | 2900 | 2850 | 2800 | 3050 | 3100 |
| W#1 flight (m) | 247 | 248 | 249 | 241 | 242 |
| SW spin (rpm) | 6550 | 6550 | 6400 | 6750 | 6900 |
| W#1 durability | 109 | 108 | 106 | 115 | 110 |

Table III-16 Results of Evaluation

| | Ex. III-16 | Ex. III-17 | Ex. III-18 | Ex. III-19 |
|---|---|---|---|---|
| Core | | | | |
| Diameter (mm) | 35.3 | 38.5 | 38.5 | 38.5 |
| Hs-Ho | 33.5 | 42.0 | 28.0 | 27.0 |

(continued)

| | | | | |
|---|---|---|---|---|
| Inner mid layer | | | | |
| Composition | c | c | c | c |
| Hm1 (Shore D) | 47 | 47 | 47 | 47 |
| Diameter (mm) | 38.5 | 40.1 | 40.1 | 40.1 |
| Tm1 (mm) | 1.6 | 0.8 | 0.8 | 0.8 |
| Outer mid layer | | | | |
| Composition | a | a | a | a |
| Hm2 (Shore D) | 65 | 65 | 65 | 65 |
| Diameter (mm) | 41.7 | 41.7 | 41.7 | 41.7 |
| Tm2 (mm) | 1.6 | 0.8 | 0.8 | 0.8 |
| Cover | | | | |
| Composition | A | A | A | A |
| Hc (Shore D) | 29 | 29 | 29 | 29 |
| Tc (mm) | 0.5 | 0.5 | 0.5 | 0.5 |
| Tm1+Tm2 (mm) | 3.2 | 1.6 | 1.6 | 1.6 |
| Hm2-Hm1 (Shore D) | 18 | 18 | 18 | 18 |
| Hm2-Hc (Shore D) | 36 | 36 | 36 | 36 |
| Db (mm) | 2.3 | 2.4 | 2.4 | 2.5 |
| W#1 spin (rpm) | 3000 | 3050 | 2850 | 2800 |
| W#1 flight (m) | 242 | 243 | 243 | 242 |
| SW spin rate (rpm) | 6600 | 6750 | 6650 | 6650 |
| W#1 durability | 115 | 114 | 108 | 106 |

Table III-17 Results of Evaluation

| | Comp. Ex. III-1 | Comp. Ex. III-2 | Comp. Ex. III-3 | Comp. Ex. III-4 | Comp. Ex. III-5 |
|---|---|---|---|---|---|
| Core | | | | | |
| Diameter (mm) | 38.5 | 38.5 | 38.5 | 38.5 | 38.5 |
| Hs-Ho | 32.0 | 34.0 | 33.5 | 33.5 | 34.5 |
| Inner mid layer | | | | | |
| Composition | c | a | c | a | c |
| Hm1 (Shore D) | 47 | 65 | 47 | 65 | 47 |
| Diameter (mm) | 40.1 | 40.1 | 40.1 | 40.1 | 40.1 |
| Tm1 (mm) | 0.8 | 0.8 | 0.8 | 0.8 | 0.8 |
| Outer mid layer | | | | | |
| Composition | a | c | b | a | c |
| Hm2 (Shore D) | 65 | 47 | 56 | 65 | 47 |
| Diameter (mm) | 41.7 | 41.7 | 41.7 | 41.7 | 41.7 |
| Tm2 (mm) | 0.8 | 0.8 | 0.8 | 0.8 | 0.8 |

(continued)

| | | | | | |
|---|---|---|---|---|---|
| Cover | | | | | |
| Composition | A | A | D | A | A |
| Hc (Shore D) | 29 | 29 | 60 | 29 | 29 |
| Tc (mm) | 0.5 | 0.5 | 0.5 | 0.5 | 0.5 |
| Tm1+Tm2 (mm) | 1.6 | 1.6 | 1.6 | 1.6 | 1.6 |
| Hm2-Hm1 (Shore D) | 18 | -18 | 9 | 0 | 0 |
| Hm2-Hc (Shore D) | 36 | 18 | -4 | 36 | 18 |
| Db (mm) | 2.4 | 2.4 | 2.4 | 2.4 | 2.4 |
| W#1 spin (rpm) | 3200 | 3050 | 2700 | 2850 | 3300 |
| W#1 flight (m) | 237 | 243 | 251 | 248 | 235 |
| SW spin (rpm) | 6750 | 6800 | 5700 | 6400 | 6950 |
| W#1 durability | 100 | 120 | 103 | 80 | 130 |

Table III-18 Results of Evaluation

| | Comp. Ex. III-6 | Comp. Ex. III-7 |
|---|---|---|
| Core | | |
| Diameter (mm) | 38.5 | 38.5 |
| Hs-Ho | 31.0 | 22.0 |
| Inner mid layer | | |
| Composition | c | c |
| Hm1 (Shore D) | 47 | 47 |
| Diameter (mm) | 40.1 | 40.1 |
| Tm1 (mm) | 0.8 | 0.8 |
| Outer mid layer | | |
| Composition | a | a |
| Hm2 (Shore D) | 65 | 65 |
| Diameter (mm) | 41.7 | 41.7 |
| Tm2 (mm) | 0.8 | 0.8 |
| Cover | | |
| Composition | A | A |
| Hc (Shore D) | 29 | 29 |
| Tc (mm) | 0.5 | 0.5 |
| Tm1+Tm2 (mm) | 1.6 | 1.6 |
| Hm2-Hm1 (Shore D) | 18 | 18 |
| Hm2-Hc (Shore D) | 36 | 36 |
| Db (mm) | 2.4 | 2.4 |
| W#1 spin (rpm) | 3100 | 3100 |
| W#1 flight (m) | 240 | 240 |

(continued)

| Cover | | |
|---|---|---|
| SW spin (rpm) | 6750 | 6750 |
| W#1 durability | 106 | 107 |

As shown in Tables III-13 to III-18, the golf balls according to Examples are excellent in various performance characteristics. From the results of evaluation, advantages of the present invention are clear.

[Experiment 4]

[Example IV-1]

A rubber composition was obtained by kneading 100 parts by weight of a high-cis polybutadiene (trade name "BR-730", manufactured by JSR Corporation), 18 parts by weight of zinc diacrylate (trade name "Sanceler SR", manufactured by SANSHIN CHEMICAL INDUSTRY CO., LTD.), 5 parts by weight of zinc oxide, an appropriate amount of barium sulfate, 0.3 parts by weight of bis(pentabromophenyl)disulfide (a product of Kawaguchi Chemical Industry Co., LTD.), and 0.9 parts by weight of dicumyl peroxide (trade name "Percumyl D", manufactured by NOF Corporation). This rubber composition was placed into a mold including upper and lower mold halves each having a hemispherical cavity, and heated at 170°C for 25 minutes to obtain a spherical center with a diameter of 15.0 mm.

A rubber composition was obtained by kneading 100 parts by weight of a high-cis polybutadiene (the aforementioned "BR-730"), 42 parts by weight of zinc diacrylate (the aforementioned "Sanceler SR"), 5 parts by weight of zinc oxide, an appropriate amount of barium sulfate, 0.2 parts by weight of 2-thionaphthol, 0.9 parts by weight of dicumyl peroxide, and 30 parts by weight of zinc octoate. Half shells were formed from this rubber composition. The center was covered with two of these half shells. The center and the half shells were placed into a mold including upper and lower mold halves each having a hemispherical cavity, and heated at 170°C for 25 minutes to obtain a core with a diameter of 38.5 mm. An envelope layer was formed from the rubber composition. The amount of barium sulfate was adjusted such that the specific gravity of the envelope layer coincides with the specific gravity of the center and the weight of a golf ball is 45.4 g.

A resin composition was obtained by kneading 55 parts by weight of an ionomer resin (the aforementioned "Surlyn 8945"), 45 parts by weight of another ionomer resin (the aforementioned "Himilan AM7329"), and 3 parts by weight of titanium dioxide with a twin-screw kneading extruder. The extruding conditions were a screw diameter of 45 mm, a screw rotational speed of 200 rpm, screw L/D of 35, and a die temperature of 160°C to 230°C. The core was placed into a mold. The resin composition was injected around the core by injection molding to form an inner mid layer with a thickness of 0.8 mm.

A resin composition was obtained by kneading 27 parts by weight of an ionomer resin (the aforementioned "Surlyn 8945"), 45 parts by weight of another ionomer resin (the aforementioned "Himilan AM7329"), 28 parts by weight of a styrene block-containing thermoplastic elastomer (the aforementioned "Rabalon T3221C"), and 3 parts by weight of titanium dioxide with a twin-screw kneading extruder under the above extruding conditions. The sphere consisting of the core and the inner mid layer was placed into a mold. The resin composition was injected around the sphere by injection molding to form an outer mid layer with a thickness of 0.8 mm.

A paint composition (trade name "POLIN 750LE", manufactured by SHINTO PAINT CO., LTD.) including a two-component curing type epoxy resin as a base polymer was prepared. The base material liquid of this paint composition includes 30 parts by weight of a bisphenol A type solid epoxy resin and 70 parts by weight of a solvent. The curing agent liquid of this paint composition includes 40 parts by weight of a modified polyamide amine, 55 parts by weight of a solvent, and 5 parts by weight of titanium dioxide. The weight ratio of the base material liquid to the curing agent liquid is 1/1. This paint composition was applied to the surface of the outer mid layer with an air gun, and kept at 23°C for 12 hours to obtain a reinforcing layer with a thickness of 10 $\mu$m.

A resin composition was obtained by kneading 100 parts by weight of a thermoplastic polyurethane elastomer (the aforementioned "Elastollan NY82A"), 0.2 parts by weight of a hindered amine light stabilizer (trade name "TINUVIN 770", manufactured by Ciba Japan K.K.), 4 parts by weight of titanium dioxide, and 0.04 parts by weight of ultramarine blue with a twin-screw kneading extruder under the above extruding conditions. Half shells were formed from this resin composition by compression molding. The sphere consisting of the core, the inner mid layer, the outer mid layer, and the reinforcing layer was covered with two of these half shells. The sphere and the half shells were placed into a final mold that includes upper and lower mold halves each having a hemispherical cavity and that has a large number of pimples on its cavity face. A cover was obtained by compression molding. The thickness of the cover was 0.5 mm.

Dimples having a shape that is the inverted shape of the pimples were formed on the cover. The surface of the cover was polished. A clear paint including a two-component curing type polyurethane as a base material was applied to this cover with an air gun, and was dried and cured to obtain a golf ball of Example IV-1 with a diameter of 42.7 mm and a weight of 45.6 g.

[Examples IV-2 to IV-18 and Comparative Examples IV-1 to IV-9]

Golf balls of Examples IV-2 to IV-18 and Comparative Examples IV-1 to IV-9 were obtained in the same manner as Example IV-1, except the specifications of the center and the envelope layer were as shown in Tables IV-7 to IV-12 below and the specifications of the inner mid layer, the outer mid layer, and the cover were as shown in Tables IV-13 to IV-18 below. The composition and the vulcanization conditions of the center are shown in Table IV-1 below. The composition and the vulcanization conditions of the envelope layer are shown in Tables IV-2 to IV-4 below. The compositions and the hardnesses of the inner mid layer and the outer mid layer are shown in Table IV-5 below. The composition and the hardness of the cover are shown in Table IV-6 below.

[Hit with Driver (W#1)]

A driver with a titanium head (trade name "XXIO", manufactured by DUNLOP SPORTS CO. LTD., shaft hardness: S, loft angle: 10.0°) was attached to a swing machine manufactured by True Temper Co. A golf ball was hit under the condition of a head speed of 45 m/sec. The spin rate was measured immediately after the hit. Furthermore, the flight distance from the launch point to the stop point was measured. The average value of data obtained by 10 measurements is shown in Tables IV-13 to IV-18 below.

[Hit with Sand Wedge (SW)]

A sand wedge (trade name "XXIO", manufactured by DUNLOP SPORTS CO. LTD., shaft hardness: R, loft angle: 56.0°) was attached to a swing machine manufactured by True Temper Co. A golf ball was hit under the condition of a head speed of 21 m/sec. The backspin rate was measured immediately after the hit. The average value of data obtained by 10 measurements is shown in Tables IV-13 to IV-18 below.

[Durability]

A driver with a titanium head (trade name "XXIO", manufactured by DUNLOP SPORTS CO. LTD., shaft hardness: S, loft angle: 10.0°) was attached to a swing robot M/C manufactured by True Temper Co. A golf ball having been kept at 23°C for 12 hours was used for the measurement. The golf ball was repeatedly hit under the condition of a head speed of 45 m/sec. The number of hits required to break the golf ball was measured. An index of the average value of data obtained for 12 golf balls is shown in Tables IV-13 to IV-18 below. The higher the index is, the more excellent the durability of the golf ball is.

[Feel at Impact]

Golf players hit golf balls with drivers with titanium heads (trade name "XXIO", manufactured by DUNLOP SPORTS CO. LTD., shaft hardness: S, loft angle: 10.0°). The feel at impact was evaluated on the basis of the following criteria.

A: very favorable (soft)
B: favorable (soft)
C: slightly poor (slightly hard)
D: poor (hard)

Table IV-1 Composition and Vulcanization Conditions of Center (parts by weight)

| Type | (1) | (2) | (3) |
|---|---|---|---|
| BR-730 | 100 | 100 | 100 |
| Sanceler SR | 18 | 14 | 20 |
| Zinc oxide | 5 | 5 | 5 |

(continued)

| Type | (1) | (2) | (3) |
|---|---|---|---|
| Barium sulfate | * | * | * |
| Bis (pentabromophenyl ) disulfide | 0.3 | 0.3 | 0.3 |
| Dicumyl peroxide | 0.9 | 0.9 | 0.9 |
| Vulcanization conditions | | | |
| Temperature (°C) | 170 | 170 | 170 |
| Time (min) | 25 | 25 | 25 |
| * Appropriate amount | | | |

Table IV-2 Composition and Vulcanization Conditions of Envelope Layer (parts by weight)

| Type | E1 | E2 | E3 | E4 | E5 |
|---|---|---|---|---|---|
| BR-730 | 100 | 100 | 100 | 100 | 100 |
| Sanceler SR | 36 | 40 | 40 | 40 | 41 |
| ZN-DA90S | - | - | - | - | - |
| Zinc oxide | 5 | 5 | 5 | 5 | 5 |
| Barium sulfate | * | * | * | * | * |
| 2-thionaphthol | 0.2 | 0.2 | 0.2 | 0.2 | 0.2 |
| Bis(pentabromophenyl )disulfide | - | - | - | - | - |
| Dicumyl peroxide | 0.9 | 0.9 | 0.9 | 0.9 | 0.9 |
| Zinc octoate | - | 0.5 | 2 | 5 | 10 |
| Zinc stearate | - | - | - | - | - |
| Zinc myristate | - | - | - | - | - |
| Vulcanization conditions | | | | | |
| Temperature (°C) | 170 | 170 | 170 | 170 | 170 |
| Time (min) | 25 | 25 | 25 | 25 | 25 |
| * Appropriate amount | | | | | |

Table IV-3 Composition and Vulcanization Conditions of Envelope Layer (parts by weight)

| Type | E6 | E7 | E8 | E9 | E10 |
|---|---|---|---|---|---|
| BR-730 | 100 | 100 | 100 | 100 | 100 |
| Sanceler SR | 42 | 43 | 37 | 38 | 40 |
| ZN-DA90S | - | - | - | - | - |
| Zinc oxide | 5 | 5 | 5 | 5 | 5 |
| Barium sulfate | * | * | * | * | * |
| 2-thionaphthol | 0.2 | 0.2 | 0.2 | 0.2 | 0.2 |
| is (pentabromophenyl) disulfide B | - | - | - | - | - |
| Dicumyl peroxide | 0.9 | 0.9 | 0.9 | 0.9 | 0.9 |
| Zinc octoate | 30 | 45 | - | - | - |

(continued)

| Type | E6 | E7 | E8 | E9 | E10 |
|---|---|---|---|---|---|
| Zinc stearate | - | - | 10 | 20 | - |
| Zinc myristate | - | - | - | - | 5 |
| Vulcanization conditions | | | | | |
| Temperature (°C) | 170 | 170 | 170 | 170 | 170 |
| Time (min) | 25 | 25 | 25 | 25 | 25 |
| * Appropriate amount | | | | | |

Table IV-4 Composition and Vulcanization Conditions of Envelope Layer (parts by weight)

| Type | E11 | E12 | E13 | E14 | E15 |
|---|---|---|---|---|---|
| BR-730 | 100 | 100 | 100 | 100 | 100 |
| Sanceler SR | 41 | 42 | - | 41 | 39 |
| ZN-DA90S | - | - | 40 | - | - |
| Zinc oxide | 5 | 5 | 5 | 5 | 5 |
| Barium sulfate | * | * | * | * | * |
| 2-thionaphthol | 0.2 | - | 0.2 | 0.2 | 0.2 |
| Bis (pentabromophenyl ) disulfide | - | 0.3 | - | - | - |
| Dicumyl peroxide | 0.9 | 0.9 | 0.9 | 0.9 | 0.9 |
| Zinc octoate | - | 5 | 5 | 5 | 5 |
| Zinc stearate | - | - | - | - | - |
| Zinc myristate | 10 | - | - | - | - |
| Vulcanization conditions | | | | | |
| Temperature (°C) | 170 | 170 | 170 | 170 | 170 |
| Time (min) | 25 | 25 | 25 | 25 | 25 |
| * Appropriate amount | | | | | |

The details of the compounds listed in Tables IV-1 to IV-4 are as follows.

BR-730: a high-cis polybutadiene manufactured by JSR Corporation (cis-1,4-bond content: 96% by weight, 1,2-vinyl bond content: 1.3% by weight, Mooney viscosity ($ML_{1+4}$ (100°C)): 55, molecular weight distribution (Mw/Mn): 3)
Sanceler SR: zinc diacrylate manufactured by SANSHIN CHEMICAL INDUSTRY CO., LTD. (a product coated with 10% by weight of stearic acid)
ZN-DA90S: zinc diacrylate manufactured by Nihon Jyoryu Kogyo Co., Ltd. (a product coated with 10% by weight of zinc stearate)
Zinc oxide: trade name "Ginrei R" manufactured by Toho Zinc Co., Ltd.
Barium sulfate : trade name "Barium Sulfate BD" manufactured by Sakai Chemical Industry Co., Ltd.
2-thionaphthol: a product of Tokyo Chemical Industry Co., Ltd.
Bis(pentabromophenyl)disulfide: a product of Kawaguchi Chemical Industry Co., LTD.
Dicumyl peroxide: trade name "Percumyl D" manufactured by NOF Corporation
Zinc octoate: a product of Mitsuwa Chemicals Co., Ltd. (purity: 99% or greater)
Zinc stearate: a product of Wako Pure Chemical Industries, Ltd. (purity: 99% or greater)
Zinc myristate: a product of NOF Corporation (purity: 90% or greater)

Table IV-5 Compositions and Hardnesses of Inner Mid Layer and Outer Mid Layer (parts by weight)

| Type | a | b | c | d |
|---|---|---|---|---|
| Surlyn 8945 | 55 | 45 | 27 | 20 |
| Himilan AM7329 | 45 | 45 | 45 | 25 |
| Rabalon T3221C | - | 10 | 28 | 55 |
| Titanium dioxide | 3 | 3 | 3 | 3 |
| Hardness (Shore D) | 65 | 56 | 48 | 29 |

Table IV-6 Composition and Hardness of Cover (parts by weight)

| Type | C1 | C2 | C3 | C4 |
|---|---|---|---|---|
| Elastollan NY82A | 100 | - | - | - |
| Elastollan NY85A | - | 50 | - | - |
| Elastollan NY90A | - | 50 | - | - |
| Elastollan NY97A | - | - | 100 | - |
| Surlyn 8945 | - | - | - | 40 |
| Himilan AM7329 | - | - | - | 55 |
| Rabalon T3221C | - | - | - | 5 |
| TINUVIN 770 | 0.2 | 0.2 | 0.2 | 0.2 |
| Titanium dioxide | 4 | 4 | 4 | 4 |
| Ultramarine blue | 0.04 | 0.04 | 0.04 | 0.04 |
| Hardness Hc (Shore D) | 29 | 36 | 47 | 60 |

Table IV-7 Physical Properties and Hardness Distribution of Core (JIS-C hardness)

| | Ex. IV-1 | Ex. IV-2 | Ex. IV-3 | Ex. IV-4 | Ex. IV-5 |
|---|---|---|---|---|---|
| Center | | | | | |
| Composition | (1) | (1) | (1) | (1) | (1) |
| Diameter (mm) | 15 | 15 | 15 | 15 | 15 |
| Ho (JIS-C) | 57 | 57 | 57 | 57 | 57 |
| Surface hardness (JIS-C) | 61 | 61 | 61 | 61 | 61 |
| Envelope layer | | | | | |
| Composition | E6 | E5 | E4 | E3 | E8 |
| Thickness (mm) | 11.75 | 11.75 | 11.75 | 11.75 | 11.75 |
| H (0.0) | 60.5 | 62.5 | 63.5 | 62.0 | 64.5 |
| H (12.5) | 64.5 | 65.0 | 66.0 | 68.0 | 67.0 |
| H (25.0) | 66.5 | 69.0 | 69.5 | 71.0 | 70.5 |
| H (37.5) | 69.0 | 71.0 | 71.0 | 73.5 | 72.0 |
| H (50.0) | 71.0 | 72.5 | 73.0 | 74.5 | 73.5 |
| H (62.5) | 73.0 | 74.5 | 76.5 | 75.0 | 75.0 |
| H (75.0) | 75.5 | 82.0 | 82.5 | 79.5 | 83.0 |

(continued)

| | | | | | |
|---|---|---|---|---|---|
| Envelope layer | | | | | |
| H (87.5) | 78.0 | 86.0 | 87.0 | 84.5 | 87.0 |
| Hs | 83.0 | 89.0 | 91.0 | 88.5 | 91.0 |
| Hs-H (0.0) | 22.5 | 26.5 | 27.5 | 26.5 | 26.5 |
| $R^2$ | 0.98 | 0.97 | 0.97 | 0.95 | 0.95 |
| Gradient | 0.20 | 0.26 | 0.27 | 0.23 | 0.26 |

Table IV-8 Physical Properties and Hardness Distribution of Core (JIS-C hardness)

| | Ex. IV-6 | Ex. IV-7 | Ex. IV-8 | Ex. IV-9 | Ex. IV-10 |
|---|---|---|---|---|---|
| Center | | | | | |
| Composition | (1) | (1) | (1) | (1) | (1) |
| Diameter (mm) | 15 | 15 | 15 | 15 | 15 |
| Ho (JIS-C) | 57 | 57 | 57 | 57 | 57 |
| Surface hardness (JIS-C) | 61 | 61 | 61 | 61 | 61 |
| Envelope layer | | | | | |
| Composition | E9 | E10 | E11 | E12 | E13 |
| Thickness (mm) | 11.75 | 11.75 | 11.75 | 11.75 | 11.75 |
| H (0.0) | 63.0 | 64.0 | 63.0 | 63.5 | 63.5 |
| H (12.5) | 65.0 | 66.5 | 65.5 | 65.5 | 66.0 |
| H (25.0) | 67.0 | 70.0 | 69.5 | 70.0 | 69.5 |
| H (37.5) | 69.5 | 72.0 | 71.5 | 71.0 | 71.0 |
| H (50.0) | 72.0 | 73.0 | 72.5 | 73.0 | 74.0 |
| H (62.5) | 73.5 | 74.5 | 74.5 | 76.5 | 76.5 |
| H (75.0) | 82.0 | 82.5 | 82.5 | 82.0 | 82.5 |
| H (87.5) | 84.0 | 87.0 | 86.5 | 87.0 | 87.0 |
| Hs | 88.0 | 91.0 | 89.5 | 91.0 | 91.0 |
| Hs-H (0.0) | 25.0 | 27.0 | 26.5 | 27.5 | 27.5 |
| $R^2$ | 0.96 | 0.95 | 0.96 | 0.97 | 0.97 |
| Gradient | 0.25 | 0.26 | 0.26 | 0.27 | 0.27 |

Table IV-9 Physical Properties and Hardness Distribution of Core (JIS-C hardness)

| | Ex. IV-11 | Ex. IV-12 | Ex. IV-13 | Ex. IV-14 | Ex. IV-15 |
|---|---|---|---|---|---|
| Center | | | | | |
| Composition | (1) | (1) | (1) | (1) | (1) |
| Diameter (mm) | 15 | 15 | 15 | 15 | 15 |
| Ho (JIS-C) | 57 | 57 | 57 | 57 | 57 |
| Surface hardness (JIS-C) | 61 | 61 | 61 | 61 | 61 |

(continued)

| | | | | | |
|---|---|---|---|---|---|
| Envelope layer | | | | | |
| Composition | E4 | E4 | E4 | E14 | E4 |
| Thickness (mm) | 11.75 | 11.75 | 11.75 | 11.75 | 11.35 |
| H (0.0) | 63.5 | 63.5 | 63.5 | 64.0 | 63.5 |
| H (12.5) | 66.0 | 66.0 | 66.0 | 66.0 | 66.0 |
| H (25.0) | 69.5 | 69.5 | 69.5 | 70.0 | 69.5 |
| H (37.5) | 71.0 | 71.0 | 71.0 | 71.5 | 71.0 |
| H (50.0) | 73.0 | 73.0 | 73.0 | 73.5 | 73.0 |
| H (62.5) | 76.5 | 76.5 | 76.5 | 77.0 | 76.5 |
| H (75.0) | 82.5 | 82.5 | 82.5 | 83.0 | 82.5 |
| H (87.5) | 87.0 | 87.0 | 87.0 | 87.5 | 87.0 |
| Hs | 91.0 | 91.0 | 91.0 | 91.5 | 91.0 |
| Hs-H (0.0) | 27.5 | 27.5 | 27.5 | 27.5 | 27.5 |
| $R^2$ | 0.97 | 0.97 | 0.97 | 0.97 | 0.97 |
| Gradient | 0.27 | 0.27 | 0.27 | 0.27 | 0.27 |

Table IV-10 Physical Properties and Hardness Distribution of Core (JIS-C hardness)

| | Ex. IV-16 | Ex. IV-17 | Ex. IV-18 |
|---|---|---|---|
| Center | | | |
| Composition | (2) | (3) | (3) |
| Diameter (mm) | 9 | 21 | 26 |
| Ho (JIS-C) | 49 | 62 | 62 |
| Surface hardness (JIS-C) | 53 | 66 | 66 |
| Envelope layer | | | |
| Composition | E4 | E4 | E4 |
| Thickness (mm) | 14.75 | 8.75 | 6.25 |
| H (0.0) | 63.0 | 64.0 | 64.0 |
| H (12.5) | 65.5 | 66.5 | 66.5 |
| H (25.0) | 69.5 | 69.5 | 69.5 |
| H (37.5) | 71.0 | 71.0 | 71.0 |
| H (50.0) | 73.0 | 73.0 | 73.0 |
| H (62.5) | 76.5 | 76.5 | 76.5 |
| H (75.0) | 82.5 | 82.5 | 82.0 |
| H (87.5) | 87.0 | 86.5 | 86.5 |
| Hs | 91.0 | 90.0 | 89.0 |
| Hs-H (0.0) | 28.0 | 26.0 | 25.0 |
| $R^2$ | 0.97 | 0.97 | 0.97 |
| Gradient | 0.27 | 0.26 | 0.25 |

Table IV-11 Physical Properties and Hardness Distribution of Core (JIS-C hardness)

| | Comp. Ex. IV-1 | Comp. Ex. IV-2 | Comp. Ex. IV-3 | Comp. Ex. IV-4 | Comp. Ex. IV-5 |
|---|---|---|---|---|---|
| Center | | | | | |
| Composition | (1) | (1) | (1) | (1) | (1) |
| Diameter (mm) | 15 | 15 | 15 | 15 | 15 |
| Ho (JIS-C) | 57 | 57 | 57 | 57 | 57 |
| Surface hardness (JIS-C) | 61 | 61 | 61 | 61 | 61 |
| Envelope layer | | | | | |
| Composition | E1 | E4 | E15 | E15 | E14 |
| Thickness (mm) | 11.75 | 11.75 | 11.75 | 11.75 | 11.75 |
| H (0.0) | 64.0 | 63.5 | 63.0 | 63.0 | 64.0 |
| H (12.5) | 74.0 | 66.0 | 65.0 | 65.0 | 66.0 |
| H (25.0) | 78.0 | 69.5 | 69.0 | 69.0 | 70.0 |
| H (37.5) | 78.0 | 71.0 | 70.5 | 70.5 | 71.5 |
| H (50.0) | 78.0 | 73.0 | 72.5 | 72.5 | 73.5 |
| H (62.5) | 79.0 | 76.5 | 76.0 | 76.0 | 77.0 |
| H (75.0) | 80.0 | 82.5 | 82.0 | 82.0 | 83.0 |
| H (87.5) | 84.0 | 87.0 | 86.5 | 86.5 | 87.5 |
| Hs | 89.0 | 91.0 | 90.5 | 90.5 | 91.5 |
| Hs-H (0.0) | 25.0 | 27.5 | 27.5 | 27.5 | 27.5 |
| $R^2$ | 0.81 | 0.97 | 0.97 | 0.97 | 0.97 |
| Gradient | 0.18 | 0.27 | 0.27 | 0.27 | 0.27 |

Table IV-12 Physical Properties and Hardness Distribution of Core (JIS-C hardness)

| | Comp. Ex. IV-6 | Comp. Ex. IV-7 | Comp. Ex. IV-8 | Comp. Ex. IV-9 |
|---|---|---|---|---|
| Center | | | | |
| Composition | (1) | (1) | (1) | (1) |
| Diameter (mm) | 15 | 15 | 15 | 15 |
| Ho (JIS-C) | 57 | 57 | 57 | 57 |
| Surface hardness (JIS-C) | 61 | 61 | 61 | 61 |
| Envelope layer | | | | |
| Composition | E15 | E15 | E2 | E7 |
| Thickness (mm) | 10.15 | 11.75 | 11.75 | 11.75 |
| H (0.0) | 63.0 | 63.0 | 62.0 | 71.0 |
| H (12.5) | 65.0 | 65.0 | 71.5 | 74.0 |
| H (25.0) | 69.0 | 69.0 | 75.5 | 74.5 |
| H (37.5) | 70.5 | 70.5 | 76.0 | 75.0 |
| H (50.0) | 72.5 | 72.5 | 76.5 | 75.0 |
| H (62.5) | 76.0 | 76.0 | 77.5 | 75.0 |

(continued)

| Envelope layer | | | | |
|---|---|---|---|---|
| H (75.0) | 82.0 | 82.0 | 78.5 | 75.5 |
| H (87.5) | 86.5 | 86.5 | 83.5 | 78.0 |
| Hs | 90.5 | 90.5 | 88.0 | 79.0 |
| Hs-H (0.0) | 27.5 | 27.5 | 26.0 | 8.0 |
| $R^2$ | 0.97 | 0.97 | 0.86 | 0.84 |
| Gradient | 0.27 | 0.27 | 0.20 | 0.06 |

Table IV-13 Results of Evaluation

| | Ex. IV-1 | Ex. IV-2 | Ex. IV-3 | Ex. IV-4 | Ex. IV-5 |
|---|---|---|---|---|---|
| Core | | | | | |
| Diameter (mm) | 38.5 | 38.5 | 38.5 | 38.5 | 38.5 |
| Hs-Ho | 26.0 | 32.0 | 34.0 | 31.5 | 34.0 |
| Inner mid layer | | | | | |
| Composition | a | a | a | a | a |
| Hm1 (Shore D) | 65 | 65 | 65 | 65 | 65 |
| Diameter (mm) | 40.1 | 40.1 | 40.1 | 40.1 | 40.1 |
| Tm1 (mm) | 0.8 | 0.8 | 0.8 | 0.8 | 0.8 |
| Outer mid layer | | | | | |
| Composition | c | c | c | c | c |
| Hm2 (Shore D) | 48 | 48 | 48 | 48 | 48 |
| Diameter (mm) | 41.7 | 41.7 | 41.7 | 41.7 | 41.7 |
| Tm2 (mm) | 0.8 | 0.8 | 0.8 | 0.8 | 0.8 |
| Cover | | | | | |
| Composition | C1 | C1 | C1 | C1 | C1 |
| Hc (Shore D) | 29 | 29 | 29 | 29 | 29 |
| Tc (mm) | 0.5 | 0.5 | 0.5 | 0.5 | 0.5 |
| Tm1+Tm2 (mm) | 1.6 | 1.6 | 1.6 | 1.6 | 1.6 |
| Hm1-Hm2 (Shore D) | 17 | 17 | 17 | 17 | 17 |
| Hm1-Hc (Shore D) | 36 | 36 | 36 | 36 | 36 |
| Db (mm) | 2.4 | 2.4 | 2.4 | 2.4 | 2.4 |
| W#1 spin (rpm) | 3150 | 3100 | 3050 | 3150 | 3150 |
| W#1 flight (m) | 241 | 242 | 243 | 241 | 241 |
| SW spin (rpm) | 6800 | 6800 | 6800 | 6850 | 6850 |
| W#1 durability | 112 | 116 | 118 | 112 | 116 |
| W#1 feel at impact | A | A | A | A | A |

Table IV-14 Results of Evaluation

| | Ex. IV-6 | Ex. IV-7 | Ex. IV-8 | Ex. IV-9 | Ex. IV-10 |
|---|---|---|---|---|---|
| Core | | | | | |
| Diameter (mm) | 38.5 | 38.5 | 38.5 | 38.5 | 38.5 |
| Hs-Ho | 31.0 | 34.0 | 32.5 | 34.0 | 34.0 |
| Inner mid layer | | | | | |
| Composition | a | a | a | a | a |
| Hm1 (Shore D) | 65 | 65 | 65 | 65 | 65 |
| Diameter (mm) | 40.1 | 40.1 | 40.1 | 40.1 | 40.1 |
| Tm1 (mm) | 0.8 | 0.8 | 0.8 | 0.8 | 0.8 |
| Outer mid layer | | | | | |
| Composition | c | c | c | c | c |
| Hm2 (Shore D) | 48 | 48 | 48 | 48 | 48 |
| Diameter (mm) | 41.7 | 41.7 | 41.7 | 41.7 | 41.7 |
| Tm2 (mm) | 0.8 | 0.8 | 0.8 | 0.8 | 0.8 |
| Cover | | | | | |
| Composition | C1 | C1 | C1 | C1 | C1 |
| Hc (Shore D) | 29 | 29 | 29 | 29 | 29 |
| Tc (mm) | 0.5 | 0.5 | 0.5 | 0.5 | 0.5 |
| Tm1+Tm2 (mm) | 1.6 | 1.6 | 1.6 | 1.6 | 1.6 |
| Hm1-Hm2 (Shore D) | 17 | 17 | 17 | 17 | 17 |
| Hm1-Hc (Shore D) | 36 | 36 | 36 | 36 | 36 |
| Db (mm) | 2.4 | 2.4 | 2.4 | 2.4 | 2.4 |
| W#1 spin (rpm) | 3100 | 3150 | 3100 | 3100 | 3050 |
| W#1 flight (m) | 242 | 240 | 241 | 242 | 243 |
| SW spin (rpm) | 6800 | 6850 | 6800 | 6800 | 6800 |
| W#1 durability | 115 | 115 | 114 | 115 | 118 |
| W#1 feel at impact | A | A | A | A | A |

Table IV-15 Results of Evaluation

| | Ex. IV-11 | Ex. IV-12 | Ex. IV-13 | Ex. IV-14 | Ex. IV-15 |
|---|---|---|---|---|---|
| Core | | | | | |
| Diameter (mm) | 38.5 | 38.5 | 38.5 | 38.5 | 37.7 |
| Hs-Ho | 34.0 | 34.0 | 34.0 | 34.5 | 34.0 |
| Inner mid layer | | | | | |
| Composition | a | a | a | a | a |
| Hm1 (Shore D) | 65 | 65 | 65 | 65 | 65 |
| Diameter (mm) | 40.1 | 40.1 | 40.1 | 40.1 | 39.3 |
| Tm1 (mm) | 0.8 | 0.8 | 0.8 | 0.8 | 0.8 |

(continued)

| | | | | | |
|---|---|---|---|---|---|
| Outer mid layer | | | | | |
| Composition | b | c | c | d | c |
| Hm2 (Shore D) | 56 | 48 | 48 | 29 | 48 |
| Diameter (mm) | 41.7 | 41.7 | 41.7 | 41.7 | 40.9 |
| Tm2 (mm) | 0.8 | 0.8 | 0.8 | 0.8 | 0.8 |
| Cover | | | | | |
| Composition | C1 | C2 | C3 | C1 | C1 |
| Hc (Shore D) | 29 | 36 | 47 | 29 | 29 |
| Tc (mm) | 0.5 | 0.5 | 0.5 | 0.5 | 0.9 |
| Tm1+Tm2 (mm) | 1.6 | 1.6 | 1.6 | 1.6 | 1.6 |
| Hm1-Hm2 (Shore D) | 9 | 17 | 17 | 36 | 18 |
| Hm1-Hc (Shore D) | 36 | 29 | 18 | 36 | 36 |
| n Db (mm) | 2.4 | 2.4 | 2.4 | 2.4 | 2.4 |
| W#1 spin (rpm) | 3000 | 2950 | 2900 | 3150 | 3200 |
| W#1 flight (m) | 244 | 246 | 247 | 240 | 239 |
| SW spin (rpm) | 6650 | 6650 | 6500 | 6850 | 7000 |
| W#1 durability | 112 | 114 | 107 | 120 | 120 |
| W#1 feel at impact | B | A | B | A | A |

Table IV-16 Results of Evaluation

| | Ex. IV-16 | Ex. IV-17 | Ex. IV-18 |
|---|---|---|---|
| Core | | | |
| Diameter (mm) | 38.5 | 38.5 | 38.5 |
| Hs-Ho | 42.0 | 29.0 | 29.0 |
| Inner mid layer | | | |
| Composition | a | a | a |
| Hm1 (Shore D) | 65 | 65 | 65 |
| Diameter (mm) | 40.1 | 40.1 | 40.1 |
| Tm1 (mm) | 0.8 | 0.8 | 0.8 |
| Outer mid layer | | | |
| Composition | c | c | c |
| Hm2 (Shore D) | 48 | 48 | 48 |
| Diameter (mm) | 41.7 | 41.7 | 41.7 |
| Tm2 (mm) | 0.8 | 0.8 | 0.8 |
| Cover | | | |
| Composition | C1 | C1 | C1 |
| Hc (Shore D) | 29 | 29 | 29 |
| Tc (mm) | 0.5 | 0.5 | 0.5 |

(continued)

| | | | |
|---|---|---|---|
| Cover | | | |
| Tm1+Tm2 (mm) | 1.6 | 1.6 | 1.6 |
| Hm1-Hm2 (Shore D) | 17 | 17 | 17 |
| Hm1-Hc (Shore D) | 36 | 36 | 36 |
| Db (mm) | 2.4 | 2.4 | 2.4 |
| W#1 spin (rpm) | 3150 | 2950 | 2900 |
| W#1 flight (m) | 241 | 241 | 240 |
| SW spin (rpm) | 6850 | 6750 | 6750 |
| W#1 durability | 120 | 110 | 108 |
| W#1 feel at impact | A | A | A |

Table IV-17 Results of Evaluation

| | Comp. Ex. IV-1 | Comp. Ex. IV-2 | Comp. Ex. IV-3 | Comp. Ex. IV-4 | Comp. Ex. IV-5 |
|---|---|---|---|---|---|
| Core | | | | | |
| Diameter (mm) | 38.5 | 38.5 | 38.5 | 38.5 | 38.5 |
| Hs-Ho | 32.0 | 34.0 | 33.5 | 33.5 | 34.5 |
| Inner mid layer | | | | | |
| Composition | a | c | b | a | c |
| Hm1 (Shore D) | 65 | 48 | 56 | 65 | 48 |
| Diameter (mm) | 40.1 | 40.1 | 40.1 | 40.1 | 40.1 |
| Tm1 (mm) | 0.8 | 0.8 | 0.8 | 0.8 | 0.8 |
| Outer mid layer | | | | | |
| Composition | c | a | c | a | c |
| Hm2 (Shore D) | 48 | 65 | 48 | 65 | 47 |
| Diameter (mm) | 41.7 | 41.7 | 41.7 | 41.7 | 41.7 |
| Tm2 (mm) | 0.8 | 0.8 | 0.8 | 0.8 | 0.8 |
| Cover | | | | | |
| Composition | C1 | C1 | C4 | C1 | C1 |
| Hc (Shore D) | 29 | 29 | 60 | 29 | 29 |
| Tc (mm) | 0.5 | 0.5 | 0.5 | 0.5 | 0.5 |
| Tm1+Tm2 (mm) | 1.6 | 1.6 | 1.6 | 1.6 | 1.6 |
| Hm1-Hm2 (Shore D) | 17 | -17 | 8 | - | - |
| Hm1-Hc (Shore D) | 36 | 19 | -4 | 36 | 19 |
| Db (mm) | 2.4 | 2.4 | 2.4 | 2.4 | 2.4 |
| W#1 spin (rpm) | 3300 | 2950 | 2800 | 2850 | 3250 |
| W#1 flight (m) | 235 | 246 | 249 | 248 | 236 |
| SW spin (rpm) | 6850 | 6700 | 5800 | 6400 | 6900 |
| W#1 durability | 100 | 75 | 102 | 70 | 136 |

(continued)

| | | | | | |
|---|---|---|---|---|---|
| Cover | | | | | |
| W#1 feel at impact | B | C | C | D | B |

Table IV-18 Results of Evaluation

| | Comp. Ex. IV-6 | Comp. Ex. IV-7 | Comp. Ex. IV-8 | Comp. Ex. IV-9 |
|---|---|---|---|---|
| Core | | | | |
| Diameter (mm) | 35.3 | 38.5 | 38.5 | 38.5 |
| Hs-Ho | 33.5 | 33.5 | 31.0 | 22.0 |
| Inner mid layer | | | | |
| Composition | a | a | a | a |
| Hm1 (Shore D) | 65 | 65 | 65 | 65 |
| Diameter (mm) | 38.5 | 40.9 | 40.1 | 40.1 |
| Tm1 (mm) | 1.6 | 1.2 | 0.8 | 0.8 |
| Outer mid layer | | | | |
| Composition | c | c | c | c |
| Hm2 (Shore D) | 48 | 48 | 48 | 48 |
| Diameter (mm) | 41.7 | 41.7 | 41.7 | 41.7 |
| Tm2 (mm) | 1.6 | 0.4 | 0.8 | 0.8 |
| Cover | | | | |
| Composition | C1 | C1 | C1 | C1 |
| Hc (Shore D) | 29 | 29 | 29 | 29 |
| Tc (mm) | 0.5 | 0.5 | 0.5 | 0.5 |
| Tm1+Tm2 (mm) | 3.2 | 1.6 | 1.6 | 1.6 |
| Hm1-Hm2 (Shore D) | 17 | 17 | 17 | 17 |
| Hm1-Hc (Shore D) | 36 | 36 | 36 | 36 |
| Db (mm) | 2.3 | 2.4 | 2.4 | 2.4 |
| W#1 spin (rpm) | 3150 | 3100 | 3200 | 3200 |
| W#1 flight (m) | 238 | 242 | 239 | 239 |
| SW spin (rpm) | 6850 | 6700 | 6850 | 6800 |
| W#1 durability | 118 | 78 | 108 | 109 |
| W#1 feel at impact | C | C | A | A |

As shown in Tables IV-13 to IV-18, the golf balls according to Examples are excellent in various performance characteristics. From the results of evaluation, advantages of the present invention are clear.

The golf ball according to the present invention can be used for playing golf on golf courses and practicing at driving ranges. The above descriptions are merely for illustrative examples, and various modifications can be made without departing from the principles of the present invention.

## Claims

**1.** A golf ball comprising a core, a mid layer positioned outside the core, an inner cover positioned outside the mid

layer, and an outer cover positioned outside the inner cover, wherein
the core comprises a center and an envelope layer positioned outside the center,
the envelope layer is formed by a rubber composition being crosslinked,
the rubber composition includes:

(a) a base rubber;
(b) a co-crosslinking agent;
(c) a crosslinking initiator; and
(d) an acid and/or a salt, wherein the acid and/or salt excludes the co-crosslinking agent (b),

the co-crosslinking agent (b) is:

(b1) an α, β-unsaturated carboxylic acid having 3 to 8 carbon atoms; and/or
(b2) a metal salt of an α, β-unsaturated carboxylic acid having 3 to 8 carbon atoms,

wherein either

i) the Shore D hardness Hc1 of the inner cover is greater than the Shore D hardness Hc2 of the outer cover, and the thickness T1 of the inner cover is equal to or greater than 0.1 mm but equal to or less than 0.8 mm
or
ii) the Shore D hardness Hm of the mid layer is greater than the Shore D hardness Hc1 of the inner cover, and the Shore D hardness Hc1 of the inner cover is less than the Shore D hardness Hc2 of the outer cover.

**2.** The golf ball according to claim 1, wherein an amount of the acid and/or the salt (d) is equal to or greater than 0.5 parts by weight but equal to or less than 45 parts by weight, per 100 parts by weight of the base rubber (a).

**3.** The golf ball according to claim 1, wherein the acid and/or the salt (d) is a carboxylic acid and/or a salt thereof (d1).

**4.** The golf ball according to claim 1, wherein the Shore D hardness Hc1 of the inner cover is greater than the Shore D hardness Hc2 of the outer cover, and the thickness T1 of the inner cover is equal to or greater than 0.1 mm but equal to or less than 0.8 mm, and wherein the difference (Hc1-Hc2) between the hardness Hc1 and the hardness Hc2 is equal to or greater than 5.

**5.** The golf ball according to claim 1, wherein the Shore D hardness Hm of the mid layer is greater than the Shore D hardness Hc1 of the inner cover, and the Shore D hardness Hc1 of the inner cover is less than the Shore D hardness Hc2 of the outer cover, and wherein the difference (Hm-Hc1) between the Shore D hardness Hm of the mid layer and the hardness Hc1 of the inner cover is equal to or greater than 20.

**6.** The golf ball according to claim 1, wherein the Shore D hardness Hm of the mid layer is greater than the Shore D hardness Hc1 of the inner cover, and the Shore D hardness Hc1 of the inner cover is less than the Shore D hardness Hc2 of the outer cover, and wherein the difference (Hc2-Hc1) between the hardness Hc2 of the outer cover and the hardness Hc1 of the inner cover is equal to or greater than 5.

**7.** A golf ball comprising a spherical core, an inner mid layer positioned outside the core, an outer mid layer positioned outside the inner mid layer, and a cover positioned outside the outer mid layer, wherein
the core comprises a center and an envelope layer positioned outside the center,
when distances (%) from a boundary between the center and the envelope layer to nine points and JIS-C hardnesses at the nine points, which nine points are obtained by dividing a distance from the boundary between the center and the envelope layer to a surface of the core at intervals of 12.5% of the distance, are plotted in a graph, $R^2$ of a linear approximation curve obtained by a least-square method is equal to or greater than 0.95,
wherein either

i) the Shore D hardness Hm1 of the inner mid layer is less than the Shore D hardness Hm2 of the outer mid layer, and the hardness Hm2 is greater than the Shore D hardness Hc of the cover,
or
ii) the Shore D hardness Hm1 of the inner mid layer is greater than the Shore D hardness Hm2 of the outer mid layer, the hardness Hm1 is greater than the Shore D hardness Hc of the cover, and the thickness Tm2 of the outer mid layer is equal to or greater than 0.5 mm but equal to or less than 1.5 mm.

**8.** The golf ball according to claim 7, wherein the Shore D hardness Hm1 of the inner mid layer is less than the Shore D hardness Hm2 of the outer mid layer, and the hardness Hm2 is greater than the Shore D hardness Hc of the cover, and wherein the difference (Hm2-Hm1) between the hardness Hm2 and the hardness Hm1 is equal to or greater than 8, and the difference (Hm2-Hc) between the hardness Hm2 and the hardness Hc is equal to or greater than 30.

**9.** The golf ball according to claim 7, wherein
the envelope layer is obtained by a rubber composition being crosslinked,
the rubber composition includes:

(a) a base rubber;
(b) a co-crosslinking agent;
(c) a crosslinking initiator; and
(d) an acid and/or a salt, wherein the acid and/or salt excludes the co-crosslinking agent (b), and

the co-crosslinking agent (b) is:

(b1) an α, β-unsaturated carboxylic acid having 3 to 8 carbon atoms; and/or
(b2) a metal salt of an α, β-unsaturated carboxylic acid having 3 to 8 carbon atoms.

**10.** The golf ball according to claim 9, wherein the rubber composition includes 100 parts by weight of the base rubber (a) and 1.0 parts by weight or greater but less than 40 parts by weight of the acid and/or the salt (d).

**11.** The golf ball according to claim 7, wherein the Shore D hardness Hm1 of the inner mid layer is greater than the Shore D hardness Hm2 of the outer mid layer, the hardness Hm1 is greater than the Shore D hardness Hc of the cover, and the thickness Tm2 of the outer mid layer is equal to or greater than 0.5 mm but equal to or less than 1.5 mm, and wherein the difference (Hm1-Hm2) between the hardness Hm1 and the hardness Hm2 is equal to or greater than 8, and the difference (Hm1-Hc) between the hardness Hm1 and the hardness Hc is equal to or greater than 30.

**Patentansprüche**

**1.** Golfball, umfassend einen Kern, eine Mittelschicht, die außerhalb des Kerns angeordnet ist, eine innere Abdeckung, die außerhalb der Mittelschicht angerordnet ist, und eine äußere Abdeckung, die außerhalb der inneren Abdeckung angeordnet ist, wobei
der Kern ein Zentrum und eine Umhüllungsschicht umfasst, die außerhalb des Zentrums angeordnet ist,
die Umhüllungsschicht durch eine vernetzte Kautschukzusammensetzung gebildet ist,
wobei die Kautschukzusammensetzung:

(a) einen Basiskautschuk;
(b) ein Vernetzungsmittel;
(c) einen Vernetzungsinitiator; und
(d) eine Säure und/oder ein Salz umfasst, wobei die Säure und/oder das Salz das Vernetzungsmittel (b) ausschließt,

wobei das Vernetzungsmittel (b):

(b1) eine α,β-ungesättigte Carbonsäure mit 3 bis 8 Kohlenstoffatomen; und/oder
(b2) ein Metallsalz einer α,β-ungesättigten Carbonsäure mit 3 bis 8 Kohlenstoffatomen ist,

wobei entweder

i) die Shore-D-Härte Hc1 der inneren Abdeckung größer ist als die Shore-D-Härte Hc2 der äußeren Abdeckung, und die Dicke T1 der inneren Abdeckung gleich oder größer als 0,1 mm aber gleich oder kleiner 0,8 mm ist, oder
ii) die Shore-D-Härte Hm der Mittelschicht größer ist als die Shore-D-Härte Hc1 der inneren Abdeckung, und die Shore-D-Härte Hc1 der inneren Abdeckung kleiner ist als die Shore-D-Härte Hc2 der äußeren Abdeckung.

2. Golfball nach Anspruch 1, wobei eine Menge der Säure und/oder des Salzes (d) gleich oder größer als 0,5 Gewichtsteile aber gleich oder kleiner als 45 Gewichtsteile bezogen auf 100 Gewichtsteile des Basiskautschuks (a) ist.

3. Golfball nach Anspruch 1, wobei die Säure und/oder das Salz (d) eine Carbonsäure und/oder eines ihrer Salze (d1) ist.

4. Golfball nach Anspruch 1, wobei die Shore-D-Härte Hc1 der inneren Abdeckung größer ist als die Shore-D-Härte Hc2 der äußeren Abdeckung, und die Dicke T1 der inneren Abdeckung gleich oder größer als 0,1 mm aber gleich oder kleiner als 0,8 mm ist, und wobei die Differenz (Hc1-Hc2) zwischen der Härte Hc1 und der Härte Hc2 gleich oder größer als 5 ist.

5. Golfball nach Anspruch 1, wobei die Shore-D-Härte Hm der Mittelschicht größer ist als die Shore-D-Härte Hc1 der inneren Abdeckung, und die Shore-D-Härte Hc1 der inneren Abdeckung kleiner ist als die Shore-D-Härte Hc2 der äußeren Abdeckung, und wobei die Differenz (Hm-Hc1) zwischen der Shore-D-Härte Hm der Mittelschicht und der Härte Hc1 der inneren Abdeckung gleich oder größer als 20 ist.

6. Golfball nach Anspruch 1, wobei die Shore-D-Härte Hm der Mittelschicht größer ist als die Shore-D-Härte Hc1 der inneren Abdeckung, und die Shore-D-Härte Hc1 der inneren Abdeckung kleiner ist als die Shore-D-Härte Hc2 der äußeren Abdeckung, und wobei die Differenz (Hc2-Hc1) zwischen der Härte Hc2 der äußeren Abdeckung der Härte Hc1 der inneren Abdeckung gleich oder größer als 5 ist.

7. Golfball, umfassend einen kugelförmigen Kern, eine innere Mittelschicht, die außerhalb des Kerns angeordnet ist, eine äußere Mittelschicht, die außerhalb der inneren Mittelschicht angeordnet ist, und eine Abdeckung, die außerhalb der äußeren Mittelschicht angeordnet ist, wobei
der Kern ein Zentrum und eine Umhüllungsschicht umfasst, die außerhalb des Kerns angeordnet ist,
wenn Distanzen (%) von einer Grenze zwischen dem Zentrum und der Umhüllungsschicht zu neun Punkten und JIS-C-Härten an den neun Punkten, wobei die neun Punkte erhalten werden, indem eine Distanz von der Grenze zwischen dem Zentrum und der Umhüllungsschicht bis zu einer Oberfläche des Kerns in Intervalle von 12,5 % der Distanz unterteilt ist, in einem Graphen aufgetragen werden, $R^2$ einer Kurve einer linearen Approximation, die durch das Verfahren der kleinsten Quadrate erhalten wird, gleich oder größer als 0,95 ist,
wobei entweder

i) die Shore-D-Härte Hm1 der inneren Mittelschicht kleiner ist als die Shore-D-Härte Hm2 der äußeren Mittelschicht, und die Härte Hm2 größer ist als die Shore-D-Härte Hc der Abdeckung,
oder
ii) die Shore-D-Härte Hm1 der inneren Mittelschicht größer ist als die Shore-D-Härte Hm2 der äußeren Mittelschicht, die Härte Hm1 größer ist als die Shore-D-Härte Hc der Abdeckung, und die Dicke Tm2 der äußeren Mittelschicht gleich oder größer als 0,5 mm aber gleich oder kleiner als 1,5 mm ist.

8. Golfball nach Anspruch 7, wobei die Shore-D-Härte Hm1 der inneren Mittelschicht kleiner ist als die Shore-D-Härte Hm2 der äußeren Mittelschicht, und die Härte Hm2 größer ist als die Shore-D-Härte Hc der Abdeckung, und wobei die Differenz (Hm2-Hm1) zwischen der Härte Hm2 und der Härte Hm1 gleich oder größer als 8 ist, und die Differenz (Hm2-Hc) zwischen der Härte Hm2 und der Härte Hc gleich oder größer als 30 ist.

9. Golfball nach Anspruch 7, wobei
die Umhüllungsschicht durch Vernetzen einer Kautschukzusammensetzung erhalten ist,
wobei die Kautschukzusammensetzung:

(a) einen Basiskautschuk;
(b) ein Vernetzungsmittel;
(c) einen Vernetzungsinitiator; und
(d) eine Säure und/oder ein Salz umfasst, wobei die Säure und/oder das Salz das Vernetzungsmittel (b) ausschließt, und

wobei das Vernetzungsmittel (b):

(b1) eine $\alpha,\beta$-ungesättigte Carbonsäure mit 3 bis 8 Kohlenstoffatomen; und/oder
(b2) ein Metallsalz einer $\alpha,\beta$-ungesättigten Carbonsäure mit 3 bis 8 Kohlenstoffatomen ist.

10. Golfball nach Anspruch 9, wobei die Kautschukzusammensetzung 100 Gewichtsteile des Basiskautschuks (a) und 1,0 Gewichtsteile oder mehr aber weniger als 40 Gewichtsteile der Säure und/oder des Salzes (d) enthält.

11. Golfball nach Anspruch 7, wobei die Shore-D-Härte Hm1 der inneren Mittelschicht größer ist als die Shore-D-Härte Hm2 der äußeren Mittelschicht, die Härte Hm1 größer ist als die Shore-D-Härte Hc der Abdeckung, und die Dicke Tm2 der äußeren Mittelschicht gleich oder größer als 0,5 mm aber gleich oder kleiner als 1,5 mm ist, und wobei die Differenz (Hm1-Hm2) zwischen der Abdeckung Hm1 und der Härte Hm2 gleich oder größer als 8 ist, und die Differenz (Hm1-Hc) zwischen der Härte Hm1 und der Härte Hc gleich oder größer als 30 ist.

**Revendications**

1. Balle de golf comprenant un noyau, une couche médiane positionnée à l'extérieur du noyau, une couverture intérieure positionnée à l'extérieur de la couche médiane, et une couverture extérieure positionnée à l'extérieur de la couverture intérieure, dans laquelle
le noyau comprend un centre et une couche enveloppe positionnée à l'extérieur du centre,
la couche enveloppe est formée par une composition en caoutchouc qui est réticulée,
la composition en caoutchouc inclut :

    (a) un caoutchouc de base ;
    (b) un agent de co-réticulation ;
    (c) un initiateur de réticulation ; et
    (d) un acide et/ou un sel, dans lequel l'acide et/ou le sel exclut l'agent de co-réticulation ((b),

    l'agent de co-réticulation (b) et

    (b1) un acide carboxylique insaturé-$\alpha,\beta$ ayant de 3 à 8 atomes de carbone ; et/ou
    (b2) un sel métallique d'un acide carboxylique insaturé-$\alpha,\beta$ ayant de 3 à 8 atomes de carbone,

    dans laquelle

    i) soit la dureté Shore D Hc1 de la couverture intérieure est plus élevée que la dureté Shore D Hc2 de la couverture extérieure, et l'épaisseur T1 de la couverture intérieure est égale ou supérieure à 0,1 mm mais égale ou inférieure à 0,8 mm
    ii) soit la dureté Shore D Hm de la couche médiane est plus élevée que la dureté Shore D Hc1 de la couverture intérieure, et la dureté Shore D Hc1 de la couverture intérieure est inférieure à la dureté Shore D Hc2 de la couverture extérieure.

2. Balle de golf selon la revendication 1, dans lequel une quantité d'acide et/ou de sel (d) est égale ou supérieure à 0,5 parties en poids, mais égale ou inférieure à 45 parties en poids, pour 100 parties en poids du caoutchouc de base (a).

3. Balle de golf selon la revendication 1, dans laquelle l'acide et/ou le sel (d) est un acide carboxylique et/ou un sel de celui-ci (d1).

4. Balle de golf selon la revendication 1, dans laquelle la dureté Shore D Hc1 de la couverture intérieure est plus élevée que la dureté Shore D Hc2 de la couverture extérieure, et l'épaisseur T1 de la couverture intérieure est égale ou supérieure à 0,1 mm mais égale ou inférieure à 0,8 mm, et dans laquelle la différence (Hc1-Hc2) entre la dureté Hc1 et la dureté Hc2 est égale ou supérieure à 5.

5. Balle de golf selon la revendication 1, dans laquelle la dureté Shore D Hm de la couche médiane est plus élevée que la dureté Shore D Hc1 de la couverture intérieure, et la dureté Shore D Hc1 de la couverture intérieure est plus faible que la dureté Shore D Hc2 de la couverture extérieure, et dans laquelle la différence (Hm-Hc1) entre la dureté Shore D Hm de la couche médiane et la dureté Hc1 de la couverture intérieure est égale ou supérieure à 20.

6. Balle de golf selon la revendication 1, dans laquelle la dureté Shore D Hm de la couche médiane est plus élevée que la dureté Shore D Hc1 de la couverture intérieure, et la dureté Shore D Hc1 de la couverture intérieure est inférieure à la dureté Shore D Hc2 de la couverture extérieure, et dans laquelle la différence (Hc2-Hc1) entre la

dureté Hc2 de la couverture extérieure et la dureté Hc1 de la couverture intérieure est égale ou supérieure à 5.

**7.** Balle de golf comprenant un noyau sphérique, une couche médiane intérieure positionnée à l'extérieur du noyau, et une couche médiane extérieure positionnée à l'extérieur de la couche médiane intérieure, et une couverture positionnée à l'extérieur de la couche médiane extérieure, dans laquelle
le noyau comprend un centre et une couche enveloppe positionnée à l'extérieur du centre,
quand les distances (%) depuis une frontière entre le centre et la couche enveloppe en neufs points et les duretés JIS-C aux neuf points, lesdits neufs points étant obtenus en divisant une distance depuis la frontière entre le centre et la couche enveloppe jusqu'à une surface du noyau à intervalles de 12,5 % de la distance, sont reportées dans un graphique, le $R^2$ d'une courbe d'approximation linéaire obtenue par la méthode des moindres carrés est égal ou supérieur à 0,95,
dans laquelle

i) soit la dureté Shore D Hm1 de la couche médiane intérieure est plus faible que la dureté Shore D Hm2 de la couche médiane extérieure, et la dureté Hm2 est plus élevée que la dureté Shore D Hc de la couverture,
ii) soit la dureté Shore D Hm1 de la couche médiane intérieure et plus élevée que la dureté Shore Hm2 de la couche médiane extérieure, la dureté Hm1 est plus élevée que la dureté Shore D Hc de la couverture, et l'épaisseur Tm2 de la couche médiane extérieure est égale ou supérieure à 0,5 mm mais égale ou inférieure à 1,5 mm.

**8.** Balle de golf selon la revendication 7, dans laquelle la dureté Shore D Hm1 de la couche médiane intérieure est inférieure à la dureté Shore D Hm2 de la couche médiane extérieure, et la dureté Hm2 est plus élevée que la dureté Shore D Hc de la couverture, et dans laquelle la différence (Hm2-Hm1) entre la dureté Hm2 et la dureté Hm1 est égale ou supérieure à 8, et la différence (Hm2-Hc) entre la dureté Hm2 et la dureté Hc est égale ou supérieure à 30.

**9.** Balle de golf selon la revendication 7, dans laquelle
la couche enveloppe est obtenue par une composition au caoutchouc qui est réticulée,
la composition au caoutchouc inclut :

(a) un caoutchouc de base ;
(b) un agent de co-réticulation ;
(c) un initiateur de réticulation ; et
(d) un acide et/ou un sel, tel que l'acide et/ou le sel exclut l'agent de coréticulation (b), et

l'agent de co-réticulation (b) est :

(b1) un acide carboxylique insaturé-$\alpha,\beta$ ayant de 3 à 8 atomes de carbone ; et/ou
(b2) un sel métallique d'un acide carboxylique insaturé-$\alpha,\beta$ ayant de 3 à 8 atomes de carbone.

**10.** Balle de golf selon la revendication 9, dans laquelle la composition en caoutchouc inclut 100 parties en poids du caoutchouc de base (a) et 1,0 partie en poids ou plus, mais moins de 40 parties en poids de l'acide et/ou du sel (d).

**11.** Balle de golf selon la revendication 7, dans laquelle la dureté Shore D Hm1 de la couche médiane intérieure est plus élevée que la dureté Shore D Hm2 de la couche médiane extérieure, la dureté Hm1 est plus élevée que la dureté Shore D Hc de la couverture, et l'épaisseur Tm2 de la couche médiane extérieure est égale ou supérieure à 0,5 mm mais égale ou inférieure à 1,5 mm, et dans laquelle la différence (Hm1-Hm2) entre la dureté Hm1 et la dureté Hm2 est égale ou supérieure à 8, et la différence (Hm1-Hc) entre la dureté Hm1 et la dureté Hc est égale ou supérieure à 30.

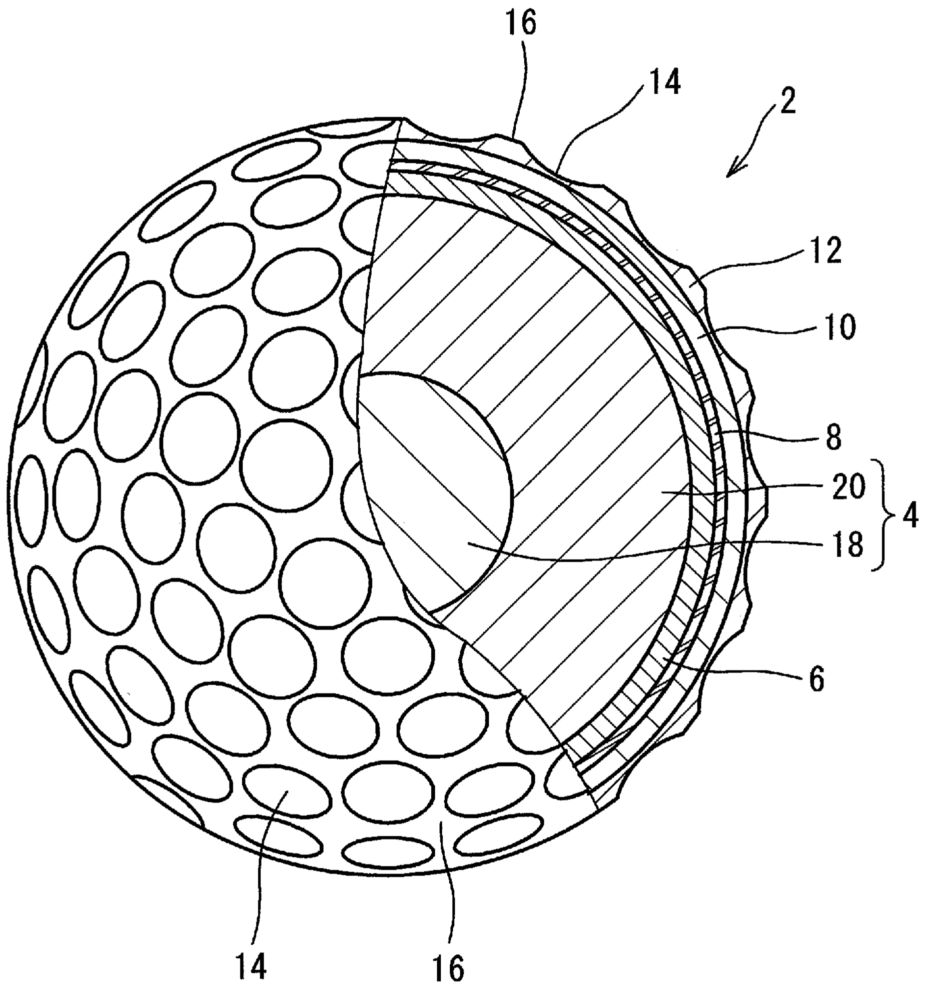


FIG. 1

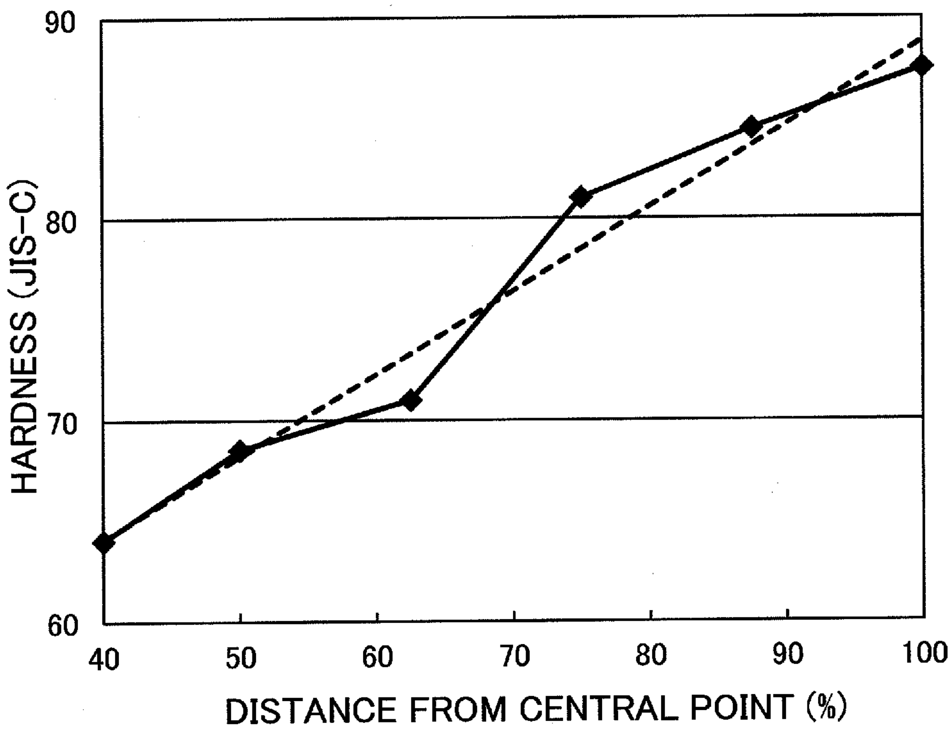
90
80
70
60
HARDNESS (JIS-C)
40
50
60
70
80
90
100
DISTANCE FROM CENTRAL POINT (%)

FIG. 2

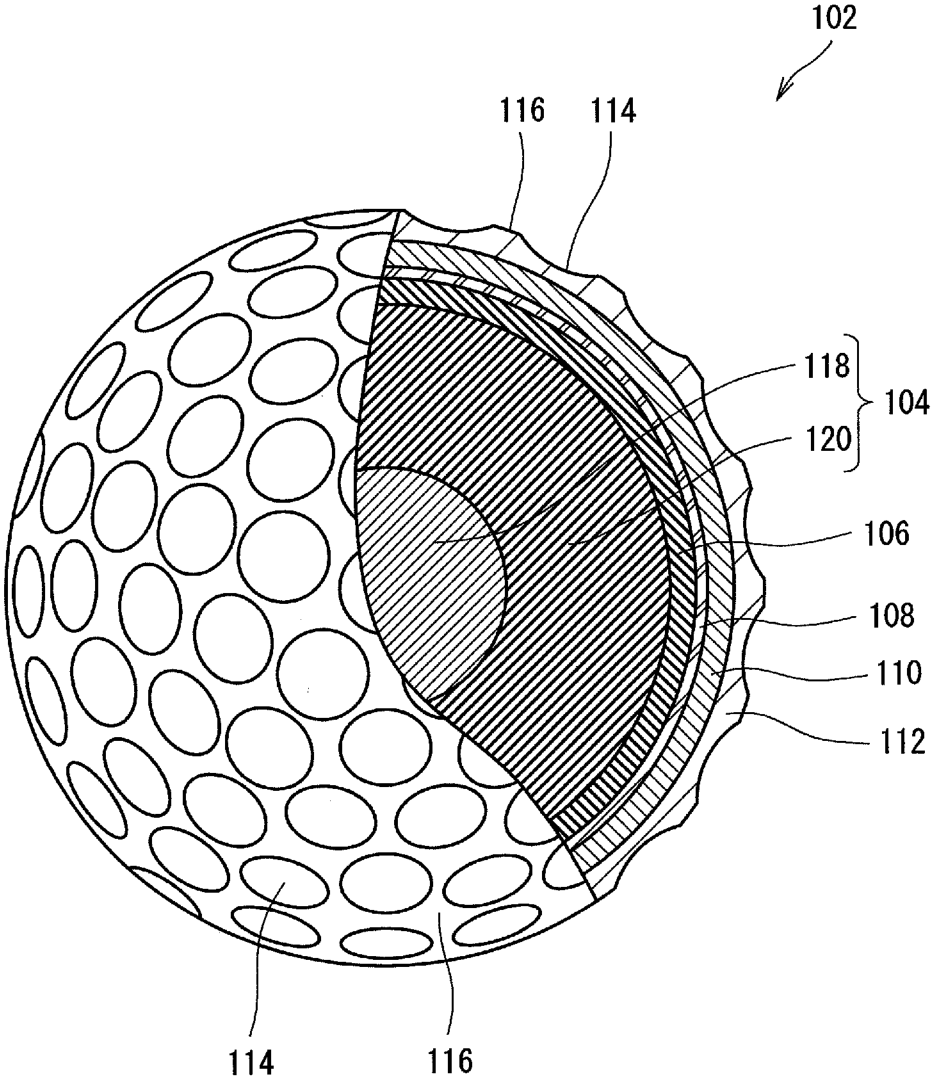


FIG. 3

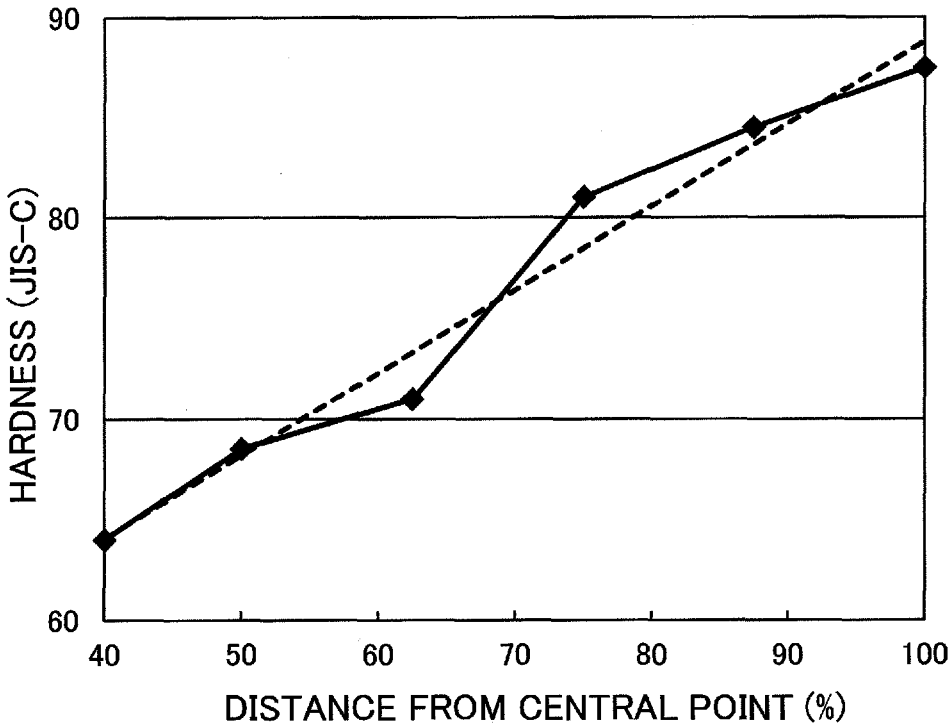
90
80
70
60
HARDNESS (JIS-C)
40
50
60
70
80
90
100
DISTANCE FROM CENTRAL POINT (%)

FIG. 4

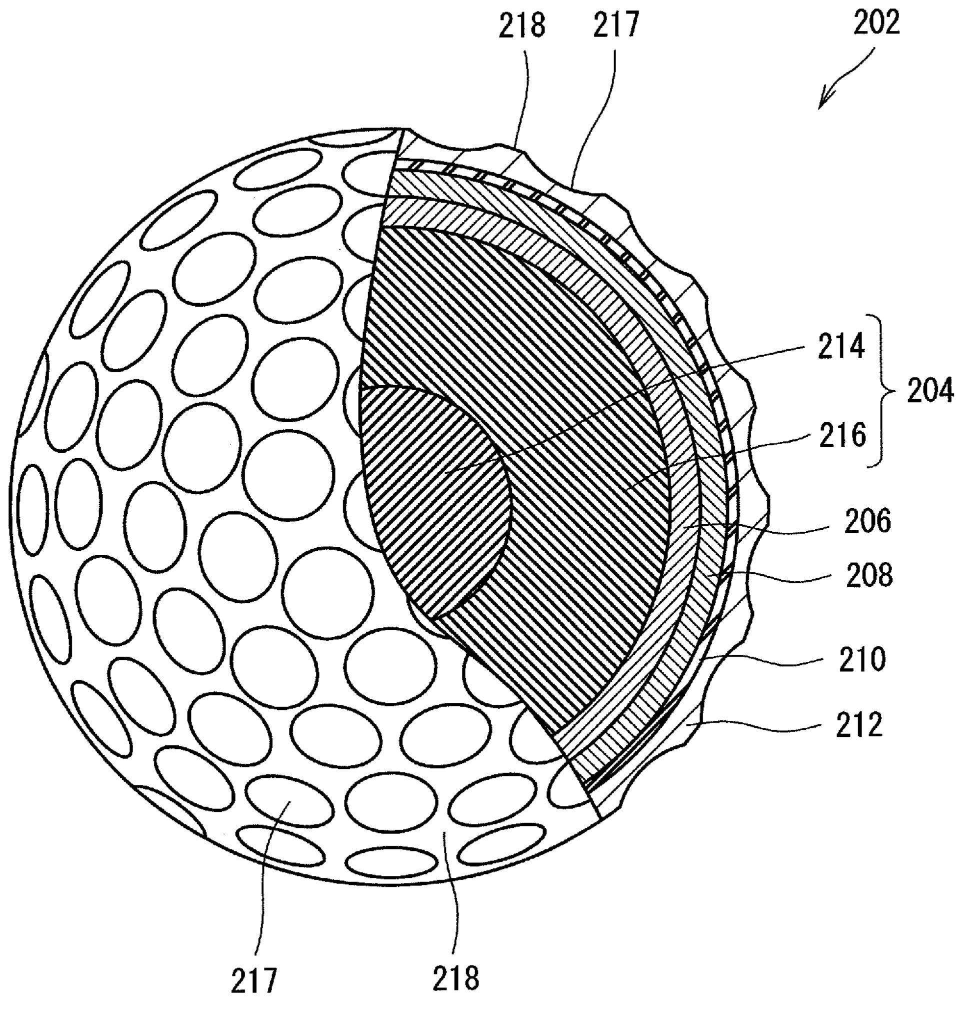


FIG. 5

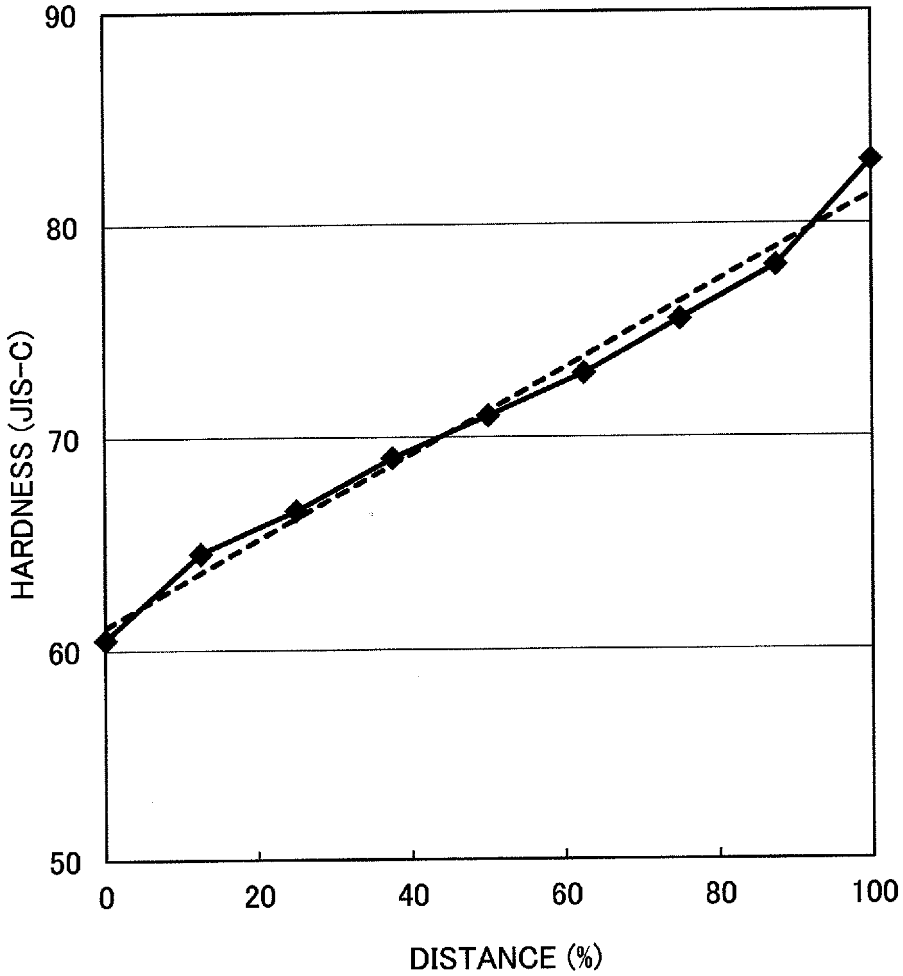


FIG. 6

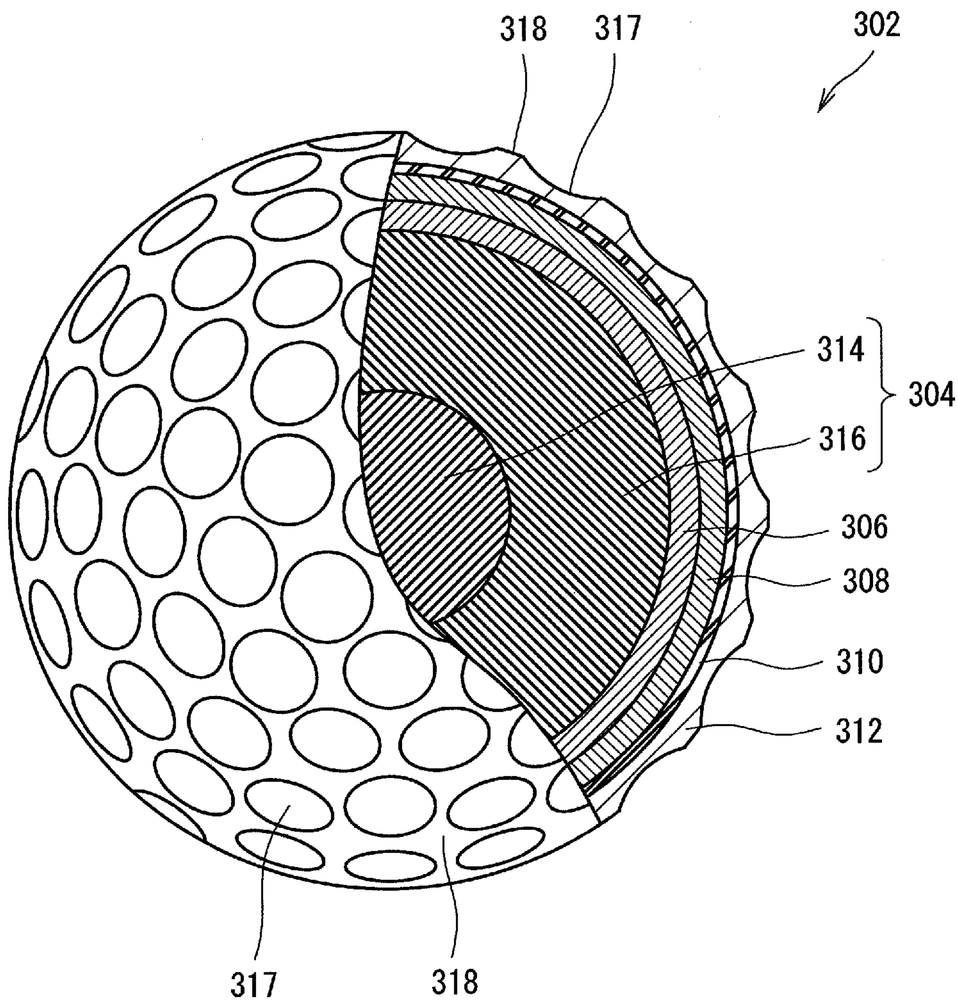


FIG. 7

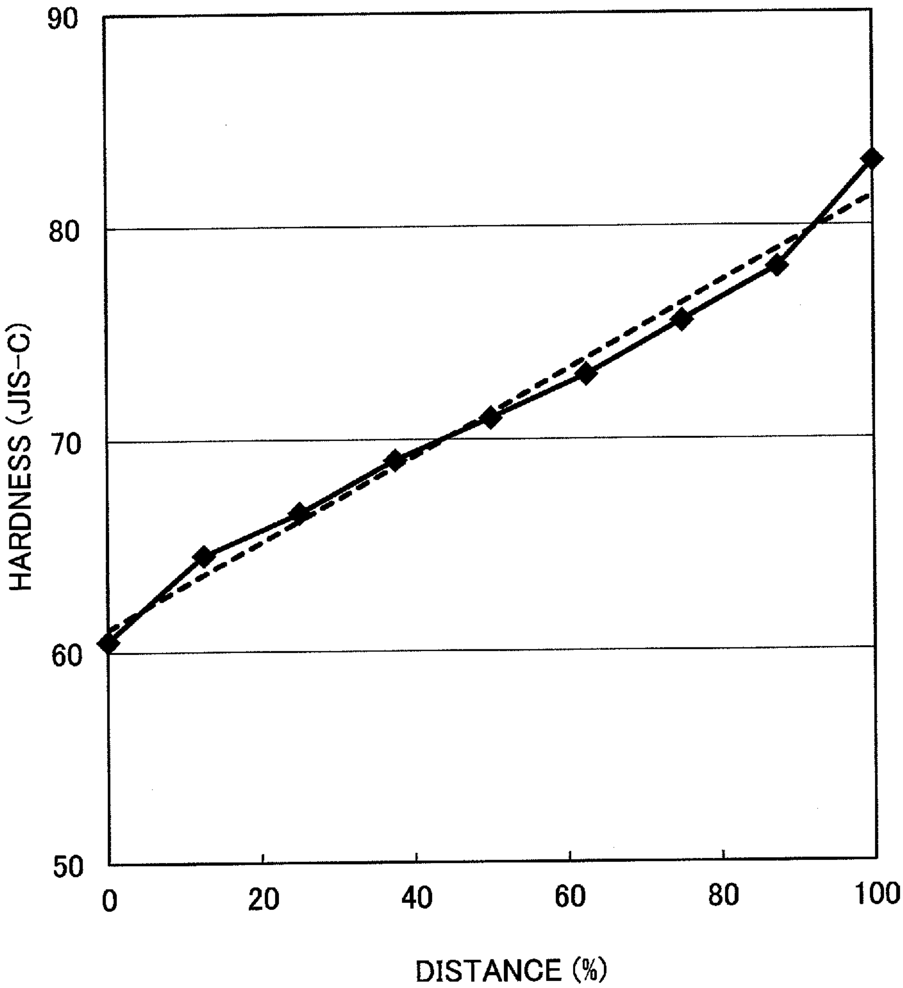


FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 61037178 A
- JP 2008212681 A
- US 20080214324 A
- JP 2008523952 A
- US 20060135287 A
- US 20070173607 A
- JP 2009119256 A
- US 20090124757 A
- JP 6154357 A
- US 5403010 A
- JP 2008194471 A
- US 7344455 B
- US 20080194358 A
- US 20080194359 A
- US 20080214325 A
- JP 2008194473 A
- US 20080194357 A
- US 20080312008 A
- JP 2010253268 A
- US 20100273575 A